(19) **Europäisches Patentamt**
**European Patent Office**
**Office européen des brevets**

(11) **EP 4 693 870 A1**

(12) **EUROPÄISCHE PATENTANMELDUNG**

(43) Veröffentlichungstag:
**11.02.2026  Patentblatt 2026/07**

(51) Internationale Patentklassifikation (IPC):
**H02M 3/335** *(2006.01)*     **H02M 3/00** *(2006.01)*

(21) Anmeldenummer: **25194456.7**

(52) Gemeinsame Patentklassifikation (CPC):
**H02M 3/33576; H02M 3/01; H02M 3/33569;**
H02M 1/0095

(22) Anmeldetag: **06.08.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **06.08.2024  DE 102024122337**
**21.08.2024  DE 102024123823**

(71) Anmelder: **TQ-Systems GmbH**
**82229 Seefeld (DE)**

(72) Erfinder: **STAHL, Rüdiger**
**82229 Seefeld (DE)**

(74) Vertreter: **Schweiger, Martin**
**Erhardtstraße 12**
**80469 München (DE)**

(54) **MEHRSTUFIGER DC-DC-CONVERTER MIT FLYING-CAPACITOR-MULTILEVEL-HALBBRÜCKE UND GLEICHRICHTERBAUGRUPPE**

(57)     Ein DC-DC-Converter 1 hat eine Flying-Capacitor-Multilevel-Brücke 15, die einen Transformator mit Wechselspannung beaufschlagt. Durch die Kombination mit einer LLC-Baugruppe wird eine verbesserte Leistungsfähigkeit erreicht. Zudem ist eine Gleichrichterbaugruppe auf der Sekundärseite vorgesehen, um eine Gleichspannung am Ausgang zu erzeugen. Es kann auch eine Kombination einer primären Flying-Capacitor-Multilevel-Brücke auf der Primärseite mit einer sekundären Flying-Capacitor-Multilevel-Brücke auf der Sekundärseite vorgesehen sein.

FIG. 11

EP 4 693 870 A1

**Beschreibung**

Die vorliegende Offenbarung bezieht sich allgemein auf einen mehrstufigen DC-DC-Converter mit Flying-Capacitor-Multilevel-Halbbrücke und Gleichrichterbaugruppe, der in der Elektrotechnik eingesetzt wird.

LLC-Resonanzwandler sind in vielen Ausführungen verfügbar, siehe beispielsweise in Neuner, D., Hartmann, M. Analytical model for LLC resonant DC-DC-Converters in operation below resonance. Elektrotech. Inftech. 140, 34-44 (2023).

Die EP2661806B1 zeigt Flying-Capacitor-Multilevel-Halbbrücken, bei denen eine gewünschte Mittelspannung UM aus einer vordefinierten Menge von Spannungsniveaus ausgewählt werden kann. Diese Auswahl hängt von der Anzahl der Schaltelemente n in der Schaltung ab und wird durch das Verhältnis zur gesamten Brückenspannung UBr bestimmt. Die Schaltelemente werden in spezifischen Sequenzen bzw. Schaltzuständen betrieben, um die gewünschte Ausgangsspannung zu erreichen. Die gewählte Sequenz stellt sicher, dass die Kondensatoren gleichmäßig geladen und entladen werden, wodurch eine stabile Ausgangsspannung bei konstanter Last gewährleistet wird. Eine Anlaufschaltung bringt die Multilevel-Halbbrücke langsam auf die Betriebsspannung, um eine Überschreitung der zulässigen Sperrspannung an den Schaltelementen zu vermeiden.

In der Anordnung gemäß der vorliegenden Offenbarung werden die LLC-Resonanzwandler mit einem guten Wirkungsgrad betrieben, der durch Zero-Voltage-Switching der Halbleiter erreicht wird, also dem verlustarmen Einschalten der Transistoren im Nulldurchgang der Spannung. Dadurch lassen sich hohe Schaltfrequenzen mit geringen Schaltverlusten erreichen, was wiederum kleine und verlustarme Transformatoren ermöglicht. Es handelt sich um einen Durchflusswandler, bei dem die Energie direkt, ohne Zwischenspeicherung, von der Primär- auf die Sekundärseite übertragen wird, und somit können große Leistungen verlustarm übertragen werden.

Durch hohe Schaltfrequenzen kann die Übertragungsleistung bei gegebener Transformatorgröße weiter gesteigert werden oder auch umgekehrt der Transformator bei einer bestimmten Übertragungsleistung weiter verkleinert werden.

Mit der vorliegenden Offenbarung kann die Ausgangsspannung geregelt werden kann, wobei Vorteile der Verwendung von LLC-Wandlern erhalten bleiben.

Die Topologie der vorliegenden Offenbarung bietet Vorteile gegenüber dem Stand der Technik. Es ist kein zusätzlicher Step-up- oder Step-down-Converter zur Regelung der Ausgangsspannung oder des Ausgangsstroms erforderlich. Die Ausgangsspannung oder der Ausgangsstrom werden einfach und ohne zusätzliche aktive Schaltelemente durch den Einsatz einer Speicherdrossel geregelt.

Die Multilevel-Halbbrücke bzw. Multilevel-Vollbrücke ermöglicht einen geringeren Spannungshub an der Speicherdrossel im Vergleich zu herkömmlichen Step-up- oder Step-down-Convertern. Das führt zu einer kleineren Speicherdrossel und geringeren Verlusten an dieser.

Eine Speicherdrossel kann auf einer Primärseite angeordnet sein. Dies kann insbesondere einen Zwei-Level-Betrieb ermöglichen. Eine Speicherdrossel kann auf einer Sekundärseite angeordnet sein. Dies kann insbesondere einen Multilevel-Betrieb ermöglichen.

Die Multilevel-Technologie ermöglicht den Einsatz kleinerer, verlustärmerer und kostengünstigerer Schalttransistoren, da die Spannungsfestigkeit dieser Bauteile geringer sein kann.

Je nach Betriebszustand werden die Schalttransistoren nur mit einem Bruchteil der Schaltfrequenz des LLC-Transformators betrieben, wodurch die Schaltverluste weiter reduziert werden.

Durch Zero-Voltage-Switching und den Einsatz einer Resonanzinduktivität ist ein sehr verlustarmes Schalten der Schalttransistoren möglich.

In der vorliegenden Offenbarung zeichnen sich die Flying-Capacitor-Multilevel-Halbbrücken mit verbesserter Schaltfolge durch niedrige Verluste, einen erhöhten Wirkungsgrad, durch eine mögliche hohe Schaltfrequenz und eine flexible Ausgangsspannung mit geringeren Spannungshüben aus. Dadurch ist eine einfache Glättung der Ausgangspannung mit kleineren Induktivitäten möglich.

Anders als bei Step-up- und Step-Down-Wandlern zeichnet sich die Gestaltung gemäß der vorliegenden Offenbarung durch eine einfache Topologie und einfache Realisierung aus, und sie ermöglicht eine galvanische Trennung.

Gemäß der vorliegenden Offenbarung werden Vorzüge der Technologien der LLC-Resonanzwandler und der Flying-Capacitor-Multilevel-Halbbrücken mit verbesserter Schaltfolge kombiniert und es wird dabei eine zur Spannungs-oder Stromregelung Funktion integriert, wobei in vielen Fällen keine zusätzlichen aktiven Schaltelemente benötigt werden, um hinsichtlich Wirkungsgrad und Kosten einen verbesserten DC-DC-Spannungswandler zu realisieren.

Durch den Einsatz von Flying-Capacitor-Multilevel-Halbbrücken mit verbesserter Schaltfolge kann eine hohe Schaltfrequenz bei geringen Verlusten erreicht werden, was den Aufbau sehr kompakter LLC-DC/DC-Umsetzer ermöglicht.

Durch den LLC-Resonanzwandler lässt sich ergänzend ein verlustarmes Zero-Voltage-Switching realisieren.

Durch eine Kombination von Flying-Capacitor-Multilevel-Halbbrücken und LLC-Resonanzwandler lassen sich hohe Schaltfrequenzen und dadurch entsprechend kleine Induktivitäten realisieren sowie der Betrieb bei verschiedenen Spannungsniveaus.

Durch den Einsatz mehrere Multilevel-Halbbrücken auf der Primär- und/oder Sekundärseite, wahlweise auch als Vollbrücke lassen sich unterschiedliche Übersetzungsverhältnisse einstellen und damit noch größerer Spannungsbereich abdecken.

Gleichzeitig wird die Funktionalität eines Step-up- und Step-down-Wandlers - je nach Betriebsmodus - zur flexibleren Regelung der Ausgangsspannung oder des Ausgangsstromes mit einer zusätzlichen Induktivität bzw. einer Speicherdrossel im Eingangs- und/oder Ausgangskreis des DC/DC-Converters ohne zusätzlich aktive Schaltelemente realisiert. Durch den Einsatz der Multilevel-Halbbrücken kann der Spannungshub auch an dieser Induktivität reduziert werden, wodurch diese Speicherdrossel kleiner dimensioniert werden kann. Damit ist eine kostengünstige und verlustärmere Regelung der Ausgangsspannung oder des Ausgangsstromes möglich.

Durch ergänzende Anlaufschaltungen kann ein schnelles Einschalten und ein sicherer Betrieb auch bei reduzierter zulässiger Sperrspannung der Schalttransistoren erreicht werden, was ebenso der Effizienz wie auch den Kosten zu Gute kommt. Eine solche Anlaufschaltung ist insbesondere bei höherstufigen Flying-Capacitor-Multilevel-Halbbrücken mit mehr als einem Flying Capacitor und bei Energieeinspeisung über den Mittelanschluss von Flying-Capacitor-Multilevel-Halbbrücken vorgesehen.

Vorteilhaft sind die beschriebenen DC/DC Converter bei höheren Leistungen von typisch > 10 kW, höheren Spannungen von typisch > 500V, auch und bei einem großen variablen Spannungsbereich, mit einer Variabilität von typisch größer Faktor 2, beispielsweise im PV-Bereich, bei Batteriespeichersystemen oder DC-Charger für E-Fahrzeuge. Insbesondere bei DC-Charger für E-Fahrzeuge wird heute ein sehr großer Spannungsbereich benötigt von ca. 200 V bis > 900 V, was sich mit den erfindungsgemäßen Topologien sehr gut realisieren lässt. Durch die Möglichkeit der bidirektionalen Ausführung ist zudem eine Verwendung von E-Fahrzeugen als Batteriespeicher möglich.

Durch die erfindungsgemäße Anordnung werden ein hoher Wirkungsgrad, ein großer Ein- und Ausgangsspannungsbereich und eine kompakte und kostenoptimierte Realisierung ermöglicht.

Insbesondere bietet die vorliegende Offenbarung Verbesserungen in Bezug auf die Schaltungstopologie und die Verbindungselemente eines DC-DC-Converters, um eine verbesserte Energieübertragung und eine effizientere Umwandlung von Gleichspannung in Wechselspannung zu ermöglichen. Durch die Verwendung einer Flying-Capacitor-Multilevel-Halbbrücke und einer Anordnung von Transformatorkondensatoren und Primärinduktivitäten wird eine verbesserte Spannungsregelung und eine Reduzierung von Schaltverlusten erreicht. Darüber hinaus ermöglicht die Verwendung einer Gleichrichterbaugruppe auf der Sekundärseite eine effiziente Gleichrichtung der Wechselspannung und eine glattere Ausgangsspannung. Insgesamt trägt die vorliegende Erfindung dazu bei, die Leistungsfähigkeit und Effizienz von DC-DC-Converters zu verbessern und somit den Energieverbrauch zu optimieren.

Die LLC-Resonanzwandler gemäß der vorliegenden Offenbarung zeichnen sich durch einen guten Wirkungsgrad aus, wenn der durch Zero-Voltage-Switching der Halbleiter erreicht wird, also einem verlustarmen Einschalten der Transistoren im Nulldurchgang der Spannung.

Dadurch lassen sich hohe Schaltfrequenzen mit geringen Schaltverlusten erreichen, was wiederum kleine und verlustarme Transformatoren ermöglicht. Da es sich außerdem um einen Durchflusswandler handelt, bei dem die Energie direkt, ohne Zwischenspeicherung, von der Primär- auf die Sekundärseite übertragen werden kann, können auch große Leistungen verlustarm übertragen werden.

Durch hohe Schaltfrequenzen kann die Übertragungsleistung bei gegebener Transformatorgröße weiter gesteigert werden oder umgekehrt der Transformator bei einer bestimmten Übertragungsleistung weiter verkleinert werden.

Die vorliegende Offenbarung behebt einen Nachteil von LLC-Resonanzwandlern, gemäß dem die Ausgangsspannung nicht oder nur eingeschränkt geregelt werden kann, zumindest nicht ohne Verlust von Vorteilen des LLC-Wandlers. Durch Kombination mit Flying-Capacitor-Multilevel-Brücken mit verbesserter Schaltfolge ergeben sich niedrige Verluste, einen hoher Wirkungsgrad, eine erhöhte Schaltfrequenz und eine flexible Ausgangsspannung mit geringeren Spannungshüben. Dadurch ist eine vereinfachte Glättung der Ausgangspannung mit kleineren Induktivitäten möglich.

Verschiedene Vorteile und / oder technische Effekte sind mit Ausführungsformen der Erfindung verbunden.

Es wird ein DC-DC-Converter offenbart mit den folgenden Merkmalen:

- einen positiven Brückenanschluss und einen negativen Brückenanschluss,
- einen ersten Ausgangsanschluss und einen zweiten Ausgangsanschluss,
- ein Transformator mit wenigstens einer Primärwicklung auf einer Primärseite des Transformators und mit wenigstens einer Sekundärwicklung auf einer Sekundärseite des Transformators, wobei die Primärwicklung einen ersten Primärwicklungsanschluss und einen zweiten Primärwicklungsanschluss aufweist und wobei die Sekundärwicklung einen ersten Sekundärwicklungsanschluss und einen zweiten Sekundärwicklungsanschluss aufweist,
- wenigstens eine Flying-Capacitor-Multilevel-Halbbrücke zur Beaufschlagung des Transformators auf der Primärseite mit einer Wechselspannung, wobei die Flying-Capacitor-Multilevel-Halbbrücke einen Mittelanschluss, einen vom Mittelanschluss ausgehenden oberen Schalterzweig mit mehreren oberen Schaltern, einen vom Mittelanschluss ausgehenden unteren Schalterzweig mit mehreren unteren Schaltern, eine Steuer- und Überwachungseinheit zur Betätigung der oberen Schalter und der unteren Schalter, sowie eine Vielzahl von Flying Capacitors aufweist,

- wenigstens eine Primärinduktivität auf der Primärseite, die in Reihe mit der wenigstens einen Primärwicklung und/oder in Reihe mit der wenigstens einen Sekundärinduktivität auf der Sekundärseite und/oder in Reihe mit der Sekundärwicklung geschaltet ist
- optional wenigstens einen Transformatorkondensator, der auf der Primärseite in Reihe zur Primärwicklung und/oder zur Primärinduktivität geschaltet ist,

wobei der zweite Primärwicklungsanschluss direkt, oder über die Primärinduktivität und/oder über den Transformatorkondensator mit dem Mittelanschluss verbunden ist.

Die vorliegende Offenbarung betrifft einen DC-DC-Converter zur Spannungskonvertierung und unidirektionalen oder bidirektionalen Energieübertragung. Darin wird ein Transformator zur Energieübertragung und galvanischen Trennung eingesetzt. Es ist wenigstens eine Primärwicklung auf einer Primärseite des Transformators und wenigstens einer Sekundärwicklung auf einer Sekundärseite des Transformators vorgesehen, wobei die Primärwicklung einen ersten Primärwicklungsanschluss und einen zweiten Primärwicklungsanschluss aufweist und wobei die Sekundärwicklung einen ersten Sekundärwicklungsanschluss und einen zweiten Sekundärwicklungsanschluss aufweist. Bei zwei Sekundärwicklungen kann auch ein dritter Sekundärwicklungsanschluss und ein vierter Sekundärwicklungsanschluss an der zweiten Sekundärwicklung vorgesehen sein. Es gibt auch Transformatoren mit zwei Sekundärwicklungen, die an einer Stelle miteinander verbunden sind und die daher auch als eine einzige Sekundärwicklung mit Mittelanschluss bezeichnet werden können.

Zudem ist wenigstens eine Halbbrücke vorgesehen. Wenn zwei Halbbrücken vorgesehen werden, dann können diese zu einer Vollbrücke konfiguriert werden.

Die Flying-Capacitor-Multilevel-Brücke der Offenbarung hat mehrere Schalter sowie optional parallel zu den Schaltern geschaltete Widerstände R. In anderen Worten können diese Widerstände R auch weggelassen werden.

Es ist wenigstens eine Steuer- und Überwachungseinheit zur Betätigung der Schalter vorgesehen, was in den Figuren durch gestrichelte Linien verdeutlicht ist. Ebenso ist eine Anzahl von Sensoren vorgesehen, die der Übersichtlichkeit halber in den Figuren weggelassen sind.

Die Offenbarung zeigt eine Vielzahl von symmetrisch zu dem Mittelanschluss angeordnete Flying Capacitors. Die Art der Symmetrie ist im Zusammenhang mit Figuren beschrieben.

Flying Capacitors können insbesondere jeweils einen oberen Anschlusspunkt und einen unteren Anschlusspunkt aufweist. Der obere Anschlusspunkt kann sich dabei insbesondere zwischen dem Mittelanschluss und dem positiven Brückenanschluss befinden. Der untere Anschlusspunkt kann sich dabei insbesondere zwischen dem Mittelanschluss und dem negativen Brückenanschluss befinden. Die Anschlusspunkte können durchnummeriert werden. Dabei können sie insbesondere zum einen vom positiven Brückenanschluss zum Mittelanschluss gezählte und zum anderen vom Mittelanschluss zum negativen Brückenanschluss gezählt werden. Dadurch kann eine Ordnung der Anschlusspunkte definiert werden. Insbesondere kann ein jeweiliger Flying Capacitor sich derart erstrecken, dass seine Anschlusspunkte zum positiven Brückenanschluss und zum negativen Brückenanschluss jeweils den gleichen Abstand in dieser Zählweise haben.

Eine Primärinduktivität kann als Resonanzinduktivität auf der Primärseite ausgebildet sein, die in Reihe mit der wenigstens einen Primärwicklung und/oder in Reihe mit der wenigstens einen Sekundärinduktivität auf der Sekundärseite und/oder in Reihe mit der Sekundärwicklung geschaltet sein kann, und zwar unter anderem zur Realisierung von Zero-Voltage-Switching der Schalttransistoren der Multilevel-Brücke, wobei die Primärinduktivität und/oder die Sekundärinduktivität auch als Streuinduktivität des Transformators ausgeführt werden kann.

Vollständig optional ist Glättungskondensator, der zwischen dem ersten Ausgangsanschluss und dem zweiten Ausgangsanschluss vorgesehen sein kann, und zwar zur Glättung der Spannung auf Seite 2 bzw. der Sekundärseite des DC-DC-Converters.

Dazu kann auf der Sekundärseite zwischen dem ersten Sekundärwicklungsanschluss, dem zweiten Sekundärwicklungsanschluss und ggf. dem dritten Sekundärwicklungsanschluss und dem vierten Sekundärwicklungsanschluss sowie dem ersten Ausgangsanschluss und dem zweiten Ausgangsanschluss eine Gleichrichterbaugruppe vorgesehen sein.

Bei dem DC-DC-Converter der Offenbarung kann die Ausgangsspannung bzw. der Ausgangsstrom durch Nutzung der verschiedenen Spannungsniveaus der Flying-Capacitor-Multilevel-Halbbrücke und Pulsweitenmodulation zwischen diese Spannungsniveaus eingestellt werden, wobei der Spannungsausgleich und die Stromglättung durch die Sekundärinduktivität bzw. Speicherdrossel und/oder die Primärinduktivität bzw. Resonanzinduktivität erfolgt.

Die Primärinduktivität kann auch als Resonanzinduktivität der LLC-Komponente des DC-DC-Converters bezeichnet werden.

Der erste Primärwicklungsanschluss kann direkt oder indirekt über den ersten Transformatorkondensator oder über die Primärinduktivität mit dem positiven Brückenanschluss verbunden sein, und ebenso kann der zweite Primärwicklungsanschluss direkt oder indirekt über den zweiten Transformatorkondensator oder über die Primärinduktivität mit dem negativen Brückenanschluss verbunden sein.

Zwischen dem positiven Brückenanschluss und dem negativen Brückenanschluss kann zur Stabilisierung der Brückenspannung auf der Primärseite wenigstens ein Glättungskondensator vorgesehen sein, wobei hierfür insbesondere die in Reihe geschalteten ersten Transformatorkondensator und zweiten Transformatorkondensator dienen können.

Die Ausbildung der Gleichrichterbaugruppe bestimmt mit, ob der DC-DC-Converter der Offenbarung in unidirektional oder bidirektional betrieben werden kann. Dabei können passive Bauteile wie Dioden, passiv betriebene Transistoren und/oder Kondensatoren eingesetzt werden, aber auch aktiv betriebene Schalter bzw. Transistoren.

Dabei ist zu beachten, dass gemäß der vorliegenden Offenbarung eine primäre Flying-Capacitor-Multilevel-Brücke vorgesehen sein kann, die mit einer Primärseite des Transformators verbunden ist, zusammen mit einer sekundären Flying-Capacitor-Multilevel-Brücke, die mit einer Sekundärseite des Transformators verbunden ist. Die sekundäre Flying-Capacitor-Multilevel-Brücke übernimmt dabei auch die Aufgaben der Gleichrichterbaugruppe mit.

Ein Glättungskondensator kann zwischen dem ersten Ausgangsanschluss und dem zweiten Ausgangsanschluss vorgesehen sein.

Die Integration einer Flying-Capacitor-Multilevel-Halbbrücke ermöglicht eine effizientere Spannungsregelung und trägt zur Reduzierung von Schaltverlusten bei, was die Gesamteffizienz des DC-DC-Converters verbessern kann.

Die Anordnung von wenigstens einer Primärinduktivität und einem Transformatorkondensator in Reihe zur Primärwicklung trägt zur Glättung des Stroms bei und verbessert die Stabilität des Ausgangssignals.

Diese Gestaltung ermöglicht eine verringerte Latenzzeit. Durch die Verwendung einer Flying-Capacitor-Multilevel-Halbbrücke kann der DC-DC-Converter schnell auf Änderungen in der Eingangsspannung reagieren und eine stabilere Ausgangsspannung liefern. Außerdem kann eine verringerte Interdependenz zwischen den verschiedenen Komponenten erreicht werden. Durch die Verwendung von separaten Transformatorkondensatoren und Primärinduktivitäten können diese Komponenten unabhängig voneinander betrieben und gesteuert werden, was die Flexibilität und Zuverlässigkeit des DC-DC-Converters erhöht. Durch die Verwendung von Flying Capacitors in der Flying-Capacitor-Multilevel-Halbbrücke kann der DC-DC-Converter eine effizientere Energieübertragung ermöglichen und Verluste verringern. Durch die Verbindung der Primär- und Sekundärwicklungen über die Primärinduktivität und/oder den Transformatorkondensator kann der Stromfluss im Transformator so gesteuert werden, dass eine effizientere Energieübertragung ermöglicht wird. Durch die Verwendung von verschiedenen Schaltungen für die Gleichrichterbaugruppe kann der DC-DC-Converter an verschiedene Anforderungen und Anwendungen angepasst werden, was seine Vielseitigkeit und Anpassungsfähigkeit erhöht.

Die Verwendung von zwei Transformatorkondensatoren, die jeweils mit der Primärwicklung oder der Primärinduktivität verbunden sind, wir die Strombelastung reduziert und werden die Stromflusspfade verkürzt und das EMV-Verhalten verbessert.

Die Bereitstellung von wenigstens einem Glättungskondensator zwischen dem positiven und negativen Brückenanschluss kann zur Minimierung von Spannungsschwankungen beitragen und die Qualität der Ausgangsspannung verbessern. Insbesondere die in Reihe geschalteten ersten und zweiten Transformatorkondensatoren können als zusätzliche Filterstufe dienen, um die Rippelspannung weiter zu reduzieren und die elektromagnetische Verträglichkeit zu erhöhen.

Die Bereitstellung verschiedener Gleichrichterschaltungen ermöglicht eine flexible Anpassung des DC-DC-Converters an unterschiedliche Leistungsanforderungen und Betriebsbedingungen, was zu einer verbesserten Effizienz und Leistungsfähigkeit des Gesamtsystems führt. Durch die Verwendung von Einweggleichrichtern, Vollbrücken und Schaltern in Kombination mit Sekundärinduktivitäten und Speicherdrosseln kann eine effiziente Energieübertragung mit reduzierten Verlusten erreicht werden. Die Vielfalt der Schaltungskonfigurationen ermöglicht es, den DC-DC-Converter für spezifische Anwendungen zu optimieren, beispielsweise für Anwendungen mit hohen Spannungen oder Strömen.

Durch den Einsatz mehrere Flying-Capacitor-Multilevel-Halbbrücke auf der Primär- und/oder Sekundärseite, wahlweise auch als Vollbrücke lassen sich unterschiedliche Übersetzungsverhältnisse einstellen und damit noch größerer Spannungsbereich abdecken.

Der DC-Wandler der Offenbarung kombiniert Merkmale eines Resonanzwandlers bzw. LLC-Wanders mit Merkmalen einer Flying-Capacitor-Multilevel-Halbbrücke. Der Name "LLC" bezieht sich auf die Topologie, die zwei Induktivitäten "L", zum Beispiel die Primärwicklung und die Primärinduktivität, und einen Kondensator "C" umfasst, nämlich den Transformatorkondensator, die zusammen einen Resonanzkreis bilden. Dieser Resonanzkreis spielt eine Rolle bei der Verringerung von Schaltverlusten, was die Gesamteffizienz erhöht.

Die Schalter der Flying-Capacitor-Multilevel-Halbbrücke treiben den Resonanzkreis an. Die Induktivitäten können entweder als separate Komponenten vorliegen oder magnetisch gekoppelt in einem Transformator integriert sein, der eine Streuinduktivität aufweist. Der Transformator dient dazu, die Spannung je nach Anwendung hoch- oder herunterzusetzen und gleichzeitig eine galvanische Isolation zwischen Ein- und Ausgang zu gewährleisten, was die Sicherheit bei hohen Spannungen erhöht. Nach dem Transformator wandelt eine Gleichrichterbaugruppe die Hochfrequenzwechselspannung auf der Sekundärseite des Transformators wieder in Gleichspannung um. Schließlich glättet ein Filter die verbleibenden Hochfrequenzanteile, wodurch eine stabile Gleichspannung am Ausgang entsteht.

Der Betrieb des DC-Wandler gemäß der Offenbarung beginnt damit, dass die Schaltbauelemente die Eingangsspannung mit hoher Frequenz alternieren. Diese alternierende Spannung wird auf den Resonanzkreis angewendet. Wenn der Schaltkreis bei seiner Resonanzfrequenz arbeitet, wird die Impedanz verkleinert, wodurch der Stromfluss vergrößert und damit die Effizienz der Leistungsübertragung erhöht wird. Der Resonanzkreis formt das Stromsignal und reduziert die Verluste, die normalerweise mit hartem Schalten verbunden sind. Der Transformator setzt die Spannung auf das gewünschte Niveau hoch oder herunter, abhängig vom Windungsverhältnis. Danach wandelt der Gleichrichter die Wechselspannung auf der Sekundärseite des Transformators wieder in Gleichspannung um, und der Ausgang wird gefiltert, um eine glatte und stabile Gleichspannung zu erzeugen.

Ein weiterer Vorteile des DC-Wandlers der Offenbarung ist seine Effizienz, insbesondere bei geringer Last. Diese Effizienz ist auf die Resonanznatur des LLC-Kreises zurückzuführen, der die Schaltverluste minimiert. Darüber hinaus ermöglicht das Design ein weiches Schalten, entweder durch Zero Voltage Switching (ZVS) oder durch Zero Current Switching (ZCS). Diese Techniken verringern die Belastung der Schaltbauelemente und verbessern die Effizienz weiter. Die Flexibilität des DC-Wandlers ist ein weiterer Vorteil, da er über einen weiten Bereich von Eingangsspannungen und Ausgangsleistungen betrieben werden kann.

Der DC-Wandler der Offenbarung kann in Anwendungen in AC/DC-Netzteilen für Server, Telekommunikation und industrielle Anwendungen, sowie in Elektrofahrzeugen als Onboard-Ladegeräte. Darüber kann er in erneuerbaren Energiesystemen, wie Solarwechselrichtern und Batteriemanagementsystemen, verwendet werden.

Wenn die Frequenz der Eingangsspannung in einem DC-LLC-Wandler variiert wird, hat dies Auswirkungen auf den Betrieb des Schaltkreises, insbesondere auf den Resonanzkreis und die Ausgangsspannung. Wenn der Schaltkreis bei seiner natürlichen Resonanzfrequenz arbeitet, heben sich die induktiven und kapazitiven Reaktanzen gegenseitig auf, was die Impedanz minimiert und eine maximale Leistungsübertragung an die Last ermöglicht. Dies ist häufig der Punkt, an dem die Ausgangsspannung ihre höchste Effizienz erreicht. Wird jedoch die Frequenz über die Resonanzfrequenz hinaus erhöht, wird der Schaltkreis induktiver, was zu einer Erhöhung der Impedanz, einer Verringerung des Stromflusses und einer niedrigeren Ausgangsspannung führt. Andererseits führt eine Verringerung der Frequenz unter die Resonanzfrequenz dazu, dass der Schaltkreis kapazitiver wird, was ebenfalls die Impedanz erhöht und die Ausgangsspannung senkt.

Weiche Schalttechniken wie Zero Voltage Switching (ZVS) und Zero Current Switching (ZCS) werden ebenfalls durch Frequenzvariationen beeinflusst. ZVS tritt eher bei oder über der Resonanzfrequenz auf, wodurch Schaltverluste reduziert werden, wenn das Schaltbauelement bei nahezu null Spannung eingeschaltet wird. ZCS, das auftritt, wenn der Strom durch das Schaltbauelement beim Abschalten null ist, ist unterhalb der Resonanzfrequenz häufiger, aber in LLC-Wandlern weniger verbreitet als ZVS.

Der DC-Wandler der Offenbarung kann in der Nähe der Resonanzfrequenz für optimale Effizienz arbeiten. Durch die Anpassung der Schaltfrequenz kann der Wandler die Ausgangsspannung bei unterschiedlichen Lasten regulieren und einen stabilen Betrieb trotz Änderungen der Eingangsspannung oder der Lastbedingungen aufrechterhalten.

Der Begriff "Steuer- und Überwachungseinheit" bezieht sich hier auf eine elektronische Einheit, über die die Steuerung und Überwachung der Schalter in der Schaltung erfolgt. Die Begriffe "primäre Steuer- und Überwachungseinheit" und "sekundäre Steuer- und Überwachungseinheit" beziehen sich hier auf Steuer- und Überwachungseinheiten, über die die Steuerung und Überwachung der Schalter auf der Primärseite bzw. auf der Sekundärseite des Transformators erfolgt. Der Begriff "Überwachungseinheit" beinhaltet dabei, dass dazu zum Beispiel Spannungs- und Strommessungen und auch andere Parametermessungen in der Schaltung erfolgen können.

Der Begriff "Transformator" bezieht sich hier auch ganz allgemein auf eine elektrische Komponente mit einer primären und einer sekundären Baugruppe, die elektrische Energie zwischen den Baugruppen über einen elektromagnetischen Fluss überträgt. Diejenige Seite des Transformators mit der primären Baugruppe wird als "Primärseite" oder als "Seite 1" bezeichnet und diejenige Seite des Transformators mit der sekundären Baugruppe wird als "Sekundärseite" oder als "Seite 2" bezeichnet.

Die Begriffe "erste Sekundärwicklung" bzw. "zweite Sekundärwicklung" beziehen sich hier auf Wicklung des Transformators, die als erste Wicklung bzw. als zweite Wicklung auf der sekundären Seite des Transformators mit zwei Wicklungen angeordnet sind.

Der Begriff "Primärinduktivität" bezieht sich hier auf eine Induktivität, die auf der primären Seite des Transformators und dort in der LLC-Komponente des DC-DC-Converters vorgesehen ist und dort als "primäre Resonanzinduktivität" wirkt, indem sie die Resonanzbedingungen im Transformator beeinflusst. Der Begriff "Sekundärinduktivität" wird für eine Induktivität verwendet, die auf der sekundären Seite des Transformators geschaltet ist und die Stromflussregulierung im Transformator ermöglicht.

Der Begriff "primäre Glättungsinduktivität" bezieht sich hier auf eine Induktivität, die auf der primären Seite des Transformators vorgesehen ist und die die Glättung des Stroms im Transformator unterstützt.

Der Begriff "Transformatorkondensator" oder auch "erster Transformatorkondensator" bezieht sich hier auf einen Kondensator, der auf der der primären Seite des Transformators vorgesehen ist und zur Beeinflussung der Spannung auf der Primärseite dient. Der Begriff "zweiter Transformatorkondensator" wird für einen weiteren Kondensator auf der Primärseite verwendet.

Der Begriff "erster Primärwicklungsanschluss" bezieht sich hier auf einen von zwei "Anschlusspunkt der primären Wicklung des Transformators, während sich der Begriff "zweiter Primärwicklungsanschluss" sich hier auf den anderen Anschlusspunkt der primären Wicklung des Transformators bezieht.

Genauso bezieht sich der Begriff "erster Sekundärwicklungsanschluss" bezieht sich hier auf einen von zwei Anschlusspunkten der sekundären Wicklung des Transformators, während sich der Begriff "zweiter Sekundärwicklungsanschluss" sich hier auf den anderen Anschlusspunkt der sekundären Wicklung des Transformators bezieht.

Der Begriff "dritter Sekundärwicklungsanschluss" bezieht sich hier auf einen Anschluss auf der sekundären Seite des Transformators, der als dritter von vier Anschlusspunkten für zwei Wicklungen dient, und der Begriff "vierter Sekundärwicklungsanschluss" steht für einen weiteren von vier Anschlusspunkten auf der sekundären Seite des Transformators, der als vierter Anschlusspunkt für eine von zwei Wicklungen dient.

Der Begriff "positiven Brückenanschluss" bezieht sich hier auf den Anschlusspunkt einer Brückenschaltung, der eine positive Quellenspannung führt. Im Fall der Verwendung von Brückenschaltungen sowohl auf der Primärseite als auch auf der Sekundärseite bezieht sich der Begriff "primärer positiver Brückenanschluss" auf den Anschlusspunkt einer Brückenschaltung auf der primären Seite des Transformators, der eine positive Spannung führt, und der Begriff "sekundärer positiver Brückenanschluss" bezieht sich auf den Anschlusspunkt einer Brückenschaltung auf der sekundären Seite des Transformators, der eine positive Spannung führt. Dasselbe gilt analog für die Begriffe "negativer Brückenanschluss", "primärer negativer Brückenanschluss" und "sekundärer negativer Brückenanschluss".

Die Begriffe "erster Ausgangsanschluss" bzw. "zweiter Ausgangsanschluss" beziehen sich hier auf den ersten Anschlusspunkt bzw. auf den zweiten Anschlusspunkt für den Ausgangsstrom des DC-DC-Wandlers auf der Sekundärseite.

Der Begriff "Mittelanschluss" bezieht sich hier auf den zentralen Anschlusspunkt in der Flying-Capacitor-Multilevel-Halbbrücke, von dem aus der obere und untere Schalterzweig ausgehen. Im Falle der Verwendung von zwei Halbbrücken wird der Begriff "erster Mittelanschluss" für den Anschlusspunkt in der ersten Flying-Capacitor-Multilevel-Halbbrücke verwendet, während sich der Begriff "primärer Mittelanschluss" in DC-DC-Convertern verwendet wird, die sowohl auf der Primärseite als auch auf der Sekundärseite eine Flying-Capacitor-Multilevel-Brücke aufweisen. Der Begriff "primärer erster Mittelanschluss" bezieht sich dabei auf den Anschlusspunkt in einer ersten Flying-Capacitor-Multilevel-Halbbrücke auf der Primärseite, während der Begriff "primärer zweiter Mittelanschluss" für den entsprechenden Anschlusspunkt in einer zweiten Flying-Capacitor-Multilevel-Halbbrücke auf der Primärseite verwendet wird. Dasselbe gilt analog für die Begriffe "sekundärer erster Mittelanschluss" und "sekundärer zweiter Mittelanschluss", die für die entsprechenden Anschlusspunkte in einer ersten Flying-Capacitor-Multilevel-Halbbrücke bzw. einer zweiten Flying-Capacitor-Multilevel-Halbbrücke auf der Sekundärseite verwendet werden.

Der Begriff "oberen Schalterzweig" bezieht sich hier auf den Teil der Flying-Capacitor-Multilevel-Halbbrücke mit mehreren oberen Schaltern, die vom Mittelanschluss ausgehen. Der Begriff "unteren Schalterzweig" steht entsprechend dazu für denjenigen Teil der Flying-Capacitor-Multilevel-Halbbrücke, der mehrere untere Schaltern aufweist, die vom Mittelanschluss ausgehen.

Der Begriff "Flying Capacitors" bezieht sich hier auf eine Vielzahl von Kondensatoren, die in der Flying-Capacitor-Multilevel-Halbbrücke vorgesehen sind, um den Transformator auf der Primärseite mit Wechselspannung zu beaufschlagen. Im Kontext der Schaltungstechnik kann "Flying Capacitor" einen Kondensator, der in einer spezifischen Schaltungskonfiguration, typischerweise in einer Flying-Capacitor-Multilevel-Halbbrücke oder Vollbrücke, eingesetzt wird. Dieser Kondensator "schwebt" zwischen verschiedenen Spannungspotentialen, anstatt fest mit einem bestimmten Potential (wie Masse) verbunden zu sein. Ein Flying Capacitor kann zwischen Schaltern oder Transistoren platziert sein und kann seine Spannung abhängig von deren Schaltzuständen ändern. Er muss nicht fest mit Masse oder einer festen Spannung verbunden sein, daher die Bezeichnung "schwebend". Ein Flying Capacitor hilft, die Ausgangsspannung zu glätten und Zwischenstufen zu erzeugen, was zu einer höheren Effizienz und geringeren Schaltverlusten führt. Er kann eine die Spannung in mehrere Stufen aufteilen, wodurch Spannungsabfälle auf den einzelnen Schaltern reduziert werden können. Die Verwendung von Flying Capacitors in Multilevel-Schaltungen kann zu geringeren Schaltverlusten führen, wenn die Spannungsdifferenzen, die jeder Schalter handhaben muss, reduziert werden. In Multilevel-Schaltungen ermöglicht eine Flying Capacitor eine Abstufung der Spannungen, was zu einer höheren Auflösung und besseren Kontrolle der Ausgangsspannung führt. Dies kann in Hochleistungsanwendungen zur präziseren Spannungsregelung eingesetzt werden. Durch die feinere Spannungsteilung und die Reduktion der Schaltverluste kann die Gesamtenergieeffizienz der Schaltung verbessert werden. Die Möglichkeit, mehrere Spannungsebenen zu erzeugen und genauer zu steuern, kann zu einer stabileren und genaueren Ausgangsspannung führen.

In den Zeichnungen werden die gleichen oder ähnlichen Merkmale durch die gleichen Bezugszeichen referenziert.

Die vorliegende Offenlegung wird im folgenden mit Hilfe von Beispielen dargestellt und nicht beschränkt in den

**EP 4 693 870 A1**

anhängenden Zeichnungen, in denen wie Referenznummern ähnliche Elemente wiedergegeben werden. Die Ausführungsbeispiele der Offenbarung werden nun mit Bezug auf die angefügten Zeichnungen beschrieben.

Figur 1 zeigt einen unidirektionalen DC-DC-Converter gemäß der Offenbarung, mit einer Flying-Capacitor-Multilevel-Halbbrücke, mit einer LLC-Transformatorstufe, und mit einer Gleichrichterschaltung mit zwei Einweggleichrichtern,

Figur 2 zeigt einen weiteren unidirektionalen DC-DC-Converter gemäß der Offenbarung, mit einer Flying-Capacitor-Multilevel-Halbbrücke, mit einer LLC-Transformatorstufe, und mit einer Gleichrichterschaltung mit einer Vollbrücke,

Figur 3 zeigt einen weiteren unidirektionalen DC-DC-Converter gemäß der Offenbarung, mit einer Flying-Capacitor-Multilevel-Halbbrücke mit 5 Ebenen (n= 4), mit einer LLC-Transformatorstufe, und mit einer Gleichrichterschaltung mit zwei Einweggleichrichtern,

Figur 4 zeigt einen weiteren unidirektionalen DC-DC-Converter gemäß der Offenbarung, mit einer Flying-Capacitor-Multilevel-Halbbrücke mit 5 Ebenen (n= 4), mit einer LLC-Transformatorstufe, und mit einer Gleichrichterschaltung mit einer Vollbrücke,

Figur 5 zeigt einen weiteren unidirektionalen DC-DC-Converter gemäß der Offenbarung, mit einer Flying-Capacitor-Multilevel-Vollbrücke, mit einer LLC-Transformatorstufe, und mit einer Gleichrichterschaltung mit zwei Einweggleichrichtern,

Figur 6 zeigt einen weiteren unidirektionalen DC-DC-Converter gemäß der Offenbarung, mit einer Flying-Capacitor-Multilevel-Vollbrücke, mit einer LLC-Transformatorstufe, und mit einer Gleichrichterschaltung mit einer Vollbrücke,

Figur 7 zeigt einen weiteren unidirektionalen DC-DC-Converter gemäß der Offenbarung, mit einer Flying-Capacitor-Multilevel-Vollbrücke, mit einer LLC-Transformatorstufe, und mit einer Gleichrichterschaltung mit zwei Einweggleichrichtern,

Figur 8 zeigt die Sekundärseite eines bidirektionalen DC-DC-Converters gemäß der Offenbarung, mit einer Gleichrichterschaltung mit zwei Gleichrichterschaltern,

Figur 9 zeigt die Sekundärseite eines weiteren bidirektionalen DC-DC-Converters gemäß der Offenbarung, mit einer Gleichrichterschaltung mit vier Gleichrichterschaltern,

Figur 10 zeigt die Sekundärseite eines weiteren bidirektionalen DC-DC-Converters gemäß der Offenbarung, mit einer Gleichrichterschaltung mit zwei Gleichrichterschaltern und zwei Gleichrichterkondensatoren,

Figur 11 zeigt einen bidirektionalen DC-DC-Converter gemäß der Offenbarung, mit zwei Flying-Capacitor-Multilevel-Vollbrücken, und mit zwei LLC-Transformatorstufen,

Figur 12 zeigt einen bidirektionalen DC-DC-Converter gemäß der Offenbarung, mit einer Flying-Capacitor-Multilevel-Vollbrücke, mit einer Flying-Capacitor-Multilevel-Halbbrücke und mit zwei LLC-Transformatorstufen,

Figur 13 zeigt einen bidirektionalen DC-DC-Converter gemäß der Offenbarung, mit zwei Flying-Capacitor-Multilevel-Halbbrücken und mit zwei LLC-Transformatorstufen,

Figur 14 zeigt einen bidirektionalen DC-DC-Converter gemäß der Offenbarung, mit zwei Flying-Capacitor-Multilevel-Halbbrücken mit jeweils 5 Ebenen, und mit einer LLC-Transformatorstufe,

Figur 15 zeigt einen Spannungsverlauf am Mittelanschluss einer 5-Level-Multilevel-Halbbrücke bei Pulsbreitenmodulation,

Figur 16 zeigt eine Schaltfolge einer 5-Level-Halbbrücke für die Zielspannung 0,25 x Umax,

Figur 17 zeigt ein Diagramm,

Figur 18 zeigt ein Beispiel für einen Flying Capacitor Multilevel LLC DC/DC Converter mit einer 5-Level-Flying-Capacitor-Multilevel-Halbbrücke (n=4),

Figur 19 zeigt beispielhafte Schaltzustände des Flying Capacitor Multilevel LLC DC/DC Converters aus Fig. 18,

Fig. 20 zeigt einen ersten Block einer beispielhaften Schaltfolge des Flying Capacitor Multilevel LLC DC/DC Converters aus Fig. 18,

Fig. 21 zeigt einen zweiten Block als Fortsetzung des ersten Blocks einer beispielhaften Schaltfolge aus Fig. 20,

Fig. 22 zeigt einen dritten Block als Fortsetzung des zweiten Blocks einer beispielhaften Schaltfolge aus Fig. 21,

Fig. 23 zeigt einen vierten Block als Fortsetzung des dritten Blocks einer beispielhaften Schaltfolge aus Fig. 22,

Fig. 24 zeigt die resultierende Spannung am Mittelanschluss der Halbbrücke des Flying Capacitor Multilevel LLC DC/DC Converters aus Fig. 18,

Fig. 25 zeigt den Spannungsverlauf am Ausgang Vout (ohne Regelung) des Flying Capacitor Multilevel LLC DC/DC Converters aus Fig. 18,

Fig. 26 zeigt Der Stromverlauf an der Speicherdrossel L_s des Flying Capacitor Multilevel LLC DC/DC Converters aus Fig. 18,

Fig. 27 zeigt Spannungsumsetzungsverhältnisse des bidirektionalen DC-DC-Converters aus Fig. 11,

Fig. 28 zeigt Spannungsumsetzungsverhältnisse des bidirektionalen DC-DC-Converters aus Fig. 12,

Fig. 29 zeigt einen DC-DC-Converter mit einer Flying-Capacitor-Multilevel-Halbbrücke mit einer Anlaufschaltung mit zwei Anlaufkondensatoren je Flying Capacitor,

Fig. 30 zeigt einen DC-DC-Converter mit einer Flying-Capacitor-Multilevel-Halbbrücke mit Anlaufschaltung mit zwei

8

Anlaufkondensatoren je Flying Capacitor und Entladedioden,

Fig. 31 zeigt einen DC-DC-Converter mit einer Flying-Capacitor-Multilevel-Halbbrücke mit Anlaufschaltung mit zwei Anlaufkondensatoren je Flying Capacitor und verschiedenen Spannungsteileranordnungen,

Fig. 32 zeigt einen DC-DC-Converter mit einer 5-Level-Flying-Capacitor-Multilevel-Halbbrücke mit Anlaufschaltung mit zwei Anlaufkondensatoren je Flying Capacitor,

Fig. 33 zeigt einen DC-DC-Converter mit einer Flying-Capacitor-Multilevel-Halbbrücke mit Anlaufschaltung mit Anlaufkondensatorketten,

Fig. 34 zeigt einen DC-DC-Converter mit einer Flying-Capacitor-Multilevel-Halbbrücke mit Anlaufschaltung mit Anlaufkondensatorketten und Entladedioden,

Fig. 35 zeigt einen DC-DC-Converter mit einer 5-Level-Flying-Capacitor-Multilevel-Halbbrücke mit Anlaufschaltung mit Anlaufkondensatorketten und Entladedioden,

Fig. 36 zeigt einen DC-DC-Converter mit einer 5-Level-Flying-Capacitor-Multilevel-Halbbrücke mit Anlaufschaltung mit Anlaufkondensatoren und Entladedioden,

Figur 37 zeigt ein Simulationsergebnis der Schaltung aus Fig. 36,

Fig. 38 zeigt einen DC-DC-Converter mit einer 5-Level-Flying-Capacitor-Multilevel-Halbbrücke (n=4) mit Anlaufschaltung mit Anlaufkondensatorketten und Entladedioden und kurzgeschlossenem Mittelanschluss,

Figur 39 zeigt ein Simulationsergebnis der Schaltung aus Fig. 38,

Fig. 40 zeigt einen DC-DC-Converter mit einer aktiven Anlaufschaltung für eine Flying-Capacitor-Multilevel-Halbbrücke mit Spannungsbegrenzung für Flying Caps,

Fig. 41 zeigt ein Beispiel für 5-Level-Flying-Capacitor-Multilevel-Halbbrücke mit aktiver Anlaufschaltung, und

Figur 42 zeigt ein Simulationsergebnis der Schaltung aus Fig. 41.

Einleitend lässt sich sagen, dass ein unidirektionaler oder bidirektionaler Flying Capacitor Multilevel LLC DC/DC Converter gemäß der vorliegenden Offenbarung die folgenden Bauteile aufweist:

- wenigstens eine Flying-Capacitor-Multilevel-Halbbrücke auf Seite 1 bzw. der Primärseite eines Transformators,
- wenigstens eine LLC-Transformatorstufe mit einem Transformator, mindestens einer Resonanzinduktivität $L_R$ auf Seite 1 oder Seite 2 bzw. der Sekundärseite des Transformators, wenn nur eine einzige Sekundärwicklung vorgesehen ist, und
- mindestens einem Kondensator auf Seite 1,

sowie wahlweise auf der Seite 2 bzw. der Sekundärseite:

- eine Gleichrichterschaltung mit zwei Einweggleichrichtern, die mit jeweils einer Transformatorwicklung verbunden sind und abwechselnd betrieben werden sowie einer Speicherdrossel Ls auf der Ausgangsseite für den unidirektionalen Betrieb, oder
- einer Gleichrichterschaltung mit einer Vollbrücke und einer Speicherdrossel Ls auf der Ausgangsseite für den unidirektionalen Betrieb, oder
- einer Gleichrichterschaltung mit zwei Einweggleichrichtern, die mit einer Transformatorwicklung verbunden sind und abwechselnd betrieben werden sowie mindestens einem Kondensator, der mit dem anderen Anschluss der Transformatorwicklung auf der Ausgangsseite verbunden ist, für den unidirektionalen Betrieb, oder
- zwei Transistoren, die mit jeweils einer Transformatorwicklung verbunden sind und abwechselnd betrieben werden, sowie einer Speicherdrossel Ls auf der Ausgangsseite für den bidirektionalen Betrieb, oder
- einer Vollbrücke mit vier Transistoren und einer Speicherdrossel Ls auf der Ausgangsseite für den bidirektionalen Betrieb, oder
- zwei Transistoren, die mit einer Transformatorwicklung verbunden sind und abwechselnd schalten und mindestens einem Kondensator, der mit der anderen Transformatorwicklung verbunden ist, für den bidirektionalen Betrieb.

Die genannten Elemente können auch einzeln oder in beliebiger Kombination verwendet werden.

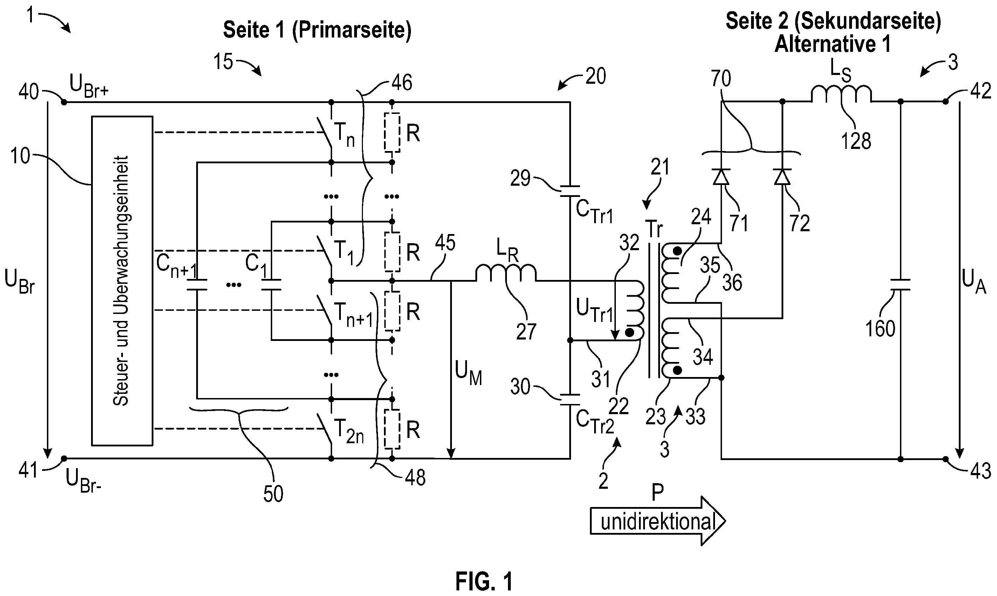

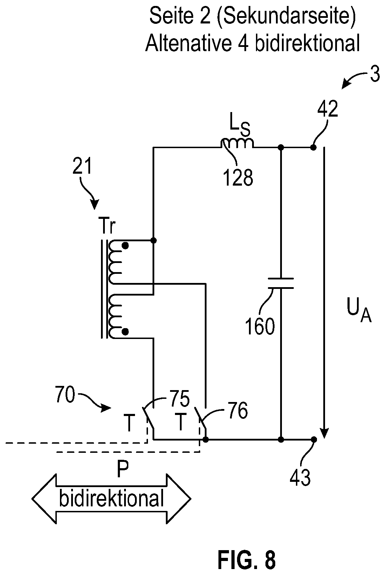

Ein solcher Flying Capacitor Multilevel LLC DC/DC Converter mit einer Flying-Capacitor-Multilevel-Halbbrücke für den unidirektionalen Betrieb ist beispielsweise in den Figuren 1, 2 oder 3 gezeigt, oder für bidirektionalen Betrieb in den Figuren 8, 9 oder 10.

Die Energie wird auf Seite 1 an der Brückenspannung U_Br zugeführt. Häufig kommt zusätzlich zwischen U_Br$_+$ und U_Br- ein Kondensator zur Stabilisierung der Brückenspannung zum Einsatz, der in den Figuren 1, 2 oder 3 sowie in den Figuren 8, 9 oder 10 nicht abgebildet ist. Ein zusätzlicher Kondensator zur Stabilisierung der Brückenspannung wird insbesondere dann eingesetzt, wenn nur einer der beiden Transformatorkondensatoren C_Tr1 und C_Tr2 vorhanden ist.

Parallel zur Brückenspannung befinden sich die beiden in Serie geschalteten Kondensatoren bzw. Transformatorkondensatoren C_Tr1 und C_Tr2. Diese können der Potentialanpassung der primärseitigen Transformatorwicklung und der Stabilisierung der Brückenspannung dienen.

Alternativ zu den Anordnung in den Figuren 1 bis 4 kann einer der beiden Kondensatoren C_Tr1 und C_Tr2 entfallen oder es können beide Kondensatoren jeweils durch einen Kondensator am Mittelanschluss der Halbbrücke oder auf Seite 1 in Reihe zu der Induktivität $L_R$ ersetzt werden. Praktisch kann die abgebildete Anordnung Vorteile beim Einschalten, bei Änderungen der Eingangsspannung bzw. Brückenspannung und in Bezug auf EMV-Verhalten zeigen.

Die Flying-Capacitor-Multilevel-Halbbrücke ist symmetrisch aufgebaut und hat einen oberen und einem unteren Zweig. Jeder Zweig hat mindestens zwei Halbleiterschalter bzw. Schalttransistoren $T\_1$ bis $T_n$ im oberen Zweig bzw. $T_{n+1}$ bis $T\_2n$ im unteren Zweig. Die Verbindungspunkte zwischen den Transistoren eines Zweigs sind jeweils über die Kondensatoren bzw. Flying Capacitors $C_1$ bis $C_{n-1}$ mit den entsprechenden Verbindungspunkten des gegenüberliegenden Zweigs verbunden.

Die Kondensatoren $C_1$ bis $C_{n-1}$, die auch als "Flying Capacitors" oder "Flying Caps" bezeichnet werden, dienen als Energiespeicher und zur Erzeugung der Zwischenstufen der Spannung am Mittelanschluss der Halbbrücke. Die Kondensatoren $C_1$ bis $C_{n-1}$ weisen üblicherweise die gleiche Kapazität auf, können jedoch eine unterschiedliche Spannungsfestigkeit haben.

Die Parallelwiderstände R bei jedem Schalttransistor der Halbbrücke können der Ladung der Flying-Caps dienen, wenn die Transistoren geöffnet sind, sie sind jedoch nur optional vorgesehen.

Die Steuer- und Überwachungseinheit steuert die Transistoren $T\_1$ bis $T\_2n$, überwacht und regelt ggf. die Spannung an den Kondensatoren $C_1$ bis $C_{n-1}$ durch die Anpassung der Schaltfolge der Schalttransistoren der Halbbrücke.

Die Induktivität $L_R$ dient als Resonanzinduktivität und sie kann sich auch ohne ein zusätzliches Bauteil vorzusehen aus einer ohnehin vorhandenen Streuinduktivität bzw. Streukapazität des Transformators in der LLC-Baugruppe ergeben. Gemäß der Offenbarung ist ein "Zero Voltage Switching" ("ZVS") vorgesehen, also das spannungsfreie Einschalten der Schalttransistoren der Halbbrücke. Dabei schaltet nach dem Ausschalten eines stromführenden Transistors jeweils der nächste möglichst genau dann ein, wenn die Spannung an diesem Transistor gleich oder in etwa Null ist. Dies ist in der EP2661806B1 beschrieben und kann auf die vorliegende Offenbarung übertragen werden. In der Multilevel-Halbbrücke (MLHB) werden Schaltverluste verringert, indem sichergestellt wird, dass ein Schalter (Transistor) genau in dem Moment geschlossen wird, in dem die Spannung über dem Schalter null oder nahe null ist. Das reduziert die während des Schaltvorgangs verlorene Energie. Dies kann durch die Nutzung parasitärer und auch gezielt eingebauter Kapazitäten in Verbindung mit einer Induktivität am Mittelanschluss (M) der Schaltung erreicht werden. Diese helfen, die Spannungs- und Stromverläufe so zu steuern, dass die Bedingungen für ZVS optimal sind. Diese Kapazitäten, in Kombination mit der Induktivität am Mittelanschluss (M) der Schaltung, beeinflussen die Spannung und den Stromfluss in der Schaltung so, dass die Bedingungen für ZVS verbessert sind. Die Kapazitäten speichern Energie, die dann durch die Induktivität freigesetzt wird, um den Spannungsverlauf zu formen.

Gemäß der Offenbarung können die ohnehin vorhandenen Kapazitäten und Induktivitäten der LLC-Baugruppe für das Zero-Voltage-Switching (ZVS) genutzt werden. Die bereits vorhandenen Kapazitäten, die ursprünglich für die Resonanz und Spannungsumwandlung eingesetzt werden, senken die Spannung an den Schaltern (Transistoren) auf null oder nahe null, bevor sie geschlossen werden, um Energieverluste während des Schaltvorgangs zu minimieren. Gleichzeitig unterstützen die vorhandenen Induktivitäten den ZVS-Prozess, indem sie den Stromverlauf so beeinflussen, dass die Spannung über den Schaltern verringert ist, wenn sie geschlossen werden sollen. Diese Nutzung bestehender Komponenten macht die Implementierung von ZVS kosteneffizient, da keine zusätzlichen Bauteile erforderlich sind, und erhöht gleichzeitig die Effizienz der Spannungsumwandlung im DC-DC-Wandler. Durch die Reduzierung der Schaltverluste wird auch die Wärmeentwicklung verringert, was die Notwendigkeit aufwendiger Kühlmaßnahmen verringert und den Gesamtwirkungsgrad der Schaltung steigert.

Die Induktivität hilft dabei, die Spannungsverläufe so zu verzögern und zu glätten, dass der Moment, in dem der Schalter geschlossen wird, mit einer Nullspannung übereinstimmt. Dies reduziert die Energieverluste drastisch. Die Steuereinheit misst dabei die Mittelspannung (UM) mit hoher zeitlicher Auflösung und vergleicht sie mit der erwarteten Spannung, um eine Verzögerung zu berechnen, die sicherstellt, dass der Schalter zu einem günstigen Zeitpunkt betätigt wird.

Auf der Seite 2 bzw. Sekundärseite des LLC-Wandlers können passive oder aktive Gleichrichterschaltungen für den unidirektionalen Betrieb vorgesehen sein, siehe die Figuren 1 bis 7, oder auch aktive Transistorschaltungen für den bidirektionalen Betrieb, siehe die Figuren 8, 9 oder 10, zum Einsatz.

Bei der Schaltung in Fig. 1 werden auf der Seite 2 zwei Einweggleichrichterelemente vorgesehen, die mit jeweils einer Transformatorwicklung verbunden sind und abwechselnd betrieben werden, sowie eine Speicherdrossel Ls auf der Ausgangsseite für den unidirektionalen Betrieb. Diese Ausführung benötigt nur zwei Gleichrichterdioden oder alternativ dazu zwei aktive Gleichrichterelemente und es tritt immer nur ein Spannungsabfall an einem Gleichrichterelement auf.

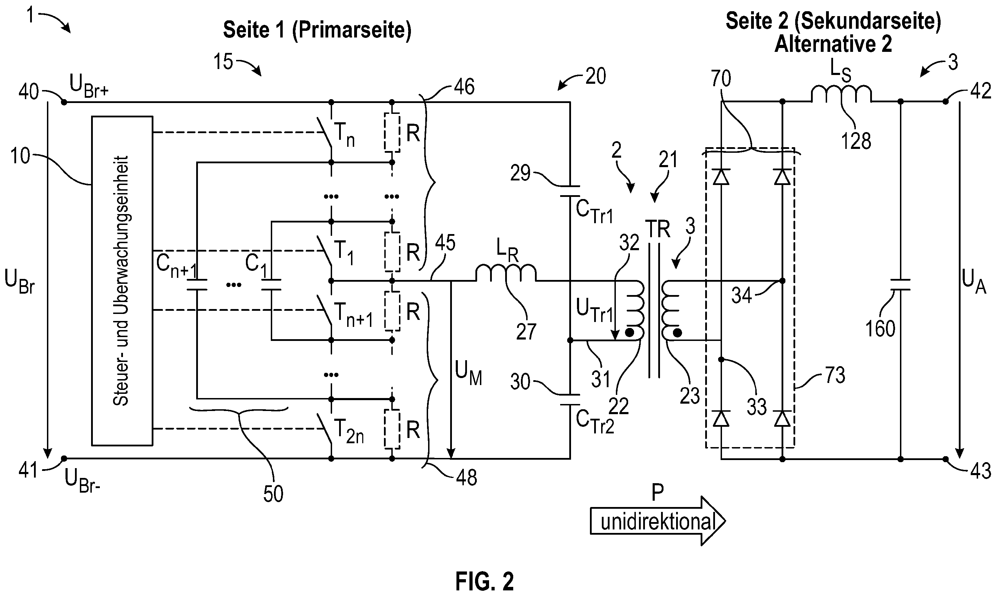

Bei der Schaltung in Fig. 2 wird für den unidirektionalen Betrieb auf der Seite 2 eine Gleichrichter-Vollbrücke und eine Speicherdrossel Ls auf der Ausgangsseite eingesetzt. Gegenüber der der Schaltung in Fig. 1 werden vier Dioden oder alternativ dazu vier aktive Gleichrichterelemente benötigt und es tritt ein Spannungsabfall immer an zwei Gleichrichterelementen auf. Dafür wird aber gegenüber der Schaltung in Fig. 1 nur eine sekundärseitige Transformatorwicklung benötigt und die Gleichrichterelemente benötigen nur eine einfache Spannungsfestigkeit bezogen auf die maximale Transformatorspannung und Ausgangsspannung auf Seite 2.

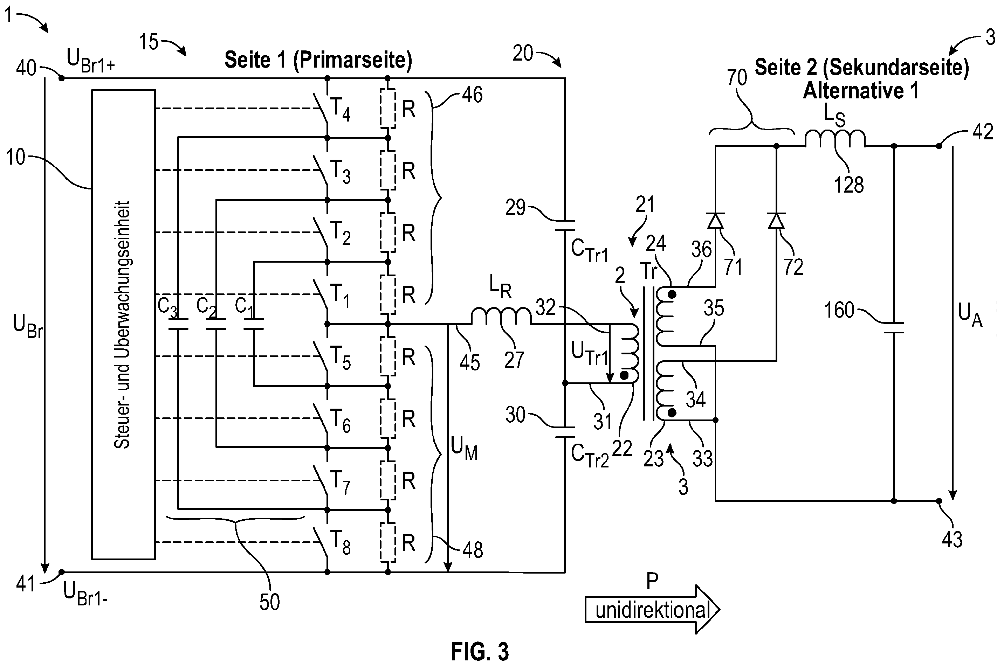

Bei der Schaltung in Fig. 3 werden auf der Seite 2 für den unidirektionalen Betrieb zwei Einweggleichrichter eingesetzt, die mit jeweils einer Transformatorwicklung verbunden sind und abwechselnd betrieben werden. Ein Spannungsabfall tritt immer an einem Gleichrichterelement auf und es wird nur eine sekundärseitige Transformatorwicklung benötigt. Zusätzlich kann mindestens ein zusätzlicher Kondensator an dem anderen Anschluss der Transformatorwicklung auf der Ausgangsseite eingesetzt werden und es braucht keine Speicherdrossel zur Spannungs- und Stromregelung eingesetzt werden. Die Ausgangsspannung entspricht etwa der doppelten Spannung an der sekundärseitigen Transformatorwicklung. Die Spannungsregelung kann hier ggf. über die Resonanzinduktivität am Transformator erfolgen.

Bei der Schaltung in Fig. 8 werden auf der Seite 2 im Vergleich zu der Schaltung in Fig. 1 für den bidirektionalen Betrieb auf der Ausgangsseite statt zwei Gleichrichterelementen zwei Transistoren eingesetzt, die mit jeweils einer Transformatorwicklung verbunden sind und abwechselnd betrieben werden. Es kann vorteilhaft sein, die Anordnung mit gemeinsamen Masse- bzw. Minus-Anschlüssen bzw. der Kollektor- bzw. der Source-Anschlüsse der Transistoren zu gestalten. Die Vorteile sind analog bzw. ähnlich zu denjenigen der Schaltung in Fig. 1.

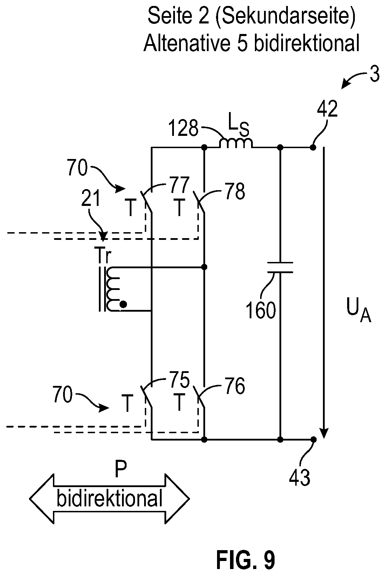

Bei der Schaltung in Fig. 9 wird auf der Seite 2 im Vergleich zu der Schaltung in Fig. 1 statt einer Gleichrichter-Vollbrücke eine Transistor-Vollbrücke eingesetzt, was einen für den bidirektionalen Betrieb ermöglicht. Die Vorteile sind analog oder ähnlich zu denen der Schaltung in Fig. 2.

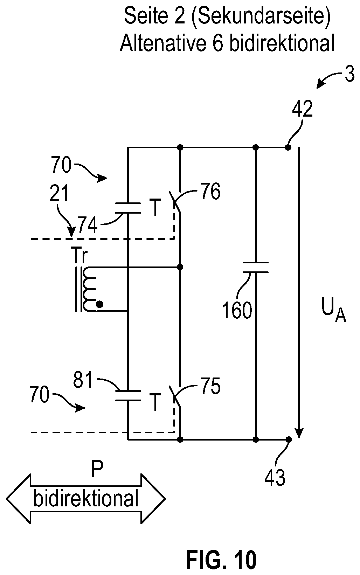

Bei der Schaltung in Fig. 10 werden auf der Seite 2 im Vergleich zu der Schaltung in Fig. 3 statt zwei Einweggleichrichter zwei Transistoren für eingesetzt, was einen den bidirektionalen Betrieb erlaubt. Die Vorteile sind analog bzw. ähnlich zu denen der der Schaltung in Fig. 3.

Die Induktivität Ls bzw. die Speicherdrossel auf Seite 2 bzw. der Sekundärseite dient zur Glättung und Regelung der Ausgangsspannung oder des Ausgangsstromes. Diese arbeitet nach dem gleichen Prinzip wie die Speicherdrossel bei einem Step-down-Converter. Der ausgangsseitige Kondensator glättet nochmals die Ausgangsspannung und den Ausgangsstrom.

Durch den Einsatz einer Multilevel-Halbbrücke auf der Primärseite kann der Spannungshub an der Speicherdrossel Ls beim bestimmungsgemäßen Betrieb theoretisch 2/n der Ausgangsspannung betragen, statt 100%, wie dies bei einem herkömmlichen Step-down-Wandler erforderlich wäre. Dadurch kann diese bei n > 2 kleiner dimensioniert werden und es fallen weniger Verluste an, was ein weiterer Vorteil diese Topologie ist.

Bevor die Multilevel-Halbbrücke ihren bestimmungsgemäßen Betrieb aufnehmen kann, werden die Flying Capacitors auf die für den Betrieb benötigte Spannung aufgeladen, was über die Serienwiderstände R oder über eine Anlaufschaltung erfolgen kann.

Im bestimmungsgemäßen Betrieb werden die Halbleiterschalter $T\_1$ bis $T_n$ und $T_{n+1}$ bis $T\_2n$ jeweils abwechselnd so geschaltet, dass die Ausgangsfrequenz der Halbbrücke das n-fache der Schaltfrequenz der einzelnen Halbleiterschalter beträgt. Wenn die Schaltfrequenz der Halbleiterschalter niedriger ist als die Ausgangsfrequenz, reduzieren sich auch die Schaltverluste. Wenn die volle Brückenspannung zur Ansteuerung des LLC-Trafos benötigt wird, dann schalten die Schalttransistoren mit der vollen Ausgangsfrequenz der Halbbrücke.

Im Betrieb kann die Spannung bzw. die Sollspannung an den Kondensatoren $C_i$ bzw. den Flying Capacitors jeweils U_Ci = i / n * U_Br und die Spannung an den Transistoren $T\_1$ bis $T\_2n$ ist immer maximal 1 / n * U_Br. Hinzu kommen jeweils etwaige Spannungsschwankungen an den Flying Capacitors.

Die Spannung am Mittelanschluss der Halbbrücke bzw. die Halbbrückenspannung U_M kann in Abhängigkeit von der Anzahl Transistoren n je Zweig folgende n + 1 Spannungsniveaus (Levels) einnehmen:

$$U\_M = 0 \;;$$

$$U\_M = 1/n * U\_Br$$

$$U\_M = 2/n * U\_Br$$

...

$$U\_M = (n–1)/n * U\_Br$$

$$U\_M = U\_Br$$

Nicht berücksichtigt sind hierbei Spannungsabfälle an den Transistoren und die Spannungsschwankungen an den Flying Capacitors.

Die Transistoren T_1 bis T_2n werden von einer Steuereinheit angesteuert. Eine Aufgabe dieser Steuereinheit ist die Steuerung und Überwachung der Spannungen an den Flying Caps. Wenn diese von den Sollwerten zu sehr abweichen, kann dies zu unzulässig hohen Spannungen an den Schalttransistoren T_1 bis T_2n führen.

Im bestimmungsgemäßen Betrieb beträgt die Spannung an Transformatorkondensatoren C_Tr1 und C_Tr2, falls vorhanden, jeweils die halbe Brückenspannung zzgl. etwaiger Schwankungen.

Damit ergibt sich für die Spannung an der sekundärseitigen Transformatorwicklung:

$$U\_Tr1 = 0 \ * U\_Br - 1/2 * U\_Br$$

$$U\_Tr1 = 1/n \ * U\_Br - 1/2 * U\_Br$$

$$U\_Tr1 = \ 2/n \ * U\_Br - 1/2 * U\_Br$$

...

$$U\_Tr1 = (n\text{-}2)/n \ * U\_Br - 1/2 * U\_Br$$

$$U\_Tr1 = (n\text{-}1)/n \ * U\_Br - 1/2 * U\_Br$$

$$U\_Tr1 = n/n \ * U\_Br - 1/2 * U\_Br$$

$$U\_Tr1 = 1/2 * ( \ \text{-}1) * U\_Br$$

$$U\_Tr1 = 1/2 * (2\text{-}n)/n * U\_Br$$

$$U\_Tr1 = 1/2 * (4\text{-}n)/n * U\_Br$$

... ;

$$U\_Tr1 = 1/2 * (n\text{-}4)/n * U\_Br$$

$$U\_Tr1 = 1/2 * (n\text{-}2)/n * U\_Br$$

$$U\_Tr1 = 1/2 * 1 * U\_Br$$

Wenn n geradzahlig ist, gilt demnach:

$$U\_Tr1 = 1/2 * ( \ \text{-}1 \ ; \ (2\text{-}n)/n \ ; \ (4\text{-}n)/n \ ; \ ... \ ; \ 0 \ ; \ ... \ ; \ (n\text{-}4)/n \ ; \ (n\text{-}2)/n \ ; \ 1 \ ) * U\_Br$$

$$U\_Tr1 = +/\text{-} \ 1/2 * (0 \ ; \ 2/n \ ; \ 4/n \ ; \ ... \ ; \ (n\text{-}2)/n \ ; \ n/n \ ) * U\_Br = +/\text{-} \ (0 \ ; \ 1/n \ ; \ 2/n; \ ... \ ; \ 1/2 \ ) * U\_Br$$

Bei n = 4 gilt somit:

$$U\_Tr1 = 0 \ ; \ 1/4 * U\_Br \ ; \ 1/2 * U\_Br$$

Wenn n geradzahlig ist, wird der Transformator Tr im Betrieb auf der Sekundärseite also wahlweise mit Null oder dem Vielfachen von +/- 1/n der Brückenspannung bis maximal +/- 1/2 der Brückenspannung betrieben. Damit kann der Transformator primärseitig mit maximal der halben Brückenspannung betrieben werden.

Je mehr Level n zum Einsatz kommen, umso mehr verschiedene Spannungsniveaus stehen zum Betrieb des Transformators zur Verfügung.

Zusätzlich kann zwischen den verschiedenen Spannungsniveaus innerhalb einer Periode gewechselt werden und eine Pulsweitenmodulation (PWM) zum Einsatz kommen. Dadurch können ausgangsseitig ($U_A$) nahezu beliebige Zwischenspannungen eingestellt werden.

Wenn n ungeradzahlig ist, beträgt die minimale sekundärseitige Spannung U_Tr1 am Transformator +/- 1/2 * 1/n * U_Br. Jeder nächst höhere Level ist 1/n * U_Br höher. Null ist dann nicht möglich.

Bei n = 3 gilt somit:

$$U\_Tr1 = +/- 1/6 * U\_Br$$

$$U\_Tr1 = +/- 1/2 * U\_Br$$

Auf der Seite 1 bzw. der Primärseite kann die Gleichrichtung der

Transformatorausgangsspannung über zwei Einweggleichrichter oder über eine Vollbrücke erfolgen.

Die Speicherdrossel Ls glättet optional in Verbindung mit einem ausgangsseitigen Kondensator die Ausgangsspannung, insbesondere, wenn auf der Primärseite aufgrund von Pulsweitenmodulation zwischen verschiedenen Spannungsniveaus gewechselt wird.

Beim Betrieb beträgt der maximale Spannungshub an der Speicherdrossel etwa 2/n der Ausgangsspannung, beispielsweise bei n = 4 somit etwa 50% der Ausgangsspannung.

Insbesondere beim Hochfahren und schnellen Änderungen der Brückenspannung kann dafür gesorgt werden, dass die zulässige Spannung an den Transistoren T_1 bis T_2n nicht überschritten wird und hierzu die Flying Caps schnell genug geladen werden.

Ohne eine solche Maßnahme kann beim Einschalten insbesondere die zulässige Spannung an den äußeren Transistoren der Halbbrücke $T_n$ und T_2n überschritten werden. Wenn die Brückenspannung U_Br langsam genug hochgefahren wird, ist das Laden der Flying Caps auch über die optional vorgesehenen Widerstände R möglich. Für ein schnelleres Hochfahren ist eine Zusatzschaltung vorgesehen.

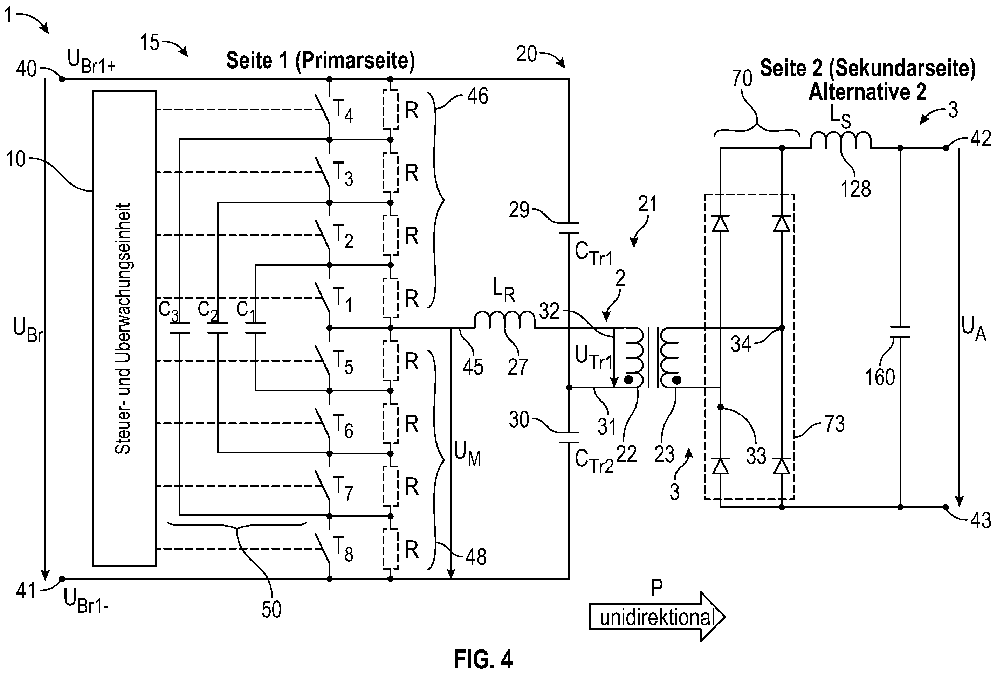

Fig. 3 und Fig. 4 zeigen Beispiele von unidirektionalen Ausführungen mit n = 4 Schalttransistoren je Zweig der Halbbrücke, also 5-Level-Flying-Capacitor-Multilevel-Halbbrücken.

In diesem Fall können folgende Spannungen U_M am Mittelanschluss der Halbbrücke erhalten werden:

$$U\_M = 0 \; ; \; 0{,}25 * U\_Br \; ;$$

$$U\_M = 0{,}5 * U\_Br$$

$$U\_M = 0{,}75 * U\_Br$$

$$U\_M = U\_Br$$

Somit ergibt sich je nach Schaltzustand der Transistoren an der Transformatorwicklung eine Spannung U_Tr1 in Höhe von 0, +/-25% oder +/-50% der Brückenspannung U_Br:

$$U\_Tr1 = 0$$

$$U\_Tr1 = +/- 0{,}25 * U\_Br$$

$$U\_Tr1 = +/- 0{,}5 * U\_Br$$

Somit kann der Transformator mit zwei verschiedenen Spannungen, nämlich +/-25% oder +/-50% der Brückenspannung U_Br betrieben werden. Somit kann auch eine Modulation der Spannung am Transformator zwischen 0 und +/-25% oder zwischen +/-25% oder +/-50% der Brückenspannung vorgenommen werden.

Der Spannungshub an der Speicherdrossel L_A beträgt bei diesem Beispiel (n=4) nur 50% der Ausgangsspannung statt 100%, also wesentlich weniger als dies bei einem herkömmlichen Step-down-Wandler erforderlich wäre.

Um die Ladung der Flying Capacitors im Gleichgewicht zu halten und gleichzeitig die Anzahl der Schaltvorgänge der einzelnen Transistoren der Multilevel-Halbbrücke möglichst gering zu halten, was beispielsweise Schaltverluste verringert, kann eine vorgegebene Schaltfolge gewählt werden.

Hierzu wird für eine bestimmte Zielspannung ein Block mit einer bestimmten Schaltfolge definiert, die auch fest sein kann. Ein solcher fester Block wird dann so lange wiederholt bis eine andere Zielspannung mit einer anderen Schaltfolge benötigt wird, wobei die Dauer einzelner Schaltzustände bzw. die Pulsbreite im Rahmen der Pulsbreitenmodulation bzw. Pulsweitenmodulation zur Regelung der Ausgangsspannung bzw. des Ausgangsstromes variiert werden kann.

Innerhalb eines Blockes wird die Schaltfolge der Transistoren so gewählt, dass die Anzahl der Schaltvorgänge bei einem Spannungswechsel gering ist (minimal 2) und die verwendeten Flying Capacitors werden jeweils abwechselnd geladen und entladen (oder umgekehrt), um die geforderte Ladespannung bzw. Zielspannung zu halten.

Zur stufenlosen bzw. nahezu stufenlosen Einstellung der Ausgangsspannung bzw. des Ausgangsstromes kommt eine Pulsweitenmodulation zum Einsatz. Hierbei wird jeweils innerhalb der positiven Halbwelle wie auch innerhalb der negativen Halbwelle zwischen zwei verschiedenen Spannungsniveaus umgeschaltet, die der benötigten Sollspannung am nächsten kommen und die Dauer dieser beiden Zustände variiert, wobei die Summe der Dauer dieser beiden Schaltzustände jeweils konstant gehalten wird, was sich in einer konstanten bleibt, was mit einer konstanten Schaltfrequenz einhergeht.

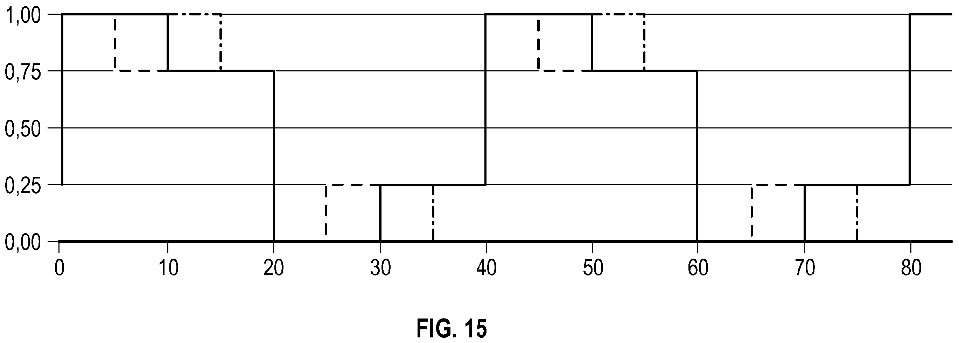

Fig. 15 zeigt einen typischen Spannungsverlauf am Mittelanschluss einer 5-Level-Multilevel-Halbbrücke bei Pulsbreitenmodulation zwischen der Maximalspannung und 50% des Spannungshubs einer Halbwelle.

Bei jeder Halbwelle wird erst das höhere Spannungsniveau und dann das nächst niedrigere Spannungsniveau eingestellt. Die Stromflussrichtung bleibt hierbei konstant und ändert sich erst nach dem Übergang zur nächsten Halbwelle. Dies ist bei der Ermittlung der Kondensatorladungen zu berücksichtigen.

Die Ladung und Entladung der Flying Capacitors kann symmetrisch zur Ausgangsspannung am Mittelanschluss erfolgen, so dass die Flying Capacitors in einer Halbwelle geladen und in der nächsten oder einer späteren gleichartigen Halbwelle gleichermaßen entladen werden.

Bei Pulsbreitenmodulation ist zu berücksichtigen, dass sich der Stromfluss zwischen dem höheren und dem niedrigeren Spannungsniveau einer Halbwelle unterschiedet. Damit die Ladung der Flying Capacitors stabil bleibt, wird die Ladung bei dem höheren Spannungsniveau einer Halbwelle auch durch die Entladung bei dem höheren Spannungsniveau der umgekehrten Halbwelle ausgeglichen und die Ladung bei dem niedrigeren Spannungsniveau einer Halbwelle wird durch die Entladung bei dem niedrigeren Spannungsniveau der umgekehrten Halbwelle ausgeglichen. Dadurch wird erreicht, dass die Ladungsbilanz gleich Null ist und dass sich die Flying Capacitors geraten im Gleichgewicht befinden.

Entspricht die Zielspannung einem Spannungsniveau der Multilevel-Halbbrücke, ist keine Pulsbreitenmodulation erforderlich. Dann wird direkt zwischen dem positiven Spannungsniveau und dem negativen Spannungsniveau umgeschaltet.

Häufig bleibt die Ladespannung der Flying Capacitors im gewünschten Bereich. Durch Abweichungen bei den Schaltvorgängen oder nicht konstante Lastzustände kann es jedoch zu Abweichungen der Kondensatorspannungen kommen. Deshalb kann die Kondensatorspannung überwacht werden, wobei Abweichungen korrigiert werden können.

Zur Ermittlung der Kondensatorspannungen gibt es verschiedene Möglichkeiten, unter anderem wie es in EP2661806B1 beschrieben ist und auf die vorliegende Offenbarung angewendet werden kann. Dazu sind Strommessgeräte zum Beispiel in Form von an strategischen Punkten (wie den Zweigen und dem Ausgang) platzierten Shunt-Widerständen vorgesehen, um den Stromfluss zu überwachen und zu steuern. Die an diesen Shunt-Widerständen abfallenden Spannungen werden für den Betrieb der Steuereinheit eingesetzt. Dies ist zum Beispiel in Fig. 3 der EP2661806B1 gezeigt. M1 und M2 sind an den Enden der beiden Zweige Z1 und Z2 der dort gezeigten Halbbrücke angeordnet. Diese Messgeräte erfassen den Strom, der durch jeden der beiden Zweige der Schaltung fließt. M3 ist am Mittelanschluss M der Halbbrücke platziert. Dieses Messgerät misst den Gesamtstrom, der durch den Mittelanschluss fließt. Die Strommessgeräte sind somit strategisch positioniert, um sowohl den Stromfluss durch die einzelnen Zweige als auch den Strom am Mittelanschluss zu überwachen. Dies ermöglicht eine Überwachung der Stromverteilung innerhalb der Schaltung, was besonders wichtig ist, um die Kondensatorumladevorgänge zu berechnen und sicherzustellen, dass die Kondensatoren korrekt geladen und entladen werden, ohne dass die Spannung an einzelnen Kondensatoren gemessen werden muss. Die Spannungen an den Kondensatoren in der Multilevel-Halbbrücke (MLHB) werden aus den gemessenen Strömen und Spannungen berechnet, indem die Lade- und Entladevorgänge der Kondensatoren analysiert werden. Die Messgeräte M1 und M2 erfassen den Strom, der durch die Zweige Z1 und Z2 der Halbbrücke fließt, während M3 den Gesamtstrom am Mittelanschluss M misst, wobei diese Ströme direkt mit den Lade- und Entladevorgängen der Kondensatoren verbunden sind. Aus den gemessenen Strömen wird durch Integration über die Zeit die Änderung der Ladung auf den Kondensatoren berechnet. Die Spannung an jedem Kondensator kann dann durch das Verhältnis U=Q/C berechnet werden, wobei C die Kapazität des jeweiligen Kondensators ist und Q die zuvor berechnete Ladung. Diese berechneten Spannungen werden mit den Sollwerten verglichen, um festzustellen, ob die Kondensatoren korrekt geladen oder entladen sind. Falls Abweichungen festgestellt werden, passt die Steuereinheit die Schaltsequenzen und Schaltzeiten an, um die Spannung an den Kondensatoren auf das gewünschte Niveau zu bringen. Die Messgeräte M1, M2, M3 liefern Rückmeldungen an die Steuereinheit, die kontinuierlich die Schaltfolge anpasst, um die gewünschte Ausgangsspannung und den Strom aufrechtzuerhalten. In Systemen mit Lastvariation kann die Steuerung das Schalten der Transistoren so anpassen, dass eine Überladung oder Entladung der Kondensatoren verhindert wird.

Alternativ zur Strommessung am Mittelanschluss können auch zwei Shunt-Widerstände verwendet werden. Diese sind dann insbesondere nicht am Mittelanschluss, sondern an den beiden anderen Zweigen angeschlossen. Sie ermöglichen ebenfalls eine Strommessung, insbesondere durch Messung einer jeweils abfallenden Spannung und insbesondere Berechnung des Stroms basierend darauf. Dies ist eine gleichwertige, aber alternative Konfiguration.

So werden während der verschiedenen Schaltzustände innerhalb eines Schaltzyklus die Brückenspannung UBr zwischen den äußeren Anschlüssen A1 und A2 und die Mittelspannung UM zwischen dem Mittelanschluss M und einem der äußeren Anschlüsse gemessen. Nach dem Durchlaufen von n-1 unterschiedlichen Schaltzuständen wird durch Lösen eines linearen Gleichungssystems auf der Grundlage der gemessenen Spannungen und der bekannten Schaltzustände die Spannung an jedem Kondensator berechnet. Dies erfolgt softwaretechnisch in der Steuereinheit der Schaltung. In einer speziellen Berechnungsvariante kann festgestellt werden, dass bei bestimmten Schaltzuständen wie z.B. Z1 und Zn+1-L genau die Spannung eines einzelnen Kondensators am Mittelausgang anliegt, die dann direkt gemessen werden kann. Bei den übrigen Schaltzuständen werden die restlichen Kondensatorspannungen durch einfache Addition und Subtraktion der gemessenen Werte für Brückenspannung und Mittelspannung sowie der zuvor berechneten Kondensatorspannungen ermittelt.

Wird eine Abweichung eines Kondensators von der Sollspannung festgestellt, wird dessen Lade- oder Entladedauer erhöht oder verringert, um die Abweichung auszugleichen. Gleichzeitig sollen die Ausgangsspannung bzw. der Ausgangsstrom der Schaltung dabei nicht verändert werden. Möglich ist dies, indem man die Schaltzustände innerhalb eines Blockes einer Folge von Schaltzuständen so wählt, dass es immer zwei Schaltzustände mit dem gleichen Level gibt, zum Beispiel der Ausgangsspannung der Halbbrücke, bei denen ein bestimmter Kondensator einmal entladen und einmal geladen wird. Dies ermöglicht die Veränderung der Pulsbreite bei diesen beiden Schaltzuständen, insbesondere mit gleichem Level aber entgegengesetzter Ladung des betreffenden Kondensators in der Weise, dass die Dauer des einen Schaltzustandes um einen bestimmten Wert verlängert und die des anderen entsprechend verkürzt wird, die Summe beider aber gleichbleibt. Somit kann die Entladung und Ladung dieses Kondensators variiert werden und ein Ladungsausgleich erfolgen, ohne dass sich die Ausgangsspannung ändert. Die Ausgangsspannung kann für diesen Vergleich auch über einen Block gemittelt werden.

Dies kann so erfolgen, dass hierfür Schaltzustände gewählt werden, bei denen gerade immer nur ein Kondensator geladen bzw. entladen wird. Dies ist jedoch prinzipbedingt nicht immer möglich und kann dazu führen, dass die Ladungskorrektur eines Kondensators auch die Ladung eines anderen Kondensators verändert. Wenn dieser Fall eintritt, dann erfolgt auch eine Ladungskorrektur dieses anderen Kondensators, und zwar solange, bis alle Ladungen korrigiert sind.

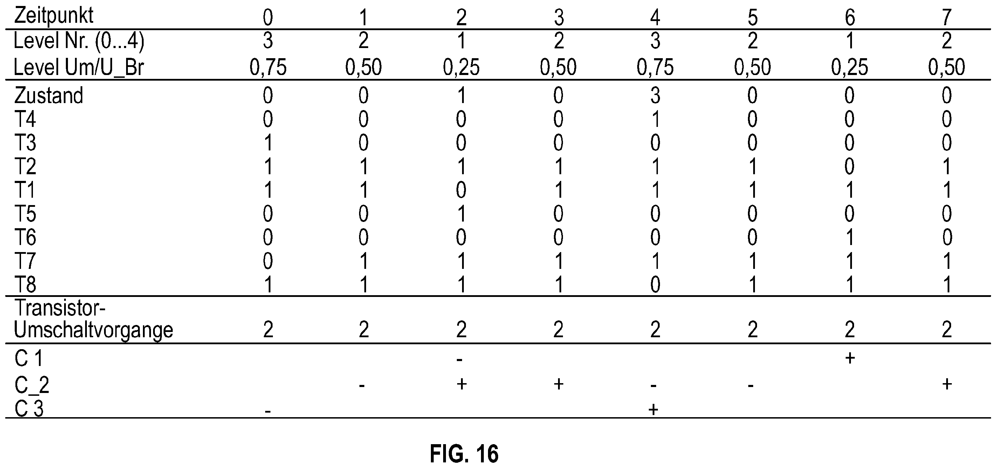

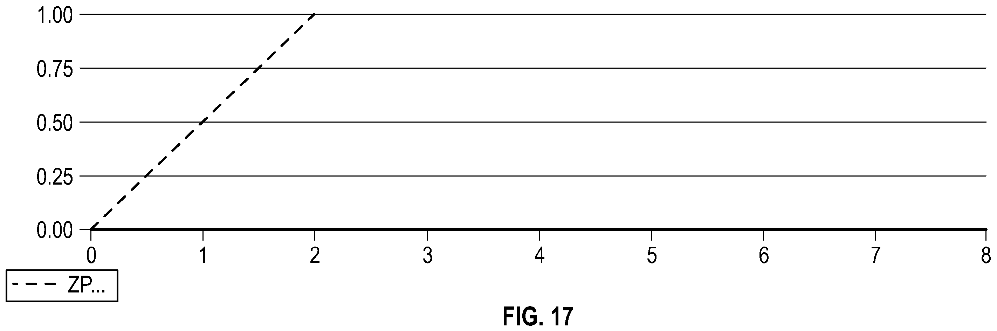

Dies wird mit Bezug auf Fig. 16 und Fig. 17 anhand einer Schaltfolge eines Blockes einer 5-Level-Halbbrücke mit n = 4 Schalttransistoren je Zweig erläutert, und zwar für die Zielspannung von ¼ bzw. 25% der maximalen Ausgangsspannung Umax. Der Kondensator C_1 wird zum Zeitpunkt 2 entladen und zum Zeitpunkt 6 bei gleichem Zustandslevel, d.h. Level 1 = 0,25 wieder geladen. Somit kann die Dauer zum Zeitpunkt 2 und 6 untereinander variiert werden, ohne dass sich die gemittelte Ausgangsspannung des DC-DC-Converters ändert.

Gleiches gilt für Kondensator C_2 zum Zeitpunkt 1 und 3, 2 und 4, 3 und 5 sowie 5 und 7. Bei den Zeitpunkten 5 und 7 erfolgt dies sogar ohne Beeinflussung eines anderen Kondensators, weshalb die Ladungskorrektur von C_2 zweckmäßigerweise zu diesen beiden Zeitpunkten erfolgt. Beim Kondensator C_3 erfolgt die Ladungskorrektur zum Zeitpunkt 0 und 4, dann sind beide auf Level 3 = 0,75.

Wenn die Ladungskorrektur bei einem Kondensator nicht ohne Beeinflussung eines anderen Kondensators vollständig möglich ist, kann dies durch weitere Korrekturen ausgeglichen werden.

Wenn beim obigen Beispiel z.B. Die Ladung von C_1 korrigiert werden soll, kann dies bei den Zeitpunkten 2 und 6 erfolgen. Dies geschieht so, dass die Ausgangsspannung im Mittel nicht verändert wird, indem die Pulsbreite zu den Zeitpunkten 2 und 6 in Summe unverändert bleibt.

Beim Zeitpunkt 2 wird auch die Ladung von C_2 verändert. Dies wiederum kann durch die entsprechende Variation der Ladung von C_2 zu den Zeitpunkten 1 und 3 kompensiert werden. Dies geschieht ebenfalls so, dass die Ausgangsspannung im Mittel nicht verändert wird, in dem die Pulsbreite zu den Zeitpunkten 1 und 3 in Summe unverändert bleibt.

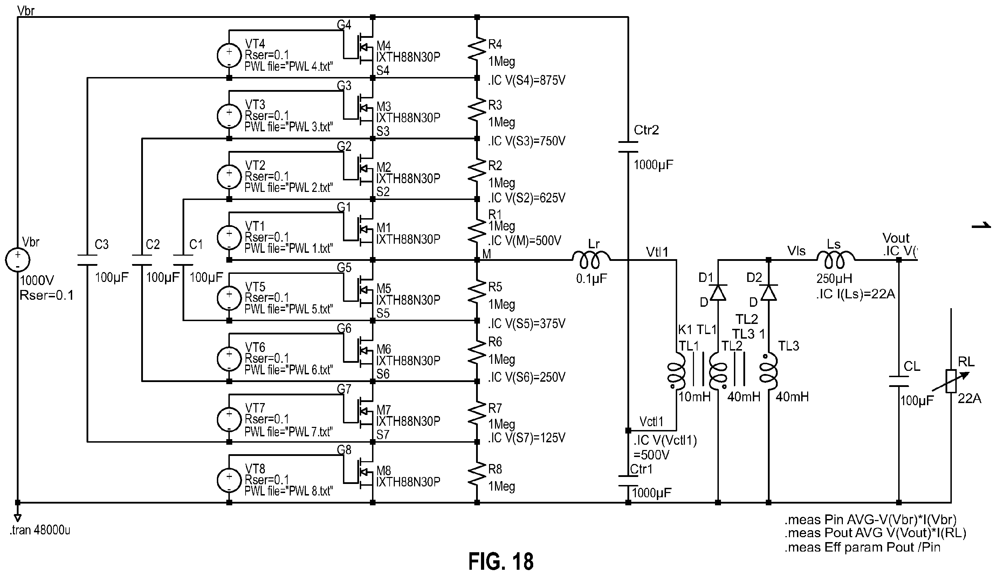

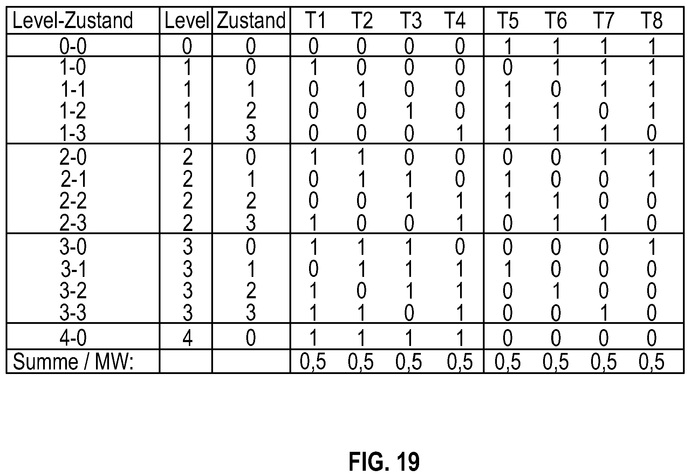

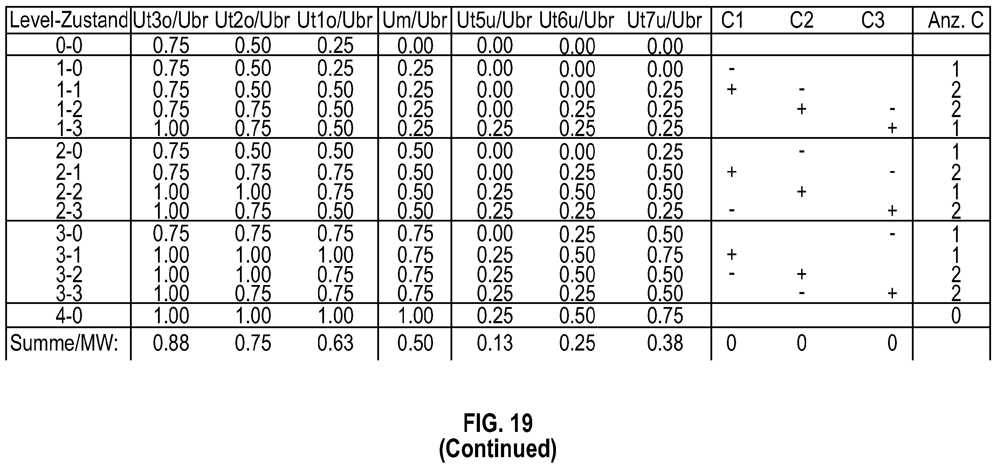

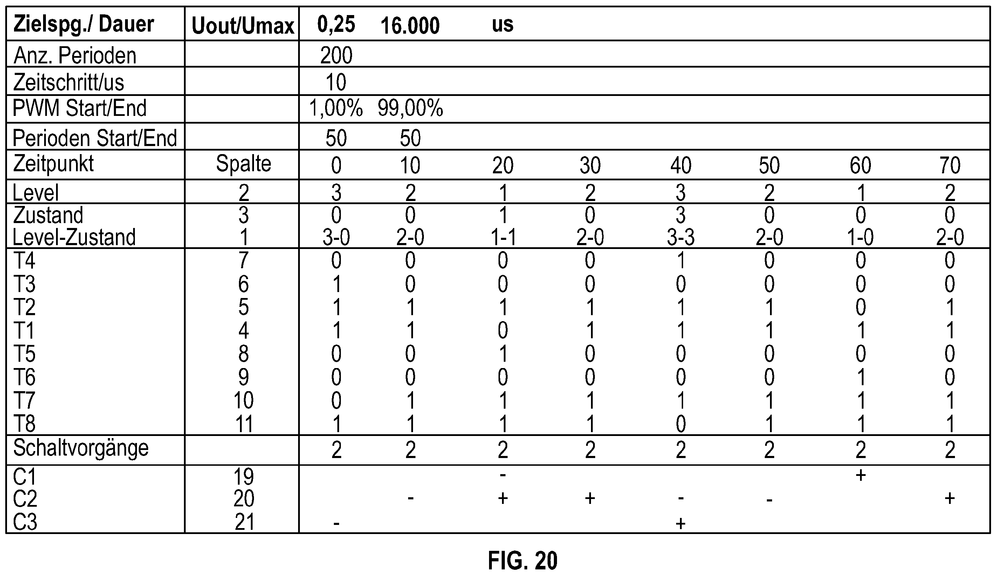

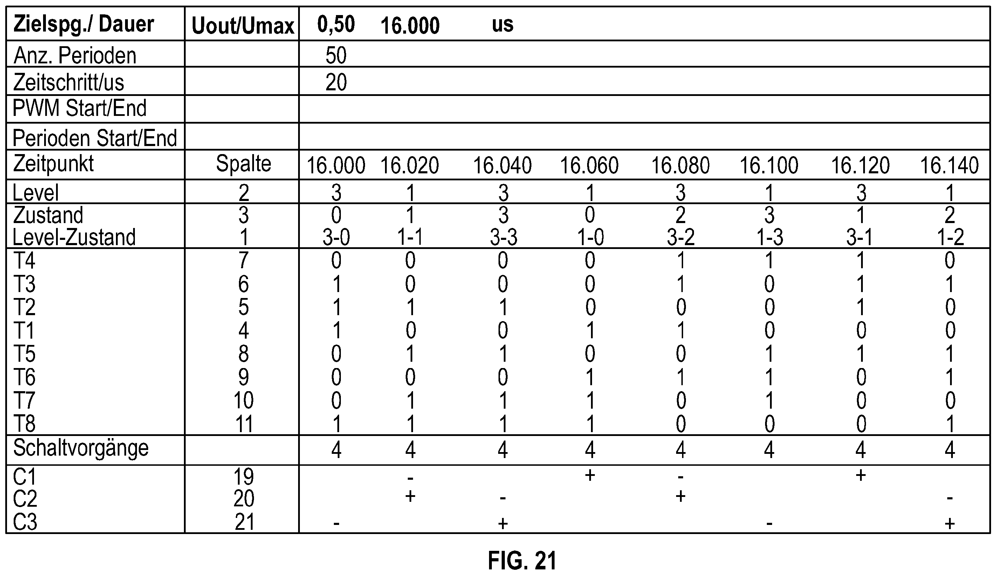

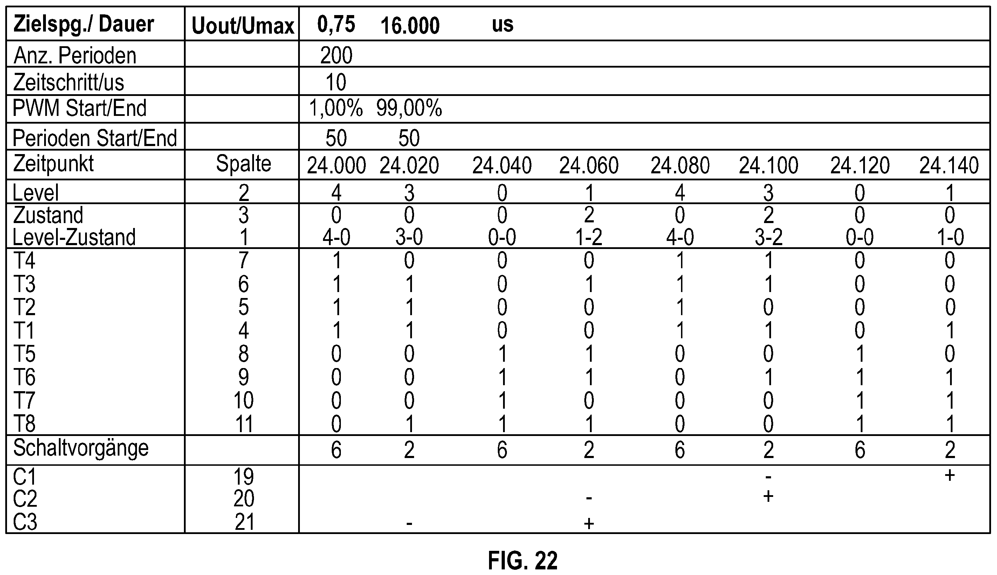

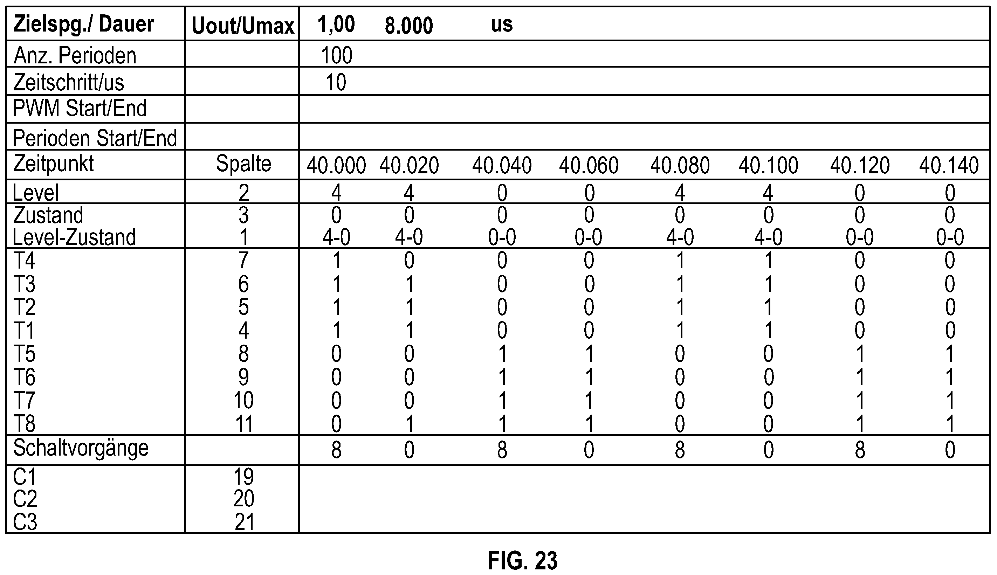

Nachfolgend wird eine beispielhafte Schaltungsauslegung und Simulation erläutert, und zwar unter Bezugnahme auf die Figur 18, die zeigt ein weiteres Beispiel für einen Flying Capacitor Multilevel LLC DC/DC Converter mit einer 5-Level-Flying-Capacitor-Multilevel-Halbbrücke (n=4) zeigt. Figur 19 zeigt beispielhafte Schaltzustände dieses Flying Capacitor Multilevel LLC DC/DC Converters, Fig. 20 zeigt einen ersten Block einer beispielhaften Schaltfolge, Fig. 21 zeigt einen zweiten Block als Fortsetzung des ersten Blocks dieser beispielhaften Schaltfolge, Fig. 22 zeigt einen dritten Block als Fortsetzung des zweiten Blocks und Fig. 23 zeigt einen vierten Block als Fortsetzung dieses dritten Blocks einer beispielhaften Schaltfolge.

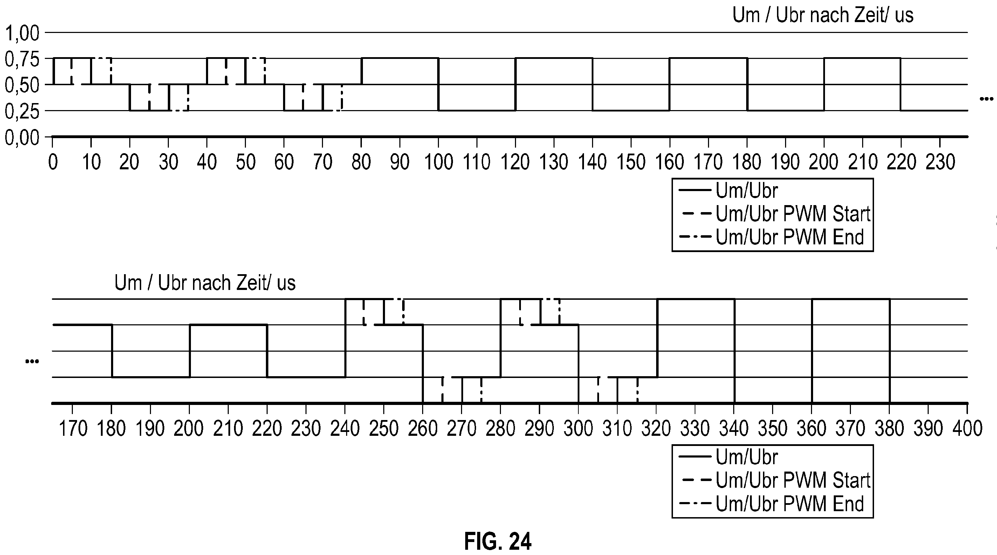

Fig. 24 zeigt die resultierende Spannung am Mittelanschluss der Halbbrücke, und zwar ohne Block-Wiederholungen. In diesem Beispiel sind vier Blöcke mit jeweils einer bestimmten Zielspannung und einer bestimmten Schaltfolge definiert. Jeder Block besteht aus 8 Schaltzuständen, die aufeinanderfolgend eingestellt werden, und dies wird so lange wiederholt, bis ein anderes Spannungsniveau mit anderen Zuständen benötigt wird.

Der erste Block mit den ersten 8 Schaltzuständen, in der Tabelle Zeitpunkt 0 bis 70, dient zur Einstellung einer Ausgangspannung in Höhe von >0 bis <0,5 der maximalen Ausgangsspannung (mit Pulsbreitenmodulation. Der zweite Block mit den zweiten 8 Schaltzuständen, in der Tabelle Zeitpunkt 16.000 bis 16.140, dient zur Einstellung einer Ausgangspannung in Höhe von 0,5 der maximalen Ausgangsspannung ohne Pulsbreitenmodulation. Der dritte Block mit den dritten 8 Schaltzuständen, in der Tabelle Zeitpunkt 24.000 bis 24.140 dient zur Einstellung einer Ausgangspannung in Höhe von >0,5 bis <1,0 der maximalen Ausgangsspannung mit Pulsbreitenmodulation. Der vierte Block (mit den vierten 8 Schaltzuständen, in der Tabelle Zeitpunkt 40.000 bis 40.140, dient zur Einstellung einer Ausgangspannung in Höhe von 1,0 der maximalen Ausgangsspannung ohne Pulsbreitenmodulation.

Innerhalb eines Blockes mit einer bestimmten Zielspannung wird die Schaltfolge der Transistoren so gewählt, dass die Anzahl der Schaltvorgänge bei einem Spannungswechsel möglichst gering ist - minimal 2. Jeder Flying Capacitor wird mindestens einmal bei einem bestimmten Level ge- und entladen. So wird eine Ladungskorrektur durch Variation der Pulsbreite ohne Einfluss auf die gemittelte Ausgangsspannung ermöglicht.

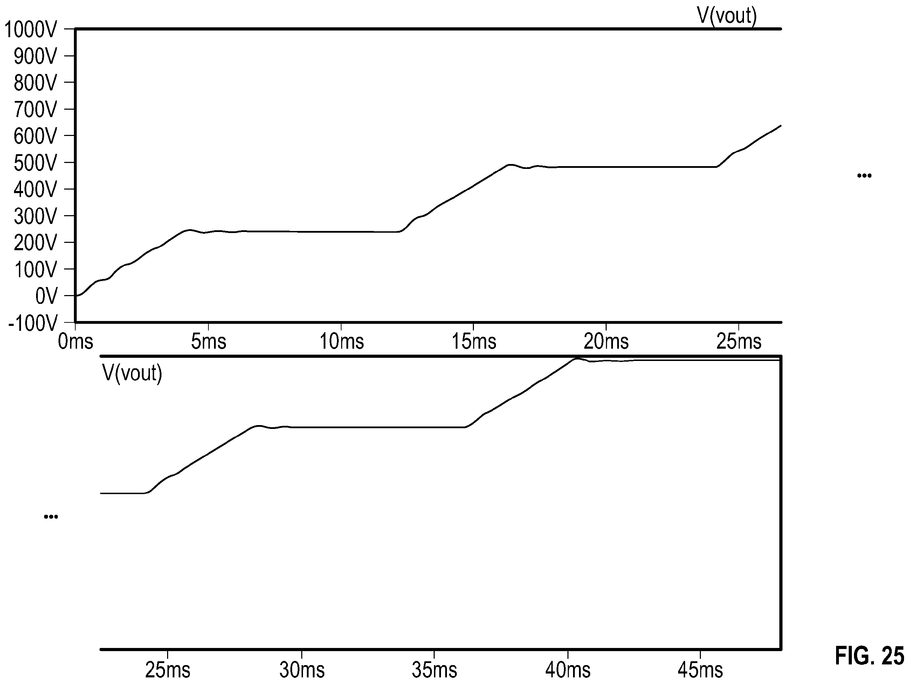

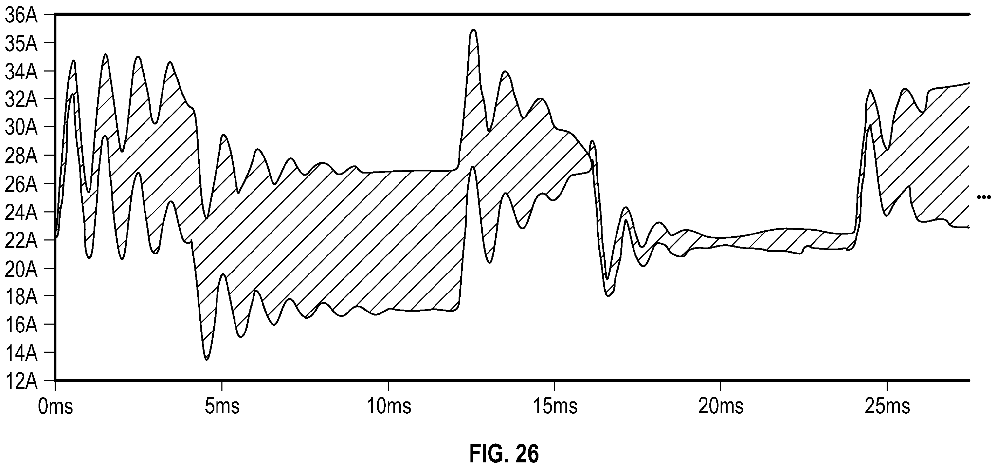

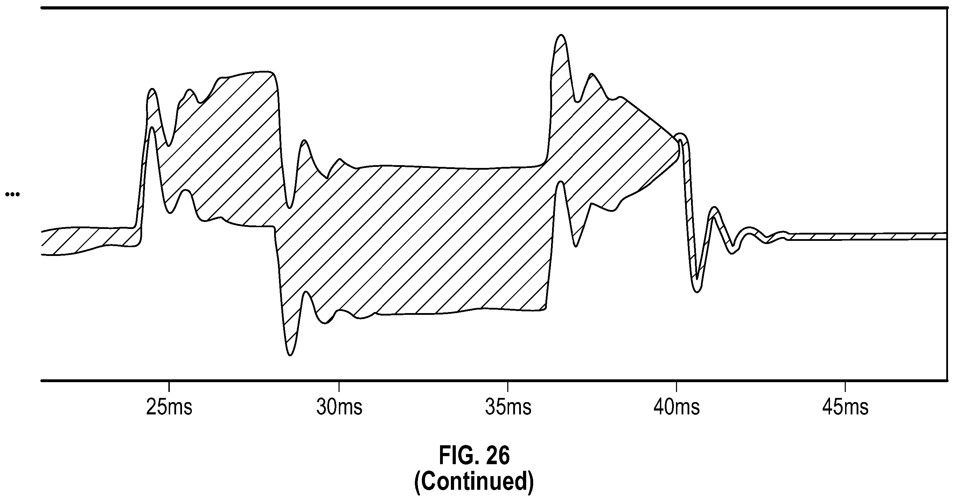

Die Anpassung der Pulsbreite zur Regelung der Ausgangsspannung bzw. des Ausgangsstromes erfolgt jeweils bei dem ersten und dem zweiten Schaltzustand bzw. Zeitpunkt, bei dem dritten und vierten Schaltzustand usw. (5/6, 7/8), wobei immer die Dauer eines der beiden Zustände um einen bestimmten Wert verlängert und die des anderen entsprechend reduziert wird, so dass die Gesamtdauer beider Zustände konstant bleibt. In einem Diagramm der resultierenden Spannung am Mittelanschluss der Halbbrücke wird dies entsprechend dargestellt. Fig. 24 zeigt die resultierende Spannung am Mittelanschluss der Halbbrücke des Flying Capacitor Multilevel LLC DC/DC Converters aus Fig. 18, Fig. 25 zeigt den Spannungsverlauf an dessen Ausgang Vout ohne Regelung und Fig. 26 zeigt den Stromverlauf an der Speicherdrossel L_s.

Die dargestellten Kurven sind dabei lediglich Beispiele, wie man durch Veränderung der Pulsbreite von einem Zustand zu einem anderen Zustand kontinuierlich die Spannung variieren kann. Durch Anpassung der Pulsbreite lassen sich beliebige Ausgangsspannungen einstellen. Dies beinhaltet die Möglichkeit des Übergangs von Pulsbreitenmodulation zu einer stabilen Spannung. Anfängliche Schwingungen können auf eine Filterwirkung bei fehlender Regelung zurückgeführt werden.

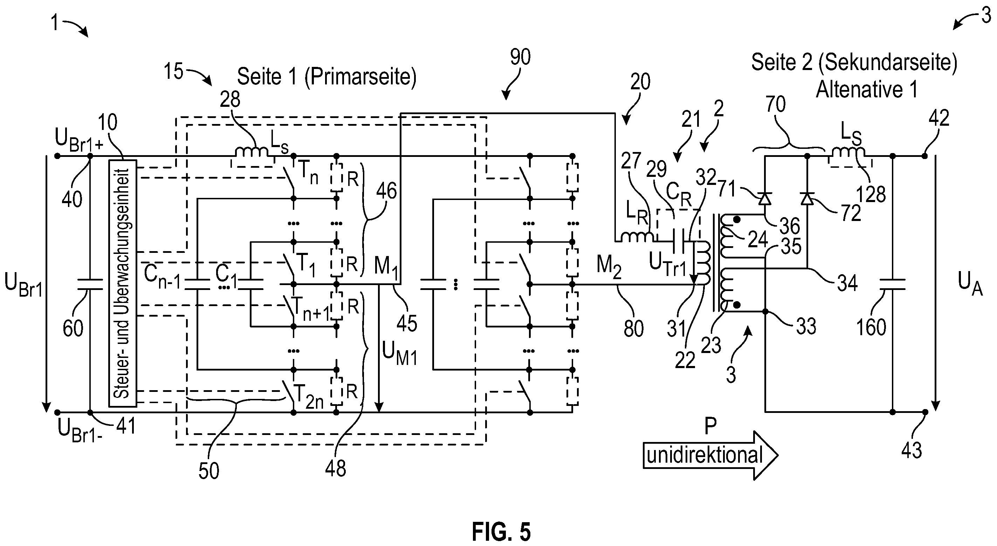

Die Offenbarung umfasst auch Flying Capacitor Multilevel LLC DC/DC Converter mit einer Flying-Capacitor-Multilevel-Vollbrücke sowohl für den unidirektionalen Betrieb, was in den Figuren 5, 6 und 7 gezeigt ist, als auch im bidirektionalen Betrieb, was in den Figuren 8, 9 und 10 gezeigt ist, wenn man diese mit der Primärseite eines der in den Figuren 5, 6 und 7 gezeigten Beispiele kombiniert.

Die Energie wird auch hier auf Seite 1 an der Brückenspannung U_Br zugeführt.

Parallel zur Brückenspannung zwischen U_Br+ und U_Br- kommt ein optionaler Kondensator zur Stabilisierung der Brückenspannung zum Einsatz.

Die beiden Flying-Capacitor-Multilevel-Halbbrücke sind wie zuvor dargestellt aufgebaut und bilden eine Vollbrücke.

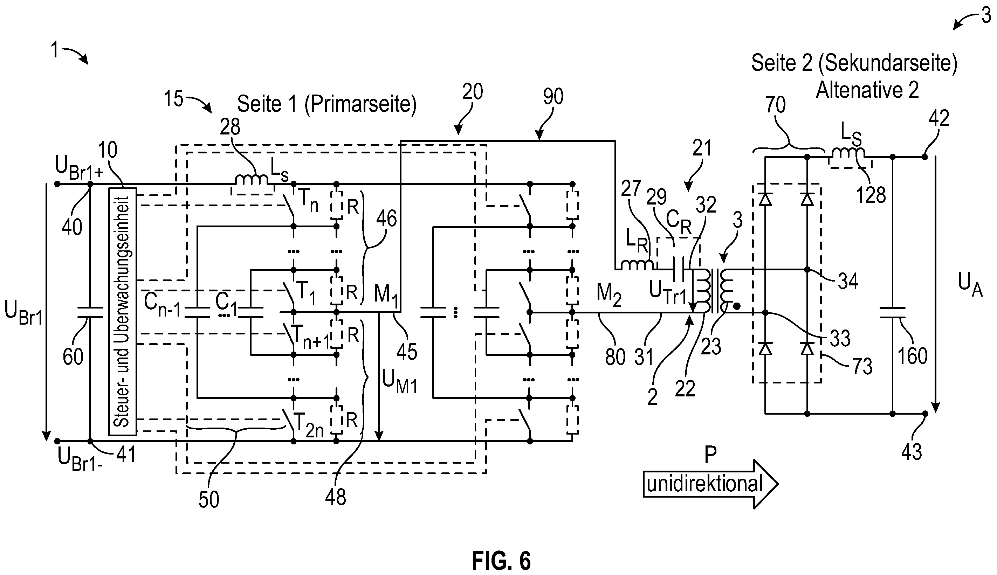

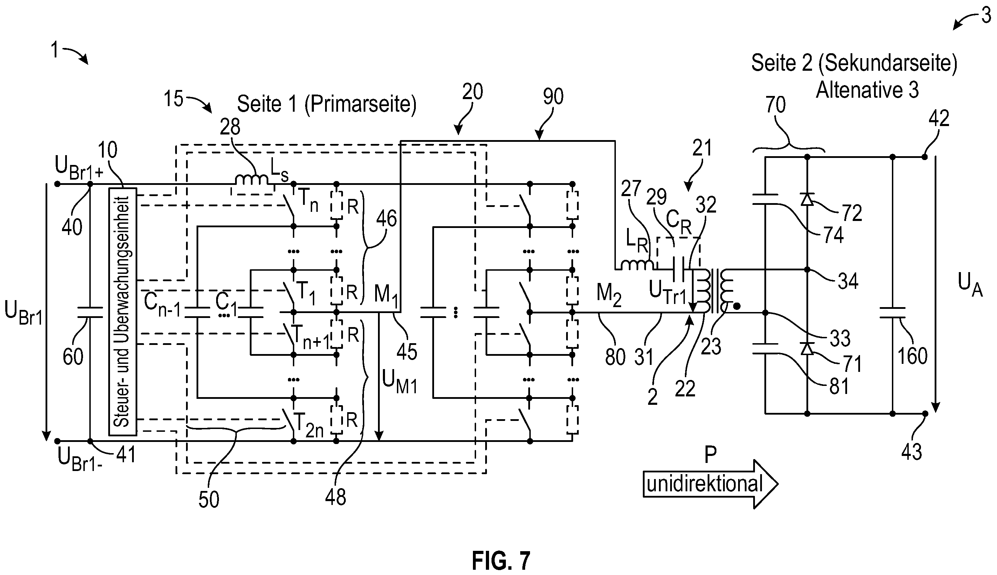

Zwischen den beiden Mittelanschlüssen M_1 und M_2 der Vollbrücke ist die sekundärseitige Transformatorwicklung angeschlossen, in Reihe zu der Resonanzinduktivität L_R und optional mit einem weiteren Kondensator C_R zur Vermeidung von Gleichstromanteilen am Transformator. Bei den Beispielen in Fig. 6 und Figur 7 kann die Resonanzinduktivität L_R alternativ auch auf der Sekundärseite angeordnet werden.

Die Induktivität L_R dient als Resonanzinduktivität, sie ermöglicht ein Zero Voltage Switching und kann auch als Streuinduktivität des Transformators ausgeführt sein.

Die Schaltung mit den Resonanzinduktivitäten kann insbesondere parasitäre Kapazitäten von Kondensatoren verwenden. Diese sind grundsätzlich immer vorhanden. Damit kann eine Resonanz erzeugt werden. Diese Kapazitäten sind in Schaltplänen typischerweise nicht eingezeichnet. Sie können jedoch verwendet werden, insbesondere für einen Schaltvorgang. Die Resonanzinduktivitäten können insbesondere zwei Funktionen haben, nämlich eine Schalthilfe und eine Glättungsfunktion. Auch dies kann unter Einbeziehung der parasitären Kapazitäten erfolgen.

Auf der Seite 2 bzw. Sekundärseite des LLC-Wandlers kommen wie beim Flying Capacitor Multilevel LLC DC/DC Converter mit einer Flying-Capacitor-Multilevel-Halbbrücke entweder passive oder aktive Gleichrichterschaltungen für den unidirektionalen Betrieb gemäß Fig. 5, 6 oder 7 oder aktive Transistorschaltungen für den bidirektionalen Betrieb gemäß den Figuren 8, 9 und 10 zum Einsatz.

Im Unterschied zu Topologien mit nur einer einzigen Halbbrücke wie in den Figuren 1, 2, 3 und 4 kann hier die Speicherdrossel L_s zur Glättung und Regelung der Ausgangsspannung oder des Ausgangsstromes auf der Seite 1 bzw. Primärseite zwischen Eingangsspannung und der Vollbrücke angeordnet werden.

Bei einem Mulitlevel-Betrieb der Vollbrücke wird bevorzugterweise keine Speicherdrossel in der Zuleitung der Mulitlevel-Vollbrücke vorgesehen, denn bei Verwendung einer Speicherdrossel in der Zuleitung der Mulitlevel-Vollbrücke kann diese im 2-Level-Betrieb dann nur noch zwischen der positiven und der negativen Brückenspannung schalten. Deshalb wird eine Speicherdrossel bevorzugt auf der Seite 2 bzw. der Sekundärseite eingesetzt. Beim Einsatz einer Speicherdrossel auf Seite 1 bzw. der Primärseite kann es sinnvoll sein, diese durch einen Schalter wie ein Relais oder zwei in Serie geschaltete umgekehrt gepolte Transistoren überbrücken zu können, damit die Vollbrücke im Multilevel-Betrieb arbeiten kann.

Durch den Einsatz von zwei Multilevel-Halbbrücken gibt es doppelt so viele verschiede Spannungsniveaus am Transformator wie bei Topologien mit nur einer einzigen Multilevel-Halbbrücke. Außerdem beträgt der Spannungshub an der Speicherdrossel L_s beim bestimmungsgemäßen Betrieb beim Einsatz von einer Speicherdrossel nur noch 1/n (statt 2/n) der Brückenspannung beim primärseitigen Einsatz der Speicherdrossel bzw. 1/n (statt 2/n) der Ausgangsspannung beim sekundärseitigem Einsatz (bei n = Anzahl der Schaltransistoren eines Zweigs bei beiden Halbbrücken). Dadurch kann diese Speicherdrossel nochmals kleiner dimensioniert werden und es fallen weniger Verluste an.

Die beiden Multilevel-Halbbrücken in den Figuren 5, 6 und 7 werden jeweils wie zuvor beschrieben betrieben. Zusätzlich werden beiden Multilevel-Halbbrücke jeweils so angesteuert, dass diese gegensätzlich schalten, also bei einer Multilevel-Halbbrücke fließt der Strom über den positiven Anschluss der Brückenspannung U_Br+ und bei der anderen Multilevel-Halbbrücke fließt der Strom über den negativen Anschluss der Brückenspannung U_Br-. Dadurch wird ein gleichmäßiger Stromfluss im Eingangskreis ermöglicht und ist der optionale primärseitige Einsatz der Speicherdrossel möglich.

Beide Halbbrücken können unterschiedliche Ausgangsspannungen am Mittelanschluss M liefern:

$$U_M = 0 \; ; \; 1/n * U\_Br \; ; \; 2/n * U\_Br \; ; \; ... \; ; \; (n{-}1)/n * U\_Br \; ; \; U\_Br$$

Damit sind folgende Spannungen am Transformator möglich:

$$U_{Tr} = +/- \; (0 \; ; \; 1/n \; ; \; 2/n \; ; \; ...; \; n/n) * U\_Br = +/- \; (0 \; ; \; 1/n \; ; \; 2/n \; ; \; ...; \; 1) * U\_Br$$

Damit kann der Transformator maximal mit der vollen Brückenspannung primärseitig betrieben werden.

Auch hier kann zwischen den verschiedenen Spannungsniveaus innerhalb einer Periode gewechselt werden und eine Pulsweitenmodulation (PWM) zum Einsatz kommen und dadurch ausgangsseitig (U_A) Zwischenspannungen eingestellt werden. Sekundärseitig arbeitet die Topologie wie die vorherige, wobei die ausgangsseitige Speicherdrossel optional entfallen und durch eine primärseitige Speicherdrossel ersetzt werden kann.

Vorteilhafterweise ist der Spannungshub zwischen zwei Niveaus bei dieser Topologie nur halb so groß wie bei der vorherigen Topologie und beträgt beim bestimmungsgemäßen Betrieb bei Verwendung einer Speicherdrossel 1/n der Eingangs- (Brücken-) bzw. der Ausgangsspannung. Bei Verwendung von zwei Speicherdrosseln (auf der Eingangs- und auf der Ausgangsseite) teilt sich der Spannungshub entsprechend dem Verhältnis der Induktivitäten und der Ausgangs- zur Eingangsspannung auf.

Durch den Einsatz von zwei Multilevel-Halbbrücken, die zu einer Vollbrücke verschaltet werden, ergeben sich doppelt so viele mögliche Spannungsniveaus gegenüber der vorherigen Topologie bei jeweils gleicher Anzahl Level je Halbbrücke und dadurch nochmals ein größerer Eingangs- und/oder Ausgangsspannungsbereich. Es werden kleinere Speicherdrossel und geringere Verluste an dieser möglich. Die Schaltfrequenz der Schaltransistoren kann nochmals reduziert werden, dadurch ergibt sich eine weitere Reduzierung der Schaltverluste. Der Einsatz der Speicherdrossel ist eingangs- und/oder ausgangsseitig möglich.

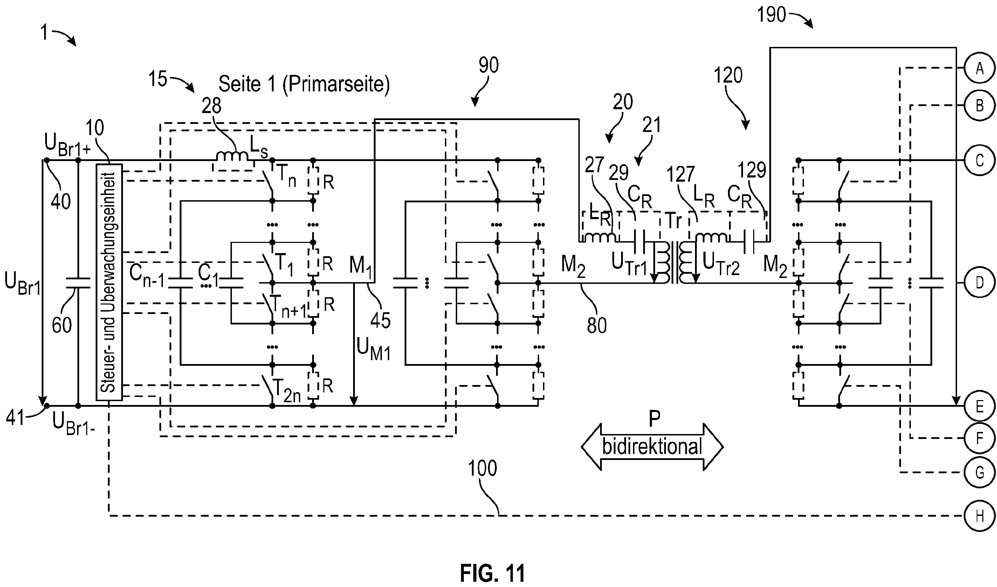

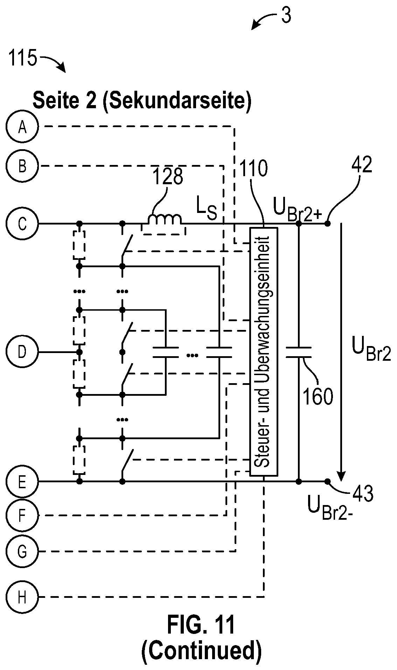

Fig. 11 zeigt die Realisierung eines bidirektionaler Flying Capacitor Multilevel LLC DC/DC Converters mit je einer Flying-Capacitor-Multilevel-Vollbrücke auf Seite 1 bzw. Primärseite und auf Seite 2 bzw. Sekundärseite, einer LLC-Transformatorstufe bestehend aus einem Transformator, mindestens einer Resonanzinduktivität L_R und häufig je einem Kondensator auf Seite 1 und Seite 2, wobei diese jeweils optional sind, sowie - optional - mindestens einer Speicherdrossel L_s auf Seite 1 und/oder Seite 2.

Die Energie wird hier auf Seite 1 oder auf Seite 2 an der Brückenspannung U_Br1 oder U_Br2 vor der Speicherdrossel L_s, falls vorhanden, zugeführt und jeweils auf der anderen Seite an der Brückenspannung nach der Speicherdrossel L_s, falls vorhanden, abgegeben.

Parallel zur Brückenspannung zwischen U_Br+ und U_Br- kommt am Eingang bzw. Ausgang - jeweils optional - ein Kondensator 60 bzw. 160 zur Stabilisierung der Brückenspannung zum Einsatz.

Die beiden Flying-Capacitor-Multilevel-Vollbrücken sind wie dargestellt aufgebaut.

Zwischen den beiden Mittelanschlüssen M_1 und M_2 der Vollbrücke ist jeweils Transformatorwicklung angeschlossen. Auf mindestens einer Seite des Transformators befindet sich in Reihe zur Transformatorwicklung eine Resonanzinduktivität L_R. Zur Symmetrierung des Verhaltens beider Seiten und eines einheitlichen, schnellen Schaltverhaltens auf beiden Seiten wird vorteilhafterweise auf beiden Seiten eine, dann kleinere, Resonanzinduktivität eingesetzt.

Die Induktivität L_R dient wieder als Resonanzinduktivität und ermöglicht ein Zero Voltage Switching, wobei dafür auch eine ohnehin vorhandene Streuinduktivität des Transformators verwendet werden kann.

Insbesondere kann die Primärwicklung als Streuinduktivität des Transformators oder der Sekundärinduktivität oder Sekundärwicklung ausgeführt sein. Insbesondere kann die Sekundärwicklung als Streuinduktivität des Transformators oder der Primärinduktivität oder Primärwicklung ausgeführt sein.

Zusätzlich wird häufig ein weiterer Kondensator C_R zur Vermeidung von Gleichstromanteilen am Transformator in Reihe geschaltet. Dieser Kondensator C_R ist optional, weil er bei einer Ansteuerung der Schaltung, bei der keine solchen Gleichstromanteile entstehen, nicht notwendig wäre.

Auch hier kann die Speicherdrossel L_s zur Glättung und Regelung der Ausgangsspannung oder des Ausgangsstromes auf der Seite 1 bzw. Primärseite und/oder auf Seite 2 bzw. Sekundärseite eingesetzt werden, und zwar jeweils zwischen Eingangs- bzw. Ausgangsspannung und der Vollbrücke.

Ein Mulitlevel-Betrieb der Vollbrücke ohne Speicherdrossel in der Zuleitung der Mulitlevel-Vollbrücke stellt die Regel dar. Bei Verwendung einer Speicherdrossel in der Zuleitung der Mulitlevel-Vollbrücke schaltet diese im 2-Level-Betrieb zwischen der positiven und der negativen Brückenspannung schalten und nicht mehr im Mulitlevel-Betrieb.

Deshalb wird der Einsatz einer Speicherdrossel häufig auf einer Seite der Schaltung gewählt, damit wenigstens eine der Vollbrücken im Mulitlevel-Betrieb eingesetzt werden kann.

In einem hier nicht gezeigten Beispiel wird je eine Speicherdrossel auf einer oder beiden Seiten des Converters eingesetzt, die jeweils Steuer- und Überwachungseinheit mit durch einen Schalter in der Form eines Relais oder durch zwei in Serie geschaltete umgekehrt gepolte Transistoren überbrückt werden können. Dann kann die entsprechende Vollbrücke im Multilevel-Betrieb arbeiten.

Wenn keine zusätzliche Speicherdrossel verwendet wird und stattdessen die Resonanzinduktivität L_R als Speicherdrossel zur Spannungsregelung mitverwendet wird, und wenn diese zur Vermeidung zu hoher Spannungsabfälle kleiner ausgebildet ist, dann kann der dadurch verkleinerte Regelbereich durch den Einsatz von Multilevel-Vollbrücken mit einer höheren Anzahl Level ausgeglichen werden. Durch den Einsatz von zwei Multilevel-Vollbrücken auf beiden Seiten der Schaltung gegenüber einer Multilevel-Vollbrücke auf nur einer Seite erhöht sich nochmals die Anzahl möglicher verschiedener Spannungsniveaus zwischen Eingang und Ausgang gegenüber der den obenstehend beschriebenen Topologien.

Für den Betrieb der beiden Multilevel-Vollbrücken gilt das zuvor bereits Erläuterte für andere Topologien: die beiden Multilevel-Halbbrücken werden jeweils so angesteuert, dass diese gegensätzlich schalten, also dass bei einer Multilevel-Halbbrücke der Strom über den positiven Anschluss der Brückenspannung U_Br+ fließt und bei der anderen Multilevel-Halbbrücke über den negativen Anschluss der Brückenspannung U_Br-. Dadurch wird ein gleichmäßiger Stromfluss im Eingangskreis und durch die - optionale - Speicherdrossel erreicht.

Für Spannungen an den beiden Transformatorwicklungen gilt:

$$U\_Tr1 \text{ (Seite 1)} = +/- (0 ; 1/n ; 2/n ; ...; n/n) * U\_Br1$$

$$U\_Tr2 \text{ (Seite 2)} = +/- (0 ; 1/n ; 2/n ; ...; n/n) * U\_Br2$$

ü = U_Tr2 / U_Tr1 = Übersetzungsverhältnis des Transformators

⇨ U_Tr2 = ü * U_Tr1

⇨ U_Br2 = +/- (n/n ; ... ; n/3 ; n/2 ; n/1) * U_Tr2 = +/- (n/n ; ... ; n/3 ; n/2 ; n/1) * ü * U_Tr1

Falls beide Vollbrücken im Multilevel-Moduls betrieben werden, d.h. ohne Speicherdrossel L_s, ergeben sich damit folgende mögliche Spannungsverhältnisse:

$$U\_Br2 = (0 ; 1/n ; 2/n ; ...; n/n) * (n/n ; ... ; n/3 ; n/2 ; n/1) * ü * U\_Br1$$

Die nachfolgende Tabelle zeigt mögliche Spannungsumsetzungsverhältnisse von Seite 2 zu Seite 1 bei einem Transformatorverhältnis ü = 1

| X | n/n | ... | n/3 | n/2 | n/1 |
|---|-----|-----|-----|-----|-----|
| 0 | 0 | 0 | 0 | 0 | 0 |
| 1/n | 1/n | ... | 1/3 | 1/2 | 1 |
| 2/n | 2/n | ... | 2/3 | 1 | 2 |
| 3/n | 3/n | ... | 1 | 3/2 | 3 |
| ... | ... | ... | ... | ... | ... |
| n/n | 1 | ... | n/3 | n/2 | n |

Bei n = 2 Schaltransistoren je Zweig einer Halbbrücke gilt demnach beispielsweise:

$$U\_Br2 = (0 \; ; \; 1/2 \; ; \; 1 \; ; \; 2) * ü * U\_Br1$$

Es ergeben sich (bei n = 2) also 4 verschiedene Ausgangsspannungen (inkl. Null). Bei n = 4 Schaltransistoren je Zweig einer Halbbrücke gilt:

$$U\_Br2 = (0; \; 1/4; \; 1/3; \; 1/2; \; 2/3, \; 3/4; \; 1; \; 4/3; \; 3/2; \; 2; \; 3; \; 4) * ü * U\_Br1$$

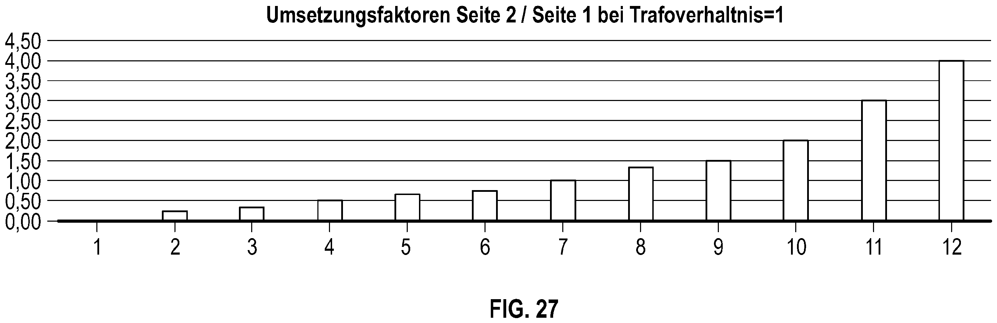

Fig. 27 zeigt Spannungsumsetzungsverhältnisse von Seite 2 zu Seite 1 bei n = 4 bei Transformatorverhältnis ü = 1.

Durch den Einsatz der Speicherdrossel am Eingang und/oder Ausgang lassen sich außerdem alle möglichen Zwischenstufen einstellen. Der hierbei auftretende Spannungshub an der Speicherdrossel L_s ist beim bestimmungsgemäßen Betrieb beim Einsatz der Unterschied der beiden Levels, zwischen denen gewechselt wird, also max. 1/n der jeweiligen Ausgangs- bzw. Eingangsspannung.

Zu beachten ist hierbei, wie zuvor bereits dargestellt, dass ein Mulitlevel-Betrieb der Vollbrücke vorzugsweise ohne Speicherdrossel in der Zuleitung der Mulitlevel-Vollbrücke erfolgt. Bei Verwendung einer Speicherdrossel auf einer Seite der Schaltung kann sich die Anzahl einstellbarer Umsetzungsverhältnisse auf die möglichen Spannungsniveaus der Mulitlevel-Vollbrücke ohne Speicherdrossel in der Zuleitung reduzieren. Vorteilhafterweise beträgt beim bestimmungsgemäßen Betrieb der maximale Spannungshub bei Verwendung einer Speicherdrossel 1/n der Eingangs-(Brücken-) bzw. der Ausgangsspannung

Zusätzlich zu den obenstehend für andere Topologien genannten Vorteilen ergeben sich in der Topologie von Fig. 11 weitere Vorteile. Durch den Einsatz von Multilevel-Vollbrücken auf beiden Seiten des Transformators ergeben sich nochmals mehr mögliche Spannungsniveaus gegenüber der vorherigen Topologie bei jeweils gleicher Anzahl Level je Halbbrücke und dadurch nochmals ein größerer Eingangs- und/oder Ausgangsspannungsbereich. Es ist ein bidirektionaler Betrieb möglich, d.h. die Energie kann in beide Richtungen übertragen werden. Ein Einsatz einer Speicherdrossel ist eingangs- oder ausgangsseitig möglich. Es ist ein vollständig symmetrischer Aufbau möglich für verbesserte EMV- und Regeleigenschaften für beide Energieübertragungsrichtungen.

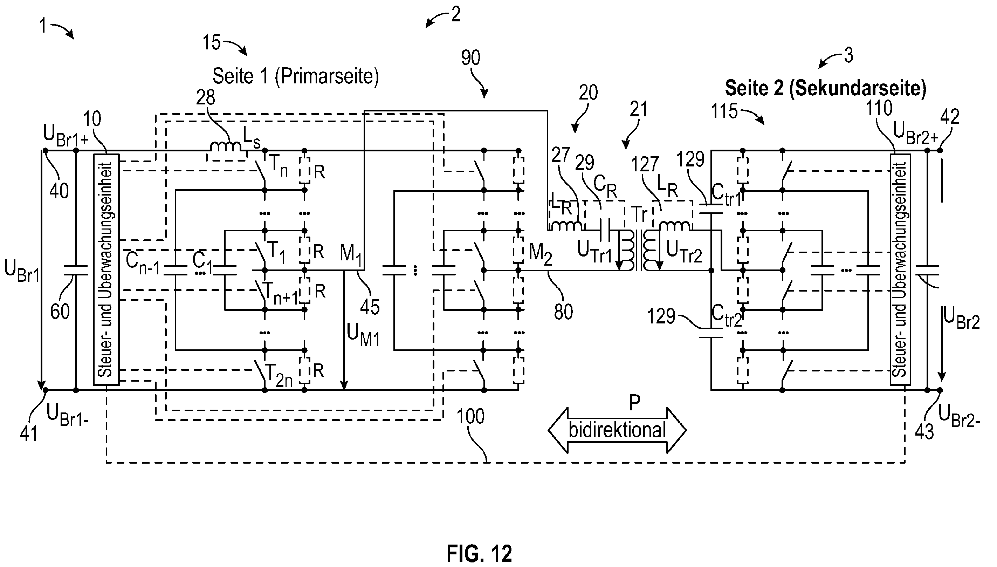

Fig. 12 zeigt die Realisierung eines bidirektionaler Flying Capacitor Multilevel LLC DC/DC Converters mit einer Flying-Capacitor-Multilevel-Vollbrücke auf Seite 1 bzw. der Primärseite, mit einer Flying-Capacitor-Multilevel-Halbbrücke auf Seite 2 bzw. der Sekundärseite, mit einer LLC-Transformatorstufe bestehend aus einem Transformator, mindestens einer Resonanzinduktivität L_R und häufig mit einem optionalen Kondensator auf Seite 1, sowie mit mindestens einem Kondensator auf Seite 2 in Reihe zur sekundärseitigen Transformatorwicklung, sowie mit einer optionalem Speicherdrossel L_s auf Seite 1.

Die Seite 1 dieser Topologie ist wie zuvor beschrieben aufgebaut. Auf Seite 2 kommt im Unterschied zur vorherigen Topologie nun statt einer weiteren Flying-Capacitor-Multilevel-Vollbrücke nun eine Flying-Capacitor-Multilevel-Halbbrücke zum Einsatz.

Parallel zur Brückenspannung befinden sich auf Seite 2 die beiden in Serie geschalteten Transformatorkondensatoren C_Tr1 und C_Tr2. Diese dienen der Potentialanpassung der sekundärseitigen Transformatorwicklung und gleichzeitig der Stabilisierung der Brückenspannung.

Alternativ zu der gezeigten Abbildung kann auch hier einer der beiden Kondensatoren C_Tr1 und C_Tr2 entfallen oder es können beide Kondensatoren jeweils durch einen Kondensator am Mittelanschluss der Halbbrücke oder auf Seite 1 in Reihe zu der Induktivität L_R ersetzt werden. Praktisch kann die in Fig. 12 gezeigte Anordnung Vorteile beim Einschalten, bei Änderungen der Eingangsspannung (Brückenspannung) und in Bezug auf EMV-Verhalten haben

Die Speicherdrossel L_s zur Glättung und Regelung der Ausgangsspannung oder des Ausgangsstromes auf der Seite 1 bzw. Primärseite und/oder auf Seite 2 bzw. Sekundärseite ist hier nur auf Seite 1 vorgesehen, da die Halbbrücke auf Seite 2 keinen kontinuierlichen Stromfluss durch die Speicherdrossel bewirken würde.

Ein Mulitlevel-Betrieb der Vollbrücke ist ohne Speicherdrossel in der Zuleitung der Mulitlevel-Vollbrücke vorgesehen. Bei Verwendung einer Speicherdrossel in der Zuleitung der Mulitlevel-Vollbrücke schaltet diese vorzugsweise im 2-Level-Betrieb zwischen der positiven und der negativen Brückenspannung. Der wesentliche Vorteil der Mulitlevel-Vollbrücke lässt sich dann nicht mehr durchgehend nutzen. Beim Einsatz einer Speicherdrossel kann es sinnvoll sein, diese unter Ansteuerung durch die Steuer- und Überwachungseinheit 10 durch einen optionalen Schalter wie einem Relais oder zwei in Serie geschaltete umgekehrt gepolte Transistoren zu überbrücken zu können, damit die Vollbrücke im vollen Multilevel-Betrieb arbeiten kann.

Wenn keine zusätzliche Speicherdrossel verwendet wird und stattdessen die Resonanzinduktivität L_R als Speicherdrossel zur Spannungsregelung mitverwendet wird, und wenn diese zur Vermeidung zu hoher Spannungsabfälle kleiner ausgebildet ist, dann kann der dadurch verkleinerte Regelbereich durch den Einsatz von Multilevel-Vollbrücken mit einer höheren Anzahl Level ausgeglichen werden.

Parallel zur Brückenspannung zwischen U_Br+ und U_Br- kommt am Eingang bzw. Ausgang ein optionaler Kondensator 60, 160 zur Stabilisierung der Brückenspannung zum Einsatz.

Durch den Einsatz von einer Multilevel-Halbbrücke statt einer Vollbrücke auf Seite 2 reduziert sich die Anzahl verschiedener Spannungsniveaus zwischen Eingang und Ausgang gegenüber der vorherigen Topologie gemäß Fig. 11.

Für den Betrieb der Multilevel-Vollbrücke auf Seite 1 gilt das zuvor bereits erläuterte. Die Multilevel-Halbbrücke auf Seite 2 wird so betrieben, dass der Strom abwechselnd über den oberen Zweig der Halbbrücke von bzw. in Richtung U_Br+ und über den unteren Zweig der Halbbrücke von bzw. in Richtung U_Br- fließt, so dass beide Transformatorkondensatoren C_Tr1 und C_Tr2 abwechselnd geladen werden.

Wenn n geradzahlig ist, gilt für die Spannungen an den beiden Transformatorwicklungen:

$$U\_Tr1 \text{ (Seite 1)} = +/- (0 ; 1/n ; 2/n ; ...; n/n) * U\_Br1$$

$$U\_Tr2 \text{ (Seite 2)} = +/- 1/2 * (0 ; 2/n ; 4/n; ... ; (n-2)/n ; n/n) * U\_Br2$$

$$ü = U\_Tr2 / U\_Tr1 = \text{Übersetzungsverhältnis des Transformators}$$

$$\Rightarrow U\_Tr2 = ü * U\_Tr1$$

$$\Rightarrow U\_Br2 = 2 * (n/n ; n/(n-2) ; ... ; n/4 ; n/2) * U\_Tr2 = +/- (2n/n ; 2n/(n-2) ; ... ; 2n/4 ; 2n/2) * ü * U\_Tr1$$

Falls die Vollbrücke auf Seite 1 im Multilevel-Moduls betrieben wird, also ohne Speicherdrossel L_s, ergeben sich damit folgende mögliche Spannungsverhältnisse:

$$U\_Br2 = (0 ; 1/n ; 2/n ; ...; n/n) * (2n/n ; 2n/(n-2) ; ... ; 2n/4 ; 2n/2) * ü * U\_Br1$$

Die folgende Tabelle zeigt mögliche Spannungsumsetzungsverhältnisse von Seite 2 zu Seite 1 bei Transformatorverhältnis ü = 1

| x | 2n/n | ... | 2n/4=n/2 | 2n/2=n |
|---|---|---|---|---|
| **0** | 0 | 0 | 0 | 0 |
| **1/n** | 2/n | ... | 0,5 | 1 |
| **2/n** | 4/n | ... | 1 | 2 |
| **3/n** | 6/n | ... | 1,5 | 3 |
| **...** | ... | ... | ... | ... |
| **n/n** | 2 | ... | n/2 | n |

Bei n = 2 Schaltransistoren je Zweig einer Halbbrücke gilt demnach beispielsweise:

$$U\_Br2 = (0 ; 1 ; 2) * ü * U\_Br1$$

Es ergeben sich (bei n = 2) also 3 verschiedene Ausgangsspannungen (inkl. Null).

Bei n = 4 Schaltransistoren je Zweig einer Halbbrücke gilt:

| x | 2 | 4 |
|-----|-----|-----|
| 0 | 0 | 0 |
| 1/4 | 0,5 | 1 |
| 2/4 | 1 | 2 |
| 3/4 | 1,5 | 3 |
| 4/4 | 2 | 4 |

U\_Br2 = (0; 0,5; 1; 1,5; 2; 3; 4) * ü * U\_Br1

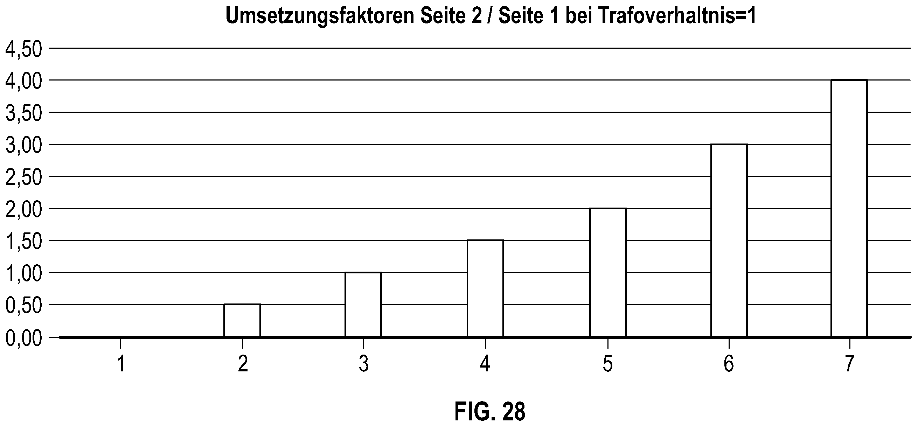

Fig. 28 zeigt Spannungsumsetzungsverhältnisse von Seite 2 zu Seite 1 bei n = 4 bei Transformatorverhältnis ü = 1

Wenn n ungeradzahlig ist, gilt für die Seite 2:

$$U\_Tr2 = 1/2 * (-1 ; (2-n)/n ; (4-n)/n ; ... ; (n-4)/n ; (n-2)/n ; 1) * U\_Br2$$

Die möglichen Spannungsverhältnisse von Seite 1 zur Seite 2 können analog wie zuvor dargestellt unter Berücksichtigung des Transformator-Übersetzungsverhältnisses ermittelt werden.

Durch den Einsatz der Speicherdrossel am Eingang lassen sich auch hier viele Spannungszwischenstufen einstellen.

Der hierbei auftretende Spannungshub an der Speicherdrossel L_s ist beim bestimmungsgemäßen Betrieb ebenfalls immer der Unterschied der beiden Level, zwischen denen gewechselt wird, also max. 1/n der jeweiligen Ausgangs- bzw. Eingangsspannung.

Die vorliegende Topologie hat viele Vorteile, die auch die zuvor beschriebenen Topologien haben. Es wird nur eine Vollbrücke und eine Halbbrücke benötigt, statt zwei Vollbrücken, und trotzdem ist ein bidirektionaler Betrieb möglich. Es liegen weniger mögliche Schaltzustände und Spannungsniveaus vor als bei den zuvor beschriebenen Topologien. Ein Einsatz einer Speicherdrossel ist nur gesehen, wenn die Mulitlevel-Vollbrücke nicht im Mulitlevel-Betrieb eingesetzt wird.

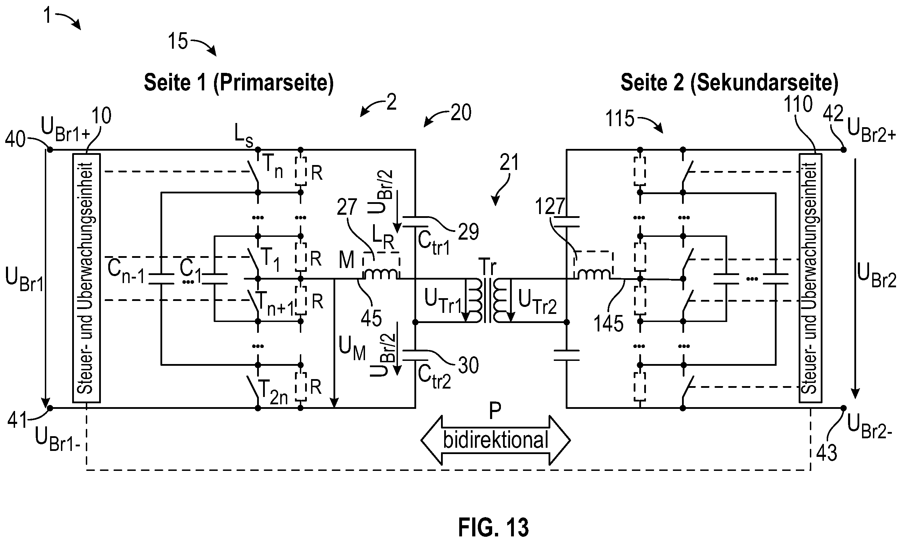

Fig. 13 zeigt die Realisierung eines bidirektionaler Flying Capacitor Multilevel LLC DC/DC Converters mit je einer Flying-Capacitor-Multilevel-Halbbrücke auf Seite 1 und Seite 2, die beide Ein- und Ausgang sein können, und einer LLC-Transformatorstufe bestehend aus einem Transformator, mindestens einer Resonanzinduktivität L_R und häufig einem Kondensator auf Seite 1 und mindestens je einem Kondensator auf Seite 1 und Seite 2 in Reihe jeweiligen Transformatorwicklung.

Im Unterschied zu den obenstehend beschriebenen Topologien kommt hier auf beiden Seiten jeweils eine Flying-Capacitor-Multilevel-Halbbrücke zum Einsatz.

Parallel zur Brückenspannung befinden sich auf beiden Seiten die beiden in Serie geschalteten Transformatorkondensatoren C_Tr1 und C_Tr2. Diese dienen der Potentialanpassung der sekundärseitigen Transformatorwicklung und gleichzeitig der Stabilisierung der Brückenspannung.

Alternativ zu der gezeigten Abbildung kann auch hier einer der beiden Kondensatoren C_Tr1 und C_Tr2 entfallen oder können beide Kondensatoren jeweils durch einen Kondensator am Mittelanschluss der Halbbrücke oder in Reihe zu der Induktivität L_R ersetzt werden. Praktisch hat die gezeigte Anordnung aber in der Regel Vorteile beim Einschalten, bei Änderungen der Eingangsspannung bzw. Brückenspannung und in Bezug auf EMV-Verhalten.

Auf mindestens einer Seite des Transformators befindet sich in Reihe zur Transformatorwicklung eine Resonanzinduktivität L_R. Zur Symmetrierung des Verhaltens beider Seiten und eines einheitlichen, schnellen Schaltverhaltens auf beiden Seiten wird vorteilhafterweise auf beiden Seiten je eine, dann kleinere, Resonanzinduktivität eingesetzt.

Die Resonanzinduktivität L_R kann zusätzlich in einem gewissen Rahmen zur Regelung der Ausgangsspannung bzw. des Ausgangsstromes als Speicherdrossel verwendet werden. Durch höherstufige Multilevel-Halbbrücke kann der Spannungshub bei der PWM zur Feinregelung der Ausgangsspannung bzw. des Ausgangsstromes reduziert werden und die Induktivität entsprechend kleiner ausgelegt werden. Dadurch wird der Spannungsabfall beim Polaritätswechsel reduziert.

Parallel zur Brückenspannung zwischen U_Br+ und U_Br- kann auf einer Seite oder auf beiden Seiten je ein hier nicht abgebildeter optionaler Kondensator zur Stabilisierung und Speicherung der Brückenspannung zum Einsatz kommen, insbesondere, wenn nur einer der beiden Kondensatoren C_Tr1 und C_Tr2 vorhanden ist. Dieser ist auch beim Hochlaufen der Sekundärseite vorteilhaft, um die sekundärseitigen Schaltungsteile mit einer stabilen Spannung zu versorgen.

Im Unterschied zu den vorherigen Topologien wird hier keine zusätzliche Speicherdrossel im Eingangs- oder Ausgangskreis eingesetzt, da die Halbbrücken keinen kontinuierlichen Stromfluss durch die Speicherdrossel ermöglichen.

Für den Betrieb der Multilevel-Halbbrücken gilt das bereits oben Beschriebene.

Weil auf beiden Seiten aktive Halbbrücken zum Einsatz kommen, kann die Energie in beide Richtungen d.h. bidirektional übertragen werden.

Wenn n geradzahlig ist, gilt für die Spannungen an den beiden Transformatorwicklungen:

U_Tr1 = +/- 1/2 * (0 ; 2/n ; 4/n; ... ; (n-2)/n ; n/n) * U_Br1 = +/- (0 ; 1/n ; 2/n; ... ; (n-2)/2/n ; n/2/n) * U_Br1

$$U\_Tr2 = +/- 1/2 * (0 ; 2/n ; 4/n; ... ; (n-2)/n ; n/n) * U\_Br2$$

ü = U_Tr2 / U_Tr1 = Übersetzungsverhältnis des Transformators

⇨ U_Tr2 = ü * U_Tr1

⇨ U_Br2 = +/- 2 * (n/n ; n/(n-2) ; ... ; n/4 ; n/2) * U_Tr2 = +/- (2n/n ; 2n/(n-2) ; ... ; 2n/4 ; 2n/2) * ü * U_Tr1

Damit gilt:

U_Br2 = (0 ; 1/n ; 2/n; ... ; (n-2)/2/n ; n/2/n) * (2n/n ; 2n/(n-2) ; ... ; 2n/4 ; 2n/2) * ü * U_Br1

| x | 2n/n=2 | ... | 2n/4=n/2 | 2n/2=n |
|---|---|---|---|---|
| **0** | 0 | 0 | 0 | 0 |
| **1/n** | 2/n | ... | 1/2 | 1 |
| **2/n** | 4/n | ... | 1 | 2 |

| **3/n** | 6/n | ... | 3/2 | 3 |
|---|---|---|---|---|
| ... | ... | ... | ... | ... |
| **n/2/n** | 1 | ... | n/4 | n/2 |

Bei n = 2 Schalttransistoren je Zweig einer Halbbrücke gilt demnach beispielsweise:

$$U\_Br2 = +/- (0 ; 1) * ü * U\_Br1$$

Es ergeben sich (bei n = 2) also 3 verschiedene Ausgangsspannungen (inkl. Null).

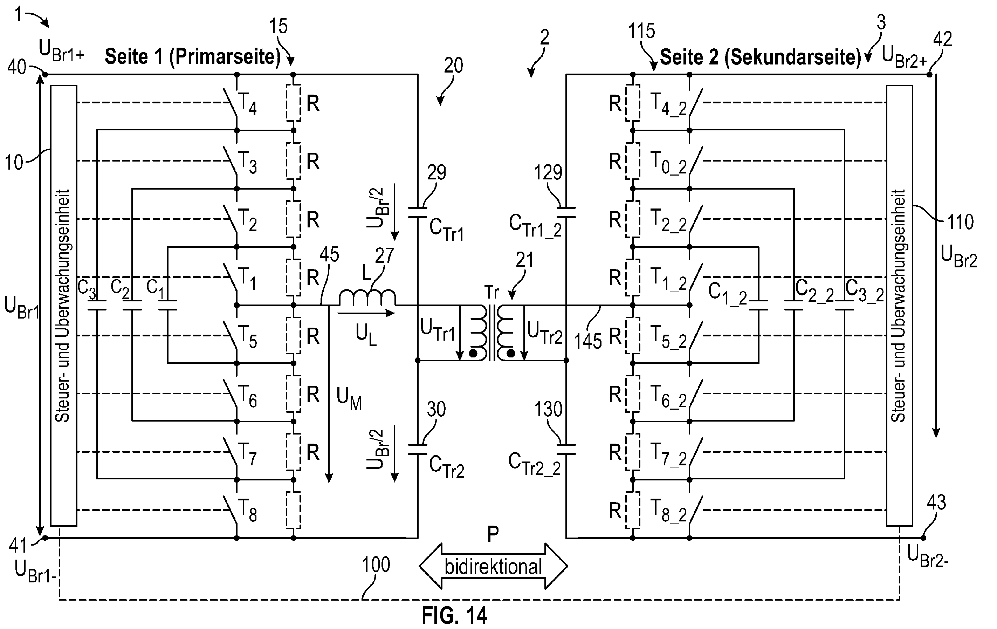

Fig. 14 zeigt eine Schaltung mit n = 4 Schalttransistoren je Zweig einer Halbbrücke. Es gilt:

$$U\_Br2 = +/- (0; 0,5 ; 1; 2) * ü * U\_Br1$$

| x | 2 | 4 |
|---|---|---|
| 0 | 0 | 0 |
| 1/4 | 0,5 | 1 |
| 1/2 | 1 | 2 |

Es ergeben sich (bei n = 4) also 4 verschiedene Ausgangsspannungen (inkl. Null). In diesem Fall sind folgende Spannungen am Mittelanschluss $U_M$ möglich:

$$U_M = 0;\ 0{,}25 * U\_Br;\ 0{,}5 * U\_Br;\ 0{,}75 * U\_Br;\ U\_Br$$

Somit ergeben sich folgende mögliche Spannungen am Transformator:

$$U_{Tr} = 0;\ +/-\ 0{,}25 * U\_Br\ ;\ +/-\ 0{,}5 * U\_Br.$$

Somit kann der Transformator mit zwei verschiedenen Spannungen, nämlich +/-25% oder +/-50% der Brückenspannung U_Br betrieben werden.

Alle vorstehenden Angaben beziehen sich auf die Seite 1 und gelten analog für die Seite 2.

Somit ist eine Modulation der Spannung am Transformator zwischen 0 und +/-25% oder zwischen +/-25% oder +/-50% der Brückenspannung möglich.

Für Spannungen an den beiden Transformatorwicklungen gilt:

$$U\_Tr1 = +/-\ (0;\ 0{,}25\ ;\ 0{,}5) * U\_Br1$$

$$U\_Tr2 = +/-\ (0;\ 0{,}25\ ;\ 0{,}5) * U\_Br2 \Rightarrow U\_Br2 = +/-\ (2\ ;\ 4) * U\_Tr2$$

$$ü = U\_Tr2\ /\ U\_Tr1 = \text{Übersetzungsverhältnis des Transformators}$$

$$\Rightarrow U\_Br2 = (0;\ 0{,}25\ ;\ 0{,}5) * (2\ ;\ 4) * ü * U\_Br1$$

$$\Rightarrow U\_Br2 = (0\ ;\ 0{,}5\ ;\ 1\ ;\ 2) * ü * U\_Br1$$

Somit beträgt bei einem Übersetzungsverhältnis des Transformators von ü = 1 das Verhältnis der Ausgangsspannung zur Eingangsspannung ohne Regelung durch Wechsel zwischen verschiedenen Spannungen wahlweise 0,5, 1 oder 2.

Wenn n ungeradzahlig ist, gilt für die Seite 2 (analog zu **Error! Reference source not found.**):

$$U_{Tr} = 1/2 * (-1\ ;\ (2\text{-}n)/n\ ;\ (4\text{-}n)/n\ ;\ ...\ ;\ (n\text{-}4)/n\ ;\ (n\text{-}2)/n\ ;\ 1) * U\_Br$$

Die möglichen Spannungsverhältnisse von Seite 1 zur Seite 2 können analog wie zuvor dargestellt unter Berücksichtigung des Transformator-Übersetzungsverhältnisses ermittelt werden.

Die Regelbarkeit der Ausgangsspannung zwischen den sich aus der Flying-Capacitor-Topologie ergebenden Stufen wird durch die Serieninduktivität erreicht. Diese darf jedoch nicht zu groß sein, damit der Spannungsabfall an dieser nicht zu groß und die maximal übertragbare Spannung nicht zu klein wird, muss jedoch groß genug sein, um eine ausreichende Regelung zwischen zwei Spannungsniveaus der Flying-Capacitor-Multilevel-Halbbrücken zu ermöglichen. Der unvermeidliche Spannungsabfall an der Serieninduktivität muss ggf. durch ein angepasstes maximales Übertragungsverhältnis ausgeglichen werden. Hierbei kommen die Vorteile der Multilevel-Topologie zum Tragen, die ein Reduzieren der Transformatoreingangsspannung gegenüber der Brückenspannung, wie auch ein Anheben der Brückenspannung gegenüber der Transformatorausgangsspannung ermöglicht.

In den Schaltungen in Fig. 13 und 14 wird auf beiden Seiten nur eine Halbbrücke benötigt, statt einer oder zwei Vollbrücken, dadurch ergibt sich eine einfachere Topologie. Trotzdem ist ein bidirektionaler Betrieb möglich. Der Einsatz einer oder zusätzlichen Speicherdrossel im Eingangs- und/oder im Ausgangskreis ist vorgesehen, wenn aktive Schaltelemente vorgesehen werden, die diese überbrücken können, siehe oben.

Durch Multilevel-Topologie mit höherer Anzahl Level ist der Einsatz kleinerer Resonanzinduktivitäten als Speicherdrossel möglich, dadurch entsteht weniger Spannungsabfall bei Polaritätswechseln.

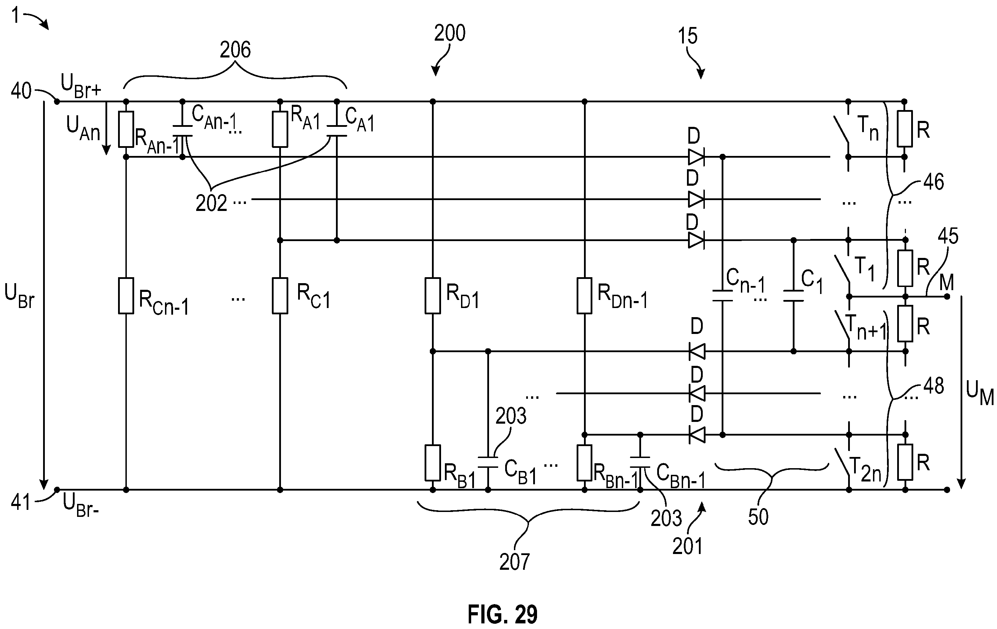

Fig. 29 zeigt einen DC-DC-Converter 1 mit einer Anlaufschaltung 200. Gemäß der vorliegenden Offenbarung werden die Flying Caps beim Einschalten und Hochfahren rechtzeitig auf die richtige Spannung geladen, um eine Überspannung an den Transistoren zu vermeiden. Der DC-DC-Converter 1 entspricht einem beliebigen DC-DC-Converter 1 der vorbeschriebenen Figuren 1 bis 28, für die Beschreibung des Aufbaus der Anlaufschaltung 200 unwesentliche Bauteile sind weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Bei dieser Anlaufschaltung wird jeder Flying Cap jeweils über zwei Anlaufkondensatoren C_Ai und C_Bi geladen, und zwar jeweils mit einer Diode D. Dies erfolgt in der Regel bevor die Halbbrücke aktiv wird und die Transistoren der Halbbrücke schalten.

Die Anlaufkondensatoren C_A1 bis C_An-1 sowie C_B1 bis C_Bn-1 sind hierbei so dimensioniert, dass die Flying Capacitors nach dem Prinzip eines kapazitiven Spannungsteilers beim Einschalten der Halbbrücke schnell aufgeladen werden, so dass die zulässige Sperrspannung an den Schalttransistoren der Multilevel-Halbbrücke nicht überschritten wird.

Die Anlaufkondensatoren können hierbei so dimensioniert werden, dass die Flying Capacitors gleich auf die Sollspannung U_Ci = i/n * U_Br geladen werden. Das Ladeverhalten ist jedoch davon abhängig, ob die Energie über die Brückenspannung U_Br eingespeist wird oder über den Mittelanschluss und außerdem davon, ob bei Einspeisung über die Brückenspannung am Mittelanschluss eine Last hängt. Außerdem können die Reversedioden der Schalttransistoren je nach Energieeinspeisung und Lastzustand einen Einfluss haben. Dies ist bei der Dimensionierung der Anlaufkondensatoren zu berücksichtigen.

Die Anlaufkondensatoren können abhängig davon dimensioniert werden, ob die Einspeisung über den Brückenanschluss oder den Mittelanschluss erfolgt. Sie können so dimensioniert werden, dass die Flying Capacitors gleich ihre Idealspannung bekommen. Wenn jedoch die Spannung nicht über die Brückenspannung eingespeist wird, sondern über die Mittelspannung, kann dies zu einer erhöhten Spannung an den Brücken führen.

Bei Einspeisung über eine Brücke kann insbesondere die Dimensionierung der Anlaufkondensatoren unter Verwendung der Formel 2 * i / (n - i) * (Kapazität des Flying Capacitors an Position i von n) für die Kapazität erfolgen. Bei Einspeisung über den Mittelanschluss kann insbesondere die Dimensionierung der Anlaufkondensatoren unter Verwendung der Formel i / (n - i) * (Kapazität des Flying Capacitors an Position i von n) für die Kapazität erfolgen.

Bei mehreren Halbbrücken, beispielsweise in einem Drei-Phasen-Umrichter, können insbesondere Anlaufschaltungen parallel geschaltet werden. Widerstandswerte können angepasst werden. Dabei verdoppeln sich typischerweise Kapazitäten und Widerstandswerte halbieren sich typischerweise. Dabei können insbesondere separate Dioden für jede Halbbrücke verwendet werden, insbesondere um eine elektrische Entkopplung sicherzustellen. Dies kann insbesondere sicherstellen, dass die Dioden unabhängig voneinander schalten können. Es kann auch eine gemeinsame Anlaufschaltung für mehrere Brücken verwendet werden.

Die Anlaufschaltung 200 hat mehreren Untereinheiten. Anlaufdioden D 201 leiten den Ladestrom zu den Flying Capacitors 50. Diese Dioden verhindern Rückströme während des Ladens und sorgen dafür, dass die Spannung in die richtige Richtung fließt. Jede Anlaufdiode D ist mit einem Anlaufkondensator verbunden. Positive Anlaufkondensatoren 202 (C_A1 bis C_An-1) sind über die Anlaufdioden D 201 mit den positiven Anschlüssen der entsprechenden Flying Capacitors 50 verbunden. Diese Anlaufkondensatoren 202 (C_A1 bis C_An-1) speichern Energie, um die Flying Capacitors bei Anlegen der Brückenspannung oder des Mittelanschlusses schnell aufzuladen. Negativer Anlaufkondensatoren 203 (C_B1 bis C_Bn-1) sind über Anlaufdioden D 201 mit den negativen Anschlüssen der entsprechenden Flying Capacitors 50 verbunden.

Positive Anlaufspannungsteiler 206 weisen mehreren Widerstände auf, die teilweise in Reihe mit den positiven Anlaufkondensatoren und teilweise parallel zu diesen geschaltet sind. Diese positiven Anlaufspannungsteiler 206 sorgen dafür, dass die Spannung an den positiven Anlaufkondensatoren gleichmäßig verteilt wird und diese Kondensatoren während des Betriebs richtig aufgeladen werden.

Negative Anlaufspannungsteiler 207 sind analog zu den positiven Anlaufspannungsteiler 206 aufgebaut und für die negativen Anlaufkondensatoren zuständig.

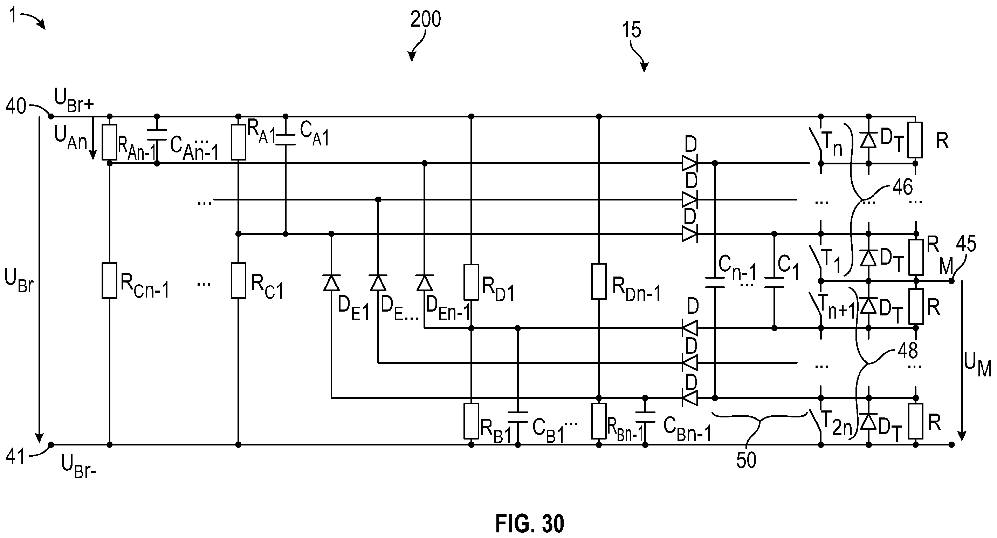

Fig. 30 zeigt einen DC-DC-Converter mit einer Flying-Capacitor-Multilevel-Halbbrücke mit Anlaufschaltung mit zwei Anlaufkondensatoren je Flying Capacitor und Entladedioden, die zum schnellen Entladen der Anlaufkondensatoren vorgesehen sind. Über diese werden beim Abschalten oder bei einem Einbruch der Brückenspannung die Anlaufkondensatoren schnell entladen. Die Entladedioden D_E1 bis D_En-1 sind zwischen den beiden Anlaufkondensatorketten mit C_A1 bis C_An-1 und C_Bn-1 bis C_B1 vorgesehen, wie Fig. 30 zeigt.

Der DC-DC-Converter 1 entspricht einem beliebigen DC-DC-Converter 1 der vorbeschriebenen Figuren 1 bis 29, für die Beschreibung des Aufbaus der Anlaufschaltung 200 unwesentliche Bauteile sind weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Die Entladedioden D_E sind so angeordnet, dass sie im Normalbetrieb nicht leiten, bei Reduzierung der Brückenspannung aber für ein beschleunigtes Entladen der Anlaufkondensatoren sorgen.

Für ein schnelles Entladen der Flying Caps beim Wegfall der Brückenspannung sind Reverse-Dioden D_T vorgesehen erfolgen, die parallel zu den Schalttransistoren T_1 bis $T_{2n}$ und den optionalen Widerständen R angeordnet. Beim erneuten Einschalten der Schaltung liegt dadurch eine definierte Ausgangsbasis für die Flying Caps 50 vor. Dies In der Praxis können diese als separate Bauteile entfallen, wenn die eingesetzten Schalttransistoren bereits über geeignete Reverse-Dioden verfügen. Außerdem verhindern die Reverse-Dioden D_T an den Schalttransistoren in Verbindung mit den Dioden D, die zu den Flying Caps führen, ein Umpolen und negatives Aufladen der Anlaufkondensatoren beim Entladen dieser über die Entladedioden $D_E$.

Bei Energieeinspeisung über die Brückenspannung und lastfreiem Mittelanschluss können die Anlaufkondensatoren C_A1 bis C_An-1 sowie C_B1 bis C_Bn-1 wie folgt dimensioniert werden, damit die Flying Caps C_1 bis C_n-1 sofort auf ihre Sollspannung U_Ci = i/n * U_Br geladen werden. Hierfür gilt:

$$C\_Ai = C\_Bi = 2 * i / (n - i) * C_i$$

Bei n = 4 gilt somit:

$$C\_A1 = C\_B1 = 2 / 3 * C\_1 \; ; \; C\_A2 = C\_B2 = 2 * C\_2 \; ; \; C\_A3 = C\_B3 = 6 * C\_3$$

Damit die Anlaufkondensatoren den Betrieb der Multilevel-Halbbrücke nicht stören, ist es zweckmäßig, dass diese über weitere Widerstände R_A1 bis R_An, $R_{B1}$ bis $R_{Bn}$, $R_{C\_1}$ bis $R_{Cn}$, $R_{D1}$ bis $R_{Dn}$, die Spannungsteiler mit mindestens je 2 Widerständen bilden, so aufgeladen werden, dass die Spannung an jedem Anlaufkondensator gleich der maximalen Sollspannung an den entsprechenden Schalttransistoren T_i ist.

Hierbei gilt:

$$U_{Ai} = (n - i) / n * U\_Br$$

Bei n = 4 gilt somit:

$$U_{A1} = 3 / 4 * U\_Br \; ; \; U\_A2 = 1 / 2 * U\_Br \; ; \; U\_A3 = 1 / 4 * U\_Br$$

Für die Spannungsteilerwiderstände gilt entsprechend:

$$R_{Ai} / R\_Ci = R\_Bi / R\_Di = (n - i) / i$$

Eine mögliche praktische Dimensionierung der Spannungsteilerwiderstände im Verhältnis zu den Serienwiderständen R der Halbbrücke ist wie folgt:

$$R_{Ai} = R\_Bi = (n - i) * R$$

$$R\_Ci = R\_Di = i * R$$

Außerdem dienen die Spannungsteilerwiderstände dazu, dass bei sinkender Brückenspannung und beim Ausschalten der Halbbrücke die Anlaufkondensatoren auch wieder entladen werden.

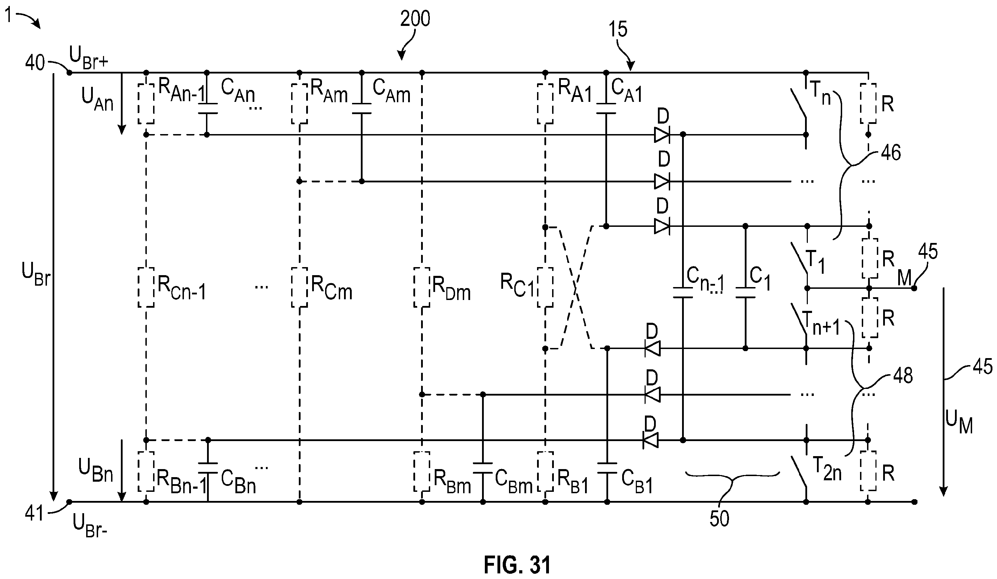

Fig. 31 zeigt einen DC-DC-Converter mit einer Flying-Capacitor-Multilevel-Halbbrücke mit Anlaufschaltung mit zwei Anlaufkondensatoren je Flying Capacitor und verschiedenen Spannungsteileranordnungen.

Der DC-DC-Converter 1 entspricht einem beliebigen DC-DC-Converter 1 der vorbeschriebenen Figuren 1 bis 30, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Die Spannungsteiler der Anlaufkondensatoren können auch kombiniert werden, wie man in Fig. 31 sieht.

Bei den Anlaufkondensatoren C_Ai und C_Bi mit i ≠ n/2 kann ein gemeinsamer Spannungsteiler verwendet werden, für C_Ai und C_Bi mit i > n/2 gemäß Abbildung 14 für die Beschaltung für C_An-1 und C_Bn-1 und für C_Ai und C_Bi mit i < n/2 gemäß Abbildung für die Beschaltung für C_A1 und C_B1.

Im Fall i = n / 2 hat jeder Anlaufkondensator seinen eigenen Spannungsteiler mit je 2 Widerständen, wie gemäß Fig. 31 für die Anlaufkondensatoren C_Am und C_Bm.

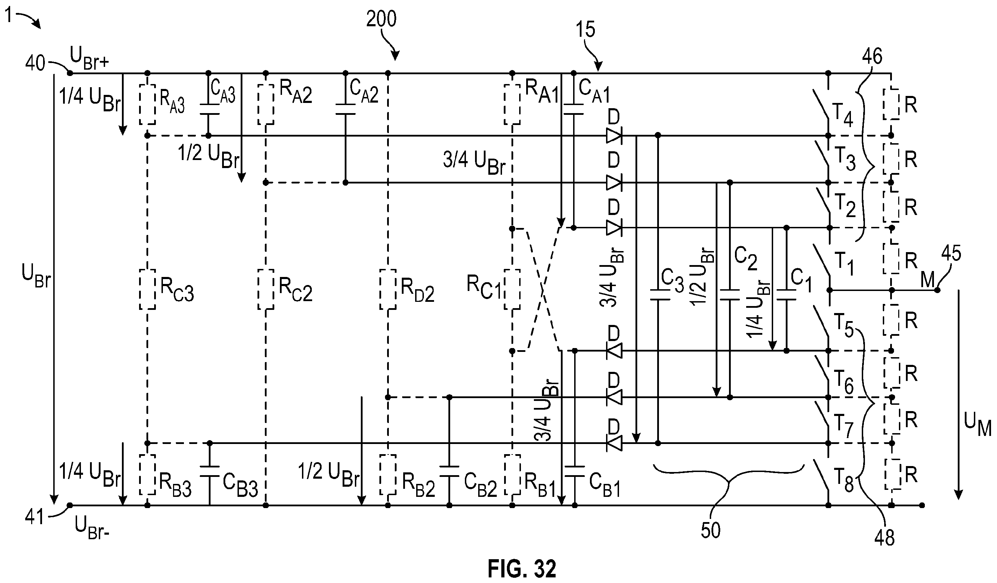

Fig. 32 zeigt eine 5-Level-Flying-Capacitor-Multilevel-Halbbrücke mit Anlaufschaltung mit zwei Anlaufkondensatoren je Flying Capacitor.

Der DC-DC-Converter 1 entspricht einem beliebigen DC-DC-Converter 1 der vorbeschriebenen Figuren 1 bis 31, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Die Anlaufkondensatorketten C_A1 bis C_A3 und C_B1 bis C_B3 werden hierbei wie folgt dimensioniert:

$$C\_A1 = C\_B1 = 2 / 3 * C\_1$$

$$C\_A2 = C\_B2 = 2 * C\_2$$

$$C\_A3 = C\_B3 = 6 * C\_3$$

Bei Energieeinspeisung über die Brückenspannung und belasteten oder gar mit der positiven oder negativen Brückenspannung kurz geschlossenem Mittelanschluss führt die vorgenannte Dimensionierung der Anlaufkondensatoren zu einer Überschreitung der Sollspannung der Flying Capacitors und damit auch zur Überschreitung der zulässigen Sperrspannung der Schalttransistoren der Multilevel-Halbbrücke.

Damit auch für den Fall eines kurz geschlossenen Mittelanschlusses oder bei Energieeinspeisung über den Mittelanschluss und belastete Brückenspannung die Sollspannung der Flying Capacitors nicht überschritten wird, können die Anlaufkondensatoren C_A1 bis C_An-1 sowie C_B1 bis C_Bn-1 wie folgt dimensioniert werden und Reversedioden an den Schalttransistoren eingesetzt werden:

$$C\_Ai = C\_Bi = i / (n - i) * C_i$$

Bei n = 4 gilt somit: C_A1 = C_B1 = 1 / 3 * C_1 ; C_A2 = C_B2 = 1 * C_2 ; C_A3 = C_B3 = 3 * C_3

Je nach Lastsituation werden die Flying Capacitors hierbei bis auf ihre Sollspannung aufgeladen, mindestens jedoch - bei Energieeinspeisung über die Brückenspannung und lastfreiem Mittelanschluss - auf die halbe Sollspannung:

$$U\_Ci = (½ \ldots 1) * i/n * U\_Br$$

Die Spannung an den Schalttransistoren der Multilevel-Halbbrücke beträgt hierbei ebenso jeweils maximal 1/n * U_Br.

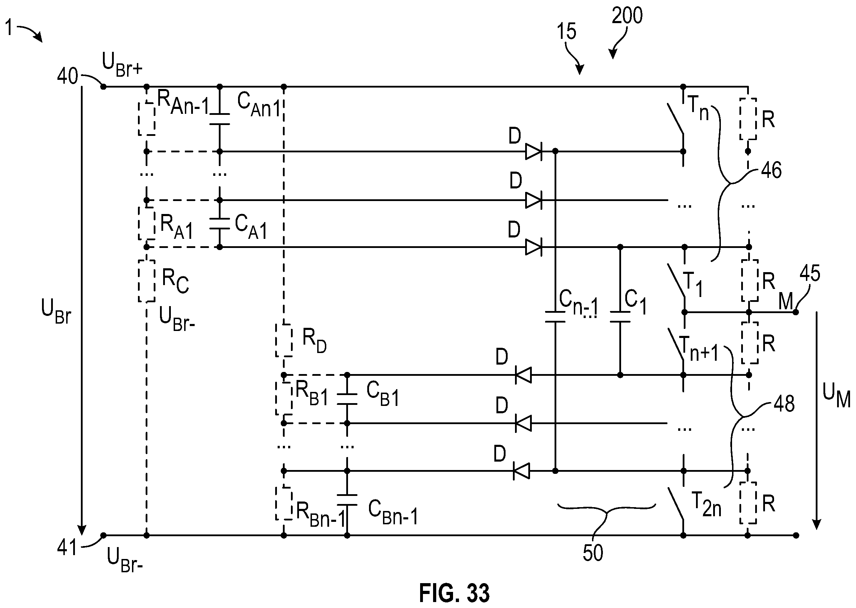

Fig. 33 zeigt einen DC-DC-Converter mit einer Flying-Capacitor-Multilevel-Halbbrücke mit Anlaufschaltung mit Anlaufkondensatorketten.

Der DC-DC-Converter 1 entspricht einem beliebigen DC-DC-Converter 1 der vorbeschriebenen Figuren 1 bis 32, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Alternativ zu den oben gezeigten Anordnung der Anlaufkondensatoren, die alle direkt mit U_Br+ bzw. U_Br- verbunden sind, können diese hier in Serie geschaltet, parallel zu den Lade- und Entladewiderständen.

Die einzelnen Anlaufkondensatoren müssen hierbei eine höhere Kapazität aufweisen, als bei den obenstehenden Anordnungen, benötigen dafür aber eine geringere Spannungsfestigkeit.

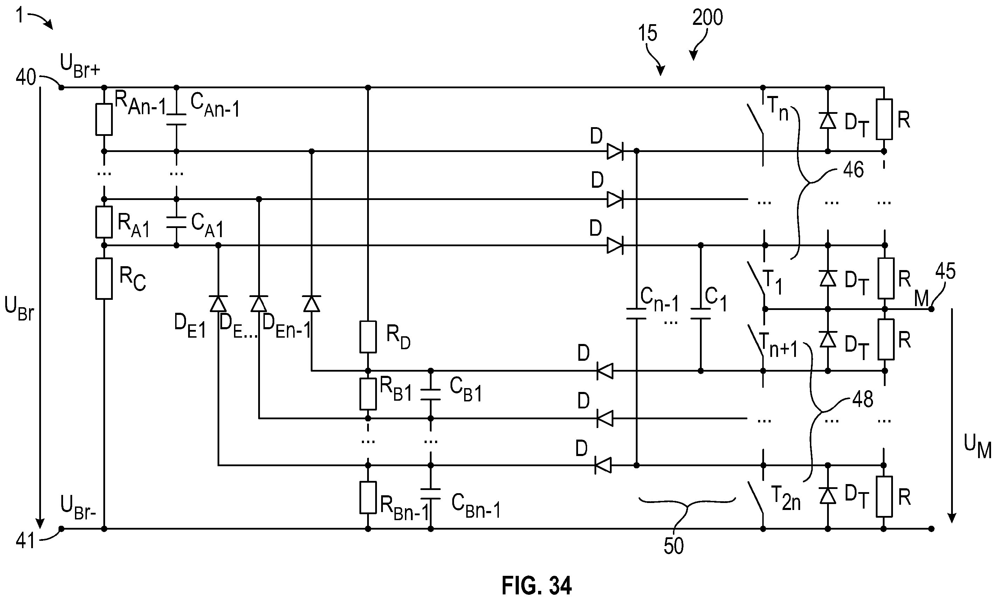

Fig. 34 zeigt eine Flying-Capacitor-Multilevel-Halbbrücke mit Anlaufschaltung mit Anlaufkondensatorketten und Entladedioden.

Der DC-DC-Converter 1 entspricht einem beliebigen DC-DC-Converter 1 der vorbeschriebenen Figuren 1 bis 33, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Zum schnellen Entladen der Anlaufkondensatoren sind Entladedioden D_E1 bis D_En-1 vorgesehen, über die beim Abschalten oder Einbruch der Brückenspannung, die Anlaufkondensatoren schnell entladen werden.

Diese Entladedioden D_E1 bis D_En-1 sind zwischen den beiden Anlaufkondensatorketten mit C_A1 bis C_An-1 und C_Bn-1 bis C_B1 vorgesehen.

Die Entladedioden D_E sind so angeordnet, dass Sie im Normalbetrieb nicht leiten, bei Reduzierung der Brückenspannung aber für ein beschleunigtes Entladen der Anlaufkondensatoren sorgen.

Ebenso können optional für ein schnelles Entladen der Flying Caps Reverse-Dioden D_T an den Schalttransistoren vorgesehen werden, die auch Teil der Schalttransistoren sein können. Außerdem verhindern die Reverse-Dioden D_T an den Transistoren in Verbindung mit den Dioden D, die zu den Flying Caps führen, ein Umpolen und negatives Aufladen der Anlaufkondensatoren beim Entladen dieser über die Entladedioden $D_E$.

Ebenso werden auch hier die Spannungen an den Schalttransistoren durch die Anlaufschaltung begrenzt.

Bei Energieeinspeisung über die Brückenspannung und lastfreiem Mittelanschluss können die Anlaufkondensatoren wie folgt dimensioniert werden, damit die Flying Caps C_1 bis C_n-1 sofort auf ihre Sollspannung U_Ci = i/n * U_Br geladen werden:

Vorausgesetzt für die Flying Caps gilt C_F = C_1 = C_2 = C_3 = ... = C_n-1:

$$C\_Ai = C\_Bi = i * (i + 1) * C\_F$$

Bei Energieeinspeisung über die Brückenspannung und belasteten geschlossenem Mittelanschluss oder bei Energieeinspeisung über den Mittelanschluss werden die Anlaufkondensatoren wie folgt dimensioniert, damit die Flying Caps C_1 bis C_n-1 nicht über ihre Sollspannung U_Ci = i/n * U_Br geladen werden:

Vorausgesetzt für die Flying Caps gilt C_F = C_1 = C_2 = C_3 = ... = C_n-1:

$$C\_Ai = C\_Bi = 1/2 * i * (i + 1) * C\_F$$

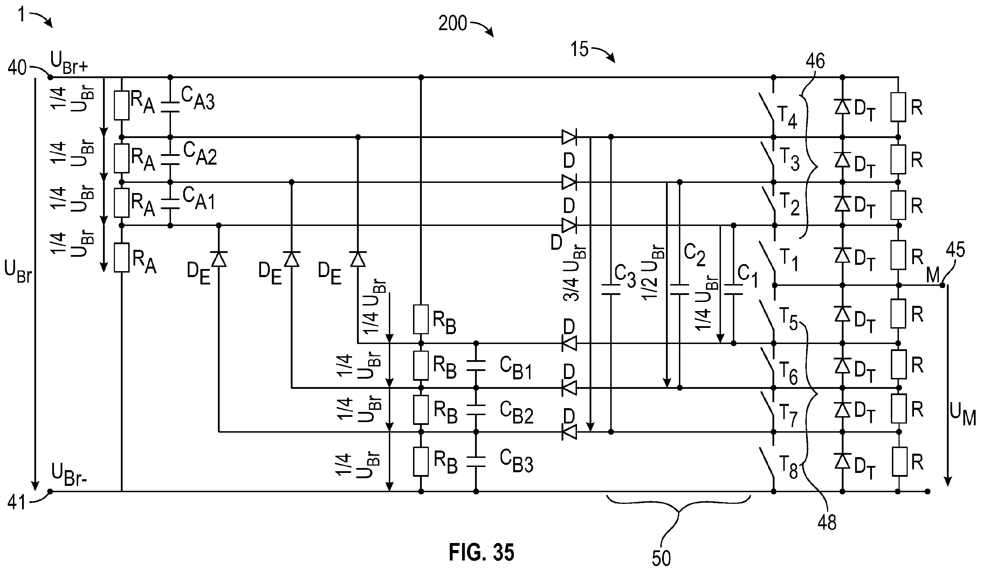

Fig. 35 zeigt eine 5-Level-Flying-Capacitor-Multilevel-Halbbrücke (n=4) mit Anlaufschaltung mit Anlaufkondensatorketten und Entladedioden, die auf die in Fig. 34 allgemein beschriebene Topologie zurückgeht.

Der DC-DC-Converter 1 entspricht einem beliebigen DC-DC-Converter 1 der vorbeschriebenen Figuren 1 bis 34, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Bei Energieeinspeisung über die Brückenspannung und lastfreiem Mittelanschluss können die Anlaufkondensatoren wie folgt dimensioniert werden:

Für die Flying Caps gilt:

$$C_F = C\_1 = C\_2 = C\_3$$

Für die Anlaufkondensatorketten C_A1 bis C_A3 und C_B1 bis C_B3 gilt:

$$C\_A1 = C\_B1 = 2 * C\_F \; ; \; C\_A2 = C\_B2 = 6 * C\_F \; ; \; C\_A3 = C\_B3 = 12 * C\_F$$

Die Widerstände $R_A$ und $R_B$ der Anlaufkondensatorketten können in der gleichen Größenordnung sein, wie die optional vorgesehenen Parallelwiderstände R der Flying-Capacitor-Multilevel-Halbbrücke.

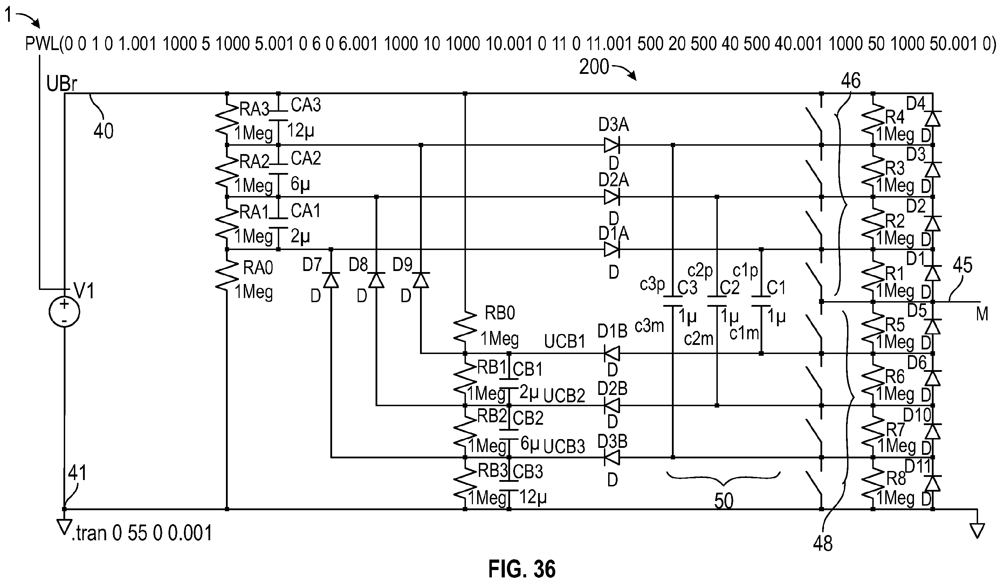

Fig. 36 zeigt ein Beispiel für 5-Level-Flying-Capacitor-Multilevel-Halbbrücke mit Anlaufschaltung mit Anlaufkondensatoren und Entladedioden.

Der DC-DC-Converter 1 entspricht einem beliebigen DC-DC-Converter 1 der vorbeschriebenen Figuren 1 bis 35, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

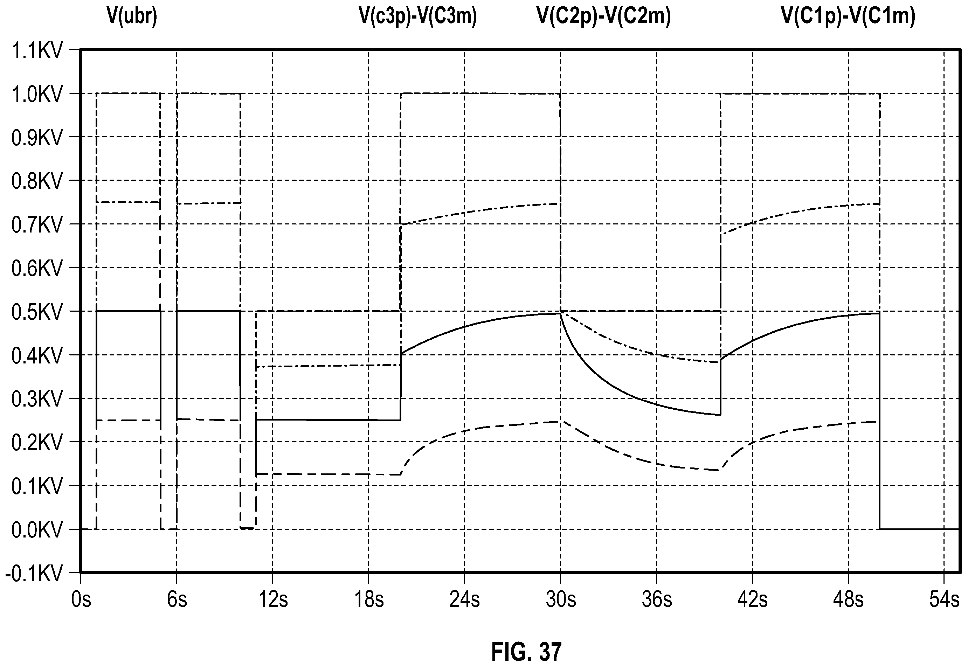

Figur 37 zeigt ein Simulationsergebnis der Schaltung aus Fig. 36 mit der Brückenspannung V(U_Br) und Spannungen an den Flying Caps V(C_1) = V(C_1p)-V(C_1m), V(C_2) = V(C_2p)-V(C_2m) und V(C_3) = V(C_3p)-V(C_3m).

Nachfolgend das Simulationsergebnis mit der Brückenspannung V(U_Br) und Spannungen an den Flying Caps V(C_1) = V(C_1p)-V(C_1m), V(C_2) = V(C_2p)-V(C_2m) und V(C_3) = V(C_3p)-V(C_3m).

Wie man an den gezeigten Spannungsverläufen an den Flying Caps in Abhängigkeit von der Brückenspannung sieht, erreicht die Spannung an den Flying Caps beim schnellen Einschalten sehr schnell die jeweilige Sollspannung. Beim stufenweisen Einschalten dagegen erreicht bei der zweiten Stufe die Spannung an den Flying Caps die jeweilige Sollspannung erst verzögert. Bei dieser Offenbarung wird die notwendige Mindestspannung zur Verhinderung einer Überschreitung der maximal zulässigen Spannung an den Schalttransistoren sofort erreicht. Somit ist ein wirksamer Schutz der Schalttransistoren gegeben.

Bei Energieeinspeisung über die Brückenspannung und belasteten geschlossenem Mittelanschluss oder bei Energieeinspeisung über den Mittelanschluss werden die Anlaufkondensatoren wie folgt dimensioniert:

$$C\_Ai = C\_Bi = 1/2 * i * (i + 1) * C\_F$$

Für den Fall n=4 (5 Level) gilt:

$$C\_A1 = C\_B1 = C\_F \; ; \; C\_A2 = C\_B2 = 3 * C\_F \; ; \; C\_A3 = C\_B3 = 6 * C\_F$$

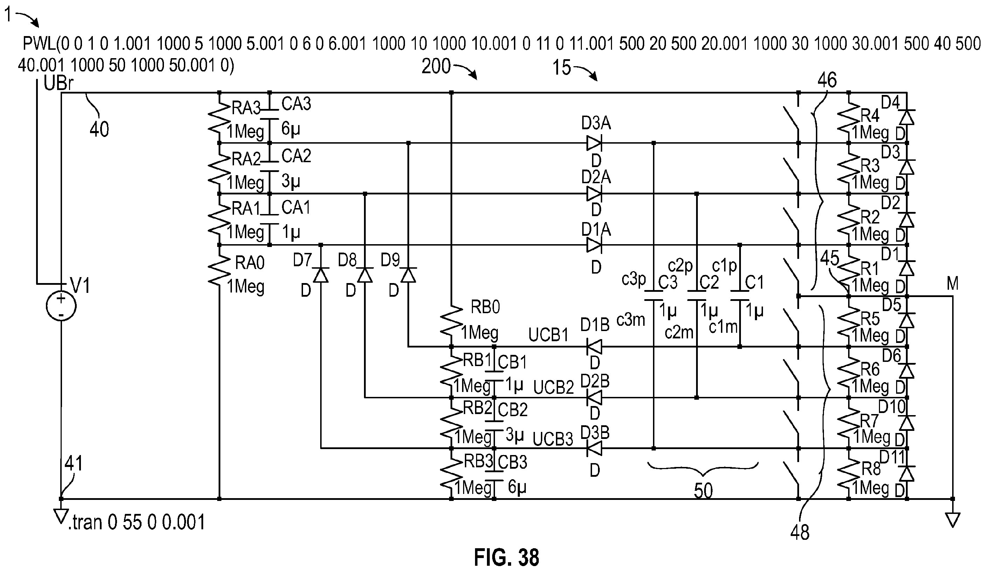

Fig. 38 zeigt eine 5-Level-Flying-Capacitor-Multilevel-Halbbrücke (n=4) mit Anlaufschaltung mit Anlaufkondensatorketten und Entladedioden und kurzgeschlossenem Mittelanschluss, die auf die in Fig. 34 allgemein beschriebene Topologie zurückgeht.

Der DC-DC-Converter 1 entspricht einem beliebigen DC-DC-Converter 1 der vorbeschriebenen Figuren 1 bis 34, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

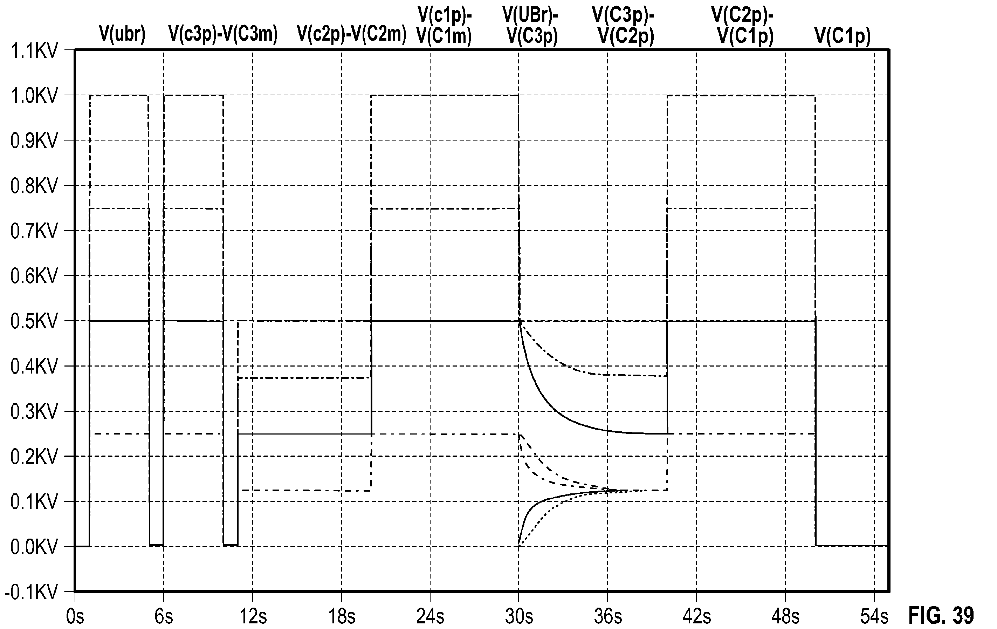

Figur 39 zeigt ein Simulationsergebnis der Schaltung aus Fig. 38 mit der Brückenspannung V(U_Br) und Spannungen an den Flying Caps. Wie man sieht, wird hier die Spannung an den Transistoren wirksam auf < 1/n der Brückenspannung begrenzt. Dies gilt auch bei lastfreiem Mittelanschluss. Allerdings erreichen die Flying Caps bei lastfreiem Mittelanschluss ihre Sollspannung nicht mehr so schnell.

Die vorstehend beschriebenen Anlaufschaltungen können auch für mehrere Flying-Capacitor-Multilevel-Halbbrücken gleichzeitig verwendet werden, sofern diese die gleiche Anzahl Level aufweisen, oder ggf. auch ein ganzzahliges Vielfaches der Anzahl von Levels, und mit der gleichen Brückenspannung verbunden sind. In diesem Fall ist für jede Verbindung zu einem Flying Capacitor eine eigene Diode vorzusehen. Zudem ist die Kapazität der Anlaufkondensatoren entsprechend größer zu dimensionieren, um alle angeschlossenen Flying Capacitors bestimmungsgemäß aufzuladen.

Bei Verwendung einer Vollbrücke, bestehend aus zwei identisch aufgebauten Flying-Capacitor-Multilevel-Halbbrücken, sind die gemeinsam genutzten Anlaufkondensatoren mit wenigstens der doppelten Kapazität zu dimensionieren, wie für eine Multilevel-Halbbrücke.

Diese Anlaufschaltungen laden die Flying Capacitors beim Anlegen von Spannung an die Brückenspannung oder den Mittelanschluss schnell soweit auf ihre Sollspannung auf, so dass im nachfolgenden Betrieb die zulässige Sperrspannung an den Schalttransistoren der Multilevel-Halbbrücke nicht überschritten wird.

Auch bei Last am Mittelanschluss ist bei entsprechender Dimensionierung der Anlaufkondensatoren ein sicheres Einschalten möglich. Auch bei Spannungszufuhr über den Mittelanschluss ist bei entsprechender Dimensionierung der Anlaufkondensatoren ein sicheres Einschalten möglich. Auch bei

Spannungsunterbrechungen ist bei entsprechender Dimensionierung der Anlaufkondensatoren und dem Einsatz von Entladedioden ein sicheres Wiedereinschalten möglich. Eine Anlaufschaltung kann für mehrere Halbbrücken verwendet werden, solange diese mit der gleichen Brückenspannung verbunden sind.

Alternativ zu den mit Bezug auf die Figuren 29 bis 39 gezeigten Anlaufschaltungen mit Anlaufkondensatoren, die über Dioden mit den Flying Caps verbunden sind, kann auch eine aktive Anlaufschaltung mit Transistoren realisiert werden. Hierbei fließt der Ladestrom für die Flying Caps über Transistoren bzw. Anlauftransistoren und nicht direkt über die Anlaufkondensatoren.

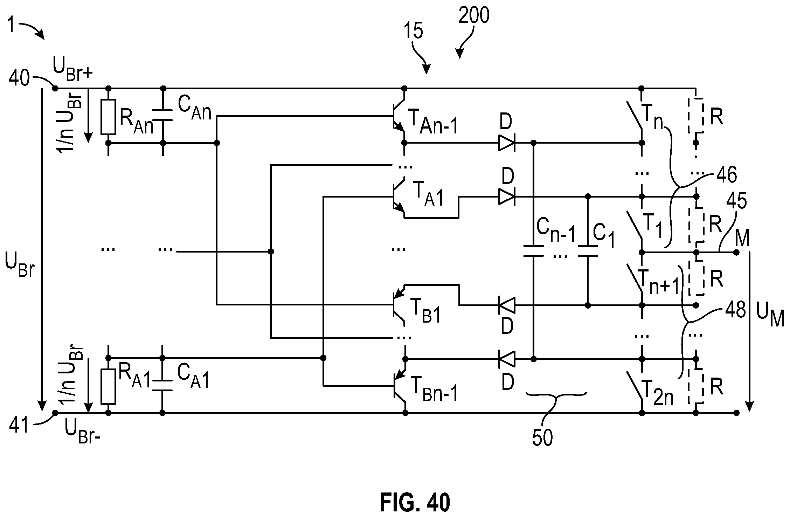

Fig. 40 zeigt eine mögliche Ausführung einer solchen aktiven Anlaufschaltung, nämlich eine Flying-Capacitor-Multilevel-Halbbrücke mit Spannungsbegrenzung für Flying Caps, bei der der Ladestrom für die Flying Caps über Transistoren bzw. Anlauftransistoren fließt und nicht über die Anlaufkondensatoren, wie in den in den Figuren 29 bis 39 gezeigten Anlaufschaltungen.

Der DC-DC-Converter 1 entspricht einem beliebigen DC-DC-Converter 1 der vorbeschriebenen Figuren 1 bis 39, für die Beschreibung des Aufbaus der Anlaufschaltung 200 unwesentliche Bauteile sind vorhanden, aber in der Darstellung in der Figur weggelassen, insbesondere der LLC-Abschnitt, der Transformator, die primäre Resonanzinduktivität, und der bzw. die Transformatorkondensatoren. Man sieht den Mittelanschluss 45, die Flying-Capacitor-Multilevel-Halbbrücke 15, den oberen Schalterzweig 46, den unteren Schalterzweig 48 und die Flying Capacitors 50 bzw. Flying Caps 50.

Die Anlauftransistoren T_A1 bis T_An-1 und T_B1 bis T_Bn-1 werden von der Steuer- und Überwachungseinheit 10 angesteuert. Die Anlauftransistoren T_A1 bis T_An-1 und T_B1 bis T_Bn-1 begrenzen hierbei die Spannung an Transistoren der Halbbrücke auf jeweils 1/n der Brückenspannung U_Br, solange die Flying Caps nicht über die Sollspannung aufgeladen werden. Dies funktioniert auch, wenn über den Mittenanschluss M der Halbbrücke eine Spannung eingespeist wird.

Die optionalen Kondensatoren C_A1 bis C_An können auch entfallen, unterstützen aber die Anlauftransistoren beim schnelleren Schalten, so dass die Spannungen an den Schalttransistoren wirkungsvoller begrenzt werden.

Die Anlauftransistoren können als NPN- und PNP-Transistoren, als entsprechende Darlington-Transistoren oder N-Kanal- und P-Kanal-MOSFETS ausgeführt werden.

Die Anlauftransistoren können entweder alle jeweils direkt mit der positiven bzw. negativen Brückenspannung verbunden werden oder auch eine Kette bilden, bei der nur der oberste bzw. unterste Anlauftransistor jeweils mit der positiven bzw. negativen Brückenspannung verbunden ist und alle weiteren Anlauftransistoren jeweils zwischen Kollektor und Emitter bzw. Drain und Source miteinander in Serie verbunden sind. Der Vorteil dieser Reihenschaltung ist, dass die Anlauftransistoren dann nur eine kleinere Spannungsfestigkeit von nur 1 / n * U_Br aufweisen müssen.

Durch die Verwendung der Anlauftransistoren braucht der Ladestrom für die Flying Caps nicht mehr über die Anlaufkondensatoren fließen, wodurch diese kleiner dimensioniert oder sogar ganz entfallen können.

Um beim schnellen Einschalten und bei steilen Rampen der Brückenspannung den notwendigen Strom zum schnellen Laden der Flying Capacitors zu liefern und trotzdem die Spannungsteilerkette (aus $R_A$) möglichst hochohmig ausführen zu können, ist der Einsatz von Darlington-Transistoren, die sich durch einen höheren Stromverstärkungsfaktor auszeichnen, zweckmäßig oder der Einsatz von je zwei hintereinander geschalteten Anlauftransistoren.

Die Anlauftransistoren T_A1 bis T_An-1 und T_B1 bis T_Bn-1 begrenzen hierbei die Spannung an Transistoren der Halbbrücke auf jeweils 1/n der Brückenspannung U_Br, solange die Flying Caps nicht über die Sollspannung aufgeladen werden.

Dies funktioniert auch, wenn über den Mittenanschluss M der Halbbrücke eine Spannung eingespeist wird.

Die Kondensatoren C_A1 bis C_An können theoretisch auch entfallen, dienen aber dazu, dass die Anlauftransistoren schneller schalten und somit die Spannung an den Schalttransistoren wirkungsvoller begrenzt werden.

Die Anlauftransistoren werden als NPN- und PNP-Transistoren, als entsprechende Darlington-Transistoren oder N-Kanal- und P-Kanal-MOSFETS ausgeführt.

Die Anlauftransistoren können entweder alle direkt mit der positiven bzw. negativen Brückenspannung verbunden werden oder eine Kette bilden, bei der nur der oberste bzw. unterste Anlauftransistor jeweils mit der positiven bzw. negativen Brückenspannung verbunden ist und alle weiteren jeweils zwischen Kollektor und Emitter bzw. Drain und Source. Der Vorteil dieser Reihenschaltung ist, dass die Anlauftransistoren eine kleinere Spannungsfestigkeit von nur 1 / n * U_Br aufweisen müssen.

Durch die Verwendung der Anlauftransistoren fließt der Ladestrom für die Flying Caps nicht mehr über die Anlaufkondensatoren, wodurch diese kleiner dimensioniert oder theoretisch sogar, wie zuvor dargestellt, entfallen können. Nachteil der aktiven Anlaufschaltung ist, dass durch den Ladestrom kurzzeitig eine hohe Verlustleistung in den Anlauftransistoren entstehen kann, die diese verarbeiten können müssen.

Um beim schnellen Einschalten und bei steilen Rampen der Brückenspannung den notwendigen Strom zum schnellen Laden der Flying Capacitors zu liefern und trotzdem die Spannungsteilerkette (aus $R_A$) möglichst hochohmig ausführen zu können, ist der Einsatz von Darlington-Transistoren, die sich durch einen höheren Stromverstärkungsfaktor auszeichnen, zweckmäßig oder der Einsatz von je zwei hintereinander geschalteten Anlauftransistoren.

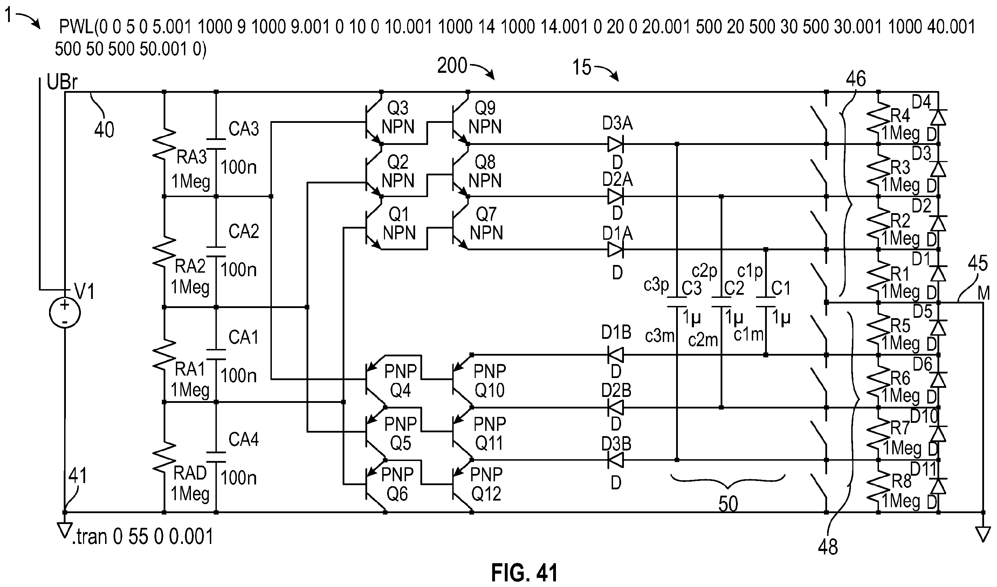

Fig. 41 zeigt ein Beispiel für 5-Level-Flying-Capacitor-Multilevel-Halbbrücke mit aktiver Anlaufschaltung. Betrachtet wird eine Schaltungsauslegung mit je zwei hintereinander geschalteten Anlauftransistoren, und zwar für die Spannungsverläufe an den Flying Caps bei kurzgeschlossenem Mittelanschluss.

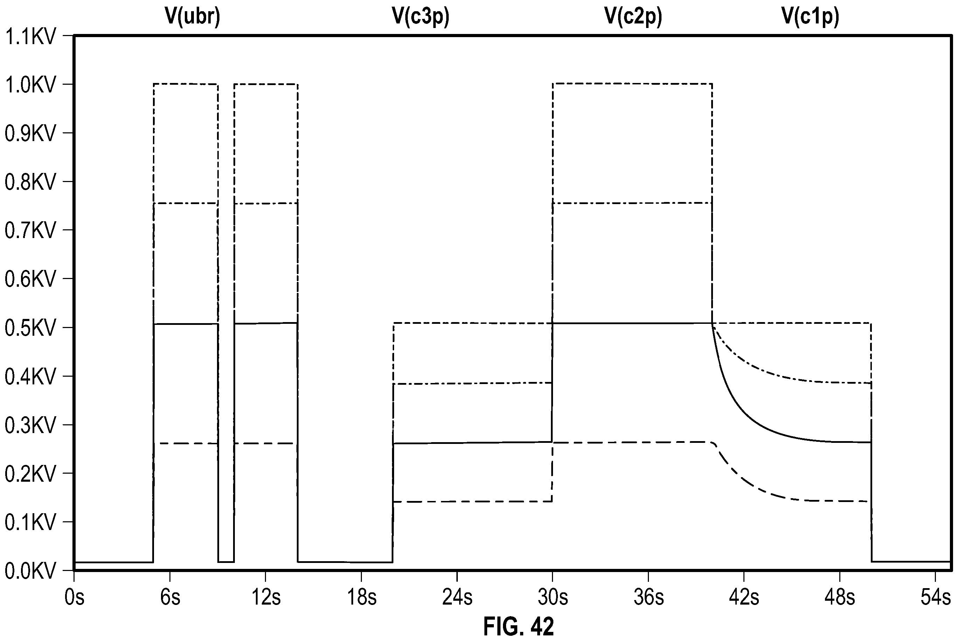

Figur 42 zeigt ein Simulationsergebnis der Schaltung aus Fig. 41, und zwar eine Brückenspannung V(U_Br) und Spannungen an den Flying Caps V(C_1) = V(C_1p), V(C_2) = V(C_2p) und V(C_3) = V(C_3p) bei kurzgeschlossenem Mittelanschluss M.

Wie man sieht, erreicht die Spannung an den Flying Caps auch beim schnellen Einschalten, wie auch beim stufenweisen Einschalten, sehr schnell die jeweilige Sollspannung. Somit ist ein wirksamer Schutz der Schalttransistoren

gegeben.

Diese Anlaufschaltung kann auch für mehrere Flying-Capacitor-Multilevel-Halbbrücken gleichzeitig verwendet werden, sofern diese die gleiche Anzahl Level aufweisen oder auch ein ganzzahliges Vielfaches der Anzahlen an Levels und sofern diese mit der gleichen Brückenspannung verbunden sind.

Auch in diesem Fall ist es vorteilhaft, für jede Verbindung zu einem Flying Capacitor eine eigene Diode vorzusehen.

Die Flying Capacitors werden damit sehr schnell auf eine sichere Betriebsspannung geladen. Auch bei ausgangseitiger Last z.B. am Mittelanschluss ist ein sicheres Einschalten möglich. Auch bei Spannungszufuhr über den Mittelanschluss ist ein sicheres Einschalten möglich. Auch bei Spannungsunterbrechungen ist ein sicheres Wiedereinschalten möglich. Durch die Reihenschaltung der Anlauftransistoren müssen diese eine geringere Spannungsfestigkeit von $1/n * U\_Br$ aufweisen. Eine Anlaufschaltung kann für mehrere Halbbrücken verwendet werden, solange diese mit der gleichen Brückenspannung verbunden sind und die Anzahl Level kompatibel ist.

Figur 1 zeigt einen DC-DC-Converter 1 zur Spannungskonvertierung und unidirektionalen oder bidirektionalen Energieübertragung. Der DC-DC-Converter verfügt über einen positiven Brückenanschluss 40 und einen negativen Brückenanschluss 41 sowie über einen ersten Ausgangsanschluss 42 und einen zweiten Ausgangsanschluss 43. Ein Transformator 21 zur Energieübertragung und galvanischen Trennung ist ebenfalls vorhanden. Der Transformator 21 hat mindestens eine Primärwicklung 22 auf der Primärseite 2 und mindestens eine Sekundärwicklung 23 auf der Sekundärseite 3. Die Primärwicklung 22 hat einen ersten Primärwicklungsanschluss 31 und einen zweiten Primärwicklungsanschluss 32, während die Sekundärwicklung 23 einen ersten Sekundärwicklungsanschluss 33 und einen zweiten Sekundärwicklungsanschluss 34 aufweist. Bei zwei Sekundärwicklungen, wie in Figur 1 dargestellt, gibt es auch einen dritten Sekundärwicklungsanschluss 35 und vierten Sekundärwicklungsanschluss 36 an der zweiten Sekundärwicklung 24.

Eine Flying-Capacitor-Multilevel-Halbbrücke 15 sorgt auf der Primärseite 2 des Transformators 21 für eine Wechselspannung. Die Flying-Capacitor-Multilevel-Halbbrücke 15 hat einen Mittelanschluss 45, einen vom Mittelanschluss 45 ausgehenden oberen Schalterzweig 46 mit mehreren oberen Schaltern und einen vom Mittelanschluss 45 ausgehenden unteren Schalterzweig 48 mit mehreren unteren Schaltern. Optional sind parallel zu den Schaltern Widerstände geschaltet. Eine Steuer- und Überwachungseinheit 10 betätigt die oberen und unteren Schalter. Dies wird in den Figuren durch gestrichelte Linien verdeutlicht. Zusätzlich gibt es eine Vielzahl von symmetrisch zum Mittelanschluss 45 angeordneten Flying Capacitors 50.

Symmetrisch angeordnet heißt, dass ein Flying Capacitor C_1 wie in Figur 1 gezeigt von dem vom Mittelanschluss 45 wegweisenden Kontakt des Schalters T_1 zu dem vom Mittelanschluss 45 wegweisenden Kontakt des Schalters T_n+1 reicht, während der Mittelanschluss 45 mit den beiden anderen Kontakten des Schalters T_1 und des Schalters T_n+1 verbunden ist. Ein Flying Capacitor C_2 reicht von dem vom Mittelanschluss 45 wegweisenden Kontakt des Schalters T_2 zu dem vom Mittelanschluss 45 wegweisenden Kontakt des Schalters T_n+2, während die beiden anderen Kontakte der Schalter T_2 und T_n+2 mit den vom Mittelanschluss 45 wegweisenden Kontakten des Schalters T_1 und des Schalters T_n+1 verbunden sind. Das gilt auch für alle anderen Schalter und Flying Capacitors, bis zum Flying Capacitor C_n-1, der vom zum Mittelanschluss 45 hinweisenden Kontakt des Schalters T_n zu dem zum Mittelanschluss 45 hinweisenden Kontakt des Schalters T_2n reicht, während die beiden anderen Kontakte der Schalter T_n und T_2n mit den vom Mittelanschluss 45 wegweisenden Kontakten des Schalters T_n-1 und des Schalters T_2n-1 verbunden sind.

Der DC-DC-Converter 1 umfasst wenigstens eine Primärinduktivität 27 als Resonanzinduktivität auf der Primärseite 2, die in Reihe mit der wenigstens einen Primärwicklung 22 geschaltet ist. Dies dient insbesondere zur Realisierung von Zero-Voltage-Switching der Schalttransistoren der Multilevel-Halbbrücke. Die Primärinduktivität 27 kann auch als Streuinduktivität des Transformators 21 ausgeführt werden. Ein erster Transformatorkondensator 29 ist auf der Primärseite 2 in Reihe zur Primärwicklung 22 geschaltet, wobei der zweite Primärwicklungsanschluss 32 über die Primärinduktivität 27 mit dem Mittelanschluss 45 verbunden ist. Ein optionaler Glättungskondensator kann zwischen dem ersten Ausgangsanschluss 42 und dem zweiten Ausgangsanschluss 43 vorgesehen sein, um die Spannung auf der Primärseite 2 bzw. Sekundärseite 3 zu glätten.

Auf der Sekundärseite 3 ist zwischen dem ersten Sekundärwicklungsanschluss 33, dem zweiten Sekundärwicklungsanschluss 34, dem dritten Sekundärwicklungsanschluss 35, dem vierten Sekundärwicklungsanschluss 36 sowie dem ersten Ausgangsanschluss 42 und dem zweiten Ausgangsanschluss 43 eine Gleichrichterbaugruppe 70 vorgesehen. Die Ausgangsspannung bzw. der Ausgangsstrom des DC-DC-Converters wird durch Nutzung der verschiedenen Spannungsniveaus der Flying-Capacitor-Multilevel-Halbbrücke 15 und durch Pulsweitenmodulation zwischen diesen Spannungsniveaus eingestellt. Der Spannungsausgleich und die Stromglättung erfolgen durch die Sekundärinduktivität bzw. Speicherdrossel und/oder durch die Primärinduktivität bzw. Resonanzinduktivität.

Der erste Primärwicklungsanschluss 31 ist über den ersten Transformatorkondensator 29 direkt mit dem positiven Brückenanschluss 40 verbunden.

Es sind ein erster Transformatorkondensator 29 und ein zweiter Transformatorkondensator 30 vorgesehen.

Diese sind jeweils auf einer Seite mit der Primärwicklung 22 oder der Primärinduktivität 27 bzw. der Resonanzinduktivität verbunden und jeweils auf der anderen Seite einmal mit dem positiven Brückenanschluss 40 und einmal mit dem negativen Brückenanschluss 41 verbunden.

Zwischen dem positiven Brückenanschluss 40 und dem negativen Brückenanschluss 41 ist zur Stabilisierung der Brückenspannung auf der Primärseite 2 wenigstens ein Kondensator vorgesehen, was in Figur 1 durch die in Reihe geschalteten ersten Transformatorkondensator 29 und zweiten Transformatorkondensator 30 bewirkt wird.

Die Gleichrichterbaugruppe 70 hat für unidirektionalen Betrieb eine passive Gleichrichterschaltung mit einem ersten Einweggleichrichter 71 und einem zweiten Einweggleichrichter 72, die mit jeweils einem Sekundärwicklungsanschluss verbunden sind und abwechselnd betrieben werden, sowie die Sekundärinduktivität als Speicherdrossel zur stufenlosen Regelung der Ausgangsspannung bzw. des Ausgangsstromes.

Der Schaltkreis in Fig. 1 arbeitet wie folgt, um die Spannung U_Br in die Spannung U_A zu konvertieren.

Die Eingangsspannung U_Br wird an den positiven Brückenanschluss 40 und den negativen Brückenanschluss 41 des DC-DC-Converters 1 angelegt. Die primäre Steuer- und Überwachungseinheit 10 steuert die Schalter der Flying-Capacitor-Multilevel-Halbbrücke 15, um eine Wechselspannung zu erzeugen. Diese Wechselspannung wird an den Transformator 21 weitergeleitet, der auf der Primärseite 2 eine Primärwicklung 22 und auf der Sekundärseite 3 eine oder mehrere Sekundärwicklungen 23, 24 hat.

Die Primärwicklung 22 des Transformators 21 ist über den ersten Transformatorkondensator 29 mit dem positiven Brückenanschluss 40 und über die Primärinduktivität 27 mit dem Mittelanschluss 45 verbunden. Die Wechselspannung an der Primärwicklung 22 induziert eine Spannung in den Sekundärwicklungen 23, 24 auf der Sekundärseite 3 des Transformators 21.

Die Sekundärwicklung 23 hat mehrere Anschlüsse, die mit der Gleichrichterbaugruppe 70 verbunden sind. Diese Baugruppe enthält einen ersten Einweggleichrichter 71 und einen zweiten Einweggleichrichter 72, die abwechselnd betrieben werden. Der Gleichrichter wandelt die induzierte Wechselspannung in eine Gleichspannung U_M. Die Sekundärinduktivität 127 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Durch die Pulsweitenmodulation der Flying-Capacitor-Multilevel-Halbbrücke 15 und die verschiedenen Spannungsniveaus der Flying Capacitors 50 kann die Ausgangsspannung U_A präzise gesteuert werden. Der Transformator 21 sorgt dabei für die galvanische Trennung zwischen der Primärseite 2 und der Sekundärseite 3, wodurch eine sichere Energieübertragung gewährleistet wird.

Die in Fig. 2 gezeigte Schaltung entspricht auf der Primärseite vollständig und auf der Sekundärseite teilweise der in Fig. 1 gezeigten Schaltung. Zusammen ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Die primäre Steuer- und Überwachungseinheit 10 steuert die Schalter der Flying-Capacitor-Multilevel-Halbbrücke 15, um eine Wechselspannung zu erzeugen. Diese Wechselspannung wird an den Transformator 21 weitergeleitet, der auf der Primärseite 2 eine Primärwicklung 22 und auf der Sekundärseite 3 eine oder mehrere Sekundärwicklungen 23 hat.

Die Primärwicklung 22 des Transformators 21 ist über den ersten Transformatorkondensator 29 mit dem positiven Brückenanschluss 40 und über die Primärinduktivität 27 mit dem Mittelanschluss 45 verbunden. Die Wechselspannung an der Primärwicklung 22 induziert eine Spannung in den Sekundärwicklungen 23 auf der Sekundärseite 3 des Transformators 21.

Die Sekundärwicklung 23 hat mehrere Anschlüsse, die mit der Gleichrichterbaugruppe 70 verbunden sind. Diese Baugruppe enthält eine Vollbrücke 73, die mit jeweils einem Sekundärwicklungsanschluss verbunden ist. Der Gleichrichter wandelt die induzierte Wechselspannung in eine Gleichspannung um. Die Sekundärinduktivität 128 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Durch die Pulsweitenmodulation der Flying-Capacitor-Multilevel-Halbbrücke 15 und die verschiedenen Spannungsniveaus der Flying Capacitors 50 kann die Ausgangsspannung U_A präzise gesteuert werden. Der Transformator 21 sorgt dabei für die galvanische Trennung zwischen der Primärseite 2 und der Sekundärseite 3, wodurch eine sichere Energieübertragung gewährleistet wird.

Der Schaltkreis in Fig. 2 arbeitet auf der Sekundärseite wie folgt, um die Spannung U_Br in die Spannung U_A zu konvertieren.

Die Wechselspannung, die von der Primärseite erzeugt und durch den Transformator 21 übertragen wird, wird in der Sekundärwicklung 23 induziert. Diese Sekundärwicklung ist auf der Sekundärseite 3 des Transformators 21 angeordnet. Der erste Sekundärwicklungsanschluss 33 und der zweite Sekundärwicklungsanschluss 34 sind mit der Gleichrichterbaugruppe 70 verbunden, die eine passive Gleichrichterschaltung mit einer Vollbrücke 73 enthält.

Die Gleichrichterbaugruppe 70 besteht aus der Vollbrücke 73, die mit den Sekundärwicklungsanschlüssen 33 und 34 verbunden ist. Die Vollbrücke 73 wandelt die induzierte Wechselspannung in eine Gleichspannung U_M. Diese Gleichspannung wird dann durch die Sekundärinduktivität 128 geglättet, die als Speicherdrossel dient. Die Sekundärinduktivität 128 ist zwischen der Gleichrichterbaugruppe 70 und dem Ausgang angeschlossen und reduziert Spannungsspitzen, um eine stabile Gleichspannung zu gewährleisten.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Die in Fig. 3 gezeigte Schaltung entspricht auf der Primärseite teilweise und auf der Sekundärseite vollständig der in Fig. 1 gezeigten Schaltung. Zusammen ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Die primäre Steuer- und Überwachungseinheit 10 steuert die Schalter der Flying-Capacitor-Multilevel-Halbbrücke 15, um eine Wechselspannung zu erzeugen. Die Flying-Capacitor-Multilevel-Halbbrücke 15 hat einen oberen Schalterzweig 46 mit vier oberen Schaltern T_1, T2, T3, T4 und einen unteren Schalterzweig 48 mit vier unteren Schaltern T5, T6, T7, T8 sowie jeweils vier optional parallel zu den Schaltern geschaltete Widerstände R.

Symmetrisch angeordnet bedeutet, dass ein Flying Capacitor C1 vom Mittelanschluss 45 zum vom Mittelanschluss wegweisenden Kontakt des Schalters T_1 bis zum vom Mittelanschluss wegweisenden Kontakt des Schalters T5 reicht, während der Mittelanschluss 45 mit den beiden anderen Kontakten des Schalters T_1 und des Schalters T5 verbunden ist. Ein Flying Capacitor C2 reicht vom Mittelanschluss 45 zum vom Mittelanschluss wegweisenden Kontakt des Schalters T2 bis zum vom Mittelanschluss wegweisenden Kontakt des Schalters T6, während die beiden anderen Kontakte der Schalter T2 und T6 mit den vom Mittelanschluss wegweisenden Kontakten des Schalters T_1 und des Schalters T5 verbunden sind. Das gilt auch für den Flying Capacitor C3, der vom zum Mittelanschluss hinweisenden Kontakt des Schalters T4 bis zum Mittelanschluss hinweisenden Kontakt des Schalters T8 reicht, während die beiden anderen Kontakte der Schalter T4 und T8 mit den vom Mittelanschluss wegweisenden Kontakten des Schalters T3 und des Schalters T7 verbunden sind.

Die Wechselspannung wird an den Transformator 21 weitergeleitet, der auf der Primärseite 2 eine Primärwicklung 22 und auf der Sekundärseite 3 eine oder mehrere Sekundärwicklungen 23, 24 hat. Die Primärwicklung 22 des Transformators 21 ist über den ersten Transformatorkondensator 29 mit dem positiven Brückenanschluss 40 und über die Primärinduktivität 27 mit dem Mittelanschluss 45 verbunden. Die Wechselspannung an der Primärwicklung 22 induziert eine Spannung in den Sekundärwicklungen 23, 24 auf der Sekundärseite 3 des Transformators 21.

Auf der Sekundärseite 3 des Transformators 21 ist die Gleichrichterbaugruppe 70 vorhanden. Diese Baugruppe enthält einen ersten Einweggleichrichter 71 und einen zweiten Einweggleichrichter 72, die abwechselnd betrieben werden. Der Gleichrichter wandelt die induzierte Wechselspannung in eine Gleichspannung U_M. Die Sekundärinduktivität 128 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Durch diese Konfiguration wird die Spannung U_Br auf der Primärseite in eine stabile Gleichspannung U_A auf der Sekundärseite umgewandelt.

Die in Fig. 4 gezeigte Schaltung entspricht auf der Primärseite vollständig der in Fig. 3 gezeigten Schaltung und auf der Sekundärseite vollständig der in Fig. 2 gezeigten Schaltung. Zusammen ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Die primäre Steuer- und Überwachungseinheit 10 steuert die Schalter der Flying-Capacitor-Multilevel-Halbbrücke 15, um eine Wechselspannung zu erzeugen. Die Flying-Capacitor-Multilevel-Halbbrücke 15 hat einen oberen Schalterzweig 46 mit vier oberen Schaltern T_1, T2, T3, T4 und einen unteren Schalterzweig 48 mit vier unteren Schaltern T5, T6, T7, T8 sowie jeweils vier optional parallel zu den Schaltern geschaltete Widerstände R.

Symmetrisch angeordnet bedeutet, dass ein Flying Capacitor C1 vom Mittelanschluss 45 zum vom Mittelanschluss wegweisenden Kontakt des Schalters T_1 bis zum vom Mittelanschluss wegweisenden Kontakt des Schalters T5 reicht, während der Mittelanschluss 45 mit den beiden anderen Kontakten des Schalters T_1 und des Schalters T5 verbunden ist. Ein Flying Capacitor C2 reicht vom Mittelanschluss 45 zum vom Mittelanschluss wegweisenden Kontakt des Schalters T2 bis zum vom Mittelanschluss wegweisenden Kontakt des Schalters T6, während die beiden anderen Kontakte der Schalter T2 und T6 mit den vom Mittelanschluss wegweisenden Kontakten des Schalters T_1 und des Schalters T5 verbunden sind. Das gilt auch für den Flying Capacitor C3, der vom zum Mittelanschluss hinweisenden Kontakt des Schalters T4 bis zum Mittelanschluss hinweisenden Kontakt des Schalters T8 reicht, während die beiden anderen Kontakte der Schalter T4 und T8 mit den vom Mittelanschluss wegweisenden Kontakten des Schalters T3 und des Schalters T7 verbunden sind.

Die Wechselspannung wird an den Transformator 21 weitergeleitet, der auf der Primärseite 2 eine Primärwicklung 22 und auf der Sekundärseite 3 eine oder mehrere Sekundärwicklungen 23 hat. Die Primärwicklung 22 des Transformators 21 ist über den ersten Transformatorkondensator 29 mit dem positiven Brückenanschluss 40 und über die Primärinduktivität 27 mit dem Mittelanschluss 45 verbunden. Die Wechselspannung an der Primärwicklung 22 induziert eine Spannung in den Sekundärwicklungen 23 auf der Sekundärseite 3 des Transformators 21.

Auf der Sekundärseite 3 des Transformators 21 ist die Gleichrichterbaugruppe 70 vorhanden. Diese Baugruppe enthält eine Vollbrücke 73, die mit den Sekundärwicklungsanschlüssen 33 und 34 verbunden ist. Die Vollbrücke 73 wandelt die induzierte Wechselspannung in eine Gleichspannung U_M. Die Sekundärinduktivität 128 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, U_M die Restwelligkeit der Ausgangsspannung weiter zu reduzieren.

Die in Fig. 5 gezeigte Schaltung entspricht auf der Primärseite teilweise der in Fig. 1 gezeigten Schaltung und auf der Sekundärseite vollständig der in Fig. 2 gezeigten Schaltung. Zusammen ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Zwischen dem positiven Brückenanschluss 40 und dem negativen Brückenanschluss 41 ist ein primärer Glättungskondensator 60 zur Stabilisierung der Brückenspannung vorgesehen. In der Leitung vom positiven Brückenanschluss 40 zu einer ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und einer zweiten Flying-Capacitor-Multilevel-Halbbrücke 90. Die Schalter der Flying-Capacitor-Multilevel-Vollbrücke sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 vorgesehen und in Reihe mit der Primärwicklung 22 des Transformators 21 geschaltet. Diese Konfiguration dient insbesondere zur Realisierung von Zero-Voltage-Switching der Schalttransistoren der Multilevel-Halbbrücke. Die Primärinduktivität 27 kann auch als Streuinduktivität des Transformators 21 ausgeführt werden. Ein Transformatorkondensator 29 ist auf der Primärseite 2 in Reihe zur Primärwicklung 22 und zur Primärinduktivität 27 geschaltet.

Die Wechselspannung wird an den Transformator 21 weitergeleitet, der auf der Primärseite 2 eine Primärwicklung 22 und auf der Sekundärseite 3 eine oder mehrere Sekundärwicklungen 23 hat. Der erste Primärwicklungsanschluss 31 ist direkt mit dem zweiten Mittelanschluss 80 verbunden und der zweite Primärwicklungsanschluss 32 ist über die Primärinduktivität 27 und den Transformatorkondensator 29 mit dem ersten Mittelanschluss 45 verbunden.

Auf der Sekundärseite 3 des Transformators 21 ist die Gleichrichterbaugruppe 70 vorhanden. Diese Baugruppe enthält eine Vollbrücke 73, die mit den Sekundärwicklungsanschlüssen 33 und 34 verbunden ist. Die Vollbrücke 73 wandelt die induzierte Wechselspannung in eine Gleichspannung U_M. Die Sekundärinduktivität 128 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Die in Fig. 6 gezeigte Schaltung entspricht auf der Primärseite vollständig der in Fig. 5 gezeigten Schaltung und auf der Sekundärseite vollständig der in Fig. 2 oder Fig. 4 gezeigten Schaltung. Zusammen ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Zwischen dem positiven Brückenanschluss 40 und dem negativen Brückenanschluss 41 ist ein primärer Glättungskondensator 60 zur Stabilisierung der Brückenspannung vorgesehen. In der Leitung vom positiven Brückenanschluss 40 zu einer ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und einer zweiten Flying-Capacitor-Multilevel-Halbbrücke 90. Die Schalter der Flying-Capacitor-Multilevel-Vollbrücke sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 vorgesehen und in Reihe mit der Primärwicklung 22 des Transformators 21 geschaltet. Diese Konfiguration dient insbesondere zur Realisierung von Zero-Voltage-Switching der Schalttransistoren der Multilevel-Halbbrücke. Die Primärinduktivität 27 kann auch als Streuinduktivität des Transformators 21 ausgeführt werden. Ein Transformatorkondensator 29 ist auf der Primärseite 2 in Reihe zur Primärwicklung 22 und zur Primärinduktivität 27 geschaltet.

Die Wechselspannung wird an den Transformator 21 weitergeleitet, der auf der Primärseite 2 eine Primärwicklung 22 und auf der Sekundärseite 3 eine Sekundärwicklung 23 hat. Der erste Primärwicklungsanschluss 31 ist direkt mit dem zweiten Mittelanschluss 80 verbunden und der zweite Primärwicklungsanschluss 32 ist über die Primärinduktivität 27 und den Transformatorkondensator 29 mit dem ersten Mittelanschluss 45 verbunden.

Auf der Sekundärseite 3 des Transformators 21 ist eine Gleichrichterbaugruppe 70 für den unidirektionalen Betrieb vorgesehen. Diese Baugruppe enthält eine Vollbrücke 73, die mit den Sekundärwicklungsanschlüssen 33 und 34 verbunden ist. Die Vollbrücke 73 wandelt die induzierte Wechselspannung in eine Gleichspannung U_M. Die Sekundärinduktivität 128 dient dabei als Speicherdrossel, die den Strom glättet und Spannungsspitzen reduziert.

Die geglättete Gleichspannung wird als Ausgangsspannung U_A an den ersten Ausgangsanschluss 42 und den zweiten Ausgangsanschluss 43 ausgegeben. Ein optionaler Glättungskondensator 160 kann zwischen diesen Anschlüssen vorgesehen sein, um die Restwelligkeit der Ausgangsspannung weiter zu reduzieren.

Die Wechselspannung, die durch die Flying-Capacitor-Multilevel-Vollbrücke auf der Primärseite erzeugt wird, wird durch den Transformator 21 auf die Sekundärseite übertragen. Dort wandelt die Gleichrichterbaugruppe 70 die induzierte Wechselspannung in eine Gleichspannung U_M. Diese Gleichspannung wird durch die sekundäre Glättungsinduktivität 128 und den sekundären Glättungskondensator 160 geglättet, sodass eine stabile Gleichspannung U_A an den Ausgangsanschlüssen 42 und 43 zur Verfügung steht.

Die in Fig. 7 gezeigte Schaltung entspricht auf der Primärseite vollständig der in Fig. 5 und Fig. 6 gezeigten Schaltung. Zusammen mit der Sekundärseite ergeben sie einen DC-DC-Converter 1 zur Spannungskonvertierung und unidirektionalen Energieübertragung.

Die Eingangsspannung U_Br wird an den positiven Brückenanschluss 40 und den negativen Brückenanschluss 41 des DC-DC-Converters 1 angelegt. Zwischen dem positiven Brückenanschluss 40 und dem negativen Brückenanschluss 41 ist ein primärer Glättungskondensator 60 zur Stabilisierung der Brückenspannung vorgesehen. In der Leitung vom positiven Brückenanschluss 40 zu einer ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und einer zweiten Flying-Capacitor-Multilevel-Halbbrücke 90. Die Schalter der Flying-Capacitor-Multilevel-Vollbrücke sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 vorgesehen und in Reihe mit der Primärwicklung 22 des Transformators 21 geschaltet. Diese Konfiguration dient insbesondere zur Realisierung von Zero-Voltage-Switching der Schalttransistoren der Multilevel-Halbbrücke. Die Primärinduktivität 27 kann auch als Streuinduktivität des Transformators 21 ausgeführt werden. Ein Transformatorkondensator 29 ist auf der Primärseite 2 in Reihe zur Primärwicklung 22 und zur Primärinduktivität 27 geschaltet.

Die Wechselspannung wird an den Transformator 21 weitergeleitet, der auf der Primärseite 2 eine Primärwicklung 22 und auf der Sekundärseite 3 eine Sekundärwicklung 23 hat. Der erste Primärwicklungsanschluss 31 ist direkt mit dem zweiten Mittelanschluss 80 verbunden und der zweite Primärwicklungsanschluss 32 ist über die Primärinduktivität 27 und den Transformatorkondensator 29 mit dem ersten Mittelanschluss 45 verbunden.

Auf der Sekundärseite 3 des Transformators 21 ist eine Gleichrichterbaugruppe 70 für den unidirektionalen Betrieb vorgesehen. Diese Baugruppe enthält einen ersten Einweggleichrichter 71 und einen zweiten Einweggleichrichter 72, die in Reihe geschaltet sind. Der Verbindungspunkt von erstem Einweggleichrichter 71 und zweitem Einweggleichrichter 72 ist mit der Sekundärwicklung 23 verbunden. Diese Einweggleichrichter werden abwechselnd betrieben.

Weiterhin sind ein erster Gleichrichtungskondensator 74 und ein zweiter Gleichrichtungskondensator 81 vorgesehen, die jeweils mit dem anderen Anschluss der Sekundärwicklung 23 verbunden sind. Die anderen Anschlüsse des ersten Gleichrichtungskondensators 74 und des zweiten Gleichrichtungskondensators 81 sind jeweils mit der Anode des ersten Einweggleichrichters 71 bzw. mit der Kathode des zweiten Einweggleichrichters 72 verbunden und führen zum ersten Ausgangsanschluss 42 bzw. zum zweiten Ausgangsanschluss 43.

Eine sekundäre Glättungsinduktivität 128 ist in Form einer Speicherdrossel vorgesehen und ist mit dem ersten Ausgangsanschluss 42 verbunden. Sie dient zur stufenlosen Regelung der Ausgangsspannung UA und des Ausgangsstroms.

Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung weiter zu reduzieren.

Die Wechselspannung, die durch die Flying-Capacitor-Multilevel-Vollbrücke auf der Primärseite erzeugt wird, wird durch den Transformator 21 auf die Sekundärseite übertragen. Dort wandelt die Gleichrichterbaugruppe 70 die induzierte Wechselspannung in eine Gleichspannung U_M. Diese Gleichspannung wird durch die sekundäre Glättungsinduktivität 128 und den sekundären Glättungskondensator 160 geglättet, sodass eine Gleichspannung UA an den Ausgangsanschlüssen 42 und 43 zur Verfügung steht.

Die Schaltung in Fig. 7 funktioniert wie folgt, um die Spannung U_Br in die Spannung U_A zu konvertieren und eine unidirektionale Energieübertragung zu ermöglichen.

Die Eingangsspannung U_Br wird an den positiven Brückenanschluss 40 und den negativen Brückenanschluss 41 des DC-DC-Converters 1 angelegt. Ein primärer Glättungskondensator 60 ist zwischen dem positiven Brückenanschluss 40 und dem negativen Brückenanschluss 41 zur Stabilisierung der Brückenspannung vorgesehen. In der Leitung vom positiven Brückenanschluss 40 zu einer ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und einer zweiten Flying-Capacitor-Multilevel-Halbbrücke 90. Die Schalter der Flying-Capacitor-Multilevel-Vollbrücke sind durch gestrichelte Linien verbunden, was die Steuerung durch die Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Diese dient zur Realisierung von Zero-Voltage-Switching der Schalttransistoren der Multilevel-Halbbrücke. Ein Transformatorkondensator 29 ist ebenfalls in Reihe zur Primärwicklung 22 und zur Primärinduktivität 27 geschaltet.

Der erste Primärwicklungsanschluss 31 ist direkt mit dem zweiten Mittelanschluss 80 verbunden. Der zweite Primärwicklungsanschluss 32 ist über die Primärinduktivität 27 und den Transformatorkondensator 29 mit dem ersten Mittelanschluss 45 verbunden. Die Wechselspannung, die von der Primärseite erzeugt wird, wird durch den Transformator 21, der eine Primärwicklung 22 und eine Sekundärwicklung 23 hat, übertragen. Diese Wechselspannung induziert eine Spannung in der Sekundärwicklung 23.

Auf der Sekundärseite 3 des Transformators 21 ist eine Gleichrichterbaugruppe 70 für den unidirektionalen Betrieb vorgesehen. Diese Baugruppe enthält einen ersten Einweggleichrichter 71 und einen zweiten Einweggleichrichter 72, die in Reihe geschaltet sind. Der Verbindungspunkt von erstem Einweggleichrichter 71 und zweitem Einweggleichrichter 72 ist mit der Sekundärwicklung 23 verbunden. Diese Einweggleichrichter werden abwechselnd betrieben.

Weiterhin sind ein erster Gleichrichtungskondensator 74 und ein zweiter Gleichrichtungskondensator 81 vorgesehen, die jeweils mit dem anderen Anschluss der Sekundärwicklung 23 verbunden sind. Die anderen Anschlüsse des ersten Gleichrichtungskondensators 74 und des zweiten Gleichrichtungskondensators 81 sind jeweils mit der Anode des ersten Einweggleichrichters 71 bzw. mit der Kathode des zweiten Einweggleichrichters 72 verbunden und führen zum ersten Ausgangsanschluss 42 bzw. zum zweiten Ausgangsanschluss 43.

Eine sekundäre Glättungsinduktivität 128 ist in Form einer Speicherdrossel vorgesehen und ist mit dem ersten Ausgangsanschluss 42 verbunden. Sie dient zur stufenlosen Regelung der Ausgangsspannung U_A und des Ausgangsstroms.

Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung weiter zu reduzieren.

Die Wechselspannung, die durch die Flying-Capacitor-Multilevel-Vollbrücke auf der Primärseite erzeugt wird, wird durch den Transformator 21 auf die Sekundärseite übertragen. Dort wandelt die Gleichrichterbaugruppe 70 die induzierte Wechselspannung in eine Gleichspannung U_M. Diese Gleichspannung wird durch die sekundäre Glättungsinduktivität 128 und den sekundären Glättungskondensator 160 geglättet, sodass eine stabile Gleichspannung U_A an den Ausgangsanschlüssen 42 und 43 zur Verfügung steht.

Die in Fig. 8 gezeigte Schaltung stellt die Sekundärseite einer Schaltung dar, die mit allen Primärseiten der in den Figuren 1 bis 7 gezeigten Schaltungen kombiniert werden kann, um einen DC-DC-Converter 1 zur Spannungskonvertierung und bidirektionalen Energieübertragung zu erhalten.

Die Sekundärseite 3 umfasst einen Transformator 21, der die Wechselspannung von der Primärseite übernimmt und in die Sekundärwicklung überträgt.

Für den bidirektionalen Betrieb sind ein erster Gleichrichtungsschalter 75 und ein zweiter Gleichrichtungsschalter 76 vorgesehen. Diese Schalter, die als Transistoren ausgeführt sind, sind über gestrichelte Steuerleitungen mit der Steuer- und Überwachungseinheit verbunden und werden abwechselnd betrieben. Der erste Gleichrichtungsschalter 75 ist mit dem ersten Anschluss der ersten Sekundärwicklung 23 des Transformators 21 verbunden. Der zweite Gleichrichtungsschalter 76 ist mit dem ersten Anschluss der zweiten Sekundärwicklung 24 des Transformators 21 verbunden. Die beiden zweiten Anschlüsse der Sekundärwicklungen 23 und 24 sind miteinander verbunden und führen zu einer sekundären Glättungsinduktivität 128, die als Speicherdrossel fungiert. Diese Glättungsinduktivität 128 ist mit dem ersten Ausgangsanschluss 42 verbunden. Sie dient zur stufenlosen Regelung der Ausgangsspannung U_A und des Ausgangsstroms.

Die anderen Anschlüsse des ersten Gleichrichtungsschalters 75 und des zweiten Gleichrichtungsschalters 76 sind miteinander verbunden und führen zum zweiten Ausgangsanschluss 43. Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung weiter zu reduzieren.

Die Wechselspannung, die vom Transformator 21 übertragen wird, wird durch die Gleichrichtungsschalter 75 und 76, die abwechselnd betrieben werden, in eine pulsierende Gleichspannung umgewandelt. Diese pulsierende Gleichspannung wird durch die sekundäre Glättungsinduktivität 128 und den sekundären Glättungskondensator 160 geglättet, sodass eine stabilere Gleichspannung U_A an den Ausgangsanschlüssen 42 und 43 zur Verfügung steht.

Die in Fig. 9 gezeigte Schaltung stellt die Sekundärseite einer Schaltung dar, die mit allen Primärseiten der in den Figuren 1 bis 7 gezeigten Schaltungen kombiniert werden kann, um einen DC-DC-Converter 1 zur Spannungskonvertierung und bidirektionalen Energieübertragung zu erhalten.

Die Sekundärseite 3 umfasst einen Transformator 21, der die Wechselspannung von der Primärseite übernimmt und in die Sekundärwicklung überträgt.

Für den bidirektionalen Betrieb sind vier Gleichrichtungsschalter vorgesehen. Der erste Gleichrichtungsschalter 75 und der zweite Gleichrichtungsschalter 76 sind mit dem ersten Anschluss und dem zweiten Anschluss der Sekundärwicklung 23 des Transformators 21 verbunden und werden abwechselnd betrieben. Der dritte Gleichrichtungsschalter 77 und der vierte Gleichrichtungsschalter 78 sind ebenfalls mit dem ersten Anschluss und dem zweiten Anschluss der Sekundärwicklung 23 des Transformators 21 verbunden und werden abwechselnd betrieben. Diese Schalter, die als Transistoren ausgeführt sein können, sind über gestrichelte Steuerleitungen mit der Steuer- und Überwachungseinheit 10 verbunden.

Die anderen Anschlüsse des ersten Gleichrichtungsschalters 75 und des zweiten Gleichrichtungsschalters 76 sind miteinander verbunden und führen zum zweiten Ausgangsanschluss 43. Die anderen Anschlüsse des dritten Gleichrichtungsschalters 77 und des vierten Gleichrichtungsschalters 78 sind miteinander verbunden und führen zu einer sekundären Glättungsinduktivität 128, die als Speicherdrossel fungiert. Diese Glättungsinduktivität 128 ist mit dem ersten Ausgangsanschluss 42 verbunden. Sie dient zur stufenlosen Regelung der Ausgangsspannung U_A und des Ausgangsstroms.

Zwischen dem ersten Ausgangsanschluss 42 und dem zweiten Ausgangsanschluss 43 ist ein sekundärer Glättungskondensator 160 vorgesehen, um die Restwelligkeit der Ausgangsspannung weiter zu reduzieren.

Die Wechselspannung, die vom Transformator 21 übertragen wird, wird durch die vier Gleichrichtungsschalter 75, 76, 77 und 78, die abwechselnd betrieben werden, in eine pulsierende Gleichspannung umgewandelt. Diese pulsierende Gleichspannung wird durch die sekundäre Glättungsinduktivität 128 und den sekundären Glättungskondensator 160 geglättet, sodass eine stabile Gleichspannung U_A an den Ausgangsanschlüssen 42 und 43 zur Verfügung steht. Durch die gesteuerten Gleichrichtungsschalter wird eine bidirektionale Energieübertragung ermöglicht, wodurch die Schaltung flexibel und vielseitig einsetzbar ist.

Die in Fig. 10 gezeigte Schaltung stellt die Sekundärseite einer Schaltung dar, die mit allen Primärseiten der in den Figuren 1 bis 7 gezeigten Schaltungen kombiniert werden kann, um einen DC-DC-Converter 1 zur Spannungskonvertierung und bidirektionalen Energieübertragung zu erhalten.

Die Sekundärseite 3 umfasst einen Transformator 21, der die Wechselspannung von der Primärseite übernimmt und in die Sekundärwicklung überträgt.

Für den bidirektionalen Betrieb sind zwei Gleichrichtungsschalter vorgesehen: der erste Gleichrichtungsschalter 75 und der zweite Gleichrichtungsschalter 76 sind mit dem ersten Anschluss der Sekundärwicklung 23 des Transformators 21 verbunden und werden abwechselnd betrieben. Diese Schalter, die als Transistoren ausgeführt sein können, sind über gestrichelte Steuerleitungen mit der Steuer- und Überwachungseinheit 10 verbunden.

Am zweiten Anschluss der Sekundärwicklung 23 des Transformators 21 sind ein erster Gleichrichtungskondensator 74 und ein zweiter Gleichrichtungskondensator 81 angeschlossen.

Die anderen Anschlüsse des ersten Gleichrichtungsschalters 75 und des zweiten Gleichrichtungsschalters 76 sind mit den anderen Anschlüssen des ersten Gleichrichtungskondensators 74 bzw. des zweiten Gleichrichtungskondensators 81 sowie mit dem ersten Ausgangsanschluss 42 bzw. mit dem zweiten Ausgangsanschluss 43 verbunden. Der andere Anschluss des ersten Gleichrichtungsschalters 75 ist mit dem ersten Ausgangsanschluss 42 verbunden. Der andere Anschluss des zweiten Gleichrichtungsschalters 76 ist mit einer sekundären Glättungsinduktivität 128 in Form einer Speicherdrossel verbunden, die wiederum mit dem ersten Ausgangsanschluss 42 verbunden ist. Diese Glättungsinduktivität dient zur stufenlosen Regelung der Ausgangsspannung U_A und des Ausgangsstroms.

Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung weiter zu reduzieren.

Die Wechselspannung, die vom Transformator 21 übertragen wird, wird durch die zwei Gleichrichtungsschalter 75 und 76, die abwechselnd betrieben werden, in eine pulsierende Gleichspannung umgewandelt. Diese pulsierende Gleichspannung wird durch die sekundäre Glättungsinduktivität 128 und den sekundären Glättungskondensator 160 geglättet, sodass eine stabile Gleichspannung U_A an den Ausgangsanschlüssen 42 und 43 zur Verfügung steht. Durch die gesteuerten Gleichrichtungsschalter wird eine bidirektionale Energieübertragung ermöglicht, wodurch die Schaltung flexibel und vielseitig einsetzbar ist.

Die in Fig. 11 gezeigte Schaltung entspricht sowohl auf der Primärseite als auch auf der Sekundärseite jeweils vollständig den Primärseiten der in den Fig. 5, 6 und 7 gezeigten Schaltungen. Zusammen ergeben sie einen DC-DC-Converter 1 zur Spannungskonvertierung und bidirektionalen Energieübertragung. Dazu sind die primäre Steuer- und Überwachungseinheit 10 und die sekundäre Steuer- und Überwachungseinheit 110 über eine Steuerleitung 100 in gestrichelter Linie miteinander verbunden.

Die Eingangsspannung U_Br1 wird an den positiven Brückenanschluss 40 und den negativen Brückenanschluss 41 der Primärseite 2 des DC-DC-Converters 1 angelegt. Ein primärer Glättungskondensator 60 ist zwischen dem positiven Brückenanschluss 40 und dem negativen Brückenanschluss 41 zur Stabilisierung der Brückenspannung vorgesehen.

In der Leitung vom positiven Brückenanschluss 40 zur ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und einer zweiten Flying-Capacitor-Multilevel-Halbbrücke 90. Die Schalter der Flying-Capacitor-Multilevel-Vollbrücke sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Diese dient zur Realisierung von Zero-Voltage-Switching der Schalttransistoren der Multilevel-Halbbrücke. Ein Transformatorkondensator 29 ist ebenfalls in Reihe zur Primärwicklung 22 und zur Primärinduktivität 27 geschaltet.

Der erste Primärwicklungsanschluss 31 ist direkt mit dem zweiten Mittelanschluss 80 verbunden. Der zweite Primärwicklungsanschluss 32 ist über die Primärinduktivität 27 und den Transformatorkondensator 29 mit dem ersten Mittelanschluss 45 verbunden. Die Sekundärseite 3 des Transformators 21 übernimmt die Wechselspannung von der Primärseite und überträgt sie in die Sekundärwicklungen 23 und 24.

Eine sekundäre Resonanzinduktivität 127 und ein sekundärer Transformatorkondensator 129 sind in Reihe mit der Sekundärwicklung 23 geschaltet.

Die sekundäre Steuer- und Überwachungseinheit 110 steuert die Schalter der sekundären Flying-Capacitor-Multilevel-Vollbrücke, bestehend aus einer ersten sekundären Flying-Capacitor-Multilevel-Halbbrücke 115 und einer zweiten sekundären Flying-Capacitor-Multilevel-Halbbrücke 190. Die Schalter der Flying-Capacitor-Multilevel-Vollbrücke sind durch gestrichelte Linien verbunden, was die Steuerung durch die sekundäre Steuer- und Überwachungseinheit 110 verdeutlicht.

Eine sekundäre Glättungsinduktivität 128 ist zwischen der Sekundärwicklung und dem ersten Ausgangsanschluss 42 vorgesehen. Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung zu reduzieren.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Wechselspannung, die durch die Flying-Capacitor-Multilevel-Vollbrücke auf der Primärseite 2 erzeugt wird, wird durch den Transformator 21 auf die Sekundärseite 3 übertragen. Dort wandelt die Schaltung die induzierte Wechselspannung in eine Gleichspannung U_M. Diese Gleichspannung wird durch die sekundäre Glättungsinduktivität 128 und den sekundären Glättungskondensator 160 geglättet, sodass eine stabile Gleichspannung U_A2 an den Ausgangsanschlüssen 42 und 43 zur Verfügung steht. Durch die Steuerleitung 100 wird eine koordinierte Steuerung zwischen der Primär- und Sekundärseite ermöglicht, wodurch die Schaltung flexibel und vielseitig einsetzbar ist.

Die Schaltung in Fig. 11 ermöglicht die Spannungskonvertierung und bidirektionale Energieübertragung durch eine Kombination von Primär- und Sekundärseiten, die jeweils aus Flying-Capacitor-Multilevel-Halbbrücken, Induktivitäten, Kondensatoren und einer Steuer- und Überwachungseinheit bestehen. Hier ist die Funktionsweise im Detail.

Die Eingangsspannung U_Br1 wird an den positiven Brückenanschluss 40 und den negativen Brückenanschluss 41 der Primärseite 2 des DC-DC-Converters 1 angelegt.

Ein primärer Glättungskondensator 60 ist zwischen dem positiven Brückenanschluss 40 und dem negativen Brückenanschluss 41 zur Stabilisierung der Brückenspannung vorgesehen. In der Leitung vom positiven Brückenanschluss 40 zur ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke. Diese besteht aus der ersten Flying-Capacitor-Multilevel-Halbbrücke 15 und der zweiten Flying-Capacitor-Multilevel-Halbbrücke 90. Die Schalter sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Diese dient zur Realisierung von Zero-Voltage-Switching der Schalttransistoren der Multilevel-Halbbrücke. Ein Transformatorkondensator 29 ist ebenfalls in Reihe zur Primärwicklung 22 und zur Primärinduktivität 27 geschaltet.

Der erste Primärwicklungsanschluss 31 ist direkt mit dem zweiten Mittelanschluss 80 verbunden. Der zweite Primärwicklungsanschluss 32 ist über die Primärinduktivität 27 und den Transformatorkondensator 29 mit dem ersten Mittelanschluss 45 verbunden.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23, 24.

Eine sekundäre Resonanzinduktivität 127 und ein sekundärer Transformatorkondensator 129 sind in Reihe mit der Sekundärwicklung 23 geschaltet.

Die sekundäre Steuer- und Überwachungseinheit 110 steuert die Schalter der sekundären Flying-Capacitor-Multilevel-Vollbrücke. Diese besteht aus der ersten sekundären Flying-Capacitor-Multilevel-Halbbrücke 115 und der zweiten sekundären Flying-Capacitor-Multilevel-Halbbrücke 190. Die Schalter sind durch gestrichelte Linien verbunden, was die Steuerung durch die sekundäre Steuer- und Überwachungseinheit 110 verdeutlicht.

Eine sekundäre Glättungsinduktivität 128 ist zwischen der Sekundärwicklung und dem ersten Ausgangsanschluss 42 vorgesehen. Ein sekundärer Glättungskondensator 160 ist zwischen dem ersten Ausgangsanschluss 42 und dem zweiten Ausgangsanschluss 43 vorgesehen, um die Restwelligkeit der Ausgangsspannung zu reduzieren.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Wechselspannung, die durch die Flying-Capacitor-Multilevel-Vollbrücke auf der Primärseite 2 erzeugt wird, wird durch den Transformator 21 auf die Sekundärseite 3 übertragen. Dort wird die induzierte Wechselspannung durch die Schaltung in eine Gleichspannung umgewandelt. Diese Gleichspannung wird durch die sekundäre Glättungsinduktivität 128 und den sekundären Glättungskondensator 160 geglättet, sodass eine stabile Gleichspannung U_A2 an den Ausgangsanschlüssen 42 und 43 zur Verfügung steht. Die Steuerleitung 100 ermöglicht eine koordinierte Steuerung zwischen der Primär- und Sekundärseite, wodurch die Schaltung flexibel und vielseitig einsetzbar ist.

Die in Fig. 12 gezeigte Schaltung entspricht auf der Primärseite vollständig den Primärseiten der in den Fig. 5, 6 und 7 gezeigten Schaltungen. Auf der Sekundärseite entspricht die in Fig. 12 gezeigte Schaltung fast vollständig den in den Fig. 1 und 2 gezeigten Schaltungen, wobei zusätzlich ein sekundärer Glättungskondensator 160 zwischen dem sekundären positiven Brückenanschluss 42 und dem sekundären negativen Brückenanschluss 43 vorgesehen ist.

Zusammen mit der Sekundärseite ergibt die Primärseite einen DC-DC-Converter 1 zur Spannungskonvertierung und bidirektionalen Energieübertragung. Dazu sind die primäre Steuer- und Überwachungseinheit 10 und die sekundäre Steuer- und Überwachungseinheit 110 über eine Steuerleitung 100 in gestrichelter Linie miteinander verbunden.

Die Eingangsspannung U_Br1 wird an den positiven Brückenanschluss 40 und den negativen Brückenanschluss 41 der Primärseite 2 des DC-DC-Converters 1 angelegt.

Ein primärer Glättungskondensator 60 ist zwischen dem positiven Brückenanschluss 40 und dem negativen Brückenanschluss 41 zur Stabilisierung der Brückenspannung vorgesehen. In der Leitung vom positiven Brückenanschluss 40 zur ersten Flying-Capacitor-Multilevel-Halbbrücke 15 ist eine primäre Glättungsinduktivität 28 vorgesehen.

Die primäre Steuer- und Überwachungseinheit 10 steuert die Schalter der Flying-Capacitor-Multilevel-Vollbrücke, bestehend aus der ersten Flying-Capacitor-Multilevel-Halbbrücke 15 und der zweiten Flying-Capacitor-Multilevel-Halbbrücke 90. Die Schalter der Flying-Capacitor-Multilevel-Vollbrücke sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Diese dient zur Realisierung von Zero-Voltage-Switching der Schalttransistoren der Multilevel-Halbbrücke. Ein Transformatorkondensator 29 ist ebenfalls in Reihe zur Primärwicklung 22 und zur Primärinduktivität 27 geschaltet.

Der erste Primärwicklungsanschluss 31 ist direkt mit dem zweiten Mittelanschluss 80 verbunden. Der zweite Primärwicklungsanschluss 32 ist über die Primärinduktivität 27 und den Transformatorkondensator 29 mit dem ersten Mittelanschluss 45 verbunden.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23, 24.

Eine sekundäre Resonanzinduktivität 127 und ein sekundärer Transformatorkondensator 129 sind in Reihe mit der Sekundärwicklung 23 geschaltet.

Die sekundäre Steuer- und Überwachungseinheit 110 steuert die Schalter der sekundären Flying-Capacitor-Multilevel-Vollbrücke, bestehend aus einer ersten sekundären Flying-Capacitor-Multilevel-Halbbrücke 115 und einer zweiten sekundären Flying-Capacitor-Multilevel-Halbbrücke 190. Die Schalter sind durch gestrichelte Linien verbunden, was die Steuerung durch die sekundäre Steuer- und Überwachungseinheit 110 verdeutlicht.

Zusätzlich zu den in den Figuren 1 und 2 gezeigten Schaltungen ist ein sekundärer Glättungskondensator 160 zwischen dem sekundären positiven Brückenanschluss 42 und dem sekundären negativen Brückenanschluss 43 vorgesehen. Dieser Kondensator dient zur Stabilisierung der Ausgangsspannung.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Wechselspannung, die durch die Flying-Capacitor-Multilevel-Vollbrücke auf der Primärseite 2 erzeugt wird, wird durch den Transformator 21 auf die Sekundärseite 3 übertragen. Dort wird die induzierte Wechselspannung durch die Schaltung in eine Gleichspannung umgewandelt. Diese Gleichspannung wird durch die sekundäre Resonanzinduktivität 127, den sekundären Transformatorkondensator 129 und den sekundären Glättungskondensator 160 geglättet, sodass eine stabile Gleichspannung U_Br2 an den Ausgangsanschlüssen 42 und 43 zur Verfügung steht. Die Steuerleitung 100 ermöglicht eine koordinierte Steuerung zwischen der Primär- und Sekundärseite, wodurch die Schaltung flexibel und vielseitig einsetzbar ist.

Die Schaltung in Fig. 12 ermöglicht die bidirektionale Spannungskonvertierung und Energieübertragung durch eine Kombination aus Primär- und Sekundärseiten, die jeweils aus Flying-Capacitor-Multilevel-Halbbrücken, Induktivitäten, Kondensatoren und Steuer- und Überwachungseinheiten bestehen. Hier ist die Funktionsweise im Detail.

Die Eingangsspannung U_Br1 wird an den positiven Brückenanschluss 40 und den negativen Brückenanschluss 41 der Primärseite 2 des DC-DC-Converters 1 angelegt.

Ein primärer Glättungskondensator 60 stabilisiert die Brückenspannung zwischen dem positiven Brückenanschluss 40 und dem negativen Brückenanschluss 41. Eine primäre Glättungsinduktivität 28 ist in der Leitung vom positiven Brückenanschluss 40 zur ersten Flying-Capacitor-Multilevel-Halbbrücke 15 vorgesehen.

Die primäre Steuer- und Überwachungseinheit 10 steuert die Schalter der Flying-Capacitor-Multilevel-Vollbrücke, die aus der ersten Flying-Capacitor-Multilevel-Halbbrücke 15 und der zweiten Flying-Capacitor-Multilevel-Halbbrücke 90 besteht. Die Schalter sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Zwei Transformatorkondensatoren, der erste Transformatorkondensator 29 und der zweite Transformatorkondensator 30, sind ebenfalls in Reihe zur Primärwicklung 22 geschaltet. Der erste Primärwicklungsanschluss 31 ist direkt mit dem Mittelanschluss 45 verbunden, der zweite Primärwicklungsanschluss 32 über die Primärinduktivität 27 und die Transformatorkondensatoren 29 und 30.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23, 24.

Die sekundäre Steuer- und Überwachungseinheit 110 steuert die Schalter der sekundären Flying-Capacitor-Multilevel-Halbbrücke 115. Diese Halbbrücke besteht aus einem oberen Schalterzweig und einem unteren Schalterzweig, die mit den Flying Capacitors 50 verbunden sind.

Eine sekundäre Resonanzinduktivität 127 und zwei Transformatorkondensatoren 129 sind in Reihe mit der Sekundärwicklung 23 geschaltet. Der erste Sekundärwicklungsanschluss 33 ist direkt mit dem Mittelanschluss 145 verbunden. Der zweite Sekundärwicklungsanschluss 34 ist über die sekundäre Resonanzinduktivität 127 und die Transformatorkondensatoren 129 mit dem Mittelanschluss 145 verbunden.

Zusätzlich zu den in den Figuren 1 und 2 gezeigten Schaltungen ist ein sekundärer Glättungskondensator 160 zwischen dem sekundären positiven Brückenanschluss 42 und dem sekundären negativen Brückenanschluss 43 vorgesehen.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Schaltung in Fig. 12 funktioniert durch die kooperative Steuerung von Primär- und Sekundärseiten. Die primäre Seite 2 wandelt die Eingangsspannung U_Br1 mittels der Flying-Capacitor-Multilevel-Halbbrücke 15 und der Steuer- und Überwachungseinheit 10 in eine Wechselspannung um. Diese Wechselspannung wird durch den Transformator 21 auf die Sekundärseite 3 übertragen.

Auf der Sekundärseite 3 wird die Wechselspannung durch die sekundäre Flying-Capacitor-Multilevel-Halbbrücke 115 und die Steuer- und Überwachungseinheit 110 in eine Gleichspannung U_Br2 umgewandelt. Diese Gleichspannung wird durch die sekundäre Resonanzinduktivität 127, die Transformatorkondensatoren 129 und den sekundären Glättungskondensator 160 geglättet. Die Steuerleitung 100 sorgt für eine koordinierte Steuerung zwischen der Primär- und Sekundärseite, was eine effiziente und flexible bidirektionale Energieübertragung ermöglicht.

Die Schaltung in Fig. 12 ermöglicht die bidirektionale Spannungskonvertierung und Energieübertragung durch eine Kombination aus Primär- und Sekundärseiten, die jeweils aus Flying-Capacitor-Multilevel-Halbbrücken, Induktivitäten, Kondensatoren und Steuer- und Überwachungseinheiten bestehen. Hier ist die Funktionsweise im Detail.

Die Eingangsspannung U_Br1 wird an den positiven Brückenanschluss 40 und den negativen Brückenanschluss 41 der Primärseite 2 des DC-DC-Converters 1 angelegt.

Ein primärer Glättungskondensator 60 stabilisiert die Brückenspannung zwischen dem positiven Brückenanschluss 40 und dem negativen Brückenanschluss 41. Eine primäre Glättungsinduktivität 28 ist in der Leitung vom positiven Brückenanschluss 40 zur ersten Flying-Capacitor-Multilevel-Halbbrücke 15 vorgesehen.

Die primäre Steuer- und Überwachungseinheit 10 steuert die Schalter der Flying-Capacitor-Multilevel-Vollbrücke, die aus der ersten Flying-Capacitor-Multilevel-Halbbrücke 15 und der zweiten Flying-Capacitor-Multilevel-Halbbrücke 90 besteht. Die Schalter sind durch gestrichelte Linien verbunden, was die Steuerung durch die primäre Steuer- und Überwachungseinheit 10 verdeutlicht.

Eine Primärinduktivität 27 ist als Resonanzinduktivität auf der Primärseite 2 in Reihe mit der Primärwicklung 22 des Transformators 21 geschaltet. Zwei Transformatorkondensatoren, der erste Transformatorkondensator 29 und der zweite Transformatorkondensator 30, sind ebenfalls in Reihe zur Primärwicklung 22 geschaltet. Der erste Primärwicklungsanschluss 31 ist direkt mit dem Mittelanschluss 45 verbunden, der zweite Primärwicklungsanschluss 32 über die Primärinduktivität 27 und die Transformatorkondensatoren 29 und 30.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23, 24.

Die sekundäre Steuer- und Überwachungseinheit 110 steuert die Schalter der sekundären Flying-Capacitor-Multilevel-Halbbrücke 115. Diese Halbbrücke besteht aus einem oberen Schalterzweig und einem unteren Schalterzweig, die mit den Flying Capacitors 50 verbunden sind.

Eine sekundäre Resonanzinduktivität 127 und zwei Transformatorkondensatoren 129 sind in Reihe mit der Sekundärwicklung 23 geschaltet. Der erste Sekundärwicklungsanschluss 33 ist direkt mit dem Mittelanschluss 145 verbunden. Der zweite Sekundärwicklungsanschluss 34 ist über die sekundäre Resonanzinduktivität 127 und die Transformatorkondensatoren 129 mit dem Mittelanschluss 145 verbunden.

Zusätzlich zu den in den Figuren 1 und 2 gezeigten Schaltungen ist ein sekundärer Glättungskondensator 160 zwischen dem sekundären positiven Brückenanschluss 42 und dem sekundären negativen Brückenanschluss 43 vorgesehen.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Schaltung in Fig. 12 funktioniert durch die kooperative Steuerung von Primär- und Sekundärseiten. Die primäre Seite 2 wandelt die Eingangsspannung U_Br1 mittels der Flying-Capacitor-Multilevel-Halbbrücke 15 und der Steuer- und Überwachungseinheit 10 in eine Wechselspannung um. Diese Wechselspannung wird durch den Transformator 21 auf die Sekundärseite 3 übertragen.

Auf der Sekundärseite 3 wird die Wechselspannung durch die sekundäre Flying-Capacitor-Multilevel-Halbbrücke 115 und die Steuer- und Überwachungseinheit 110 in eine Gleichspannung U_Br2 umgewandelt. Diese Gleichspannung wird durch die sekundäre Resonanzinduktivität 127, die Transformatorkondensatoren 129 und den sekundären Glättungskondensator 160 geglättet. Die Steuerleitung 100 ermöglicht eine koordinierte Steuerung zwischen der Primär- und Sekundärseite, was eine effiziente und flexible bidirektionale Energieübertragung ermöglicht.

Die Schaltung in Fig. 13 ermöglicht die bidirektionale Spannungskonvertierung und Energieübertragung durch eine Kombination aus Primär- und Sekundärseiten, die jeweils aus Flying-Capacitor-Multilevel-Halbbrücken, Induktivitäten, Kondensatoren und Steuer- und Überwachungseinheiten bestehen. Hier ist die Funktionsweise im Detail.

Die Eingangsspannung U_Br1 wird an den positiven Brückenanschluss 40 und den negativen Brückenanschluss 41 der Primärseite 2 des DC-DC-Converters 1 angelegt.

Die primäre Steuer- und Überwachungseinheit 10 steuert die Schalter der Flying-Capacitor-Multilevel-Halbbrücke 15. Diese Halbbrücke besteht aus einem oberen Schalterzweig und einem unteren Schalterzweig, die mit den Flying Capacitors 50 verbunden sind.

Eine Primärinduktivität 27 ist als Resonanzinduktivität auf der Primärseite 2 in Reihe mit der Primärwicklung 22 des Transformators 21 geschaltet. Ein erster Transformatorkondensator 29 und ein zweiter Transformatorkondensator 30 sind ebenfalls in Reihe zur Primärwicklung 22 geschaltet. Der erste Primärwicklungsanschluss 31 ist direkt mit dem Mittelanschluss 45 verbunden, der zweite Primärwicklungsanschluss 32 über die Primärinduktivität 27 und die Transformatorkondensatoren 29 und 30.

Die Wechselspannung, die von der Primärseite 2 erzeugt wird, wird durch den Transformator 21 auf die Sekundärseite 3 übertragen. Der Transformator hat Primärwicklungen 22 und zwei Sekundärwicklungen 23, 24.

Die sekundäre Steuer- und Überwachungseinheit 110 steuert die Schalter der sekundären Flying-Capacitor-Multilevel-Halbbrücke 115. Diese Halbbrücke besteht aus einem oberen Schalterzweig und einem unteren Schalterzweig, die mit den Flying Capacitors 50 verbunden sind.

Eine sekundäre Resonanzinduktivität 127 und zwei Transformatorkondensatoren 129 sind in Reihe mit der Sekundärwicklung 23 geschaltet. Der erste Sekundärwicklungsanschluss 33 ist direkt mit dem Mittelanschluss 145 verbunden. Der zweite Sekundärwicklungsanschluss 34 ist über die sekundäre Resonanzinduktivität 127 und die Transformatorkondensatoren 129 mit dem Mittelanschluss 145 verbunden.

Ein sekundärer Glättungskondensator 160 ist zwischen dem sekundären positiven Brückenanschluss 42 und dem sekundären negativen Brückenanschluss 43 vorgesehen.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Schaltung in Fig. 13 funktioniert durch die kooperative Steuerung von Primär- und Sekundärseiten. Die primäre Seite 2 wandelt die Eingangsspannung U_Br1 mittels der Flying-Capacitor-Multilevel-Halbbrücke 15 und der Steuer- und Überwachungseinheit 10 in eine Wechselspannung um. Diese Wechselspannung wird durch den Transformator 21 auf die Sekundärseite 3 übertragen.

Auf der Sekundärseite 3 wird die Wechselspannung durch die sekundäre Flying-Capacitor-Multilevel-Halbbrücke 115 und die Steuer- und Überwachungseinheit 110 in eine Gleichspannung U_Br2 umgewandelt. Diese Gleichspannung wird durch die sekundäre Resonanzinduktivität 127, die Transformatorkondensatoren 129 und den sekundären Glättungskondensator 160 geglättet. Die Steuerleitung 100 sorgt für eine koordinierte Steuerung zwischen der Primär- und Sekundärseite, was eine effiziente und flexible bidirektionale Energieübertragung ermöglicht.

Die in Fig. 14 gezeigte Schaltung entspricht sowohl auf der Primärseite als auch auf der Sekundärseite jeweils vollständig den Primärseiten der in den Fig. 3 und 4 gezeigten Schaltungen. Zusammen ergeben sie einen DC-DC-Converter 1 zur Spannungskonvertierung und bidirektionalen Energieübertragung. Dazu sind die primäre Steuer- und Überwachungseinheit 10 und die sekundäre Steuer- und Überwachungseinheit 110 über eine Steuerleitung 100 in gestrichelter Linie miteinander verbunden.

Die Eingangsspannung U_Br1 wird an den positiven Brückenanschluss 40 und den negativen Brückenanschluss 41 der Primärseite 2 des DC-DC-Converters 1 angelegt.

Die primäre Steuer- und Überwachungseinheit 10 steuert die Schalter der Flying-Capacitor-Multilevel-Halbbrücke 15. Diese Halbbrücke besteht aus einem oberen Schalterzweig 46 und einem unteren Schalterzweig 48, die mit den Flying Capacitors 50 verbunden sind.

Eine Primärinduktivität 27 ist als Resonanzinduktivität auf der Primärseite 2 in Reihe mit der Primärwicklung 22 des Transformators 21 geschaltet. Ein erster Transformatorkondensator 29 und ein zweiter Transformatorkondensator 30 sind ebenfalls in Reihe zur Primärwicklung 22 geschaltet. Der erste Primärwicklungsanschluss 31 ist direkt mit dem Mittelanschluss 45 verbunden, der zweite Primärwicklungsanschluss 32 über die Primärinduktivität 27 und die Transformatorkondensatoren 29 und 30.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23, 24.

Die sekundäre Steuer- und Überwachungseinheit 110 steuert die Schalter der sekundären Flying-Capacitor-Multilevel-Halbbrücke 115. Diese Halbbrücke besteht aus einem oberen Schalterzweig und einem unteren Schalterzweig, die mit den Flying Capacitors 50 verbunden sind.

Eine sekundäre Resonanzinduktivität 127 und zwei Transformatorkondensatoren 129 sind in Reihe mit der Sekundärwicklung 23 geschaltet. Der erste Sekundärwicklungsanschluss 33 ist direkt mit dem Mittelanschluss 145 verbunden. Der zweite Sekundärwicklungsanschluss 34 ist über die sekundäre Resonanzinduktivität 127 und die Transformatorkondensatoren 129 mit dem Mittelanschluss 145 verbunden.

Ein sekundärer Glättungskondensator 160 ist zwischen dem sekundären positiven Brückenanschluss 42 und dem sekundären negativen Brückenanschluss 43 vorgesehen.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Schaltung in Fig. 14 funktioniert durch die kooperative Steuerung von Primär- und Sekundärseiten. Die primäre Seite 2 wandelt die Eingangsspannung U_Br1 mittels der Flying-Capacitor-Multilevel-Halbbrücke 15 und der Steuer- und Überwachungseinheit 10 in eine Wechselspannung um. Diese Wechselspannung wird durch den Transformator 21 auf die Sekundärseite 3 übertragen.

Auf der Sekundärseite 3 wird die Wechselspannung durch die sekundäre Flying-Capacitor-Multilevel-Halbbrücke 115 und die Steuer- und Überwachungseinheit 110 in eine Gleichspannung U_Br2 umgewandelt. Diese Gleichspannung wird durch die sekundäre Resonanzinduktivität 127, die Transformatorkondensatoren 129 und den sekundären Glättungskondensator 160 geglättet. Die Steuerleitung 100 sorgt für eine koordinierte Steuerung zwischen der Primär- und Sekundärseite, was eine effiziente und flexible bidirektionale Energieübertragung ermöglicht.

Die Schaltung in Fig. 14 ermöglicht die bidirektionale Spannungskonvertierung und Energieübertragung durch eine Kombination von Primär- und Sekundärseiten, die jeweils aus Flying-Capacitor-Multilevel-Halbbrücken, Induktivitäten, Kondensatoren und Steuer- und Überwachungseinheiten bestehen. Hier ist die Funktionsweise im Detail.

Die Eingangsspannung U_Br1 wird an den positiven Brückenanschluss 40 und den negativen Brückenanschluss 41 der Primärseite 2 des DC-DC-Converters 1 angelegt.

Ein primärer Glättungskondensator 60 stabilisiert die Brückenspannung zwischen dem positiven Brückenanschluss 40 und dem negativen Brückenanschluss 41. Eine primäre Glättungsinduktivität 28 ist in der Leitung vom positiven Brückenanschluss 40 zur ersten Flying-Capacitor-Multilevel-Halbbrücke 15 vorgesehen.

Die primäre Steuer- und Überwachungseinheit 10 steuert die Schalter der Flying-Capacitor-Multilevel-Halbbrücke 15. Diese Halbbrücke besteht aus einem oberen Schalterzweig 46 und einem unteren Schalterzweig 48, die mit den Flying Capacitors 50 verbunden sind.

Eine Primärinduktivität 27 ist als Resonanzinduktivität auf der Primärseite 2 in Reihe mit der Primärwicklung 22 des Transformators 21 geschaltet. Zwei Transformatorkondensatoren, der erste Transformatorkondensator 29 und der zweite Transformatorkondensator 30, sind ebenfalls in Reihe zur Primärwicklung 22 geschaltet. Der erste Primärwicklungsanschluss 31 ist direkt mit dem Mittelanschluss 45 verbunden. Der zweite Primärwicklungsanschluss 32 ist über die Primärinduktivität 27 und die Transformatorkondensatoren 29 und 30 mit dem Mittelanschluss 45 verbunden.

Die Wechselspannung, die von der Primärseite 2 erzeugt wird, wird durch den Transformator 21 auf die Sekundärseite 3 übertragen. Der Transformator hat Primärwicklungen 22 und Sekundärwicklungen 23 und 24.

Die sekundäre Steuer- und Überwachungseinheit 110 steuert die Schalter der sekundären Flying-Capacitor-Multilevel-Halbbrücke 115. Diese Halbbrücke besteht aus einem oberen Schalterzweig und einem unteren Schalterzweig, die mit den Flying Capacitors 50 verbunden sind.

Eine sekundäre Resonanzinduktivität 127 und zwei Transformatorkondensatoren 129 sind in Reihe mit der Sekundärwicklung 23 geschaltet. Der erste Sekundärwicklungsanschluss 33 ist direkt mit dem Mittelanschluss 145 verbunden. Der zweite Sekundärwicklungsanschluss 34 ist über die sekundäre Resonanzinduktivität 127 und die Transformatorkondensatoren 129 mit dem Mittelanschluss 145 verbunden.

Ein sekundärer Glättungskondensator 160 ist zwischen dem sekundären positiven Brückenanschluss 42 und dem sekundären negativen Brückenanschluss 43 vorgesehen.

Die primäre Steuer- und Überwachungseinheit 10 und die sekundäre Steuer- und Überwachungseinheit 110 sind über eine Steuerleitung 100 in gestrichelter Linie miteinander verbunden, was eine synchronisierte Steuerung der gesamten Schaltung ermöglicht.

Die Eingangsspannung U_Br1 wird an den primären positiven Brückenanschluss 40 und den primären negativen Brückenanschluss 41 angelegt. Die primäre Steuer- und Überwachungseinheit 10 steuert die Schalter der Flying-Capacitor-Multilevel-Halbbrücke 15, um eine Wechselspannung zu erzeugen. Diese Wechselspannung wird durch die Primärinduktivität 27 und die Transformatorkondensatoren 29 und 30 gefiltert, bevor sie in die Primärwicklung 22 des Transformators 21 eingespeist wird.

Der Transformator 21 überträgt die Wechselspannung von der Primärseite 2 auf die Sekundärseite 3. Die Spannung wird dabei auf ein geeignetes Niveau transformiert.

Auf der Sekundärseite 3 wird die durch den Transformator 21 übertragene Wechselspannung durch die sekundäre Flying-Capacitor-Multilevel-Halbbrücke 115 in eine Gleichspannung U_Br2 umgewandelt. Die sekundäre Steuer- und Überwachungseinheit 110 steuert die Schalter der Halbbrücke, um die Wechselspannung zu gleichrichten. Die geglättete Gleichspannung wird durch die sekundäre Resonanzinduktivität 127 und die Transformatorkondensatoren 129 weiter gefiltert. Ein sekundärer Glättungskondensator 160 sorgt zusätzlich für die Glättung der Ausgangsspannung.

Die primäre Steuer- und Überwachungseinheit 10 und die sekundäre Steuer- und Überwachungseinheit 110 sind über eine Steuerleitung 100 in gestrichelter Linie miteinander verbunden. Diese Verbindung ermöglicht eine koordinierte Steuerung und Synchronisation zwischen der Primär- und Sekundärseite, was eine effiziente und flexible bidirektionale Energieübertragung gewährleistet.

Durch diese kooperative Steuerung und die Kombination von Komponenten auf der Primär- und Sekundärseite ermöglicht die Schaltung in Fig. 14 eine effiziente und zuverlässige Spannungsumwandlung sowie eine bidirektionale Energieübertragung.

Die Offenbarung ist auch durch die folgenden Merkmalskombinationen zu den Stichworten "Zero Voltage Switching" und "Zero Current Switching" umfasst, die mit den Merkmalskombinationen der abhängigen und unabhängigen Patentansprüche kombiniert werden können.

Aufzählungspunkt 1: Verfahren zum Erreichen von Zero Voltage Switching (ZVS) in einem DC-DC-Converter (1), mit den folgenden Merkmalen.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten

Sekundärwicklungsanschluss (33) und einen zweiten Sekundärwicklungsanschluss (34) aufweist,

- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,

- wenigstens eine Primärinduktivität (27) auf der Primärseite (2), die in Reihe mit der wenigstens einen Primärwicklung (22) und/oder in Reihe mit der wenigstens einen Sekundärinduktivität (28) auf der Sekundärseite (3) und/oder in Reihe mit der Sekundärwicklung (23) geschaltet ist,

- wenigstens einen Transformatorkondensator (30), der auf der Primärseite (2) in Reihe zur Primärwicklung (22) und/oder zur Primärinduktivität (27) geschaltet ist,

und wobei der zweite Primärwicklungsanschluss (32) direkt, oder über die Primärinduktivität (27) und/oder über den Transformatorkondensator (30) mit dem Mittelanschluss (45) verbunden ist,
Steuern der Schaltvorgänge der Schalter der Flying-Capacitor-Multilevel-Halbbrücke (115) so anzupassen, dass die Spannung über den Schaltern nahe Null ist [um Zero Voltage Switching (ZVS) zu erreichen];

Aufzählungspunkt 2: Verfahren nach Aufzählungspunkt 1, ferner umfassend die Nutzung einer ohnehin vorhandenen Streuinduktivität des Transformators als Primärinduktivität (27).

Aufzählungspunkt 3: Verfahren nach Aufzählungspunkt 1 oder 2, ferner umfassend die Nutzung ohnehin vorhandenen Streukapazität des Transformators als Transformatorkondensator (30).

Die Offenbarung ist auch durch die folgenden Merkmalskombinationen zum Stichwort "Pulsweitenmodulation" umfasst, die mit den Merkmalskombinationen der abhängigen und unabhängigen Patentansprüche sowie mit den Merkmalskombinationen zu den Stichworten "Zero Voltage Switching" und "Zero Current Switching" kombiniert werden können.

Aufzählungspunkt 1: Verfahren zur Pulsweitenmodulation in einem Gleichspannungswandler mit einer Flying-Capacitor-Multilevel-Halbbrücke, wobei die Flying-Capacitor-Multilevel-Halbbrücke mehrere Schalter und eine Mehrzahl von Flying Capacitors umfasst, das Verfahren umfassend die Schritte:

[Bereitstellen einer vorgegebenen Anzahl von Schaltzuständen für die Schalter der Flying-Capacitor-Multilevel-Halbbrücke, wobei jeder Schaltzustand einer spezifischen Spannung am Mittelanschluss der Halbbrücke entspricht]
Durchführen einer Pulsweitenmodulation durch Ansteuern der Schalter in einer vorbestimmten Reihenfolge, um zwischen mindestens zwei Spannungsniveaus am Mittelanschluss der Flying-Capacitor-Multilevel-Halbbrücke umzuschalten;
Variieren der Dauer der Schaltzustände, um die Ausgangsspannung oder den Ausgangsstrom zu regeln, [wobei die Summe der Dauer der Schaltzustände innerhalb eines Schaltzyklus konstant bleibt];
Überwachen der Ladung der Flying Capacitors [während des Schaltvorgangs] und Anpassen der Schaltzustände. [, um ein Gleichgewicht der Ladungen der Flying Capacitors zu gewährleisten.]
[Pulsweitenmodulation verwendet wird, um die stufige Ausgangsspannung der Flying-Capacitor-Multilevel-Halbbrücke des DC-Wandlers stufenlos oder nahezu stufenlos zu regeln, wobei die Dauer der Schaltzustände durch ein Steuergerät überwacht und angepasst wird, um die Ausgangsspannung oder den Ausgangsstrom des Gleichspannungswandlers stabil zu halten, auch bei Lastschwankungen.]

Aufzählungspunkt 2: Verfahren nach Aufzählungspunkt 1, wobei die Pulsweitenmodulation so durchgeführt wird, dass die Anzahl der Schaltvorgänge zwischen den verschiedenen Spannungsniveaus so verkleinert wird, dass Schaltverluste reduziert sind.

Aufzählungspunkt 3: Verfahren nach Aufzählungspunkt 1 oder Aufzählungspunkt 2, wobei innerhalb eines Schaltzyklus die Schalter der Flying-Capacitor-Multilevel-Halbbrücke in einer symmetrischen Reihenfolge betrieben werden, um die gleichmäßige Ladung und Entladung der Flying Capacitors zu gewährleisten.

Aufzählungspunkt 4. Verfahren nach einem der Aufzählungspunkte 1 bis 3, wobei die Pulsweitenmodulation so durchgeführt wird, dass die Schalter in einem Blockmuster gesteuert werden, wobei jeder Block eine spezifische Sequenz von Schaltzuständen umfasst, die zur Erreichung einer Zielspannung verwendet wird.

Aufzählungspunkt 5: Verfahren nach Aufzählungspunkt 4, wobei die Schaltzustände in einer festen Reihenfolge wiederholt werden, solange die Ausgangsspannung innerhalb eines bestimmten Bereichs bleibt, und die Reihenfolge geändert wird, wenn eine neue Zielspannung erforderlich ist.

Die Offenbarung ist auch durch die folgenden Merkmalskombinationen zum Stichwort "Anlaufschaltung mit Anlaufkondensatoren und optionalen Anlauftransistoren" umfasst, die mit den Merkmalskombinationen der abhängigen und unabhängigen Patentansprüche sowie mit den Merkmalskombinationen zu den Stichworten "Zero Voltage Switching", "Zero Current Switching" oder "Pulsweitenmodulation" kombiniert werden können.

Aufzählungspunkt 1: DC-DC-Converter (1), mit den folgenden Merkmalen.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- eine Gleichrichterbaugruppe (70) auf der Sekundärseite (3) zwischen dem ersten Sekundärwicklungsanschluss (33), dem zweiten Sekundärwicklungsanschluss (34) sowie dem ersten Ausgangsanschluss (42) und dem zweiten Ausgangsanschluss (43),
- eine Anlaufschaltung (200) mit Anlaufdioden (201), die einen Ladestrom vom positiven Brückenanschluss (40) und vom negativen Brückenanschluss (41) zu den Flying Capacitors (50) leiten, wobei die Anlaufdioden (201) jeweils in Reihe mit einem Anlaufkondensator verbunden sind, und mit jeweils einem Anlaufspannungsteiler zur Aufladung je eines Anlaufkondensators.

Aufzählungspunkt 2: DC-DC-Converter (1) nach Aufzählungspunkt 1, wobei positive Anlaufkondensatoren (202) vorgesehen sind, die über die Anlaufdioden (201) mit positiven Anschlüssen der entsprechenden Flying Capacitors (50) verbunden sind, und wobei negative Anlaufkondensatoren (203) vorgesehen sind, die über Anlaufdioden (201) mit negativen Anschlüssen der entsprechenden Flying Capacitors (50) verbunden sind.

Aufzählungspunkt 3: DC-DC-Converter (1) nach Aufzählungspunkt 1 oder Aufzählungspunkt 2, wobei die Anlaufspannungsteiler mehrere Widerstände aufweisen, die teilweise in Reihe mit den jeweiligen Anlaufkondensatoren und teilweise parallel zu diesen geschaltet sind.

Aufzählungspunkt 4: DC-DC-Converter (1) nach einem der Aufzählungspunkte 1 bis 3, wobei für zwei Anlaufkondensatoren ein gemeinsamer Spannungsteiler vorgesehen ist.

Aufzählungspunkt 5: DC-DC-Converter (1) nach einem der Aufzählungspunkte 1 bis 4, wobei wenigstens zwei Anlaufkondensatoren in Serie geschaltet sind.

Aufzählungspunkt 6: DC-DC-Converter (1) nach einem der Aufzählungspunkte 1 bis 5, wobei Flying Caps Reverse-Dioden D_T an den Schalttransistoren vorgesehen sind, die auch Teil der Schalttransistoren sein können.

Aufzählungspunkt 7: DC-DC-Converter (1) nach einem der Aufzählungspunkte 1 bis 6, wobei zwischen je einem Schalter und je einem Anlaufkondensator wenigstens ein Anlauftransistor vorgesehen ist, der von der Steuer- und Überwachungseinheit 10 ansteuerbar ist.

Die Offenbarung ist auch durch die folgenden Merkmalskombinationen zum Stichwort "Anlaufschaltung mit Anlauftransistoren" umfasst, die mit den Merkmalskombinationen der abhängigen und unabhängigen Patentansprüche sowie mit den Merkmalskombinationen zu den Stichworten "Zero Voltage Switching", "Zero Current Switching", "Pulsweitenmodulation" oder "Anlaufschaltung mit Anlaufkondensatoren und optionalen Anlauftransistoren" kombiniert werden können.

Aufzählungspunkt 1: DC-DC-Converter (1), mit den folgenden Merkmalen.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- eine Gleichrichterbaugruppe (70) auf der Sekundärseite (3) zwischen dem ersten Sekundärwicklungsanschluss (33),

dem zweiten Sekundärwicklungsanschluss (34) sowie dem ersten Ausgangsanschluss (42) und dem zweiten Ausgangsanschluss (43),

- eine Anlaufschaltung (200) mit Anlaufdioden (201), die einen Ladestrom vom positiven Brückenanschluss (40) und vom negativen Brückenanschluss (41) zu den Flying Capacitors (50) leiten, wobei die Anlaufdioden (201) jeweils in Reihe mit einem Anlauftransistor verbunden sind, und mit jeweils einem Anlaufspannungsteiler zur Aufladung je eines Anlaufkondensators.

Aufzählungspunkt 2: DC-DC-Converter (1) nach Aufzählungspunkt 1, wobei positive die Anlauftransistoren als NPN- und PNP-Transistoren, als Darlington-Transistoren, als N-Kanal- MOSFETS und/oder als P-Kanal-MOSFETS ausgeführt sind.

Aufzählungspunkt 3: DC-DC-Converter (1) nach Aufzählungspunkt 1 oder Aufzählungspunkt 2, wobei die Anlaufspannungsteiler mehrere Widerstände aufweisen, die teilweise in Reihe mit den jeweiligen Anlauftransistoren und teilweise parallel zu diesen geschaltet sind.

Aufzählungspunkt 4: DC-DC-Converter (1) nach einem der Aufzählungspunkte 1 bis 3, wobei für zwei Anlauftransistoren ein gemeinsamer Spannungsteiler vorgesehen ist.

Aufzählungspunkt 5: DC-DC-Converter (1) nach einem der Aufzählungspunkte 1 bis 4, wobei wenigstens zwei Anlauftransistoren in Serie geschaltet sind.

Aufzählungspunkt 6: DC-DC-Converter (1) nach einem der Aufzählungspunkte 1 bis 5, wobei Flying Caps Reverse-Dioden D_T an den Schalttransistoren vorgesehen sind, die auch Teil der Schalttransistoren sein können.

Aufzählungspunkt 7: DC-DC-Converter (1) nach einem der Aufzählungspunkte 1 bis 6, wobei zwischen je einem Schaltern und je einem Anlauftransistor wenigstens ein Anlaufkondensator vorgesehen ist.

Nachfolgend werden weitere Merkmale strukturiert wiedergegeben. Diese können sowohl einzeln wie auch in Kombination und in Kombination mit anderen hierin offenbarten Merkmalen verwendet werden.

1. DC-DC-Converter zur Spannungskonvertierung und unidirektionalen oder bidirektionalen Energieübertragung, dadurch gekennzeichnet, dass

a) ein Transformator zur Energieübertragung und galvanischen Trennung eingesetzt wird mit mindestens einer Primär- und mindestens einer Sekundärwicklung,

b) eine Flying-Capacitor-Multilevel-Halbbrücke zur Ansteuerung des Transformators auf der Seite 1 (Primärseite) eingesetzt wird,

c) mindestens eine Induktivität als Resonanzinduktivität auf der Seite 1 oder Seite 2 (Primär- und/oder Sekundärseite) in Reihe zur Wicklung des Transformators zur Realisierung von Zero-Voltage-Switching der Schalttransistoren der Multilevel-Halbbrücke eingesetzt wird, wobei diese Induktivität auch als Streuinduktivität des Transformators ausgeführt werden kann,

d) mindestens jeweils ein Kondensator (Trafokondensator) auf der Seite 1 (Primärseite) des Transformators in Reihe zur Wicklung oder der Resonanzinduktivität eingesetzt wird, wobei bei zwei Trafokondensatoren beide auf einer Seite mit der Wicklung oder der Resonanzinduktivität und auf der anderen Seite einmal mit der positiven und einmal mit der negativen Brückenspannung verbunden sind,

e) ein Wicklungsanschluss auf der Seite 1 (Primärseite) des Transformators über diesen Trafokondensator und/oder die Resonanzinduktivität oder direkt mit der positiven oder negativen Brückenspannung verbunden ist bzw. bei Verwendung von zwei Trafokondensatoren mit der positiven und der negativen Brückenspannung,

f) der andere Wicklungsanschluss auf der Seite 1 (Primärseite) des Transformators entweder direkt oder über die Resonanzinduktivität und/oder den Trafokondensator mit dem Mittelanschluss der Multilevel-Halbbrücke verbunden ist,

g) die Brückenspannung auf der Seite 1 (Primärseite) durch mindestens einen Kondensator stabilisiert wird, der auch durch zwei in Reihe geschaltete Kondensatoren (Trafokondensatoren) ausgeführt werden kann,

h) auf der Seite 2 (Sekundärseite) des Transformators wahlweise

- für den unidirektionalen Betrieb eine (passive oder aktive) Gleichrichterschaltung mit zwei Einweggleichrichtern, die mit jeweils einer Trafowicklung verbunden sind und abwechselnd betrieben werden, sowie eine Speicherdrossel zur stufenlosen Regelung der Ausgangsspannung bzw. des Ausgangsstromes zum Einsatz kommen, oder
- für den unidirektionalen Betrieb eine (passive oder aktive) Gleichrichterschaltung mit einer Vollbrücke sowie einer Speicherdrossel zur stufenlosen Regelung der Ausgangsspannung bzw. des Ausgangsstromes zum Einsatz kommen, oder
- für den unidirektionalen Betrieb eine (passive oder aktive) Gleichrichterschaltung mit zwei Einweggleichrichtern, die mit einer Trafowicklung verbunden sind und abwechselnd betrieben werden sowie mind.

einem Kondensator, der mit dem anderen Anschluss der Trafowicklung auf der Ausgangsseite verbunden ist, zum Einsatz kommen, oder

- für den bidirektionalen Betrieb zwei Transistoren, die mit jeweils einer Trafowicklung verbunden sind und abwechselnd betrieben werden, sowie eine Speicherdrossel zur stufenlosen Regelung der Ausgangsspannung bzw. des Ausgangsstromes zum Einsatz kommen,
- für den bidirektionalen Betrieb eine Vollbrücke mit vier Transistoren und eine Speicherdrossel zur stufenlosen Regelung der Ausgangsspannung bzw. des Ausgangsstromes Betrieb zum Einsatz kommen,
- für den bidirektionalen Betrieb zwei Transistoren, die mit einer gemeinsamen Trafowicklung und einmal der positiven Brückenspannung und einmal der negativen Brückenspannung verbunden sind und abwechselnd schalten werden sowie mind. einem Kondensator, der mit dem anderen Anschluss der Trafowicklung verbunden ist, zum Einsatz kommen

i) ein Kondensator zur Glättung der Spannung auf Seite 2 (Sekundärseite) zum Einsatz kommt,

j) die Ausgangsspannung bzw. der Ausgangsstrom des DC-DC-Converters durch Nutzung der verschiedenen Spannungsniveaus der Flying-Capacitor-Multilevel-Halbbrücke und Pulsweitenmodulation zwischen diese Spannungsniveaus eingestellt wird (wobei der Spannungsausgleich und die Stromglättung durch die Speicherdrossel und/oder die Resonanzinduktivität erfolgt).

2. DC-DC-Converter zur Spannungskonvertierung und unidirektionalen oder bidirektionalen Energieübertragung nach Aufzählungspunkt 1 , dadurch gekennzeichnet, dass

a) statt einer Flying-Capacitor-Multilevel-Halbbrücken zwei Flying-Capacitor-Multilevel-Halbbrücken als Vollbrücke zur Ansteuerung des Transformators auf der Seite 1 (Primärseite) eingesetzt werden,

b) die Trafowicklung auf der Seite 1 (Primärseite) in Reihe zu der Resonanzinduktivität sowie typischerweise in Reihe zu einem Kondensator (Trafokondensator oder Resonanzkondensator) zwischen den Mittelanschlüssen der Vollbrücke angeschlossen wird, wobei der Kondensator bei idealer symmetrischen Ansteuerung durch die Halbbrücke auch entfallen kann,

c) eine (ggf. zusätzliche und ggf. schaltbare, d.h. überbrückbare) Speicherdrossel zur Regelung der Ausgangsspannung bzw. des Ausgangsstromes auch auf der Seite 1 (Primärseite) zwischen der Multilevel-Vollbrücke und dem eingangsseitigen Glättungskondensator eingesetzt werden kann, wenn diese Multilevel-Vollbrücke nicht im Multilevel-Betrieb eingesetzt wird.

3. DC-DC-Converter zur Spannungskonvertierung und bidirektionalen Energieübertragung, dadurch gekennzeichnet, dass

a) ein Transformator zur Energieübertragung und galvanischen Trennung eingesetzt wird mit mindestens einer Primär- und mindestens einer Sekundärwicklung,

b) auf Seite 1 und Seite 2 (Primär- und Sekundärseite) jeweils eine Flying-Capacitor-Multilevel-Vollbrücke bestehend aus zwei Flying-Capacitor-Multilevel-Halbbrücken eingesetzt wird,

c) mindestens eine Induktivität als Resonanzinduktivität auf Seite 1 und/oder Seite 2 in Reihe zur Wicklung des Transformators zur Realisierung von Zero-Voltage-Switching der Schalttransistoren der Multilevel-Halbbrücke eingesetzt wird, wobei diese Induktivität auch als Streuinduktivität des Transformators ausgeführt werden kann,

d) die Trafowicklung auf Seite 1 und Seite 2 jeweils zwischen den beiden Mittelanschlüssen der Vollbrücke angeschlossen wird, wobei auf Seite 1 und/oder Seite 2 neben der Resonanzinduktivität in Reihe zur Trafowicklung typischerweise jeweils ein Kondensator (Trafokondensator oder Resonanzkondensator) in Reihe zur Trafowicklung eingesetzt wird, der bei idealer symmetrischen Ansteuerung durch die Multilevel-Vollbrücke jeweils auch entfallen kann,

e) die Brückenspannung auf Seite 1 und Seite 2 durch jeweils mindestens einen Kondensator stabilisiert wird,

f) zwischen diesem Kondensator und der Vollbrücke auf Seite 1 und/oder Seite 2 eine Induktivität als Speicherdrossel zur stufenlosen Regelung der Ausgangsspannung bzw. des Ausgangsstromes eingesetzt wird,

g) optional diese Speicherdrossel bzw. Speicherdrosseln schaltbar durch ein Relais oder eine Transistorschaltung überbrückt werden können, damit die auf der jeweiligen Seite befindliche Multilevel-Vollbrücke (bei überbrückter Speicherdrossel) im Multilevel-Betrieb eingesetzt werden kann,

h) die Ausgangsspannung bzw. der Ausgangsstrom des DC-DC-Converters durch Nutzung der verschiedenen Spannungsniveaus der Flying-Capacitor-Multilevel-Halbbrücke und Pulsweitenmodulation zwischen diese Spannungsniveaus eingestellt wird, wobei der Ausgleich zwischen den verschiedenen Spannungsniveaus und die Stromglättung durch die Speicherdrossel erfolgt.

4. DC-DC-Converter zur Spannungskonvertierung und bidirektionalen Energieübertragung gemäß Aufzählungspunkt , dadurch gekennzeichnet, dass

a) auf Seite 2 (Sekundärseite) des Transformators statt einer Flying-Capacitor-Multilevel-Vollbrücke eine Flying-Capacitor-Multilevel-Halbbrücke zum Einsatz kommt,

b) mindestens ein Kondensator (Trafokondensator) auf Seite 2 (Sekundärseite) des Transformators in Reihe zur Wicklung oder der Resonanzinduktivität eingesetzt wird, wobei bei zwei Trafokondensatoren beide auf einer Seite mit der Wicklung oder der Resonanzinduktivität und auf der anderen Seite einmal mit der positiven und einmal mit der negativen Brückenspannung verbunden sind,

c) ein Wicklungsanschluss auf Seite 2 des Transformators über diesen Trafokondensator und/oder die Resonanzinduktivität oder direkt mit der positiven oder negativen Brückenspannung verbunden ist bzw. bei Verwendung von zwei Trafokondensatoren mit der positiven und der negativen Brückenspannung,

d) der andere Wicklungsanschluss auf Seite 2 des Transformators entweder direkt oder über die Resonanzinduktivität und/oder den Trafokondensator mit dem Mittelanschluss der Multilevel-Halbbrücke verbunden ist, wobei auch hier die Resonanzinduktivität auf der Seite 1 und/oder Seite 2 eingesetzt werden kann,

e) optional eine Speicherdrossel auf Seite 1 zur stufenlosen Regelung der Ausgangsspannung bzw. des Ausgangsstromes eingesetzt wird,

f) optional diese Speicherdrossel schaltbar durch ein Relais oder eine Transistorschaltung überbrückt werden kann, damit die auf Multilevel-Vollbrücke (bei überbrückter Speicherdrossel) im Multilevel-Betrieb eingesetzt werden kann.

5. DC-DC-Converter zur Spannungskonvertierung und bidirektionalen Energieübertragung, dadurch gekennzeichnet, dass

a) ein Transformator zur Energieübertragung und galvanischen Trennung eingesetzt wird mit mindestens einer Primär- und mindestens einer Sekundärwicklung,

b) jeweils eine Flying-Capacitor-Multilevel-Halbbrücke zur Ansteuerung des Transformators auf Seite 1 (Primärseite) und Seite 2 (Sekundärseite) eingesetzt wird,

c) mindestens eine Induktivität als Resonanzinduktivität auf Seite 1 und/oder Seite 2 in Reihe zur Wicklung des Transformators zur Realisierung von Zero-Voltage-Switching der Schalttransistoren der Multilevel-Halbbrücke eingesetzt wird, wobei diese Induktivität auch als Streuinduktivität des Transformators ausgeführt werden kann,

d) auf Seite 1 und/oder Seite 2 jeweils mindestens jeweils ein Kondensator (Trafokondensator) in Reihe zur Wicklung des Transformators oder der Resonanzinduktivität eingesetzt wird, wobei bei zwei Trafokondensatoren beide auf einer Seite mit der Wicklung oder der Resonanzinduktivität und auf der anderen Seite einmal mit der positiven und einmal mit der negativen Brückenspannung verbunden sind,

e) auf Seite 1 und/oder Seite 2 jeweils ein Wicklungsanschluss des Transformators über einen Trafokondensator und/oder die Resonanzinduktivität oder direkt mit der positiven oder negativen Brückenspannung verbunden ist bzw. bei Verwendung von zwei Trafokondensatoren mit der positiven und der negativen Brückenspannung,

f) auf Seite 1 und/oder Seite 2 jeweils der andere Wicklungsanschluss auf der Primärseite des Transformators entweder direkt oder über die Resonanzinduktivität und/oder den Trafokondensator mit dem Mittelanschluss der Multilevel-Halbbrücke verbunden ist,

g) auf Seite 1 und/oder Seite 2 die Brückenspannung jeweils durch mindestens einen Kondensator stabilisiert wird, der auch durch zwei in Reihe geschaltete Kondensatoren (Trafokondensatoren) ausgeführt werden kann,

h) die Resonanzinduktivität auch als Speicherdrossel zur stufenlosen Regelung der Ausgangsspannung bzw. des Ausgangsstromes eingesetzt wird,

i) die Ausgangsspannung bzw. der Ausgangsstrom des DC-DC-Converters durch Nutzung der verschiedenen Spannungsniveaus der Flying-Capacitor-Multilevel-Halbbrücke und Pulsweitenmodulation zwischen diesen Spannungsniveaus eingestellt wird.

6. Anlaufschaltung für Flying-Capacitor-Multilevel-Halbbrücke zum schnellen Laden der Flying Capacitors, dadurch gekennzeichnet, dass

a) n-1 positive Anlaufkondensatoren $C_{A1}$ bis $C_{An-1}$ mit der positiven Brückenspannung und jeweils über eine Anlaufdiode $D_{A1}$ bis $D_{An-1}$ mit dem positiven Anschluss der Flying Capacitors $C_1$ bis $C_{n-1}$ der Multilevel-Halbbrücke verbunden sind ($C_{A1}$ über $D_{A1}$ mit $C_1$, $C_{A2}$ über $D_{A2}$ mit $C_2$, usw.), wobei die Anode der Anlaufdiode jeweils mit dem Anlaufkondensator und die Kathode jeweils mit dem Flying Capacitor verbunden ist und $C_1$ der innerste Flying Capacitor ist (der dem Mittelanschluss der Multilevel-Halbbrücke am nächsten ist) und $C_{n-1}$ der äußerste Flying Capacitor ist, der der Brückenspannung am nächsten ist, (und alle anderen Flying Capacitors in aufsteigender Reihenfolge dazwischen sind),

b) n-1 negative Anlaufkondensatoren $C_{B1}$ mit $C_{Bn-1}$ mit der negativen Brückenspannung und jeweils über eine Anlaufdiode $D_{B1}$ bis $D_{Bn-1}$ mit dem negativen Anschluss der Flying Capacitors $C_1$ bis $C_{n-1}$ der Multilevel-Halbbrücke verbunden sind ($C_{B1}$ über $D_{B1}$ mit $C_1$, $C_{B2}$ über $D_{B2}$ mit $C_2$, usw.), wobei die Kathode der Anlaufdiode jeweils mit dem Anlaufkondensator und die Anode jeweils mit dem Flying Capacitor verbunden ist,

c) die Anlaufkondensatoren jeweils so dimensioniert sind, dass die Flying Capacitors nach dem Prinzip eines kapazitiven Spannungsteilers beim Anlegen von Spannung an die Brückenspannung oder den Mittelanschluss (dann über Reversedioden der Schalttransistoren der Multilevel-Halbbrücke) schnell soweit aufgeladen werden, so dass die zulässige Sperrspannung an den Schalttransistoren der Multilevel-Halbbrücke nicht überschritten wird,

d) im weiteren Betrieb die Anlaufkondensatoren über Spannungsteiler jeweils bestehend aus mindestens zwei Widerständen zwischen der positiven und der negativen Brückenspannung jeweils so aufgeladen wird, dass der Anlaufkondensator den regulären Betrieb der Halbbrücke innerhalb der Sollspannungen gerade nicht beeinträchtigt, wobei ein Spannungsteiler auch für mehrere Anlaufkondensatoren verwendet werden kann und an jedem Verbindungspunkt der Spannungsteilerwiderstände immer nur ein Anlaufkondensator angeschlossen werden darf,

e) wobei n die Anzahl der Schalttransistoren jeweils eines Zweigs der Multilevel-Halbbrücke, d.h. der oberen oder der unteren Hälfte der Multilevel-Halbbrücke, ist.

7. Anlaufschaltung für Flying-Capacitor-Multilevel-Halbbrücke zum schnellen Laden der Flying Capacitors nach Aufzählungspunkt 6, dadurch gekennzeichnet, dass zusätzlich

a) n-1 Entladedioden $D_{E1}$ bis $D_{Bn-1}$ zur schnellen Entladung der Anlaufkondensatoren eingesetzt werden,

b) die erste Entladediode $D_{E1}$ mit der Kathode mit dem mit der Anlaufdiode verbundenen Anschluss des ersten positiven Anlaufkondensators $C_{A1}$ und mit der Anode mit dem mit der Anlaufdiode verbundenen Anschluss des letzten negativen Anlaufkondensators $C_{Bn-1}$ verbunden ist,

c) die zweite Entladediode $D_{E2}$ mit der Kathode mit dem mit der Anlaufdiode verbundenen Anschluss des zweiten positiven Anlaufkondensators $C_{A2}$ und mit der Anode mit dem mit der Anlaufdiode verbundenen Anschluss des vorletzten negativen Anlaufkondensators $C_{Bn-2}$ verbunden ist,

d) alle weiteren Entladedioden $D_{Ei} = D_{E3}$ bis $D_{Bn-1}$ mit der Kathode mit dem mit der Anlaufdiode verbundenen Anschluss des positiven Anlaufkondensators $C_{Ai}$ und mit der Anode mit dem mit der Anlaufdiode verbundenen Anschluss des negativen Anlaufkondensators $C_{Bn-i}$ verbunden ist, wobei es mindestens eine Entladediode gibt bzw. genau eine für den Fall n = 2,

e) Reversdioden parallel zu den Schalttransistoren der Multilevel-Habbrücke eingesetzt werden, die auch in die Schalttransistoren integriert sein können, wobei deren Kathode jeweils mit dem positiven Spannungsanschluss des Schalttransistors und deren Anode jeweils mit dem negativen Spannungsanschluss des Schalttransistors verbunden ist, so dass sich diese in normalen Betrieb der Multilevel-Habbrücken im Sperrzustand (nichtleitend) befinden und auch eine Energiezufuhr (Anlauf) über den Mittelanschluss der Multilevel-Halbbrücke (über die Reversdioden) möglich ist.

8. Anlaufschaltung für Flying-Capacitor-Multilevel-Halbbrücke zum schnellen Laden der Flying Capacitors nach Aufzählungspunkt 6 oder 7, dadurch gekennzeichnet, dass

a) die Anlaufkondensatoren $C_{Ai}$ und $C_{Bi}$ mit $C_{Ai} = C_{Bi} = 2 * i / ( n - i ) * C_i$ so dimensioniert werden, dass die Flying Capacitors $C_1$ bis $C_{n-1}$ bei Energieeinspeisung über die Brückenspannung $U_{Br}$ und lastfreiem Mittelanschluss schnell auf ihre Sollspannung $U_{Ci} = i / n * U_{Br}$ geladen werden, oder (je nach Anforderungen und Rahmenbedingungen)

b) die Anlaufkondensatoren $C_{Ai}$ und $C_{Bi}$ mit $C_{Ai} = C_{Bi} = i / ( n - i ) * C_i$ so dimensioniert werden, dass die Flying Capacitors $C_1$ bis $C_{n-1}$ auch bei Energieeinspeisung über die Brückenspannung $U_{Br}$ und belasteten Mittelanschluss sowie bei Energieeinspeisung über den Mittelanschluss auf die für ein sicheres Einschalten der Multilevel-Halbbrücke zulässige Spannung von maximal $i / n * U_{Br}$ und minimal auf $1/2 * i / n * U_{Br}$ geladen werden, so dass die Spannung an den Schalttransistoren der Multilevel-Halbbrücke jeweils maximal $1 / n * U_{Br}$ beträgt und in jedem Betriebszustand ein sicheres Einschalten möglich ist.

9. Anlaufschaltung für Flying-Capacitor-Multilevel-Halbbrücke zum schnellen Laden der Flying Capacitors, dadurch gekennzeichnet, dass

a) zwei Kondensatorketten (Anlaufkondensatorketten) A und B mit n-1 in Reihen geschalteten Anlaufkondensatoren $C_{A1}$ bis $C_{An-1}$ und $C_{B1}$ bis $C_{Bn-1}$ gebildet werden,

b) n-1 gleiche Widerstände jeweils zu den Anlaufkondensatoren parallelgeschaltet sind, die somit eine Widerstandskette bilden,

c) der äußerste Anlaufkondensator $C_{An-1}$ der Kondensatorkette A mit der positiven Brückenspannung der Multilevel-Halbbrücke verbunden ist,

d) der äußerste Anlaufkondensator $C_{Bn-1}$ der Kondensatorkette B mit der negativen Brückenspannung der Multilevel-Halbbrücke verbunden ist,

e) das jeweils andere Ende einer Kondensatorkette über einen weiteren Widerstand (mit gleichem Widerstandswert, aber ohne parallel geschaltetem Kondensator) mit der jeweils anderen Brückenspannung verbunden ist,

f) die Anlaufkondensatoren $C_{A1}$ bis $C_{An-1}$ jeweils über eine Anlaufdiode $D_{A1}$ bis $D_{An-1}$ mit dem positiven Anschluss der Flying Capacitors $C_1$ bis $C_{n-1}$ der Multilevel-Halbbrücke verbunden sind ($C_{A1}$ über $D_{A1}$ mit $C_1$, $C_{A2}$ über $D_{A2}$ mit $C_2$, usw.), wobei die Anode der Anlaufdiode $D_{Ai}$ mit dem Anlaufkondensator $C_{Ai}$ und die Kathode der Anlaufdiode $D_{Ai}$ mit dem Flying Capacitor $C_i$ verbunden ist und $C_1$ der innerste Flying Capacitor ist (der dem Mittelanschluss der Multilevel-Halbbrücke am nächsten ist) und $C_{n-1}$ der äußerste Flying Capacitor ist, der der Brückenspannung der Halbbrücke am nächsten ist, (und alle anderen Flying Capacitors in aufsteigender Reihenfolge dazwischen sind),

g) die Anlaufkondensatoren $C_{B1}$ bis $C_{Bn-1}$ jeweils über eine Anlaufdiode $D_{B1}$ bis $D_{Bn-1}$ mit dem negativen Anschluss der Flying Capacitors $C_1$ bis $C_{n-1}$ der Multilevel-Halbbrücke verbunden sind ($C_{B1}$ über $D_{B1}$ mit $C_1$, $C_{B2}$ über $D_{S2}$ mit $C_2$, usw.), wobei die Kathode der Anlaufdiode mit dem Anlaufkondensator und die Anode der Anlaufdiode mit dem Flying Capacitor verbunden ist,

h) wobei es mindestens einen Anlaufkondensator, der mit der positiven Brückenspannung verbunden ist, gibt und mindestens einen Anlaufkondensator, der mit der negativen Brückenspannung verbunden ist, und genau jeweils einen für den Fall n = 2,

i) die Anlaufkondensatoren jeweils so dimensioniert sind, dass die Flying Capacitors nach dem Prinzip eines kapazitiven Spannungsteilers beim Anlegen von Spannung an die Brückenspannung oder den Mittelanschluss (dann über Reversedioden der Schalttransistoren der Multilevel-Halbbrücke) schnell soweit aufgeladen werden, so dass die zulässige Sperrspannung an den Schalttransistoren der Multilevel-Halbbrücke nicht überschritten wird,

j) im weiteren Betrieb die Anlaufkondensatoren über die parallele Widerstandskette jeweils so aufgeladen wird, dass diese den regulären Betrieb der Halbbrücke innerhalb der Sollspannungen gerade nicht beeinträchtigt,

k) wobei n die Anzahl der Schalttransistoren eines Zweigs (d.h. einer Hälfte) der Multilevel-Halbbrücke und mindestens zwei ist.

10. Anlaufschaltung für Flying-Capacitor-Multilevel-Halbbrücke zum schnellen Laden der Flying Capacitors nach Aufzählungspunkt 9, zusätzlich dadurch gekennzeichnet, dass

a) n-1 Entladedioden $D_{E1}$ bis $D_{Bn-1}$ zur schnellen Entladung der Anlaufkondensatoren eingesetzt werden,

b) die Kathoden der Entladedioden $D_{E1}$ bis $D_{Bn-1}$ mit den Anoden der Anlaufdioden $D_{A1}$ bis $D_{An-1}$ verbunden sind ($D_{E1}$ mit $D_{A1}$, $D_{E2}$ mit $D_{A2}$, usw.) und damit auch mit den Anlaufkondensatoren $C_{A1}$ bis $C_{An-1}$ ($D_{E1}$ mit $C_{A1}$, $D_{E2}$ mit $C_{A2}$, usw.),

c) die Anoden der Entladedioden $D_{E1}$ bis $D_{Bn-1}$ mit den Kathoden der Anlaufdioden $D_{Bn-1}$ bis $D_{B1}$ verbunden sind ($D_{E1}$ mit $D_{Bn-1}$, $D_{E2}$ mit $D_{Bn-2}$, usw.) und damit auch mit den Anlaufkondensatoren $C_{Bn-1}$ bis $C_{B1}$ ($D_{E1}$ mit $C_{Bn-1}$, $D_{E2}$ mit $C_{Bn-2}$, usw.),

d) wobei es mindestens eine Entladediode gibt und genau eine für den Fall n = 2,

e) Reversdioden parallel zu den Schalttransistoren der Multilevel-Habbrücke eingesetzt werden, die auch in die Schalttransistoren integriert sein können, wobei deren Kathode jeweils mit dem positiven Spannungsanschluss des Schalttransistors und deren Anode jeweils mit dem negativen Spannungsanschluss des Schalttransistors verbunden ist, so dass sich diese in normalen Betrieb der Multilevel-Habbrücken im Sperrzustand (nichtleitend) befinden und auch eine Energiezufuhr (Anlauf) über den Mittelanschluss der Multilevel-Halbbrücke (über die Reversdioden) möglich ist.

11. Anlaufschaltung für Flying-Capacitor-Multilevel-Halbbrücke zum schnellen Laden der Flying Capacitors nach Aufzählungspunkt 9 oder 10, dadurch gekennzeichnet, dass

a) die Anlaufkondensatoren $C_{Ai}$ und $C_{Bi}$ mit $C_{Ai} = C_{Bi} = i * ( i + 1 ) * C_i$ so dimensioniert werden, dass die Flying Capacitors $C_1$ bis $C_{n-1}$ bei Energieeinspeisung über die Brückenspannung $U_{Br}$ und lastfreiem Mittelanschluss schnell auf ihre Sollspannung $U_{Ci} = i / n * U_{Br}$ geladen werden, oder (je nach Anforderungen und Rahmenbedingungen)

b) die Anlaufkondensatoren $C_{Ai}$ und $C_{Bi}$ mit $C_{Ai} = C_{Bi} = 1/2 * i * (i+1) * C_i$ so dimensioniert werden, dass die Flying Capacitors $C_1$ bis $C_{n-1}$ auch bei Energieeinspeisung über die Brückenspannung $U_{Br}$ und belasteten Mittelanschluss sowie bei Energieeinspeisung über den Mittelanschluss auf die für ein sicheres Einschalten der Multilevel-Halbbrücke zulässige Spannung von maximal $i/n * U_{Br}$ und minimal auf $1/2 * i/n * U_{Br}$ geladen werden, so dass die Spannung an den Schalttransistoren der Multilevel-Halbbrücke jeweils maximal $1/n * U_{Br}$ beträgt und in jedem Betriebszustand ein sicheres Einschalten möglich ist.

12. Verwendung einer Anlaufschaltung nach einem oder mehreren der Aufzählungspunkte 6 bis 11 für mehrere Flying-Capacitor-Multilevel-Halbbrücken zum schnellen Laden der Flying Capacitors, dadurch gekennzeichnet, dass

a) die Anlaufschaltung und die Flying-Capacitor-Multilevel-Halbbrücken mit der gleichen Brückenspannung verbunden sind,
b) die Flying-Capacitor-Multilevel-Halbbrücken die gleiche Anzahl Level aufweisen,
c) die Widerstände und Anlaufkondensatoren der Anlaufschaltung so dimensioniert werden, wie es sich durch die Parallelschaltung einzelner Anlaufschaltungen für die Flying-Capacitor-Multilevel-Halbbrücken ergeben würde,
d) jeder Flying Capacitor über einer eigenen Anlaufdiode $D_A$ mit der Anlaufschaltung verbunden ist.

13. Aktive Anlaufschaltung für Flying-Capacitor-Multilevel-Halbbrücke zum schnellen Laden der Flying Capacitors und zur Begrenzung der Spannung an den Schalttransistoren der Halbbrücke, dadurch gekennzeichnet, dass

a) dass eine Widerstandskette mit n in Reihen geschalteten aufeinander folgenden Anlaufwiderständen $R_{A1}$ bis $R_{An}$ zwischen der positiven und negativen Brückenspannung eingesetzt wird, wobei $R_{A1}$ mit der negativen Brückenspannung und $R_{An}$ mit der positiven Brückenspannung verbunden ist und alle anderen Anlaufwiderstände der Reihe nach dazwischen miteinander verbunden sind,
b) dass idealerweise (optional) Anlaufkondensatoren $C_{A1}$ bis $C_{An}$ jeweils parallel zu den Anlaufwiderständen dieser Widerstandskette angeordnet werden, wobei $C_{A1}$ parallel zu $R_{A1}$ mit der negativen Brückenspannung und $C_{An}$ parallel zu $R_{An}$ mit der positiven Brückenspannung verbunden ist und alle anderen Anlaufkondensatoren analog der Reihe nach dazwischen ebenfalls mit den entsprechenden Anlaufwiderständen sowie untereinander verbunden sind,
c) n-1 Anlauftransistoren $T_{A1}$ bis $T_{An-1}$ zur schnellen Aufladung der Flying Capacitors über die positive Brückenspannung der Halbbrücke eingesetzt werden, typischerweise NPN-Transistoren, NPN-Darlingtontransistoren, N-MOSFETs oder N-IGBTs,
d) n-1 Anlauftransistoren $T_{B1}$ bis $T_{Bn-1}$ zur schnellen Aufladung der Flying Capacitors über die negative Brückenspannung der Halbbrücke eingesetzt werden, typischerweise PNP-Transistoren, PNP-Darlingtontransistoren, P-MOSFETs oder P-IGBTs,
e) der Steuereingang (Basis- bzw. Gateanschluss) der Anlauftransistoren $T_{A1}$ bis $T_{An-1}$ jeweils mit den Verbindungspunkten der Anlaufwiderstände der Widerstandskette verbunden ist, $T_{A1}$ mit dem Verbindungspunkt zwischen $R_{A1}$ und $R_{A2}$, $T_{A2}$ mit dem Verbindungspunkt zwischen $R_{A2}$ und $R_{A3}$, $T_{A3}$ mit dem Verbindungspunkt zwischen $R_{A3}$ und $R_{A4}$ usw.,
f) der Steuereingang (Basis- bzw. Gateanschluss) der Anlauftransistoren $T_{B1}$ bis $T_{Bn-1}$ jeweils mit den Verbindungspunkten der Anlaufwiderstände der Widerstandskette verbunden ist, $T_{Bn-1}$ mit dem Verbindungspunkt zwischen $R_{A1}$ und $R_{A2}$, $T_{Bn-2}$ mit dem Verbindungspunkt zwischen $R_{A2}$ und $R_{A3}$, $T_{Bn-3}$ mit dem Verbindungspunkt zwischen $R_{A3}$ und $R_{A4}$ usw.,
g) der positive Anschluss (Kollektor bzw. Drain) der Anlauftransistoren $T_{A1}$ bis $T_{An-1}$ entweder jeweils direkt mit der positiven Brückenspannung verbunden ist, oder die Anlauftransistoren $T_{A1}$ bis $T_{An-1}$ jeweils eine Kette bilden, bei der nur der positive Anschluss (Kollektor bzw. Drain) des obersten Anlauftransistors $T_{An-1}$ mit der positiven Brückenspannung verbunden ist, der positive Anschluss (Kollektor bzw. Drain) des zweitobersten Anlauftransistors $T_{An-2}$ mit dem negativen Anschluss (Emitter bzw. Source) des obersten Anlauftransistors $T_{An-1}$ verbunden ist, der positive Anschluss (Kollektor bzw. Drain) des drittobersten Anlauftransistors $T_{An-3}$ mit dem negativen Anschluss (Emitter bzw. Source) des zweitobersten Anlauftransistors $T_{An-2}$ verbunden ist usw., wobei es mindestens einen Anlauftransistor $T_A$ gibt, der dann direkt mit der Brückenspannung verbunden ist,
h) der negative Anschluss (Kollektor bzw. Drain) der Anlauftransistoren $T_{B1}$ bis $T_{Bn-1}$ entweder jeweils direkt mit der negativen Brückenspannung verbunden ist, oder die Anlauftransistoren $T_{B1}$ bis $T_{Bn-1}$ jeweils eine Kette bilden, bei der nur der negative Anschluss (Kollektor bzw. Drain) des untersten Anlauftransistors $T_{Bn-1}$ mit der negativen Brückenspannung verbunden ist, der negative Anschluss (Kollektor bzw. Drain) des zweituntersten Anlauftransistors $T_{Bn-2}$ mit dem positiven Anschluss (Emitter bzw. Source) des untersten Anlauftransistors $T_{Bn-1}$ verbunden ist, der negative Anschluss (Kollektor bzw. Drain) des drittuntersten Anlauftransistors $T_{Bn-3}$ mit dem positiven Anschluss (Emitter bzw. Source) des zweituntersten Anlauftransistors $T_{Bn-2}$ verbunden ist usw., wobei es mindestens einen Anlauftransistor $T_B$ gibt, der dann direkt mit der Brückenspannung verbunden ist,

i) der negative Anschluss (Emitter bzw. Source) der Anlauftransistoren $T_{A1}$ bis $T_{An-1}$ jeweils direkt oder typischerweise über eine Anlaufdiode mit dem positiven Anschluss der Flying Capacitors $C_1$ bis $C_{n-1}$ verbunden ist, wobei die Anode der Anlaufdiode mit dem Anlauftransistor und die Kathode der Anlaufdiode mit dem Flying Capacitor verbunden ist, $C_1$ der innerste Flying Capacitor ist, der dem Mittelanschluss der Multilevel-Halbbrücke am nächsten ist, $C_{n-1}$ der äußerste Flying Capacitor ist, der der Brückenspannung am nächsten ist, (und alle anderen Flying Capacitors in aufsteigender Reihenfolge dazwischen sind) und $T_{A1}$ mit $C_1$, $T_{A2}$ mit $C_2$, $T_{A3}$ mit $C_3$ usw. verbunden ist,

j) der positive Anschluss (Emitter bzw. Source) der Anlauftransistoren $T_{B1}$ bis $T_{Bn-1}$ jeweils direkt oder typischerweise über eine Anlaufdiode mit dem negativen Anschluss der Flying Capacitors $C_1$ bis $C_{n-1}$ verbunden ist, wobei die Kathode der Anlaufdiode mit dem Anlauftransistor und die Anode der Anlaufdiode mit dem Flying Capacitor und $T_{B1}$ mit $C_1$, $T_{B2}$ mit $C_2$, $T_{B3}$ mit $C_3$ usw. verbunden ist,

k) wobei n die Anzahl der Schalttransistoren eines Zweigs (d.h. einer Hälfte) der Multilevel-Halbbrücke und mindestens zwei ist.

14. Aktive Anlaufschaltung für Flying-Capacitor-Multilevel-Halbbrücke zum schnellen Laden der Flying Capacitors und zur Begrenzung der Spannung an den Schalttransistoren der Halbbrücke nach Aufzählungspunkt 13, dadurch gekennzeichnet, dass

a) zur Erreichung einer höheren Stromverstärkung und dem schnellen Aufladen der Flying Capacitors zu jeden Anlauftransistor $T_{A1}$ bis $T_{An-1}$ und $T_{B1}$ bis $T_{Bn-1}$ jeweils ein zusätzlicher Transistor $T_{AZ1}$ bis $T_{AZn-1}$ und $T_{BZ1}$ bis $T_{BZn-1}$ eingesetzt wird,

b) der Eingang (Basis bzw. Gate) der zusätzlichen Transistoren $T_{AZ1}$ bis $T_{AZn-1}$ und $T_{BZ1}$ bis $T_{BZn-1}$ jeweils statt der Anlaufdiode bzw. dem Flying Capacitor mit dem Emitter- bzw. Source-Anschluss des Anlauftransistors $T_{A1}$ bis $T_{An-1}$ und $T_{B1}$ bis $T_{Bn-1}$ verbunden ist, $T_{AZ1}$ mit $T_{A1}$, $T_{AZ2}$ mit $T_{A2}$, $T_{AZ3}$ mit $T_{A3}$ usw., $T_{BZ1}$ mit $T_{B1}$, $T_{BZ2}$ mit $T_{B2}$, $T_{BZ3}$ mit $T_{B3}$ usw.,

c) der positive Anschluss (Kollektor bzw. Drain) der zusätzlichen Transistoren $T_{AZ1}$ bis $T_{AZn-1}$ entweder jeweils direkt mit der positiven Brückenspannung verbunden ist, oder

die zusätzlichen Transistoren $T_{AZ1}$ bis $T_{AZn-1}$ jeweils eine Kette bilden, bei der nur der positive Anschluss (Kollektor bzw. Drain) des obersten zusätzlichen Transistors $T_{AZn-1}$ mit der positiven Brückenspannung verbunden ist, der positive Anschluss (Kollektor bzw. Drain) des zweitobersten zusätzlichen Transistors $T_{AZn-2}$ mit dem negativen Anschluss (Emitter bzw. Source) des obersten zusätzlichen Transistors $T_{AZn-1}$ verbunden ist, der positive Anschluss (Kollektor bzw. Drain) des drittobersten zusätzlichen Transistors $T_{AZn-3}$ mit dem negativen Anschluss (Emitter bzw. Source) des zweitobersten zusätzlichen Transistors $T_{AZn-2}$ verbunden ist usw., wobei es mindestens einen zusätzlichen Transistors $T_{AZ}$ gibt, der dann direkt mit der Brückenspannung verbunden ist,

d) der negative Anschluss (Kollektor bzw. Drain) der zusätzlichen Transistoren $T_{BZ1}$ bis $T_{BZn-1}$ entweder jeweils direkt mit der negativen Brückenspannung verbunden ist, oder

die zusätzlichen Transistoren $T_{BZ1}$ bis $T_{BZn-1}$ jeweils eine Kette bilden, bei der nur der negative Anschluss (Kollektor bzw. Drain) des untersten zusätzlichen Transistors $T_{BZn-1}$ mit der negativen Brückenspannung verbunden ist, der negative Anschluss (Kollektor bzw. Drain) des zweituntersten zusätzlichen Transistors $T_{BZn-2}$ mit dem positiven Anschluss (Emitter bzw. Source) des untersten zusätzlichen Transistors $T_{BZn-1}$ verbunden ist, der negative Anschluss (Kollektor bzw. Drain) des drittuntersten zusätzlichen Transistors $T_{BZn-3}$ mit dem positiven Anschluss (Emitter bzw. Source) des zweituntersten zusätzlichen Transistors $T_{BZn-2}$ verbunden ist usw., wobei es mindestens einen zusätzlichen Transistors $T_{BZ}$ gibt, der dann direkt mit der Brückenspannung verbunden ist,

e) der Emitter- bzw. Source-Anschluss der zusätzlichen Transistoren $T_{AZ1}$ bis $T_{AZn-1}$ und $T_{BZ1}$ bis $T_{BZn-1}$ jeweils statt den Anlauftransistoren $T_{A1}$ bis $T_{An-1}$ und $T_{B1}$ bis $T_{Bn-1}$ mit der Anlaufdiode bzw. dem Flying Capacitor verbunden ist.

15. Verwendung einer Anlaufschaltung nach Aufzählungspunkt 13 oder 14 für mehrere Flying-Capacitor-Multilevel-Halbbrücke zum schnellen Laden der Flying Capacitors und zur Begrenzung der Spannung an den Schalttransistoren der Halbbrücke, dadurch gekennzeichnet, dass

a) die Anlaufschaltung und die Flying-Capacitor-Multilevel-Halbbrücken mit der gleichen Brückenspannung verbunden sind,

b) die Flying-Capacitor-Multilevel-Halbbrücken eine kompatible Anzahl Level (= n + 1) aufweisen, d.h. die Anzahl Level aller Multilevel-Halbbrücken gleich sind oder die Anzahl Schalttransistoren n eines Zweiges bei allen Multilevel-Halbbrücken ein geradzahliges Vielfaches der Anzahl Schalttransistoren eines Zweiges bei allen anderen Multilevel-Halbbrücken aufweist,

c) jeder Flying Capacitor über eine eigene Anlaufdiode (zwischen Emitter bzw. Drain des Anlauftransistors und Flying Capacitor) mit der Anlaufschaltung verbunden ist.

16. DC-DC-Converter nach einem der Aufzählungspunkte 1 bis 5 in Kombination mit einer Anlaufschaltung nach einem der Aufzählungspunkte 6 bis 15. (falls die Anlaufschaltungen allein nicht patentfähig sind)

17. Verwendung eine bestimmten Schaltfolge für DC-DC-Converter nach einem der Aufzählungspunkte 1 bis 5 optional in Kombination mit einer Anlaufschaltung nach einem der Aufzählungspunkte 6 bis 15, dadurch gekennzeichnet, dass

a) Blöcke mit einer bestimmten, festen Schaltfolge der Transistoren einer Halbbrücke jeweils für eine bestimmte Zielspannung bzw. einen bestimmen Zielspannungsbereich (mit fester Schaltfolge) definiert werden,

b) innerhalb dieser Blöcke die Schaltfolge der Transistoren jeweils so gewählt wird, dass die Anzahl der Schaltvorgänge bei einem Spannungswechsel möglichst gering ist (minimal 2) und die verwendeten Flying Capacitors jeweils immer abwechselnd geladen und entladen werden (oder umgekehrt), um die geforderte Ladespannung zu halten,

c) die Ladung und Entladung der Flying Capacitors idealerweise symmetrisch zur Ausgangsspannung am Mittelanschluss erfolgt, so dass die Flying Capacitors in einer Halbwelle geladen und in der nächsten oder einer späteren gleichartigen Halbwelle gleichermaßen entladen werden,

d) optional eine Pulsbreitenmodulation zur Regelung der Ausgangsspannung bzw. des Ausgangsstromes zum Einsatz kommt, bei der jeweils innerhalb der positiven Halbwelle wie auch innerhalb der negativen zwischen zwei verschiedenen Spannungsniveaus umgeschaltet wird, die der benötigten Sollspannung am nächsten kommen und die Dauer dieser beiden Zustände variiert wird (je nach gewünschter Ausgangsspannung bzw. gewünschtem Ausgangsstrom),

e) diese Blöcke für eine bestimmte Zielspannung bzw. einen bestimmen Zielspannungsbereich jeweils so lange wiederholt werden, bis eine andere Schaltfolge für eine andere Zielspannung bzw. einen anderen Zielspannungsbereich benötigt wird.

18. Ausgleich der Spannungen der Flying Capacitors durch Verwendung einer Schaltfolge gemäß Aufzählungspunkt 17, dadurch gekennzeichnet, dass

a) die Schaltzustände innerhalb eines Blockes (einer Folge von Schaltzuständen) so wählt werden, dass es immer zwei Schaltzustände mit dem gleichen Level (Ausgangsspannung der Halbbrücke) gibt, bei denen ein bestimmter Kondensator einmal entladen und einmal geladen wird,

b) die Pulsbreite bei diesen beiden Schaltzuständen (mit gleichem Level aber entgegengesetzter Ladung des betreffenden Kondensators) in der Weise verändert wird, dass die Dauer des einen Schaltzustandes um einen bestimmten Wert verlängert und die des anderen entsprechend verkürzt wird, die Summe beider aber gleichbleibt und somit ein Ladungsausgleich erfolgt, ohne dass sich die (über einen Block) gemittelte Ausgangsspannung ändert,

c) bei einem hierbei ggf. beeinflussten weiteren Kondensator in gleicher Weise ein Ladungsausgleich bei zwei anderen Schaltzuständen erfolgt, die den gleichen Level (Ausgangsspannung der Halbbrücke) aufweisen und bei denen dieser Kondensator einmal entladen und einmal geladen wird, so dass diese für den Ladungsausgleich dieses Kondensators verwendet werden können, ohne dass sich die (über einen Block) gemittelte Ausgangsspannung ändert.

Nachfolgend werden weitere Merkmale strukturiert wiedergegeben. Diese können sowohl einzeln wie auch in Kombination und in Kombination mit anderen hierin offenbarten Merkmalen verwendet werden.

1. Anlaufschaltung für eine Flying-Capacitor-Multilevel-Brücke mit einem positiven Brückenanschluss und einem negativen Brückenanschluss,

wobei die Anlaufschaltung mindestens einen Spannungsteiler zwischen dem positiven Brückenanschluss und dem negativen Brückenanschluss aufweist,

wobei der Spannungsteiler mindestens zwei Verbindungspunkte aufweist,

wobei die Anlaufschaltung je Flying Capacitor folgendes aufweist:

- einen ersten Anschluss für den Flying Capacitor, und
- einen zweiten Anschluss für den Flying Capacitor,

- wobei der erste Anschluss mit einem ersten Verbindungspunkt verbunden ist und der zweite Anschluss mit einem anderen Verbindungspunkt verbunden ist.

2. Anlaufschaltung nach Aufzählungspunkt 1,

- wobei die Anlaufschaltung je Anschluss für Flying Capacitor einen jeweiligen Spannungsteiler aufweist.

3. Anlaufschaltung nach Aufzählungspunkt 2,

- wobei der Spannungsteiler oder die Spannungsteiler Widerstände aufweisen, wobei jeder Verbindungspunkt über mindestens einen Widerstand mit dem negativen Brückenanschluss verbunden ist und über mindestens einen Widerstand mit dem positiven Brückenanschluss verbunden ist.

4. Anlaufschaltung nach Aufzählungspunkt 1,

- wobei die Anlaufschaltung einen ersten Spannungsteiler mit Verbindungspunkten für alle ersten Anschlüsse und einen dazu separaten zweiten Spannungsteiler mit Verbindungspunkten für alle zweiten Anschlüsse aufweist.

5. Anlaufschaltung nach Aufzählungspunkt 1,

- wobei die Anlaufschaltung einen einzigen Spannungsteiler mit Verbindungspunkten für alle ersten Anschlüsse und alle zweiten Anschlüsse aufweist.

6. Anlaufschaltung nach einem der Aufzählungspunkte 4 oder 5,

- wobei jeder Spannungsteiler durch seriell geschaltete Widerstände zwischen positivem Brückenanschluss und negativem Brückenanschluss ausgebildet ist, wobei sich jeder Verbindungspunkt zwischen zwei unmittelbar benachbarten Widerständen befindet.

7. Anlaufschaltung nach einem der vorhergehenden Aufzählungspunkte,

- wobei jeder Verbindungspunkt für einen ersten Anschluss über einen Kondensator mit dem positiven Brückenanschluss verbunden ist, und/oder
- wobei jeder Verbindungspunkt für einen zweiten Anschluss über einen Kondensator mit dem negativen Brückenanschluss verbunden ist.

8. Anlaufschaltung nach einem der vorhergehenden Aufzählungspunkte,

- wobei jeweils zwei unmittelbar benachbarte Verbindungspunkte eines Spannungsteilers mittels eines Kondensators miteinander verbunden sind, und/oder
- wobei jeweils letzte Verbindungspunkte eines Spannungsteilers mit mehreren Verbindungspunkten vor einem Brückenanschluss mit diesem Brückenanschluss mittels eines Kondensators verbunden sind.

9. Anlaufschaltung nach einem der vorhergehenden Aufzählungspunkte,

- wobei jeweils eine Diode zwischen einem Verbindungspunkt und einem ersten Anschluss mit Durchlassrichtung zum ersten Anschluss hin verschaltet ist.

10. Anlaufschaltung nach einem der vorhergehenden Aufzählungspunkte,

- wobei jeweils eine Diode zwischen einem Verbindungspunkt und einem zweiten Anschluss mit Durchlassrichtung zum Verbindungspunkt hin verschaltet ist.

11. Anlaufschaltung nach einem der vorhergehenden Aufzählungspunkte,

- wobei jeweils eine Diode zwischen einem Verbindungspunkt eines zweiten Anschlusses und einem Verbindungspunkt eines ersten Anschlusses mit Durchlassrichtung zum Verbindungspunkt des ersten Anschlusspunktes hin verschaltet ist.

12. Anlaufschaltung nach Aufzählungspunkt 11,

- wobei die Dioden zwischen den Verbindungspunkten eine äquivalente spannungsteilerseitig vorgegebene Spannungsdifferenz überbrücken.

13. Anlaufschaltung nach einem der vorhergehenden Aufzählungspunkte,

- wobei ein jeweiliger Verbindungspunkt direkt oder über nur eine Diode mit einem Anschlusspunkt eines Flying Capacitors verbunden ist.

14. Anlaufschaltung nach einem der Aufzählungspunkte 1 bis 12,

- wobei ein jeweiliger Verbindungspunkt über einen Transistor mit einem Anschlusspunkt eines Flying Capacitors, oder mit einer Diode zwischen Transistor und Anschlusspunkt, verbunden ist,
  oder

- wobei ein jeweiliger Verbindungspunkt über einen ersten Transistor mit einem Anschlusspunkt eines Flying Capacitors, oder mit einer Diode zwischen Transistor und Anschlusspunkt, verbunden ist, und ferner über einen zweiten Transistor mit einem Anschlusspunkt eines weiteren Flying Capacitors, oder mit einer Diode zwischen Transistor und Anschlusspunkt verbunden ist.

15. Anlaufschaltung nach Aufzählungspunkt 14,

- wobei der Anschlusspunkt des weiteren Flying Capacitors unterhalb eines Mittelanschlusses der Flying-Capacitor-Multilevel-Brücke die gleiche Ordnung hat wie der Anschlusspunkt des Flying Capacitors oberhalb des Mittelanschlusses.

16. Anlaufschaltung nach einen der Aufzählungspunkte 14 oder 15,

- wobei der jeweilige Anschlusspunkt oder die Diode an einem Emitter des Transistors angeschlossen ist, und/oder
- wobei der jeweilige Verbindungspunkt am Gate des Transistors angeschlossen ist, und/oder
- wobei der Transistor oberhalb des Mittelanschlusses ein pnp-Transistor ist und/oder unterhalb des Mittelanschlusses ein npn-Transistor ist.

17. Anlaufschaltung nach einem der Aufzählungspunkte 1 bis 12,

- wobei ein jeweiliger Verbindungspunkt am Gate eines ersten Transistors angeschlossen ist, dessen Emitter am Gate eines zweiten Transistors anschlossen ist, dessen Emitter am Anschlusspunkt eines Flying Capacitors oder an einer Diode zwischen zweitem Transistor und Anschlusspunkt angeschlossen ist,
  oder
- wobei ein jeweiliger Verbindungspunkt am Gate eines ersten Transistors angeschlossen ist, dessen Emitter am Gate eines zweiten Transistors anschlossen ist, dessen Emitter am Anschlusspunkt eines Flying Capacitors oder an einer Diode zwischen zweitem Transistor und Anschlusspunkt angeschlossen ist, und wobei der Verbindungspunkt am Gate eines dritten Transistors angeschlossen ist, dessen Emitter am Gate eines vierten Transistors angeschlossen ist, dessen Emitter am Anschlusspunkt eines weiteren Flying Capacitors oder an einer Diode zwischen viertem Transistor und Anschlusspunkt angeschlossen ist.

18. Anlaufschaltung nach Aufzählungspunkt 17,

- wobei der Anschlusspunkt des weiteren Flying Capacitors unterhalb eines Mittelanschlusses der Flying-Capacitor-Multilevel-Brücke die gleiche Ordnung hat wie der Anschlusspunkt des Flying Capacitors oberhalb des Mittelanschlusses.

19. Anlaufschaltung nach einem der Aufzählungspunkte 17 oder 18,

- wobei bei den Anschlusspunkten von Flying Capacitors oberhalb des Mittelanschlusses die ersten Transistoren npn-Transistoren sind und die zweiten Transistoren npn-Transistoren sind, und/oder

- wobei bei den Anschlusspunkten von Flying Capacitors unterhalb des Mittelanschlusses die dritten Transistoren pnp-Transistoren sind und die vierten Transistoren pnp-Transistoren sind.

Die eben beschriebene Anlaufschaltung kann insbesondere mit einem hierin beschriebenen DC-DC-Converter zusammen verwendet werden.

Nachfolgend werden weitere Merkmale strukturiert wiedergegeben. Diese können sowohl einzeln wie auch in Kombination und in Kombination mit anderen hierin offenbarten Merkmalen verwendet werden.

1. DC-DC-Converter (1), mit den folgenden Komponenten.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens einen Sekundärinduktivität (28) auf der Sekundärseite (3) und/oder in Reihe mit der Sekundärwicklung (23) geschaltet ist, wobei auf der Sekundärseite (3) zwischen dem ersten Sekundärwicklungsanschluss (33), dem zweiten Sekundärwicklungsanschluss (34) sowie dem ersten Ausgangsanschluss (42) und dem zweiten Ausgangsanschluss (43) eine Gleichrichterbaugruppe (70) vorgesehen ist.

2. DC-DC-Converter (1) nach Aufzählungspunkt 1, dadurch gekennzeichnet, dass sie wenigstens einen Transformatorkondensator (30) aufweist, der auf der Primärseite (2) in Reihe zur Primärwicklung (22) und/oder zur Primärinduktivität (27) geschaltet ist, und wobei der zweite Primärwicklungsanschluss (32) direkt, oder über die Primärinduktivität (27) und/oder über den Transformatorkondensator (30) mit dem Mittelanschluss (45) verbunden ist,

3. DC-DC-Converter (1) nach einem der vorhergehenden Aufzählungspunkte, dadurch gekennzeichnet, dass der erste Primärwicklungsanschluss (31) über den Transformatorkondensator (30) und/oder über die Primärinduktivität (27) mit dem positiven Brückenanschluss (40) oder mit dem negativen Brückenanschluss (41) verbunden ist

4. DC-DC-Converter (1) nach einem der vorhergehenden Aufzählungspunkte, dadurch gekennzeichnet, dass ein erster Transformatorkondensator (29) und ein zweiter Transformatorkondensator (30) vorgesehen sind, die jeweils auf einer Seite mit der Primärwicklung (22) oder der Primärinduktivität (27) und jeweils auf der anderen Seite einmal mit dem positiven Brückenanschluss (40) und einmal mit dem negativen Brückenanschluss (41) verbunden sind.

5. DC-DC-Converter (1) nach Aufzählungspunkt 4, dadurch gekennzeichnet, dass der erste Primärwicklungsanschluss (31) über den ersten Transformatorkondensator (29) oder über die Primärinduktivität (27) mit dem positiven Brückenanschluss (40) verbunden ist, und dass der zweite Primärwicklungsanschluss (32) über den zweiten Transformatorkondensator (30) oder über die Primärinduktivität (27) mit dem negativen Brückenanschluss (41) verbunden ist.

6. DC-DC-Converter (1) nach einem der vorhergehenden Aufzählungspunkte, dadurch gekennzeichnet, dass zwischen dem positiven Brückenanschluss (40) und dem negativen Brückenanschluss (41) wenigstens ein Glättungskondensator (60) vorgesehen ist, insbesondere die in Reihe geschalteten ersten Transformatorkondensator (29) und zweiten Transformatorkondensator (30).

7. DC-DC-Converter (1) nach einem der vorhergehenden Aufzählungspunkte, dadurch gekennzeichnet, dass die Gleichrichterbaugruppe (70) eine der folgenden Schaltungen aufweist.

- eine Gleichrichterschaltung mit einem ersten Einweggleichrichter (71) und einem zweiten Einweggleichrichter (72), die mit jeweils einem Sekundärwicklungsanschluss (34) verbunden sind, sowie mit einer Sekundärinduktivität (28),
  oder
- eine Gleichrichterschaltung mit einer Vollbrücke (73) sowie mit einer Sekundärinduktivität (28),
  oder
- eine Gleichrichterschaltung mit zwei Einweggleichrichtern, die mit einer Sekundärwicklung (23) verbunden sind und abwechselnd betrieben werden sowie wenigstens mit einem Gleichrichtungskondensator, der mit dem anderen Anschluss der Sekundärwicklung (23) auf der Ausgangsseite verbunden ist,
  oder
- zwei Schalter, die mit jeweils einer Transformatorwicklung verbunden sind und abwechselnd betrieben werden, sowie eine Speicherdrossel, oder
- eine Vollbrücke (73) mit vier Schaltern und eine Speicherdrossel,
  oder
- zwei Schalter, die mit einer gemeinsamen Transformatorwicklung und einmal mit der positiven Brückenspannung und einmal mit der negativen Brückenspannung verbunden sind und abwechselnd schalten sowie wenigstens einem Kondensator, der mit dem anderen Anschluss der Transformatorwicklung verbunden ist.

8. DC-DC-Converter (1) nach einem der vorhergehenden Aufzählungspunkte, dadurch gekennzeichnet, dass eine zweite Flying-Capacitor-Multilevel-Halbbrücke (90) vorgesehen ist, wobei die Schalter der zweiten Flying-Capacitor-Multilevel-Halbbrücke (90) durch die Steuer- und Überwachungseinheit (10) betätigbar sind.

9. DC-DC-Converter (1) nach Aufzählungspunkt 8, dadurch gekennzeichnet, dass der erste Primärwicklungsanschluss (31) direkt oder über den ersten Transformatorkondensator (29) und/oder über die Primärinduktivität (27) mit dem ersten Mittelanschluss (45) oder zweiten Mittenanschluss verbunden ist und dass der zweite Primärwicklungsanschluss (32) direkt oder über die zweite Primärinduktivität (27) und/oder über den zweiten Transformatorkondensator (30) mit dem zweiten Mittelanschluss (80) oder ersten Mittelanschluss (45) verbunden ist.

10. DC-DC-Converter (1) nach Aufzählungspunkt 8 oder Aufzählungspunkt 9, dadurch gekennzeichnet, dass eine erste Flying-Capacitor-Multilevel-Halbbrücke (115) und eine zweite Flying-Capacitor-Multilevel-Halbbrücke (90) vorgesehen sind, die eine Flying-Capacitor-Multilevel-Vollbrücke (73) bilden.

11. DC-DC-Converter (1) nach einem der Aufzählungspunkte 8 bis 10, dadurch gekennzeichnet, dass wenigstens eine primäre Flying-Capacitor-Multilevel-Halbbrücke (15) mit einem primären positiven Brückenanschluss (40) und einem primären negativen Brückenanschluss (41) vorgesehen ist, die mit einer Primärseite (2) des Transformators (21) verbunden ist, sowie wenigstens eine sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

12. DC-DC-Converter (1) nach Aufzählungspunkt 11, dadurch gekennzeichnet, dass der erste Primärwicklungsanschluss (31) direkt oder über den ersten Transformatorkondensator (29) und/oder über die Primärinduktivität (27) mit dem Mittelanschluss (45) verbunden ist und/oder dass der zweite Primärwicklungsanschluss (32) direkt oder über die zweite Primärinduktivität (27) und/oder über den zweiten Transformatorkondensator (30) mit dem primären positiven Brückenanschluss (40) und/oder mit dem primären negativen Brückenanschluss (41) verbunden ist.

13. DC-DC-Converter (1) Aufzählungspunkt 11 oder Aufzählungspunkt 12, dadurch gekennzeichnet, dass wenigstens eine erste primäre Flying-Capacitor-Multilevel-Halbbrücke (15) mit einem primären positiven Brückenanschluss (40) und einem primären negativen Brückenanschluss (41) sowie eine zweite primäre Flying-Capacitor-Multilevel-Halbbrücke (15) vorgesehen ist, die eine primäre Flying-Capacitor-Multilevel-Vollbrücke (73) bilden, die mit einer Primärseite (2) des Transformators (21) verbunden ist.

14. DC-DC-Converter (1) nach Aufzählungspunkt 13, dadurch gekennzeichnet, dass der erste Primärwicklungsanschluss (31) direkt oder über einen ersten Transformatorkondensator (29) und/oder über eine Primärinduktivität (27) mit einem ersten Mittelanschluss (45) der ersten primären Flying-Capacitor-Multilevel-Halbbrücke (15) verbunden ist und dass der zweite Primärwicklungsanschluss (32) direkt oder über eine zweite Primärinduktivität (27) und/oder über einen zweiten Transformatorkondensator (30) mit dem zweiten Mittelanschluss (80) der zweiten primären Flying-Capacitor-Multilevel-Halbbrücke (15) verbunden ist.

15. DC-DC-Converter (1) nach einem der vorhergehenden Aufzählungspunkte, dadurch gekennzeichnet, dass eine erste sekundäre Flying-Capacitor-Multilevel-Halbbrücke (115) mit einem sekundären positiven Brückenanschluss (40) und einem sekundären negativen Brückenanschluss (41) vorgesehen ist, die mit einer Sekundärseite (3) des Transformators (21) verbunden ist.

16. DC-DC-Converter (1) nach einem der vorhergehenden Aufzählungspunkte, dadurch gekennzeichnet, dass wenigstens eine erste sekundäre Flying-Capacitor-Multilevel-Halbbrücke (115) mit einem sekundären positiven Brückenanschluss (40) und einem sekundären negativen Brückenanschluss (41) sowie eine zweite sekundäre Flying-Capacitor-Multilevel-Halbbrücke (115) vorgesehen ist, die eine sekundäre Flying-Capacitor-Multilevel-Vollbrücke (73) bilden, die mit einer Sekundärseite (3) des Transformators (21) verbunden ist.

17. DC-DC-Converter (1) nach Aufzählungspunkt 16, dadurch gekennzeichnet, dass der erste Sekundärwicklungsanschluss (33) direkt oder über einen ersten Transformatorkondensator (29) und/oder über eine Sekundärinduktivität (28) mit einem ersten Mittelanschluss (45) der ersten sekundären Flying-Capacitor-Multilevel-Halbbrücke (115) verbunden ist und dass der zweite Sekundärwicklungsanschluss (34) direkt oder über eine zweite Sekundärinduktivität (28) und/oder über einen zweiten Transformatorkondensator (30) mit dem zweiten Mittelanschluss (80) der zweiten sekundären Flying-Capacitor-Multilevel-Halbbrücke (115) verbunden ist.

18. DC-DC-Converter (1) nach einem der vorhergehenden Aufzählungspunkte, dadurch gekennzeichnet, dass die Primärwicklung (22) als Streuinduktivität des Transformators (21) oder der Sekundärwicklung (23) ausgebildet ist.

19. DC-DC-Converter (1) nach einem der vorhergehenden Aufzählungspunkte, dadurch gekennzeichnet, dass die Sekundärwicklung (23) als Streuinduktivität des Transformators (21) oder der Primärwicklung (22) ausgebildet ist.

20. DC-DC-Converter (1) nach einem der vorhergehenden Aufzählungspunkte, dadurch gekennzeichnet, dass der DC-DC-Converter (1) bidirektional ausgebildet ist.

21. Verfahren zum Betrieb eines DC-DC-Converter (1) mit den folgenden Komponenten:

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens einer Sekundärinduktivität (28) auf der Sekundärseite (3) und/oder in Reihe mit der Sekundärwicklung (23) geschaltet ist,

wobei zum Übertragen von Energie von der Primärseite des Transformators zur Sekundärseite die Schaltfrequenz der Schalter, um die Spannung zwischen dem ersten Sekundärwicklungsanschluss (33) und dem zweiten Sekundärwicklungsanschluss (34) zu regulieren, wobei die Schaltfrequenz erhöht wird, um diese Spannung zu verringern, und die Schaltfrequenz verringert wird, um diese Spannung zu erhöhen.

22. Verfahren nach Aufzählungspunkt 21, wobei die Schaltfrequenz der Schalter in Abhängigkeit von einer Last auf der Sekundärseite des Transformators dynamisch angepasst wird, um eine konstante Spannung zwischen dem ersten Sekundärwicklungsanschluss (33) und dem zweiten Sekundärwicklungsanschluss (34) zu erreichen.

23. Verfahren nach Aufzählungspunkt 21 oder Aufzählungspunkt 22, wobei den Schritt des Abgleichens der Resonanzfrequenz von Primärwicklung (22), Sekundärwicklung (23), Primärinduktivität (27), Sekundärinduktivität (28) und/oder Transformatorkondensator (30) mit der Schaltfrequenz vorgesehen ist.

24. Verfahren nach einem der Aufzählungspunkte 21 bis 23, wobei die Schaltvorgänge so gesteuert werden, dass sie in einem symmetrischen Muster erfolgen.

25. Verfahren nach einem der Aufzählungspunkte 21 bis 24, wobei der DC-DC-Converter (1) nach einem der Aufzählungspunkte 1 bis 20 ausgebildet ist.

Nachfolgend werden weitere Merkmale strukturiert wiedergegeben. Diese können sowohl einzeln wie auch in Kombination und in Kombination mit anderen hierin offenbarten Merkmalen verwendet werden.

1. DC-DC-Converter (1), mit den folgenden Merkmalen.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens eine5 Sekundärinduktivität (28) auf der Sekundärseite (3) und/oder in Reihe mit der Sekundärwicklung (23) geschaltet ist,
- wenigstens einen Transformatorkondensator (30), der auf der Primärseite (2) in Reihe zur Primärwicklung (22) und/oder zur Primärinduktivität (27) geschaltet ist,

und wobei der zweite Primärwicklungsanschluss (32) direkt, oder über die Primärinduktivität (27) und/oder über den Transformatorkondensator (30) mit dem Mittelanschluss (45) verbunden ist,
wobei auf der Sekundärseite (3) zwischen dem ersten Sekundärwicklungsanschluss (33), dem zweiten Sekundärwicklungsanschluss (34) sowie dem ersten Ausgangsanschluss (42) und dem zweiten Ausgangsanschluss (43) eine Gleichrichterbaugruppe (70) vorgesehen ist.

2. DC-DC-Converter (1) nach Aufzählungspunkt 1, dadurch gekennzeichnet, dass der erste Primärwicklungsanschluss (31) über den Transformatorkondensator (30) und/oder über die Primärinduktivität (27) mit dem positiven Brückenanschluss (40) oder mit dem negativen Brückenanschluss (41) verbunden ist

3. DC-DC-Converter (1) nach Aufzählungspunkt 1 oder Aufzählungspunkt 2, dadurch gekennzeichnet, dass ein erster Transformatorkondensator (29) und ein zweiter Transformatorkondensator (30) vorgesehen sind, die jeweils auf einer Seite mit der Primärwicklung (22) oder der Primärinduktivität (27) und jeweils auf der anderen Seite einmal mit dem positiven Brückenanschluss (40) und einmal mit dem negativen Brückenanschluss (41) verbunden sind.

4. DC-DC-Converter (1) nach Aufzählungspunkt 3, dadurch gekennzeichnet, dass der erste Primärwicklungsanschluss (31) über den ersten Transformatorkondensator (29) oder über die Primärinduktivität (27) mit dem positiven Brückenanschluss (40) verbunden ist, und dass der zweite Primärwicklungsanschluss (32) über den zweiten Transformatorkondensator (30) oder über die Primärinduktivität (27) mit dem negativen Brückenanschluss (41) verbunden ist.

5. DC-DC-Converter (1) nach einem der vorhergehenden Aufzählungspunkte, dadurch gekennzeichnet, dass zwischen dem positiven Brückenanschluss (40) und dem negativen Brückenanschluss (41) wenigstens ein Glättungskondensator (60) vorgesehen ist, insbesondere die in Reihe geschalteten ersten Transformatorkondensator (29) und zweiten Transformatorkondensator (30).

6. DC-DC-Converter (1) nach einem der vorhergehenden Aufzählungspunkte, dadurch gekennzeichnet, dass die Gleichrichterbaugruppe (70) eine der folgenden Schaltungen aufweist.

- eine Gleichrichterschaltung mit einem ersten Einweggleichrichter (71) und einem zweiten Einweggleichrichter (72), die mit jeweils einem Sekundärwicklungsanschluss (34) verbunden sind, sowie mit einer Sekundärinduktivität (28),
  oder
- eine Gleichrichterschaltung mit einer Vollbrücke (73) sowie mit einer Sekundärinduktivität (28),
  oder
- eine Gleichrichterschaltung mit zwei Einweggleichrichtern, die mit einer Sekundärwicklung (23) verbunden sind und abwechselnd betrieben werden sowie wenigstens mit einem Gleichrichtungskondensator, der mit dem anderen Anschluss der Sekundärwicklung (23) auf der Ausgangsseite verbunden ist,
  oder
- zwei Schalter, die mit jeweils einer Transformatorwicklung verbunden sind und abwechselnd betrieben werden, sowie eine Speicherdrossel, oder
- eine Vollbrücke (73) mit vier Schaltern und eine Speicherdrossel,
  oder
- zwei Schalter, die mit einer gemeinsamen Transformatorwicklung und einmal mit der positiven Brückenspannung und einmal mit der negativen Brückenspannung verbunden sind und abwechselnd schalten sowie wenigstens einem Kondensator, der mit dem anderen Anschluss der Transformatorwicklung verbunden ist.

7. DC-DC-Converter (1) nach einem der Aufzählungspunkte 1 bis 5, dadurch gekennzeichnet, dass eine zweite Flying-Capacitor-Multilevel-Halbbrücke (90) vorgesehen ist, wobei die Schalter der zweiten Flying-Capacitor-Multilevel-Halbbrücke (90) durch die Steuer- und Überwachungseinheit (10) betätigbar sind.

8. DC-DC-Converter (1) nach Aufzählungspunkt 7, dadurch gekennzeichnet, dass der erste Primärwicklungsanschluss (31) direkt oder über den ersten Transformatorkondensator (29) und/oder über die Primärinduktivität (27) mit dem ersten Mittelanschluss (45) oder zweiten Mittenanschluss verbunden ist und dass der zweite Primärwicklungsanschluss (32) direkt oder über die zweite Primärinduktivität (27) und/oder über den zweiten Transformatorkondensator (30) mit dem zweiten Mittelanschluss (80) oder ersten Mittelanschluss (45) verbunden ist.

9. DC-DC-Converter (1) nach Aufzählungspunkt 7 oder Aufzählungspunkt 8, dadurch gekennzeichnet, dass eine erste Flying-Capacitor-Multilevel-Halbbrücke (115) und eine zweite Flying-Capacitor-Multilevel-Halbbrücke (90) vorgesehen sind, die eine Flying-Capacitor-Multilevel-Vollbrücke (73) bilden.

10. DC-DC-Converter (1) nach einem der Aufzählungspunkte 7 bis 9, dadurch gekennzeichnet, dass wenigstens eine primäre Flying-Capacitor-Multilevel-Halbbrücke (15) mit einem primären positiven Brückenanschluss (40) und einem primären negativen Brückenanschluss (41) vorgesehen ist, die mit einer Primärseite (2) des Transformators (21) verbunden ist, sowie wenigstens eine sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

11. DC-DC-Converter (1) nach Aufzählungspunkt 10, dadurch gekennzeichnet, dass der erste Primärwicklungsanschluss (31) direkt oder über den ersten Transformatorkondensator (29) und/oder über die Primärinduktivität (27) mit dem Mittelanschluss (45) verbunden ist und/oder dass der zweite Primärwicklungsanschluss (32) direkt oder über die zweite Primärinduktivität (27) und/oder über den zweiten Transformatorkondensator (30) mit dem primären positiven Brückenanschluss (40) und/oder mit dem primären negativen Brückenanschluss (41) verbunden ist.

12. DC-DC-Converter (1) Aufzählungspunkt 10 oder Aufzählungspunkt 11, dadurch gekennzeichnet, dass wenigstens eine erste primäre Flying-Capacitor-Multilevel-Halbbrücke (15) mit einem primären positiven Brückenanschluss (40) und einem primären negativen Brückenanschluss (41) sowie eine zweite primäre Flying-Capacitor-Multilevel-Halbbrücke (15) vorgesehen ist, die eine primäre Flying-Capacitor-Multilevel-Vollbrücke (73) bilden, die mit einer Primärseite (2) des Transformators (21) verbunden ist.

13. DC-DC-Converter (1) nach Aufzählungspunkt 12, dadurch gekennzeichnet, dass der erste Primärwicklungsanschluss (31) direkt oder über einen ersten Transformatorkondensator (29) und/oder über eine Primärinduktivität (27) mit einem ersten Mittelanschluss (45) der ersten primären Flying-Capacitor-Multilevel-Halbbrücke (15) verbunden ist und dass der zweite Primärwicklungsanschluss (32) direkt oder über eine zweite Primärinduktivität (27) und/oder über einen zweiten Transformatorkondensator (30) mit dem zweiten Mittelanschluss (80) der zweiten primären Flying-Capacitor-Multilevel-Halbbrücke (15) verbunden ist.

14. DC-DC-Converter (1) nach einem der Aufzählungspunkte 10 bis 13, dadurch gekennzeichnet, dass eine erste sekundäre Flying-Capacitor-Multilevel-Halbbrücke (115) mit einem sekundären positiven Brückenanschluss (40) und einem sekundären negativen Brückenanschluss (41) sowie eine zweite sekundäre Flying-Capacitor-Multilevel-Halbbrücke (115) vorgesehen ist, die eine sekundäre Flying-Capacitor-Multilevel-Vollbrücke (73) bilden, die mit einer Sekundärseite (3) des Transformators (21) verbunden ist.

15. DC-DC-Converter (1) Aufzählungspunkt 14, dadurch gekennzeichnet, dass wenigstens eine erste sekundäre Flying-Capacitor-Multilevel-Halbbrücke (115) mit einem sekundären positiven Brückenanschluss (40) und einem sekundären negativen Brückenanschluss (41) sowie eine zweite sekundäre Flying-Capacitor-Multilevel-Halbbrücke (115) vorgesehen ist, die eine sekundäre Flying-Capacitor-Multilevel-Vollbrücke (73) bilden, die mit einer Sekundärseite (3) des Transformators (21) verbunden ist.

16. DC-DC-Converter (1) nach Aufzählungspunkt 16, dadurch gekennzeichnet, dass der erste Sekundärwicklungsanschluss (33) direkt oder über einen ersten Transformatorkondensator (29) und/oder über eine Sekundärinduktivität (28) mit einem ersten Mittelanschluss (45) der ersten sekundären Flying-Capacitor-Multilevel-Halbbrücke (115) verbunden ist und dass der zweite Sekundärwicklungsanschluss (34) direkt oder über eine zweite Sekundärinduktivität (28) und/oder über einen zweiten Transformatorkondensator (30) mit dem zweiten Mittelanschluss (80) der zweiten sekundären Flying-Capacitor-Multilevel-Halbbrücke (115) verbunden ist.

17. Verfahren zum Betrieb eines DC-DC-Converter (1) mit den folgenden Merkmalen:

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen einem vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens einer Sekundärinduktivität (28) auf der Sekundärseite (3) und/oder in Reihe mit der Sekundärwicklung (23) geschaltet ist,
- wenigstens einen Transformatorkondensator (30), der auf der Primärseite (2) in Reihe zur Primärwicklung (22) und/oder zur Primärinduktivität (27) geschaltet ist,

  und wobei der zweite Primärwicklungsanschluss (32) direkt, oder über die Primärinduktivität (27) und/oder über den Transformatorkondensator (30) mit dem Mittelanschluss (45) verbunden ist,
  wobei zum Übertragen von Energie von der Primärseite des Transformators zur Sekundärseite die Schaltfrequenz der Schalter, um die Spannung zwischen dem ersten Sekundärwicklungsanschluss (33) und dem zweiten Sekundärwicklungsanschluss (34) zu regulieren, wobei die Schaltfrequenz erhöht wird, um diese Spannung zu verringern, und die Schaltfrequenz verringert wird, um diese Spannung zu erhöhen.

18. Verfahren nach Aufzählungspunkt 17, wobei die Schaltfrequenz der Schalter in Abhängigkeit von einer Last auf der Sekundärseite des Transformators dynamisch angepasst wird, um eine konstante Spannung zwischen dem ersten Sekundärwicklungsanschluss (33) und dem zweiten Sekundärwicklungsanschluss (34) zu erreichen.

19. Verfahren nach Aufzählungspunkt 17 oder Aufzählungspunkt 18, wobei den Schritt des Abgleichens der Resonanzfrequenz von Primärwicklung (22), Sekundärwicklung (23), Primärinduktivität (27), Sekundärinduktivität (28) und/oder Transformatorkondensator (30) mit der Schaltfrequenz vorgesehen ist.

20. Verfahren nach einem der Aufzählungspunkte 17 bis 19, wobei die Schaltvorgänge so gesteuert werden, dass sie in einem symmetrischen Muster erfolgen.

Nachfolgend werden weitere Merkmale strukturiert wiedergegeben. Diese können sowohl einzeln wie auch in Kombination und in Kombination mit anderen hierin offenbarten Merkmalen verwendet werden.

1. DC-DC-Converter (1), mit den folgenden Komponenten.

- einen positiven Brückenanschluss (40) und einen negativen Brückenanschluss (41),
- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens einen Sekundärinduktivität (28) auf der Sekundärseite (3) und/oder in Reihe mit der Sekundärwicklung (23) geschaltet ist,

  wobei auf der Sekundärseite (3) zwischen dem ersten Sekundärwicklungsanschluss (33), dem zweiten Sekundärwicklungsanschluss (34) sowie dem ersten Ausgangsanschluss (42) und dem zweiten Ausgangsanschluss (43) eine Gleichrichterbaugruppe (70) vorgesehen ist, nämlich eine erste sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

2. DC-DC-Converter (1) nach Aufzählungspunkt 1, dadurch gekennzeichnet, dass eine zweite sekundäre Flying-Capacitor-Multilevel-Halbbrücke (115) vorgesehen ist, die mit der sekundäre Flying-Capacitor-Multilevel-Halbbrücke (115) eine sekundäre Flying-Capacitor-Multilevel-Vollbrücke (73) bildet, die mit einer Sekundärseite (3) des Transformators (21) verbunden ist.

3. DC-DC-Converter (1) nach Aufzählungspunkt 2, dadurch gekennzeichnet, dass der erste Sekundärwicklungsanschluss (33) direkt oder über einen ersten Transformatorkondensator (29) und/oder über eine Sekundärinduktivität (28) mit einem ersten Mittelanschluss (45) der ersten sekundären Flying-Capacitor-Multilevel-Halbbrücke (115) verbunden ist und dass der zweite Sekundärwicklungsanschluss (34) direkt oder über eine zweite Sekundärinduktivität (28) und/oder über einen zweiten Transformatorkondensator (30) mit dem zweiten Mittelanschluss (80) der zweiten sekundären Flying-Capacitor-Multilevel-Halbbrücke (115) verbunden ist.

4. DC-DC-Converter (1) nach einem der vorhergehenden Aufzählungspunkte, dadurch gekennzeichnet, dass sie wenigstens einen Transformatorkondensator (30) aufweist, der auf der Primärseite (2) in Reihe zur Primärwicklung (22) und/oder zur Primärinduktivität (27) geschaltet ist, und wobei der zweite Primärwicklungsanschluss (32) direkt, oder über die Primärinduktivität (27) und/oder über den Transformatorkondensator (30) mit dem Mittelanschluss (45) verbunden ist,

5. DC-DC-Converter (1) nach einem der vorhergehenden Aufzählungspunkte, dadurch gekennzeichnet, dass der erste Primärwicklungsanschluss (31) über den Transformatorkondensator (30) und/oder über die Primärinduktivität (27) mit dem positiven Brückenanschluss (40) oder mit dem negativen Brückenanschluss (41) verbunden ist

6. DC-DC-Converter (1) nach einem der vorhergehenden Aufzählungspunkte, dadurch gekennzeichnet, dass

ein erster Transformatorkondensator (29) und ein zweiter Transformatorkondensator (30) vorgesehen sind, die jeweils auf einer Seite mit der Primärwicklung (22) oder der Primärinduktivität (27) und jeweils auf der anderen Seite einmal mit dem positiven Brückenanschluss (40) und einmal mit dem negativen Brückenanschluss (41) verbunden sind.

7. DC-DC-Converter (1) nach Aufzählungspunkt 6, dadurch gekennzeichnet, dass der erste Primärwicklungsanschluss (31) über den ersten Transformatorkondensator (29) oder über die Primärinduktivität (27) mit dem positiven Brückenanschluss (40) verbunden ist, und dass der zweite Primärwicklungsanschluss (32) über den zweiten Transformatorkondensator (30) oder über die Primärinduktivität (27) mit dem negativen Brückenanschluss (41) verbunden ist.

8. DC-DC-Converter (1) nach einem der vorhergehenden Aufzählungspunkte, dadurch gekennzeichnet, dass zwischen dem positiven Brückenanschluss (40) und dem negativen Brückenanschluss (41) wenigstens ein Glättungskondensator (60) vorgesehen ist, insbesondere die in Reihe geschalteten ersten Transformatorkondensator (29) und zweiten Transformatorkondensator (30).

9. DC-DC-Converter (1) nach einem der vorhergehenden Aufzählungspunkte, dadurch gekennzeichnet, dass eine zweite Flying-Capacitor-Multilevel-Halbbrücke (90) vorgesehen ist, wobei die Schalter der zweiten Flying-Capacitor-Multilevel-Halbbrücke (90) durch die Steuer- und Überwachungseinheit (10) betätigbar sind.

10. DC-DC-Converter (1) nach Aufzählungspunkt 9, dadurch gekennzeichnet, dass der erste Primärwicklungsanschluss (31) direkt oder über den ersten Transformatorkondensator (29) und/oder über die Primärinduktivität (27) mit dem ersten Mittelanschluss (45) oder zweiten Mittenanschluss verbunden ist und dass der zweite Primärwicklungsanschluss (32) direkt oder über die zweite Primärinduktivität (27) und/oder über den zweiten Transformatorkondensator (30) mit dem zweiten Mittelanschluss (80) oder ersten Mittelanschluss (45) verbunden ist.

11. DC-DC-Converter (1) nach Aufzählungspunkt 9 oder Aufzählungspunkt 10, dadurch gekennzeichnet, dass eine erste Flying-Capacitor-Multilevel-Halbbrücke (115) und eine zweite Flying-Capacitor-Multilevel-Halbbrücke (90) vorgesehen sind, die eine Flying-Capacitor-Multilevel-Vollbrücke (73) bilden.

12. DC-DC-Converter (1) nach einem der Aufzählungspunkte 9 bis 11, dadurch gekennzeichnet, dass wenigstens eine primäre Flying-Capacitor-Multilevel-Halbbrücke (15) mit einem primären positiven Brückenanschluss (40) und einem primären negativen Brückenanschluss (41) vorgesehen ist, die mit einer Primärseite (2) des Transformators (21) verbunden ist, sowie wenigstens eine sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

13. DC-DC-Converter (1) nach Aufzählungspunkt 12, dadurch gekennzeichnet, dass der erste Primärwicklungsanschluss (31) direkt oder über den ersten Transformatorkondensator (29) und/oder über die Primärinduktivität (27) mit dem Mittelanschluss (45) verbunden ist und/oder dass der zweite Primärwicklungsanschluss (32) direkt oder über die zweite Primärinduktivität (27) und/oder über den zweiten Transformatorkondensator (30) mit dem primären positiven Brückenanschluss (40) und/oder mit dem primären negativen Brückenanschluss (41) verbunden ist.

14. DC-DC-Converter (1) nach Aufzählungspunkt 12 oder Aufzählungspunkt 13, dadurch gekennzeichnet, dass wenigstens eine erste primäre Flying-Capacitor-Multilevel-Halbbrücke (15) mit einem primären positiven Brückenanschluss (40) und einem primären negativen Brückenanschluss (41) sowie eine zweite primäre Flying-Capacitor-Multilevel-Halbbrücke (15) vorgesehen ist, die eine primäre Flying-Capacitor-Multilevel-Vollbrücke (73) bilden, die mit einer Primärseite (2) des Transformators (21) verbunden ist.

15. DC-DC-Converter (1) nach Aufzählungspunkt 14, dadurch gekennzeichnet, dass der erste Primärwicklungsanschluss (31) direkt oder über einen ersten Transformatorkondensator (29) und/oder über eine Primärinduktivität (27) mit einem ersten Mittelanschluss (45) der ersten primären Flying-Capacitor-Multilevel-Halbbrücke (15) verbunden ist und dass der zweite Primärwicklungsanschluss (32) direkt oder über eine zweite Primärinduktivität (27) und/oder über einen zweiten Transformatorkondensator (30) mit dem zweiten Mittelanschluss (80) der zweiten primären Flying-Capacitor-Multilevel-Halbbrücke (15) verbunden ist.

16. DC-DC-Converter (1) nach einem der vorhergehenden Aufzählungspunkte, dadurch gekennzeichnet, dass die Primärwicklung (22) als Streuinduktivität des Transformators (21) oder der Sekundärwicklung (23) ausgebildet ist.

17. DC-DC-Converter (1) nach einem der vorhergehenden Aufzählungspunkte, dadurch gekennzeichnet, dass die Sekundärwicklung (23) als Streuinduktivität des Transformators (21) oder der Primärwicklung (22) ausgebildet ist.

18. DC-DC-Converter (1) nach einem der vorhergehenden Aufzählungspunkte, dadurch gekennzeichnet, dass der DC-DC-Converter (1) bidirektional ausgebildet ist.

19. Verfahren zum Betrieb eines DC-DC-Converter (1) nach einem der vorhergehenden Aufzählungspunkte, wobei zum Übertragen von Energie von der Primärseite des Transformators zur Sekundärseite die Schaltfrequenz der Schalter gesteuert wird, um die Spannung zwischen dem ersten Sekundärwicklungsanschluss (33) und dem zweiten Sekundärwicklungsanschluss (34) zu regulieren, wobei die Schaltfrequenz erhöht wird, um diese Spannung zu verringern, und die Schaltfrequenz verringert wird, um diese Spannung zu erhöhen.

20. Verfahren nach Aufzählungspunkt 19, wobei die Schaltfrequenz der Schalter in Abhängigkeit von einer Last auf der Sekundärseite des Transformators dynamisch angepasst wird, um eine konstante Spannung zwischen dem ersten Sekundärwicklungsanschluss (33) und dem zweiten Sekundärwicklungsanschluss (34) zu erreichen.

21. Verfahren nach Aufzählungspunkt 20 oder Aufzählungspunkt 21, wobei ein Schritt des Abgleichens der Resonanzfrequenz von Primärwicklung (22), Sekundärwicklung (23), Primärinduktivität (27), Sekundärinduktivität (28) und/oder Transformatorkondensator (30) mit der Schaltfrequenz vorgesehen ist.

22. Verfahren nach einem der Aufzählungspunkte 19 bis 21, wobei die Schaltvorgänge so gesteuert werden, dass sie in einem symmetrischen Muster erfolgen.

**Bezugszeichenliste**

1 DC-DC-Converter
2 Primärseite
3 Sekundärseite
10 Steuer- und Überwachungseinheit
10 primäre Steuer- und Überwachungseinheit
15 Flying-Capacitor-Multilevel-Halbbrücke
15 Multilevel-Halbbrücke
15 primäre Flying-Capacitor-Multilevel-Halbbrücke
20 LLC-Abschnitt
20 primärem LLC-Abschnitt
21 Transformators
21 Transformator
22 Primärwicklung
23 Sekundärwicklung
23 erste Sekundärwicklung
24 zweite Sekundärwicklung
27 Primärinduktivität
27 primäre Resonanzinduktivität
28 primäre Glättungsinduktivität
29 erster Transformatorkondensator
29 Transformatorkondensator
30 zweiter Transformatorkondensator
31 erster Primärwicklungsanschluss
31 ersten Primärwicklungsanschluss
32 zweiten Primärwicklungsanschluss
33 ersten Sekundärwicklungsanschluss
34 zweiten Sekundärwicklungsanschluss
35 dritter Sekundärwicklungsanschluss
36 vierter Sekundärwicklungsanschluss
40 primären positiven Brückenanschluss
41 primären negativen Brückenanschluss

40 sekundären positiven Brückenanschluss

41 sekundären negativen Brückenanschluss

40 positiven Brückenanschluss

41 negativen Brückenanschluss

42 ersten Ausgangsanschluss

43 zweiten Ausgangsanschluss

45 Mittelanschluss

45 primärer Mittelanschluss

45 primärer erster Mittelanschluss

45 erster Mittelanschluss

46 oberen Schalterzweig

48 unteren Schalterzweig

50 Flying Capacitors

51 positiver Anschluss

52 negativer Anschluss

60 Glättungskondensator

60 primärer Glättungskondensator

70 Gleichrichterbaugruppe

71 ersten Einweggleichrichter

72 zweiten Einweggleichrichter

73 Vollbrücke

73 erster Gleichrichtungskondensator

74 zweiter Gleichrichtungskondensator

75 erster Gleichrichtungsschalter

76 zweiter Gleichrichtungsschalter

77 dritter Gleichrichtungsschalter

78 vierter Gleichrichtungsschalter

80 zweiter Mittelanschluss

90 zweite Flying-Capacitor-Multilevel-Halbbrücke

100 Verbindungssteuerleitung [zwischen primärer Steuer- und Überwachungseinheit und sekundärer Steuer- und Überwachungseinheit]

110 sekundäre Steuer- und Überwachungseinheit

115 sekundäre Flying-Capacitor-Multilevel-Halbbrücke

127 Sekundärinduktivität

127 sekundäre Resonanzinduktivität

128 sekundäre Glättungsinduktivität

129 sekundärer Transformatorkondensator

129 sekundärer erster Transformatorkondensator

130 sekundärer zweiter Transformatorkondensator

145 sekundärer Mittelanschluss

145 sekundärer erster Mittelanschluss

160 sekundärer Glättungskondensator

190 sekundäre zweite Flying-Capacitor-Multilevel-Halbbrücke

200 Anlaufschaltung

201 Anlaufdiode D

202 positiver Anlaufkondensator C_A1, ..., C_An-1

203 negativer Anlaufkondensator C_B1, ..., C_Bn-1

204 Entladediode D_E1, ..., D_En-1

205 Reversdiode D_T

206 positiver Anlaufspannungsteiler

207 negativer Anlaufspannungsteiler

**Patentansprüche**

1. DC-DC-Converter (1), mit den folgenden Komponenten.

   - einen positiven Brückenanschluss (40) und einen negativen Brückenanschluss (41),

- einen ersten Ausgangsanschluss (42) und einen zweiten Ausgangsanschluss (43),
- ein Transformator (21) mit wenigstens einer Primärwicklung (22) auf einer Primärseite (2) des Transformators (21) und mit wenigstens einer Sekundärwicklung (23) auf einer Sekundärseite (3) des Transformators (21), wobei die Primärwicklung (22) einen ersten Primärwicklungsanschluss (31) und einen zweiten Primärwicklungsanschluss (32) aufweist und wobei die Sekundärwicklung (23) einen ersten Sekundärwicklungsanschluss (33) und einen zweiten Sekundärwicklungsanschluss (34) aufweist,
- wenigstens eine Flying-Capacitor-Multilevel-Halbbrücke (115) zur Beaufschlagung des Transformators (21) auf der Primärseite (2) mit einer Wechselspannung, wobei die Flying-Capacitor-Multilevel-Halbbrücke (115) einen Mittelanschluss (45), einem vom Mittelanschluss (45) ausgehenden oberen Schalterzweig (46) mit mehreren oberen Schaltern, einen vom Mittelanschluss (45) ausgehenden unteren Schalterzweig (48) mit mehreren unteren Schaltern, eine Steuer- und Überwachungseinheit (10) zur Betätigung der oberen Schalter und der unteren Schalter, sowie eine Vielzahl von Flying Capacitors (50) aufweist,
- wenigstens eine Primärinduktivität (27) auf der Primärseite (2), die in Reihe mit der wenigstens einen Primärwicklung (22) und/oder in Reihe mit der wenigstens einen Sekundärinduktivität (28) auf der Sekundärseite (3) und/oder in Reihe mit der Sekundärwicklung (23) geschaltet ist,
wobei auf der Sekundärseite (3) zwischen dem ersten Sekundärwicklungsanschluss (33), dem zweiten Sekundärwicklungsanschluss (34) sowie dem ersten Ausgangsanschluss (42) und dem zweiten Ausgangsanschluss (43) eine Gleichrichterbaugruppe (70) vorgesehen ist, nämlich
eine erste sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

2. DC-DC-Converter (1) nach Anspruch 1, **dadurch gekennzeichnet, dass** eine zweite sekundäre Flying-Capacitor-Multilevel-Halbbrücke (115) vorgesehen ist, die mit der sekundäre Flying-Capacitor-Multilevel-Halbbrücke (115) eine sekundäre Flying-Capacitor-Multilevel-Vollbrücke (73) bildet, die mit einer Sekundärseite (3) des Transformators (21) verbunden ist.

3. DC-DC-Converter (1) nach Anspruch 2, **dadurch gekennzeichnet, dass** der erste Sekundärwicklungsanschluss (33) direkt oder über einen ersten Transformatorkondensator (29) und/oder über eine Sekundärinduktivität (28) mit einem ersten Mittelanschluss (45) der ersten sekundären Flying-Capacitor-Multilevel-Halbbrücke (115) verbunden ist und dass der zweite Sekundärwicklungsanschluss (34) direkt oder über eine zweite Sekundärinduktivität (28) und/oder über einen zweiten Transformatorkondensator (30) mit dem zweiten Mittelanschluss (80) der zweiten sekundären Flying-Capacitor-Multilevel-Halbbrücke (115) verbunden ist.

4. DC-DC-Converter (1) nach einem der vorhergehenden Ansprüche, **dadurch gekennzeichnet, dass** sie wenigstens einen Transformatorkondensator (30) aufweist, der auf der Primärseite (2) in Reihe zur Primärwicklung (22) und/oder zur Primärinduktivität (27) geschaltet ist, und wobei der zweite Primärwicklungsanschluss (32) direkt, oder über die Primärinduktivität (27) und/oder über den Transformatorkondensator (30) mit dem Mittelanschluss (45) verbunden ist,

5. DC-DC-Converter (1) nach einem der vorhergehenden Ansprüche, **dadurch gekennzeichnet, dass** der erste Primärwicklungsanschluss (31) über den Transformatorkondensator (30) und/oder über die Primärinduktivität (27) mit dem positiven Brückenanschluss (40) oder mit dem negativen Brückenanschluss (41) verbunden ist

6. DC-DC-Converter (1) nach einem der vorhergehenden Ansprüche, **dadurch gekennzeichnet, dass** ein erster Transformatorkondensator (29) und ein zweiter Transformatorkondensator (30) vorgesehen sind, die jeweils auf einer Seite mit der Primärwicklung (22) oder der Primärinduktivität (27) und jeweils auf der anderen Seite einmal mit dem positiven Brückenanschluss (40) und einmal mit dem negativen Brückenanschluss (41) verbunden sind.

7. DC-DC-Converter (1) nach Anspruch 6, **dadurch gekennzeichnet, dass** der erste Primärwicklungsanschluss (31) über den ersten Transformatorkondensator (29) oder über die Primärinduktivität (27) mit dem positiven Brückenanschluss (40) verbunden ist, und dass der zweite Primärwicklungsanschluss (32) über den zweiten Transformatorkondensator (30) oder über die Primärinduktivität (27) mit dem negativen Brückenanschluss (41) verbunden ist.

8. DC-DC-Converter (1) nach einem der vorhergehenden Ansprüche, **dadurch gekennzeichnet, dass** eine zweite Flying-Capacitor-Multilevel-Halbbrücke (90) vorgesehen ist, wobei die Schalter der zweiten Flying-Capacitor-Multilevel-Halbbrücke (90) durch die Steuer- und Überwachungseinheit (10) betätigbar sind.

9. DC-DC-Converter (1) nach Anspruch 8, **dadurch gekennzeichnet, dass** der erste Primärwicklungsanschluss (31) direkt oder über den ersten Transformatorkondensator (29) und/oder über die Primärinduktivität (27) mit dem ersten Mittelanschluss (45) oder zweiten Mittenanschluss verbunden ist und dass der zweite Primärwicklungsanschluss (32) direkt oder über die zweite Primärinduktivität (27) und/oder über den zweiten Transformatorkondensator (30) mit dem zweiten Mittelanschluss (80) oder ersten Mittelanschluss (45) verbunden ist.

10. DC-DC-Converter (1) nach Anspruch 8 oder Anspruch 9, **dadurch gekennzeichnet, dass** eine erste Flying-Capacitor-Multilevel-Halbbrücke (115) und eine zweite Flying-Capacitor-Multilevel-Halbbrücke (90) vorgesehen sind, die eine Flying-Capacitor-Multilevel-Vollbrücke (73) bilden.

11. DC-DC-Converter (1) nach einem der Ansprüche 8 bis 10, **dadurch gekennzeichnet, dass** wenigstens eine primäre Flying-Capacitor-Multilevel-Halbbrücke (15) mit einem primären positiven Brückenanschluss (40) und einem primären negativen Brückenanschluss (41) vorgesehen ist, die mit einer Primärseite (2) des Transformators (21) verbunden ist, sowie wenigstens eine sekundäre Flying-Capacitor-Multilevel-Halbbrücke (115) mit einem sekundären positiven Brückenanschluss (40) und einem sekundären negativen Brückenanschluss (41), die mit einer Sekundärseite (3) des Transformators (21) verbunden ist.

12. DC-DC-Converter (1) nach Anspruch 11, **dadurch gekennzeichnet, dass** der erste Primärwicklungsanschluss (31) direkt oder über den ersten Transformatorkondensator (29) und/oder über die Primärinduktivität (27) mit dem Mittelanschluss (45) verbunden ist und/oder dass der zweite Primärwicklungsanschluss (32) direkt oder über die zweite Primärinduktivität (27) und/oder über den zweiten Transformatorkondensator (30) mit dem primären positiven Brückenanschluss (40) und/oder mit dem primären negativen Brückenanschluss (41) verbunden ist.

13. DC-DC-Converter (1) nach Anspruch 11 oder Anspruch 12, **dadurch gekennzeichnet, dass** wenigstens eine erste primäre Flying-Capacitor-Multilevel-Halbbrücke (15) mit einem primären positiven Brückenanschluss (40) und einem primären negativen Brückenanschluss (41) sowie eine zweite primäre Flying-Capacitor-Multilevel-Halbbrücke (15) vorgesehen ist, die eine primäre Flying-Capacitor-Multilevel-Vollbrücke (73) bilden, die mit einer Primärseite (2) des Transformators (21) verbunden ist.

14. DC-DC-Converter (1) nach Anspruch 13, **dadurch gekennzeichnet, dass** der erste Primärwicklungsanschluss (31) direkt oder über einen ersten Transformatorkondensator (29) und/oder über eine Primärinduktivität (27) mit einem ersten Mittelanschluss (45) der ersten primären Flying-Capacitor-Multilevel-Halbbrücke (15) verbunden ist und dass der zweite Primärwicklungsanschluss (32) direkt oder über eine zweite Primärinduktivität (27) und/oder über einen zweiten Transformatorkondensator (30) mit dem zweiten Mittelanschluss (80) der zweiten primären Flying-Capacitor-Multilevel-Halbbrücke (15) verbunden ist.

15. Verfahren zum Betrieb eines DC-DC-Converter (1) nach einem der vorhergehenden Ansprüche,
wobei zum Übertragen von Energie von der Primärseite des Transformators zur Sekundärseite die Schaltfrequenz der Schalter gesteuert wird, um die Spannung zwischen dem ersten Sekundärwicklungsanschluss (33) und dem zweiten Sekundärwicklungsanschluss (34) zu regulieren, wobei die Schaltfrequenz erhöht wird, um diese Spannung zu verringern, und die Schaltfrequenz verringert wird, um diese Spannung zu erhöhen.

FIG. 1

FIG. 2

**FIG. 3**

**FIG. 4**

FIG. 5

**FIG. 6**

EP 4 693 870 A1

FIG. 7

Seite 2 (Sekundarseite)
Altenative 4 bidirektional

FIG. 8

Seite 2 (Sekundarseite)
Altenative 5 bidirektional

**FIG. 9**

Seite 2 (Sekundarseite)
Alternative 6 bidirektional

**FIG. 10**

FIG. 11

FIG. 11
(Continued)

FIG. 12

FIG. 13

**FIG. 14**

EP 4 693 870 A1

EP 4 693 870 A1

FIG. 15

| Zeitpunkt | 0 | 1 | 2 | 3 | 4 | 5 | 6 | 7 |
|---|---|---|---|---|---|---|---|---|
| Level Nr. (0...4) | 3 | 2 | 1 | 2 | 3 | 2 | 1 | 2 |
| Level Um/U_Br | 0,75 | 0,50 | 0,25 | 0,50 | 0,75 | 0,50 | 0,25 | 0,50 |
| Zustand | 0 | 0 | 1 | 0 | 3 | 0 | 0 | 0 |
| T4 | 0 | 0 | 0 | 0 | 1 | 0 | 0 | 0 |
| T3 | 1 | 0 | 0 | 0 | 0 | 0 | 0 | 0 |
| T2 | 1 | 1 | 1 | 1 | 1 | 1 | 0 | 1 |
| T1 | 1 | 1 | 0 | 1 | 1 | 1 | 1 | 1 |
| T5 | 0 | 0 | 1 | 0 | 0 | 0 | 0 | 0 |
| T6 | 0 | 0 | 0 | 0 | 0 | 0 | 1 | 0 |
| T7 | 0 | 1 | 1 | 1 | 1 | 1 | 1 | 1 |
| T8 | 1 | 1 | 1 | 1 | 0 | 1 | 1 | 1 |
| Transistor-Umschaltvorgange | 2 | 2 | 2 | 2 | 2 | 2 | 2 | 2 |
| C 1 | | | - | | | | + | |
| C_2 | | - | + | + | - | - | | + |
| C 3 | - | | | | + | | | |

**FIG. 16**

EP 4 693 870 A1

FIG. 17

FIG. 18

| Level-Zustand | Level | Zustand | T1 | T2 | T3 | T4 | T5 | T6 | T7 | T8 |
|---|---|---|---|---|---|---|---|---|---|---|
| 0-0 | 0 | 0 | 0 | 0 | 0 | 0 | 1 | 1 | 1 | 1 |
| 1-0 | 1 | 0 | 1 | 0 | 0 | 0 | 0 | 1 | 1 | 1 |
| 1-1 | 1 | 1 | 0 | 1 | 0 | 0 | 1 | 0 | 1 | 1 |
| 1-2 | 1 | 2 | 0 | 0 | 1 | 0 | 1 | 1 | 0 | 1 |
| 1-3 | 1 | 3 | 0 | 0 | 0 | 1 | 1 | 1 | 1 | 0 |
| 2-0 | 2 | 0 | 1 | 1 | 0 | 0 | 0 | 0 | 1 | 1 |
| 2-1 | 2 | 1 | 0 | 1 | 1 | 0 | 1 | 0 | 0 | 1 |
| 2-2 | 2 | 2 | 0 | 0 | 1 | 1 | 1 | 1 | 0 | 0 |
| 2-3 | 2 | 3 | 1 | 0 | 0 | 1 | 0 | 1 | 1 | 0 |
| 3-0 | 3 | 0 | 1 | 1 | 1 | 0 | 0 | 0 | 0 | 1 |
| 3-1 | 3 | 1 | 0 | 1 | 1 | 1 | 1 | 0 | 0 | 0 |
| 3-2 | 3 | 2 | 1 | 0 | 1 | 1 | 0 | 1 | 0 | 0 |
| 3-3 | 3 | 3 | 1 | 1 | 0 | 1 | 0 | 0 | 1 | 0 |
| 4-0 | 4 | 0 | 1 | 1 | 1 | 1 | 0 | 0 | 0 | 0 |
| Summe / MW: | | | 0,5 | 0,5 | 0,5 | 0,5 | 0,5 | 0,5 | 0,5 | 0,5 |

**FIG. 19**

EP 4 693 870 A1

| Level-Zustand | Ut3o/Ubr | Ut2o/Ubr | Ut1o/Ubr | Um/Ubr | Ut5u/Ubr | Ut6u/Ubr | Ut7u/Ubr | C1 | C2 | C3 | Anz. C |
|---|---|---|---|---|---|---|---|---|---|---|---|
| 0-0 | 0.75 | 0.50 | 0.25 | 0.00 | 0.00 | 0.00 | 0.00 | | | | |
| 1-0 | 0.75 | 0.50 | 0.25 | 0.25 | 0.00 | 0.00 | 0.00 | - | | | 1 |
| 1-1 | 0.75 | 0.50 | 0.50 | 0.25 | 0.00 | 0.00 | 0.25 | + | - | | 2 |
| 1-2 | 0.75 | 0.75 | 0.50 | 0.25 | 0.00 | 0.25 | 0.25 | | + | - | 2 |
| 1-3 | 1.00 | 0.75 | 0.50 | 0.25 | 0.25 | 0.25 | 0.25 | | | + | 1 |
| 2-0 | 0.75 | 0.50 | 0.50 | 0.50 | 0.00 | 0.00 | 0.25 | | - | | 1 |
| 2-1 | 0.75 | 0.75 | 0.75 | 0.50 | 0.00 | 0.25 | 0.50 | + | - | | 2 |
| 2-2 | 1.00 | 1.00 | 0.75 | 0.50 | 0.25 | 0.50 | 0.50 | | + | | 1 |
| 2-3 | 1.00 | 0.75 | 0.50 | 0.50 | 0.25 | 0.25 | 0.25 | - | | + | 2 |
| 3-0 | 0.75 | 0.75 | 0.75 | 0.75 | 0.00 | 0.25 | 0.50 | | | - | 1 |
| 3-1 | 1.00 | 1.00 | 1.00 | 0.75 | 0.25 | 0.50 | 0.75 | + | | | 1 |
| 3-2 | 1.00 | 1.00 | 0.75 | 0.75 | 0.25 | 0.50 | 0.50 | - | + | | 2 |
| 3-3 | 1.00 | 0.75 | 0.75 | 0.75 | 0.25 | 0.25 | 0.50 | | - | + | 2 |
| 4-0 | 1.00 | 1.00 | 1.00 | 1.00 | 0.25 | 0.50 | 0.75 | | | | 0 |
| Summe/MW: | 0.88 | 0.75 | 0.63 | 0.50 | 0.13 | 0.25 | 0.38 | 0 | 0 | 0 | |

**FIG. 19**
**(Continued)**

EP 4 693 870 A1

| Zielspg./ Dauer | Uout/Umax | 0,25 | 16.000 | | us | | | | |
|---|---|---|---|---|---|---|---|---|---|
| Anz. Perioden | | 200 | | | | | | | |
| Zeitschritt/us | | 10 | | | | | | | |
| PWM Start/End | | 1,00% | 99,00% | | | | | | |
| Perioden Start/End | | 50 | 50 | | | | | | |
| Zeitpunkt | Spalte | 0 | 10 | 20 | 30 | 40 | 50 | 60 | 70 |
| Level | 2 | 3 | 2 | 1 | 2 | 3 | 2 | 1 | 2 |
| Zustand | 3 | 0 | 0 | 1 | 0 | 3 | 0 | 0 | 0 |
| Level-Zustand | 1 | 3-0 | 2-0 | 1-1 | 2-0 | 3-3 | 2-0 | 1-0 | 2-0 |
| T4 | 7 | 0 | 0 | 0 | 0 | 1 | 0 | 0 | 0 |
| T3 | 6 | 1 | 0 | 0 | 0 | 0 | 0 | 0 | 0 |
| T2 | 5 | 1 | 1 | 1 | 1 | 1 | 1 | 0 | 1 |
| T1 | 4 | 1 | 1 | 0 | 1 | 1 | 1 | 1 | 1 |
| T5 | 8 | 0 | 0 | 1 | 0 | 0 | 0 | 0 | 0 |
| T6 | 9 | 0 | 0 | 0 | 0 | 0 | 0 | 1 | 0 |
| T7 | 10 | 0 | 1 | 1 | 1 | 1 | 1 | 1 | 1 |
| T8 | 11 | 1 | 1 | 1 | 1 | 0 | 1 | 1 | 1 |
| Schaltvorgänge | | 2 | 2 | 2 | 2 | 2 | 2 | 2 | 2 |
| C1 | 19 | | | | - | | | + | |
| C2 | 20 | | - | + | + | - | - | | + |
| C3 | 21 | - | | | | + | | | |

**FIG. 20**

EP 4 693 870 A1

| Zielspg./ Dauer | Uout/Umax | 0,50 16.000 us | | | | | | | |
|---|---|---|---|---|---|---|---|---|---|
| Anz. Perioden | | 50 | | | | | | | |
| Zeitschritt/us | | 20 | | | | | | | |
| PWM Start/End | | | | | | | | | |
| Perioden Start/End | | | | | | | | | |
| Zeitpunkt | Spalte | 16.000 | 16.020 | 16.040 | 16.060 | 16.080 | 16.100 | 16.120 | 16.140 |
| Level | 2 | 3 | 1 | 3 | 1 | 3 | 1 | 3 | 1 |
| Zustand | 3 | 0 | 1 | 3 | 0 | 2 | 3 | 1 | 2 |
| Level-Zustand | 1 | 3-0 | 1-1 | 3-3 | 1-0 | 3-2 | 1-3 | 3-1 | 1-2 |
| T4 | 7 | 0 | 0 | 0 | 0 | 1 | 1 | 1 | 0 |
| T3 | 6 | 1 | 0 | 0 | 0 | 1 | 0 | 1 | 1 |
| T2 | 5 | 1 | 1 | 1 | 0 | 0 | 0 | 1 | 0 |
| T1 | 4 | 1 | 0 | 0 | 1 | 1 | 0 | 0 | 0 |
| T5 | 8 | 0 | 1 | 1 | 0 | 0 | 1 | 1 | 1 |
| T6 | 9 | 0 | 0 | 0 | 1 | 1 | 1 | 0 | 1 |
| T7 | 10 | 0 | 1 | 1 | 1 | 0 | 1 | 0 | 0 |
| T8 | 11 | 1 | 1 | 1 | 1 | 0 | 0 | 0 | 1 |
| Schaltvorgänge | | 4 | 4 | 4 | 4 | 4 | 4 | 4 | 4 |
| C1 | 19 | | - | | + | - | | + | |
| C2 | 20 | | + | - | | + | | | - |
| C3 | 21 | - | | + | | | - | | + |

FIG. 21

EP 4 693 870 A1

| Zielspg./ Dauer | Uout/Umax | 0,75 | 16.000 | | us | | | | |
|---|---|---|---|---|---|---|---|---|---|
| Anz. Perioden | | 200 | | | | | | | |
| Zeitschritt/us | | 10 | | | | | | | |
| PWM Start/End | | 1,00% | 99,00% | | | | | | |
| Perioden Start/End | | 50 | 50 | | | | | | |
| Zeitpunkt | Spalte | 24.000 | 24.020 | 24.040 | 24.060 | 24.080 | 24.100 | 24.120 | 24.140 |
| Level | 2 | 4 | 3 | 0 | 1 | 4 | 3 | 0 | 1 |
| Zustand | 3 | 0 | 0 | 0 | 2 | 0 | 2 | 0 | 0 |
| Level-Zustand | 1 | 4-0 | 3-0 | 0-0 | 1-2 | 4-0 | 3-2 | 0-0 | 1-0 |
| T4 | 7 | 1 | 0 | 0 | 0 | 1 | 1 | 0 | 0 |
| T3 | 6 | 1 | 1 | 0 | 1 | 1 | 1 | 0 | 0 |
| T2 | 5 | 1 | 1 | 0 | 0 | 1 | 0 | 0 | 0 |
| T1 | 4 | 1 | 1 | 0 | 0 | 1 | 1 | 0 | 1 |
| T5 | 8 | 0 | 0 | 1 | 1 | 0 | 0 | 1 | 0 |
| T6 | 9 | 0 | 0 | 1 | 1 | 0 | 1 | 1 | 1 |
| T7 | 10 | 0 | 0 | 1 | 0 | 0 | 0 | 1 | 1 |
| T8 | 11 | 0 | 1 | 1 | 1 | 0 | 0 | 1 | 1 |
| Schaltvorgänge | | 6 | 2 | 6 | 2 | 6 | 2 | 6 | 2 |
| C1 | 19 | | | | | | - | | + |
| C2 | 20 | | | | - | | + | | |
| C3 | 21 | | - | | + | | | | |

FIG. 22

| Zielspg./ Dauer | Uout/Umax | 1,00 | 8.000 | | us | | | | |
|---|---|---|---|---|---|---|---|---|---|
| Anz. Perioden | | 100 | | | | | | | |
| Zeitschritt/us | | 10 | | | | | | | |
| PWM Start/End | | | | | | | | | |
| Perioden Start/End | | | | | | | | | |
| Zeitpunkt | Spalte | 40.000 | 40.020 | 40.040 | 40.060 | 40.080 | 40.100 | 40.120 | 40.140 |
| Level | 2 | 4 | 4 | 0 | 0 | 4 | 4 | 0 | 0 |
| Zustand | 3 | 0 | 0 | 0 | 0 | 0 | 0 | 0 | 0 |
| Level-Zustand | 1 | 4-0 | 4-0 | 0-0 | 0-0 | 4-0 | 4-0 | 0-0 | 0-0 |
| T4 | 7 | 1 | 0 | 0 | 0 | 1 | 1 | 0 | 0 |
| T3 | 6 | 1 | 1 | 0 | 0 | 1 | 1 | 0 | 0 |
| T2 | 5 | 1 | 1 | 0 | 0 | 1 | 1 | 0 | 0 |
| T1 | 4 | 1 | 1 | 0 | 0 | 1 | 1 | 0 | 0 |
| T5 | 8 | 0 | 0 | 1 | 1 | 0 | 0 | 1 | 1 |
| T6 | 9 | 0 | 0 | 1 | 1 | 0 | 0 | 1 | 1 |
| T7 | 10 | 0 | 0 | 1 | 1 | 0 | 0 | 1 | 1 |
| T8 | 11 | 0 | 1 | 1 | 1 | 0 | 0 | 1 | 1 |
| Schaltvorgänge | | 8 | 0 | 8 | 0 | 8 | 0 | 8 | 0 |
| C1 | 19 | | | | | | | | |
| C2 | 20 | | | | | | | | |
| C3 | 21 | | | | | | | | |

FIG. 23

EP 4 693 870 A1

Um / Ubr nach Zeit/ us

Um/Ubr
– – – Um/Ubr PWM Start
– · – Um/Ubr PWM End

Um / Ubr nach Zeit/ us

Um/Ubr
– – – Um/Ubr PWM Start
– · – Um/Ubr PWM End

**FIG. 24**

EP 4 693 870 A1

FIG. 25

**FIG. 26**

EP 4 693 870 A1

**FIG. 26**
**(Continued)**

Umsetzungsfaktoren Seite 2 / Seite 1 bei Trafoverhaltnis=1

EP 4 693 870 A1

FIG. 27

**Umsetzungsfaktoren Seite 2 / Seite 1 bei Trafoverhaltnis=1**

**FIG. 28**

FIG. 29

**FIG. 30**

EP 4 693 870 A1

**FIG. 31**

EP 4 693 870 A1

FIG. 32

FIG. 33

FIG. 34

EP 4 693 870 A1

FIG. 35

EP 4 693 870 A1

FIG. 36

FIG. 37

**FIG. 38**

FIG. 39

**FIG. 40**

EP 4 693 870 A1

PWL(0 0 5 0 5.001 1000 9 1000 9.001 0 10 0 10.001 1000 14 1000 14.001 0 20 0 20.001 500 20 500 30 500 30.001 1000 40.001 500 50 500 50.001 0)

EP 4 693 870 A1

FIG. 41

**FIG. 42**

Europäisches
Patentamt

European
Patent Office

Office européen
des brevets

**EUROPÄISCHER RECHERCHENBERICHT**

Nummer der Anmeldung

EP 25 19 4456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/321016 A1 (KHALIGH ALIREZA [US] ET AL) 6. Oktober 2022 (2022-10-06) * Absatz [0061] * * Absatz [0069] * * Abbildungen 1.2B, 4A,4F * ----- | 1-15 | INV. H02M3/335 H02M3/00 |
| X | US 2023/291320 A1 (WALLMEIER PETER [TH]) 14. September 2023 (2023-09-14) * Absatz [0042] * * Absatz [0061] * * Abbildung 1 * ----- | 1 | |
| A | S.Y. (ron) Hui ET AL: "Resonant and Soft-switching Converters" In: "Power electronics handbook : devices, circuits, and applications", 1. Januar 2011 (2011-01-01), Elsevier/BH, Butterworth-Heinemann, Amsterdam [u.a.], XP055578045, ISBN: 978-0-12-382036-5 Seiten 409-453, DOI: 10.1016/B978-0-12-382036-5.00016-1, * Seite 413 * ----- | 1-15 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 18. Dezember 2025 | Gotzig, Bernhard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

# EP 4 693 870 A1

ANHANG ZUM EUROPÄISCHEN RECHERCHENBERICHT
ÜBER DIE EUROPÄISCHE PATENTANMELDUNG NR.

EP 25 19 4456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-12-2025

| Im Recherchenbericht angeführtes Patentdokument | Datum der Veröffentlichung | Mitglied(er) der Patentfamilie | Datum der Veröffentlichung |
|---|---|---|---|
| US 2022321016 A1 | 06-10-2022 | KEINE | |
| US 2023291320 A1 | 14-09-2023 | CN 116760296 A | 15-09-2023 |
| | | EP 4246787 A1 | 20-09-2023 |
| | | US 2023291320 A1 | 14-09-2023 |

Für nähere Einzelheiten zu diesem Anhang : siehe Amtsblatt des Europäischen Patentamts, Nr.12/82

113

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2661806 B1

**In der Beschreibung aufgeführte Nicht-Patentliteratur**

- **NEUNER, D.** ; **HARTMANN, M.** Analytical model for LLC resonant DC-DC-Converters in operation below resonance. *Elektrotech. Inftech.*, 2023, vol. 140, 34-44